# EUROPEAN PATENT SPECIFICATION

(11) **EP 2 861 670 B1**
(45) Date of publication and mention of the grant of the patent: **16.08.2017**
(21) Application number: 13728199.4
(22) Date of filing: 13.06.2013
(51) Int. Cl.: C09B 62/006, C09B 62/09, C09B 62/44, C09B 62/513, D06P 1/00, D06P 3/00

(54) **METAL FREE REACTIVE DYES, PROCESS FOR THE PRODUCTION THEREOF AND THEIR USE**
METALLFREIE REAKTIVE FARBSTOFFE, VERFAHREN ZUR HERSTELLUNG DAVON UND DEREN VERWENDUNG
COLORANTS RÉACTIFS EXEMPTS DE MÉTAL, PROCÉDÉ DE PRODUCTION ET UTILISATION DE CEUX-CI

(30) Priority: 18.06.2012 EP 12004555
(43) Date of publication of application: 22.04.2015
(73) Proprietor: DyStar Colours Distribution GmbH, 65479 Raunheim (DE)
(72) Inventor: BARBIERU, Roxana, Lynnsville, Singapore 117468 (SG); YUAN, Han, Singapore 640847 (SG); KIM, Hyeong Kyu, Singapore, 650269 (SG)
(86) International application number: PCT/EP2013/062199
(87) International publication number: WO 2013/189815

(56) References cited:
- CN-A- 102 321 391
- CN-B- 101 323 710
- JP-A- 2002 226 724

## Description

The present invention relates to the technical field of reactive dyestuffs for dyeing and printing of hydroxyl-, amino-, and/or carboxamido-containing material.

Metal free reactive dyes are known from prior art and can be used as colorants in different applications, see for example US 20030172476. CN101323710 discloses red azo reactive dyes. However, in the context of the dyeing and printing of hydroxyl-, amino- and/or carboxamido-containing material the known dyes that are metal free have a number of technical disadvantages such as unsatisfactory light fastness and especially limitations in achieving darker shades such as dark violet, dark brown, navy and black shades of very good overall fastness level.

Surprisingly, it has now been found that the dyes of the formula (I) as described below show highly advantageous properties over the known dyes. These include high build-up to darker shades with high fastness properties such as light fastness, wash and contact fastness on the materials mentioned above and on blends containing them. Most importantly, dyes of formula (I) are metal free and thus superior in ecological performance and provide dyeings that are of very good levelness.

The present invention refers to dyes of the formula (I) and mixtures thereof 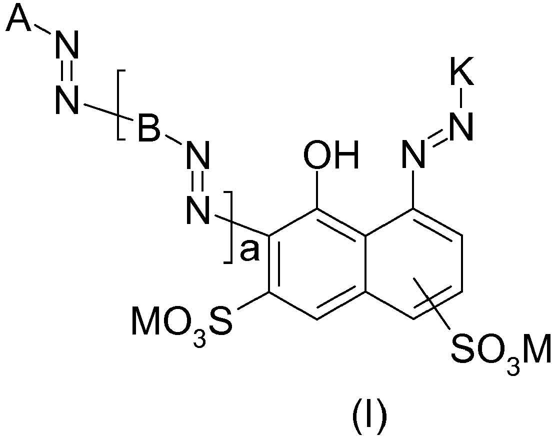 wherein,
A is a radical of diazo component as described below; and
B is a radical of middle component as described below; and
K is a radical of coupling component as described below; and
a = 0 or 1; and
with the general proviso that dyes of general formula (I) contain at least one reactive anchor; and
this invention refers to all kinds of tautomeric and geometric isomers of the dyes of the formula (I),
A is a radical of general formula (1a) 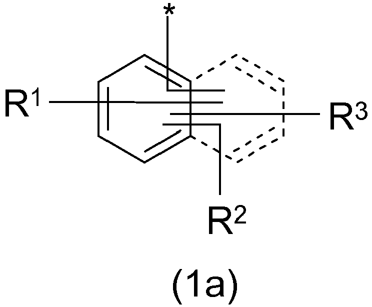 wherein,
each of R¹ to R³, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) 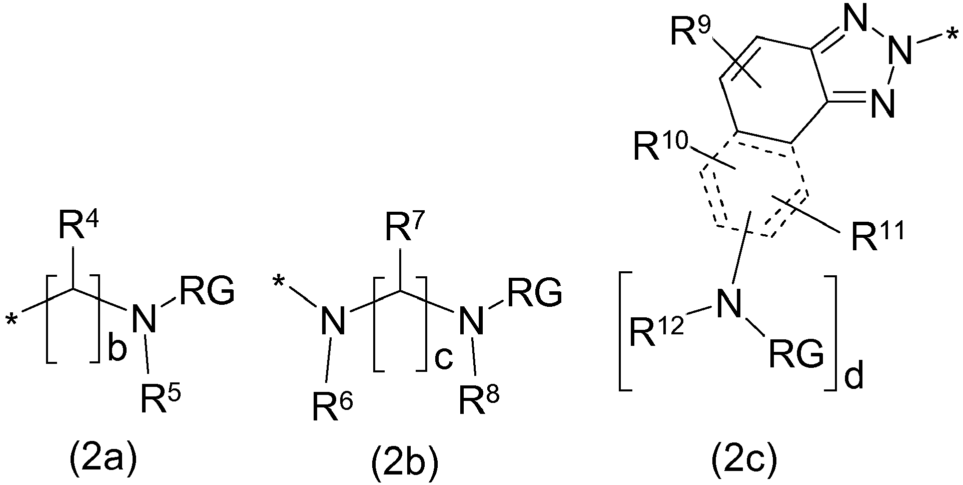
wherein,
each of R⁴ and R⁷, independent of each other is hydrogen, halogen, alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R⁵, R⁶, R⁸ and R¹², independent of each other is hydrogen, alkyl or aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R⁹, R¹⁰ and R¹¹, independent of each other is hydrogen, halogen, alkyl, alkoxy or SO₃M; and
b is an integer of 0 to 6; and
c is an integer of 1 to 6; and
when each of b and c, independent of each other is ≥ 2, R⁴ and R⁷ can have different meanings within the same rest as per meaning above defined; and
d is 0 or 1; and
RG is a reactive anchor of general formula (3a), (3b) or (3c); 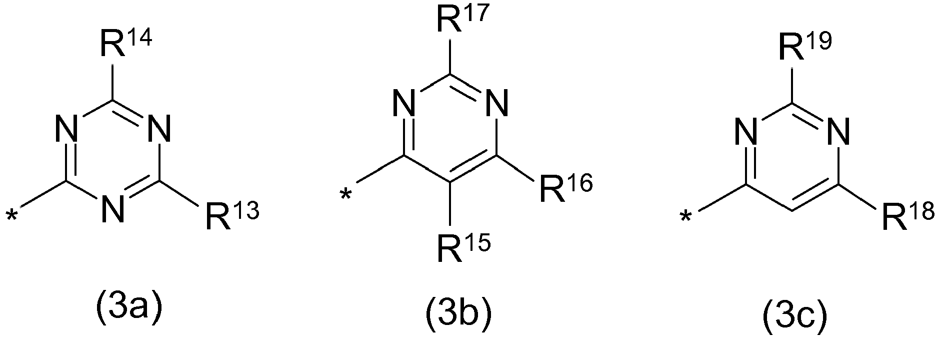
wherein,
each of R¹⁴ to R¹⁹, independent of each other is halogen; and
R¹⁴ can additionally be a rest of formula (8a) 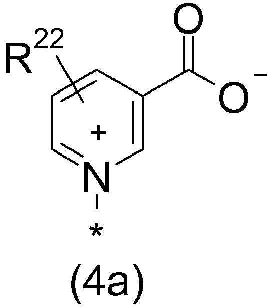
wherein,
R¹¹⁴ is hydrogen, halogen, alkyl, alkoxy, thioalkoxy, hydroxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R¹³ is one of the groups selected from general formula (4a) or (4b); 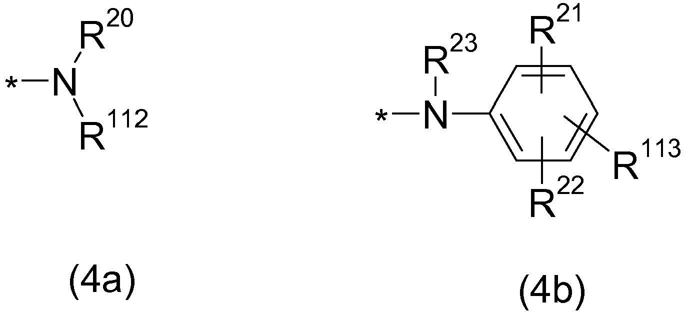
wherein,
each of R²⁰, R²³ and R¹¹², independent of each other is hydrogen, alkyl, cycloalkyl or aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R²¹, R²² and R¹¹³, independent of each other is hydrogen, halogen, alkyl, N-acylamino, alkoxy, thioalkoxy, hydroxy, cyano, alkoxycarbonyl, alkoxythiocarbonyl, acyl, thioacyl, aryloyl, sulfamoyl, trifluoromethyl, acyloxy, aryloyloxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R¹¹² can additionally be -CH₂CH₂-SO₂-X, where X is vinyl or a radical -CH₂CH₂-Y where Y is a group removable under alkaline conditions such as OSO₃M, SSO₃M, OCOCH₃, OPO₃M or halogen; and
R¹¹³ can additionally be -SO₂-X where X is the same as defined above.

B is a radical of general formula (5a) 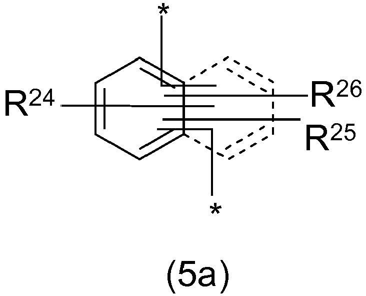 wherein,
each of R²⁴ to R²⁶, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) 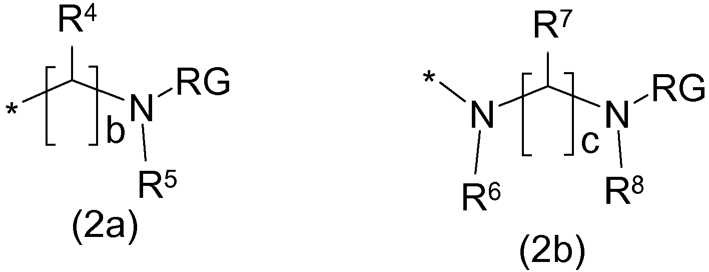
where R⁴ to R⁸, b, c and RG are the same as defined above.

K is a radical of general formula (6a), (6b) or (6c) 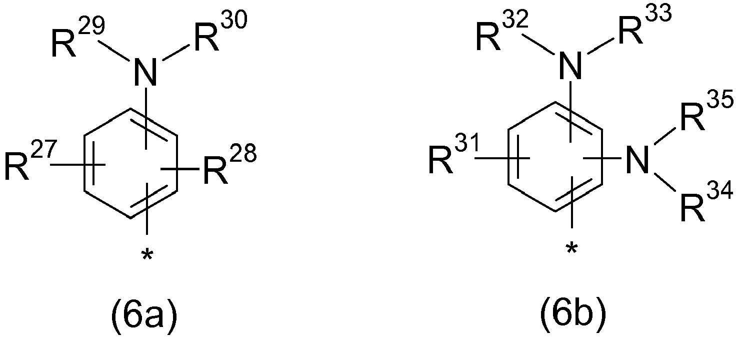 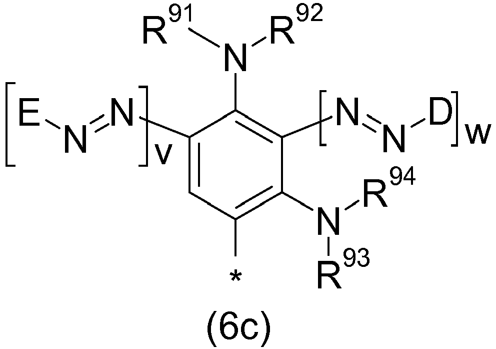 wherein,
each of R²⁷, R²⁸ and R³¹, independent of each other is hydrogen, halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; and
each of R²⁹, R³⁰, R³², R³³, R³⁴ and R³⁵, independent of each other is hydrogen, alkyl, alkenyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) 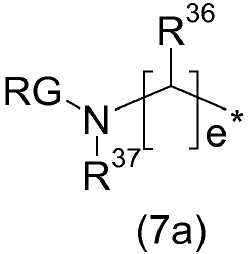
wherein,
RG is the same as defined above; and
R³⁶ is hydrogen, halogen, alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R³⁷ is hydrogen, alkyl or aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
e is an integer of 1 to 6; and when e is ≥ 2, R³⁶ can have different meanings winthin the same rest as per meaning defined above,
each of R⁹¹ to R⁹⁴, independent of each other is hydrogen, alkyl, alkenyl, cycloalkyl or heterocycloalkyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a rest of the general formula (7a) as defined above; and
each of D and E, independent of each other is a diazo component of general formula (1 a) where (1 a) is the same as defined above; and
v is 0 or 1; and w is 0 or 1; and v+w is 1 or 2.

Alkyl groups appearing in this application may be straight-chain or branched and are (C₁-C₁₂)-alkyl groups, preferably (C₁-C₈)-alkyl groups, for example n-butyl, isobutyl, n-pentyl, isopentyl, n-hexyl, 2-ethylhexyl, sec-butyl, tert-butyl and methylbutyl.

The same logic applies to alkoxy groups which accordingly are preferably (C₁-C₈)-alkoxy, for example methoxy and ethoxy, to thioalkoxy groups, which are preferably (C₁-C₈)-thioalkoxy, for example -SCH₃ or -SC₂H₅.

Cycloalkyl groups are preferably (C₃-C₈)-cycloalkyl and especially preferably cyclopentyl and cyclohexyl. The term cyloalkyl comprises for the purpose of the present application substituted cycloalklyl groups and unsatured cycloalkyl groups as well. A preferred group of this type is cyclopentenyl. Preferred substituents are alkyl, hydroxyalkyl, halogen, hydroxyl, alkoxy, acyl, cyano, nitro, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Alkenyl groups may be straight-chain or branched and are preferably (C₂-C₆)-groups for example vinyl and allyl. The term alkenyl comprises for the purpose of the present application alkynyl groups as well, for example ethynyl and propargyl.

Aryl groups appearing in this application are preferably phenyl or naphthyl. The terms phenyl and naphthyl comprises unsubstituted as well as substituted phenyl and naphthyl. Preferred substituents are alkyl, cycloalkyl, heterocycloalkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl or acyloxy.

Heteroaryl groups appearing in this application are preferably pyridine, pyrimidine, pyridazine, pyrazine, pyrrole, imidazole, pyrazole, 1,2,4-thiadiazole, 1,2,4-triazole, tetrazole, thiophene, thiazole, isothiazole, benzothiazole, benzoisothiazole, 1,3,4-thiadiazole, furane, oxazole, benzoxazole or isoxazole. The terms heteroayl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, ureido, aminosulfonylamino, alkoxycarbonyl and acyloxy.

Heterocycloalkyl groups are preferably pyrrolidine, piperidine, morpholine, tetrahydrofuran or piperazine. The terms heterocycloalkyl comprises the above groups in unsubstituted as well as in substituted form. Preferred substituents are alkyl, hydroxyalkyl, halogen, hydroxyl, alkoxy, alkylthio, acyl, nitro, cyano, amino, monoalkylamino, dialkylamino, mono(hydroxyalkyl)amino, bis (hydroxyalkyl)amino, monoalkyl-mono(hydroxyalkyl)amino, carbamoyl, sulfamoyl, acylamino, aminocarbonylamino, aminosulfonylamino, alkoxycarbonyl and acyloxy.

Halogen is preferably chlorine, bromine or fluorine.

M is preferably hydrogen, lithium, sodium, potassium, ammonium or mono-, di-, tri- or tetra-(C₁-C₄)-alkylammonium, one equivalent of an alkali earth metal, or a monovalent organic cation.

Particular preferred embodiments of the present invention are dyes of the formula (Ia) and mixtures thereof: 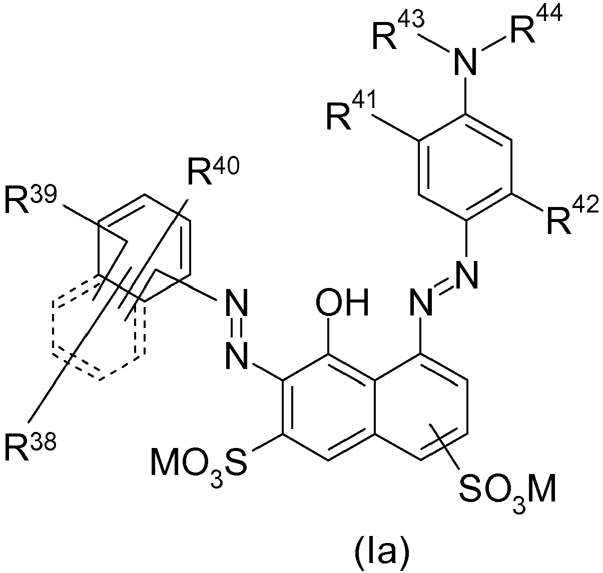 wherein,
each of R³⁸ to R⁴⁰, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined above; and
each of R⁴¹ and R⁴², independent of each other is hydrogen, halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; and
each of R⁴³ and R⁴⁴, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) as defined above.

In especially preferred dyes of general formula (Ia),
each of R³⁸ to R⁴⁰, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)_{f}-NH-RG, where f is an integer of 1 to 3 and RG is the same as defined above; and
each of R⁴¹ and R⁴², independent of each other is hydrogen, halogen, (C₁-C₄)alkyl, (C1-C4)alkoxy or SO₃M; and
each of R⁴³ and R⁴⁴, independent of each other is hydrogen, alkyl, aryl, sulfomethyl, acyl or aryloyl; or
is a reactive anchor RG, where RG is the same as defined above; or
is -(CH₂)_{g}-NH-RG, where g is an integer of 1 to 3 and RG is the same as defined above.

Further preferred embodiments of this invention are dyes of general formula (Ib) and mixtures thereof: 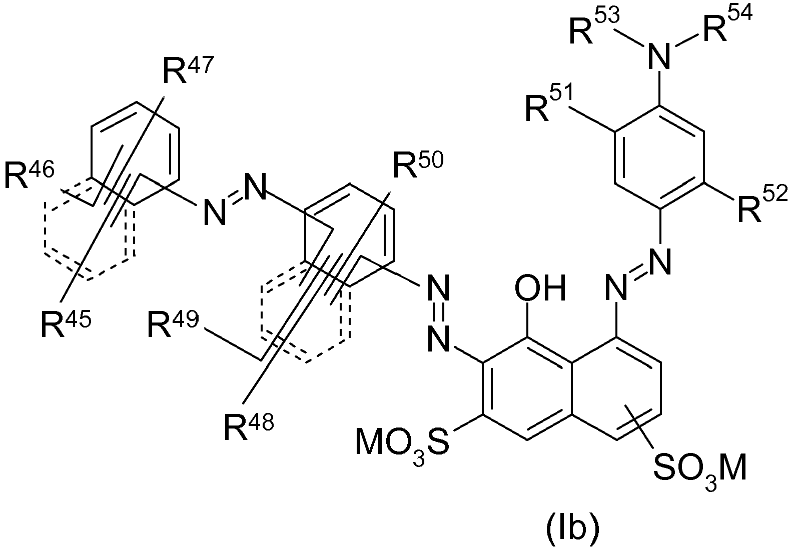 wherein,
each of R⁴⁵ to R⁵⁰, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined above;and
each of R⁴⁵ to R⁴⁷, independent of each other can additionally be a group of general formula (2c) as defined above; and
each of R⁵¹ and R⁵², independent of each other is hydrogen, halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; and
each of R⁵³ and R⁵⁴, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) as defined above.

In especially preferred dyes of general formual (Ib),
each of R⁴⁵ to R⁵⁰, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)ₕ-NH-RG, where h is an integer of 1 to 3 and RG is the same as defined above; and
each of R⁵¹ and R⁵², independent of each other is hydrogen, halogen, (C₁-C₄)alkyl, (C1-C4)alkoxy or SO₃M; and
each of R⁵³ and R⁵⁴, independent of each other is hydrogen, alkyl, aryl, sulfomethyl, acyl or aryloyl; or
is a reactive anchor RG, where RG is the same as defined above; or
is -(CH₂)ᵢ-NH-RG, where i is 1, 2 or 3 and RG is the same as defined above.

Further preferred embodiments of this invention are dyes of general formula (Ic) and mixtures thereof: 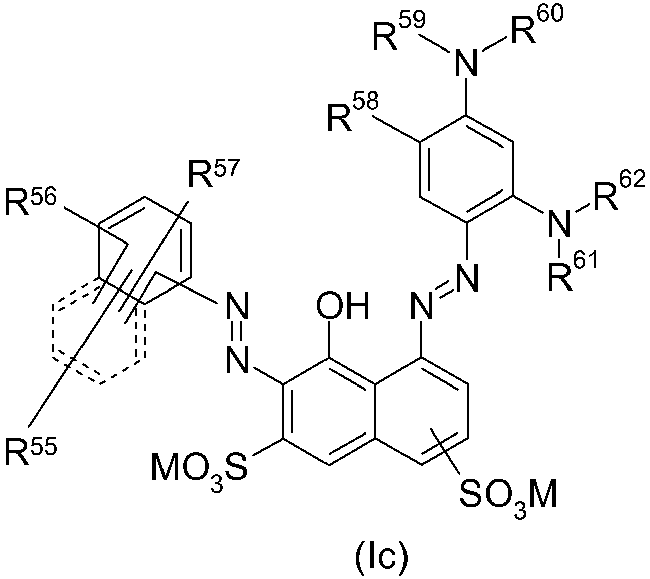 wherein,
each of R⁵⁵ to R⁵⁷, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined above; and
R⁵⁸ is halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; and
each of R⁵⁹ to R⁶², independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) as defined above.

In especially preferred dyes of general formual (Ic),
each of R⁵⁵ to R⁵⁷, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)ₖ-NH-RG, where k is an integer of 1 to 3 and RG is the same as defined above; and
R⁵⁸ is halogen, (C₁-C₄)alkyl, (C1-C4)alkoxy or SO₃M; and
each of R⁵⁹ to R⁶², independent of each other is hydrogen, alkyl, aryl, sulfomethyl, acyl or aryloyl; or
is a reactive anchor RG, where RG is the same as defined above; or
is -(CH₂)ₘ-NH-RG, where m is an integer of 1 to 3 and RG is the same as defined above.

Further preferred embodiments of this invention are dyes of general formula (Id) and mixtures thereof: 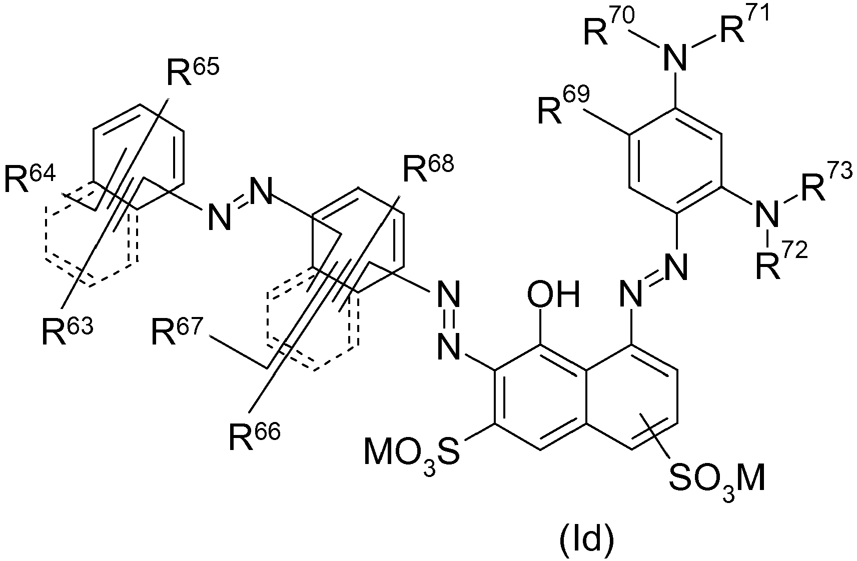 wherein,
each of R⁶³ to R⁶⁸, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined above;and
each of R⁶³ to R⁶⁵, independent of each other can additionally be a group of general formula (2c) as defined above; and
R⁶⁹ is halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; and
each of R⁷⁰ to R⁷³, independent of each other is hydrogen, alkyl, acyl, thioacyl, aryloyl, cycloalkyl, aryl, heteroaryl, heterocycloalkyl or cinnamoylamino; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) as defined above.

In especially preferred dyes of general formual (Id),
each of R⁶³ to R⁶⁸, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)ₚ-NH-RG, where p is an integer of 1 to 3 and RG is the same as defined above; and
R⁶⁹ is halogen, (C₁-C₄)alkyl, (C1-C4)alkoxy or SO₃M; and
each of R⁷⁰ to R⁷³, independent of each other is hydrogen, alkyl, aryl, sulfomethyl, acyl or aryloyl; or
is a reactive anchor RG, where RG is the same as defined above; or
is -(CH₂)_{q}-NH-RG, where q is an integer of 1 to 3 and RG is the same as defined above.

Further preferred embodiments of this invention are dyes of general formula (Ie) and mixtures thereof: 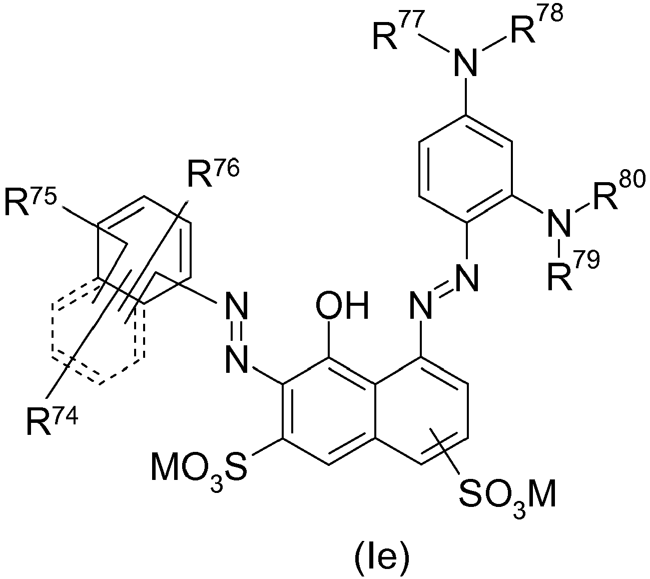 wherein,
each of R⁷⁴ to R⁷⁶, independent of each other is hydrogen, halogen, alkyl, N-acylamino, alkoxy, thioalkoxy, hydroxy, cyano, nitro, alkoxycarbonyl, alkoxythiocarbonyl, , acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined above; and
each of R⁷⁷ to R⁸⁰, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) as defined above.

In especially preferred dyes of general formual (Ie),
each of R⁷⁴ to R⁷⁶, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)ᵣ-NH-RG, where r is an integer of 1 to 3 and RG is the same as defined above; and
each of R⁷⁷ to R⁸⁰, independent of each other is hydrogen, alkyl, aryl, sulfomethyl, acyl or aryloyl; or
is a reactive anchor RG, where RG is the same as defined above; or
is -(CH₂)ₛ-NH-RG, where s is an integer of 1 to 3 and RG is the same as defined above.

Further preferred embodiments of this invention are dyes of general formula (If) and mixtures thereof: 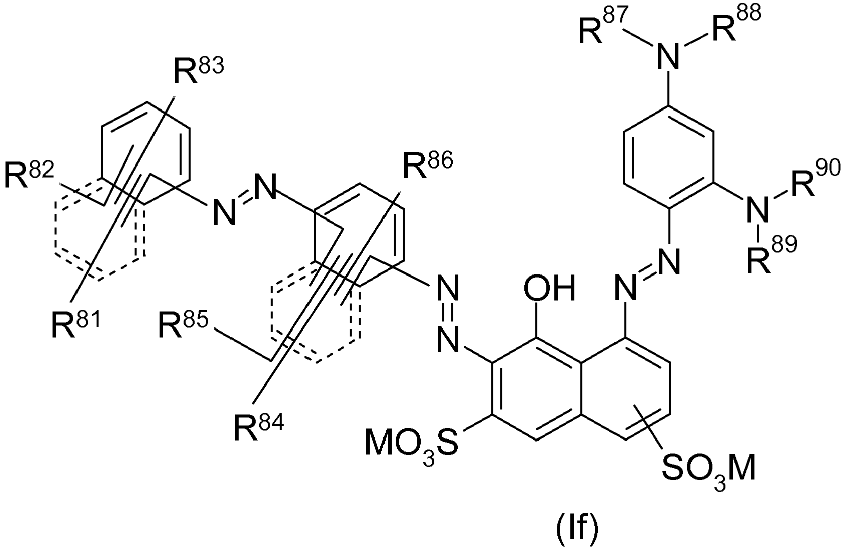 wherein,
each of R⁸¹ to R⁸⁶, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined above;and
each of R⁸¹ to R⁸³, independent of each other can additionally be a group of general formula (2c) as defined above; and
each of R⁸⁷ to R⁹⁰, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) as defined above.

In especially preferred dyes of general formual (If),
each of R⁸¹ to R⁸⁶, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)ₜ-NH-RG, where t is an integer of 1 to 3 and RG is the same as defined above; and
each of R⁸⁷ to R⁹⁰, independent of each other is hydrogen, alkyl, aryl, sulfomethyl, acyl or aryloyl; or
is a reactive anchor RG, where RG is the same as defined above; or
is -(CH₂)ᵤ-NH-RG, where u is an integer of 1 to 3 and RG is the same as defined above.

Further preferred embodiments of this invention are dyes of general formula (Ig) and mixtures thereof: 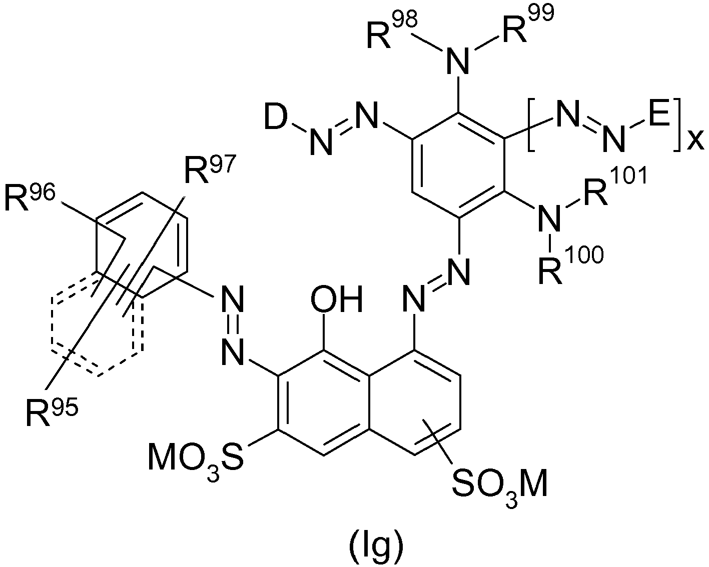 wherein,
each of R⁹⁵ to R⁹⁷, independent of each other is hydrogen, halogen, alkyl, N-acylamino, alkoxy, thioalkoxy, hydroxy, cyano, nitro, alkoxycarbonyl, alkoxythiocarbonyl, , acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined above; and
each of R⁹⁸ to R¹⁰¹, independent of each other is hydrogen, alkyl, alkenyl, cycloalkyl or heterocycloalkyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a rest of the general formula (7a) as defined above; and
each of D and E, independent of each other is a diazo component of general formula (1 a) as defined above; and
x is 0 or 1.

In especially preferred dyes of general formual (Ig),
each of R⁹⁵ to R⁹⁷, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)_{z}-NH-RG, where z is an integer of 1 to 3 and RG is the same as defined above; and
each of R⁹⁸ to R¹⁰¹, independent of each other is hydrogen, alkyl, or sulfomethyl; or
is -(CH₂)_{a'}-NH-RG, where a' is an integer of 1 to 3 and RG is the same as defined above; and;
x is 0 or 1; and
each of D and E, independent of each other is a radical of the general formula (1a') 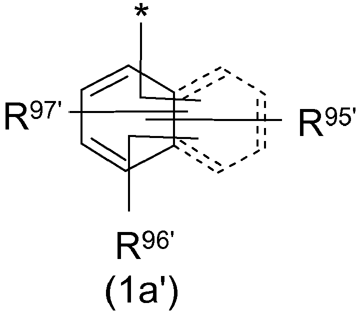 where R^{95'} to R^{97'} have the same meaning as defined above for R⁹⁵ to R⁹⁷.

Further preferred embodiments of this invention are dyes of general formula (Ih) and mixtures thereof: 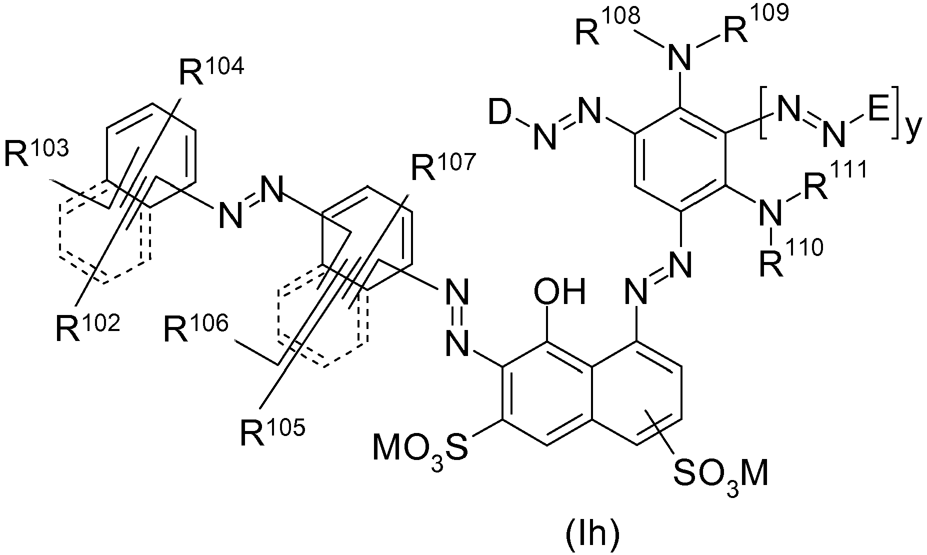 wherein,
each of R¹⁰² to R¹⁰⁷, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined above;and
each of R¹⁰² to R¹⁰⁴, independent of each other can additionally be a group of general formula (2c) as defined above; and
each of R¹⁰⁸ to R¹¹¹, independent of each other is hydrogen, alkyl, alkenyl, cycloalkyl or heterocycloalkyl; or
is alkyl substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkylamino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoarylsulfamoyl, N,N-diaryl-sulfamoyl, N-monocycloalkyl-N-monoarylsulfamoyl or N-monoalkyl-N-monoarylsulfamoyl; or
is a rest of the general formula (7a) as defined above; and
each of D and E, independent of each other is a diazo component of general formula (1 a) as defined above; and
y is 0 or 1.

In especially preferred dyes of general formual (Ih),
each of R¹⁰² to R¹⁰⁷, independent of each other is hydrogen, (C₁-C₄)alkyl, (C₁-C₄)alkoxy, halogen, acyl or SO₃M; or
is SO₂-X, where X is vinyl or a radical -CH₂CH₂-Y and Y is a group removable under alkaline conditions such as OSO₃M; or
is -NH-RG, where RG is the same as defined above; or
is -(CH₂)_{b}-NH-RG, where b' is an integer of 1 to 3 and RG is the same as defined above; and
each of R¹⁰⁸ to R¹¹¹, independent of each other is hydrogen, alkyl, or sulfomethyl; or
is -(CH₂)_{c'}-NH-RG, where c' is an integer of 1 to 3 and RG is the same as defined above; and;
y is 0 or 1; and
each of D and E, independent of each other is a radical of the general formula (1b') 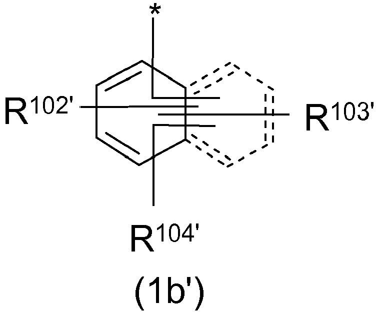 where R^{102'} to R^{104'} have the same meaning as defined above for R¹⁰² to R¹⁰⁴.

Examples of preferred dyes of the formulae (Ia) to (Ih) are the compounds I¹ to I²¹² listed in the table 1 below and having the general formula (I').

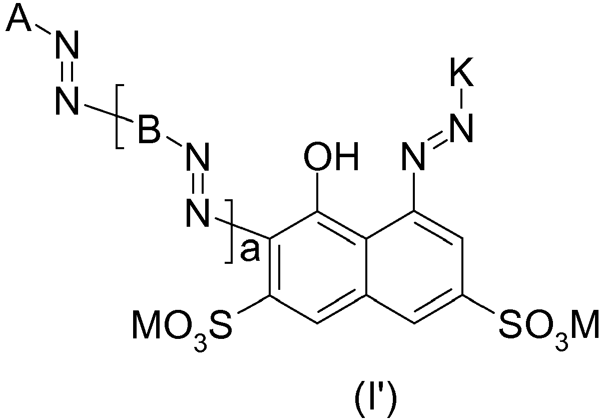

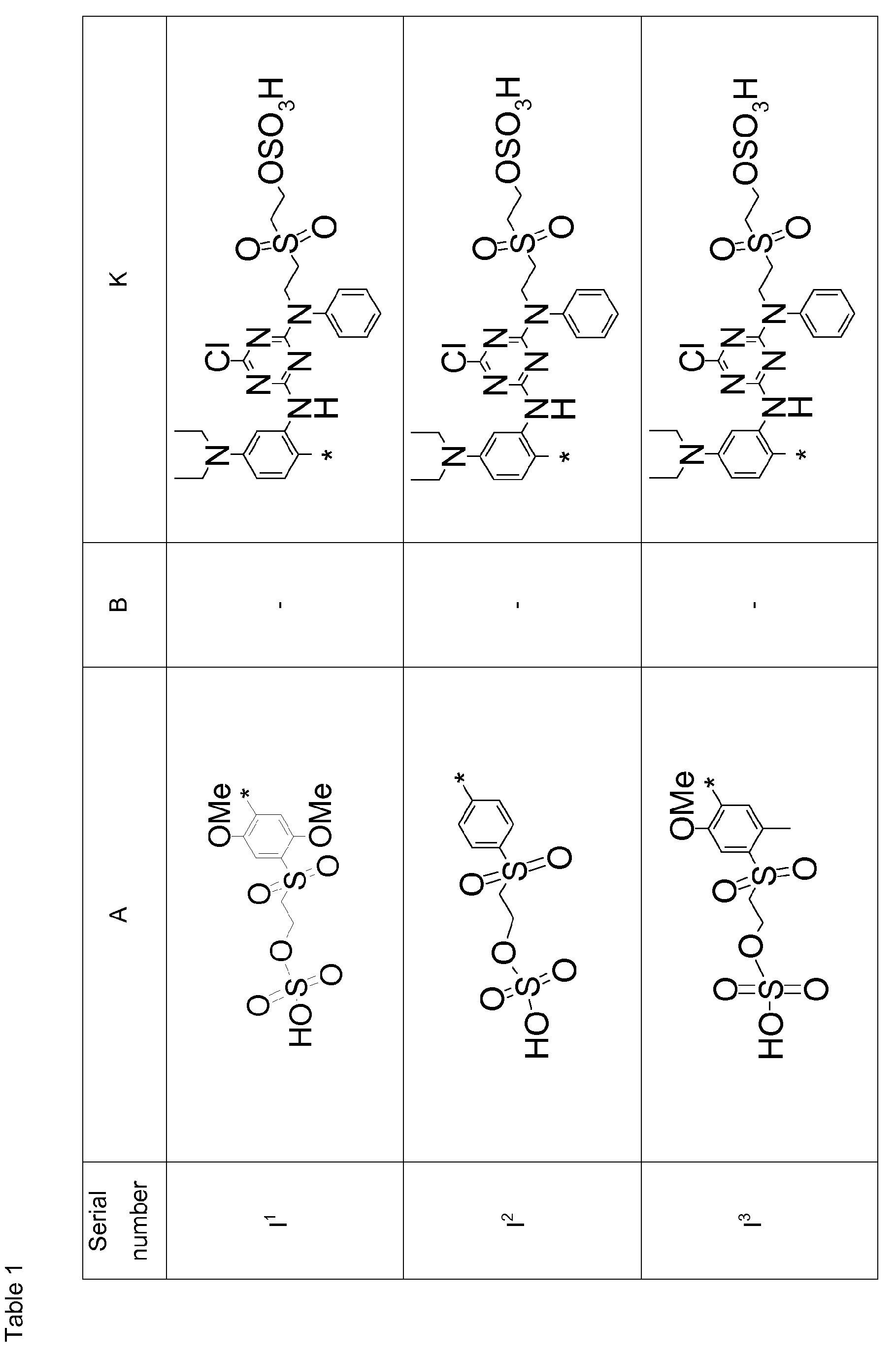

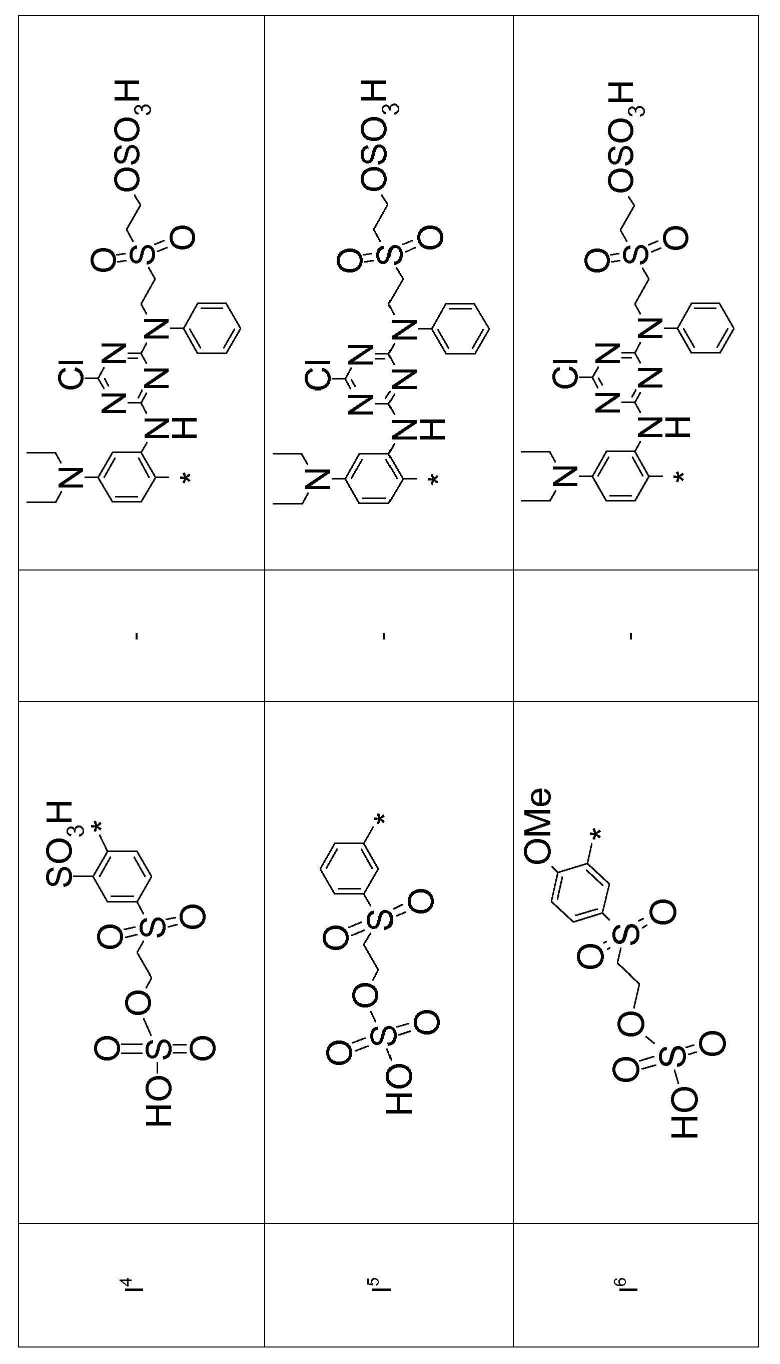

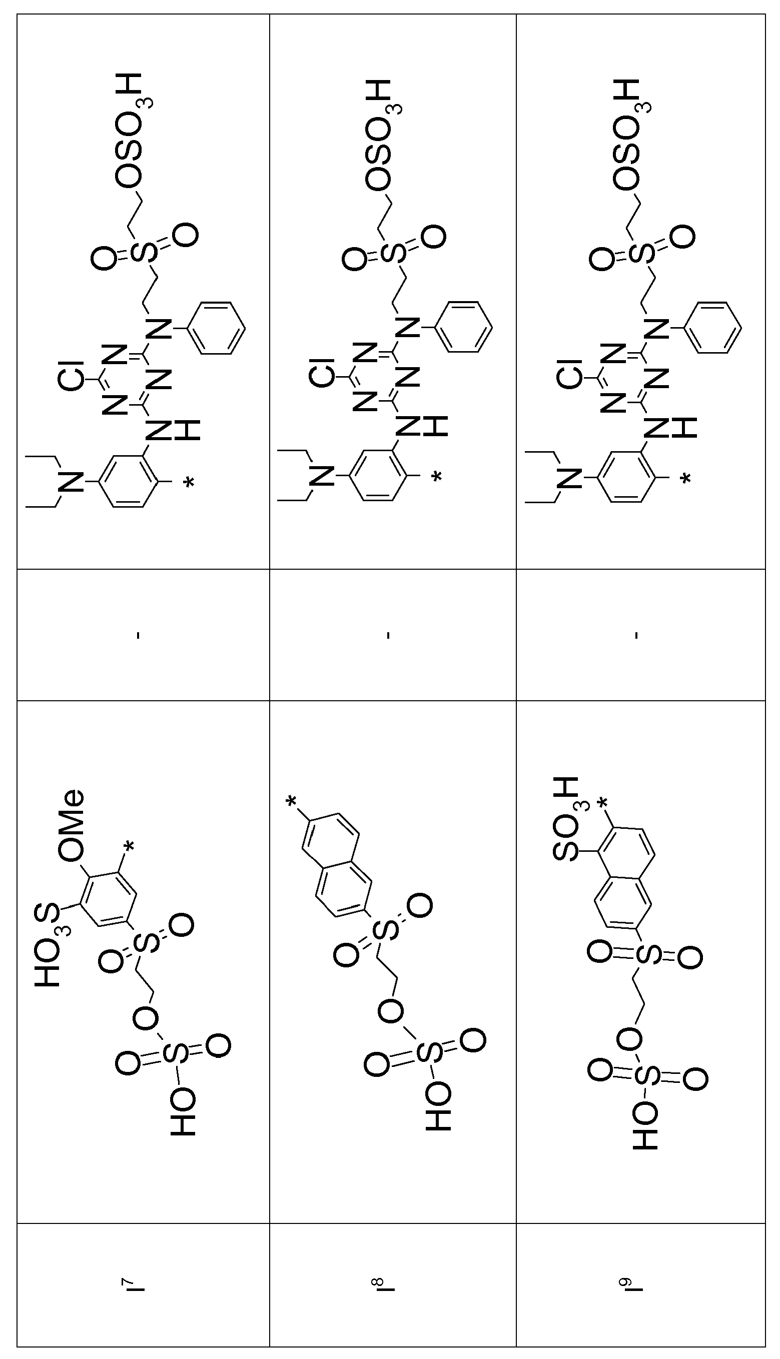

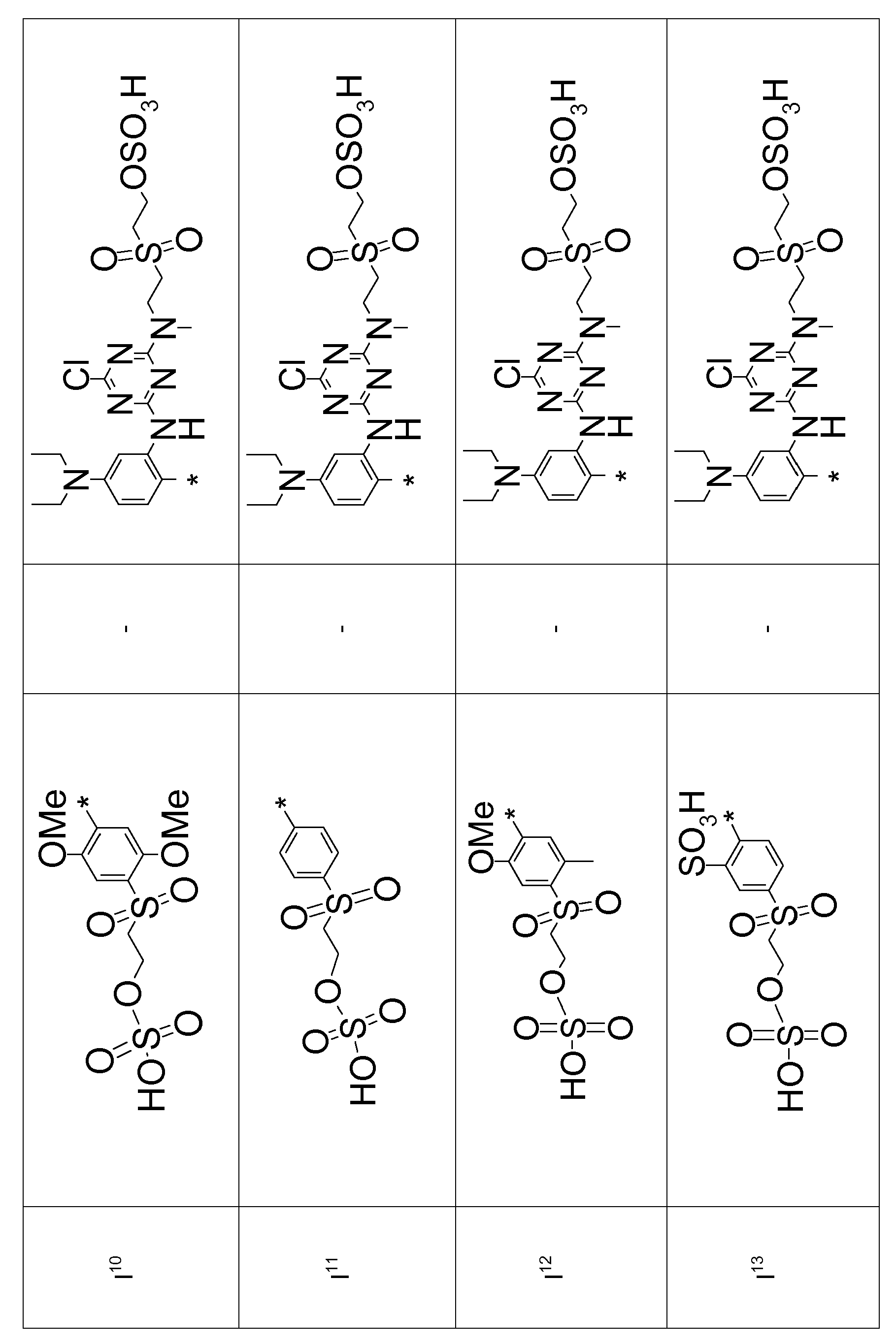

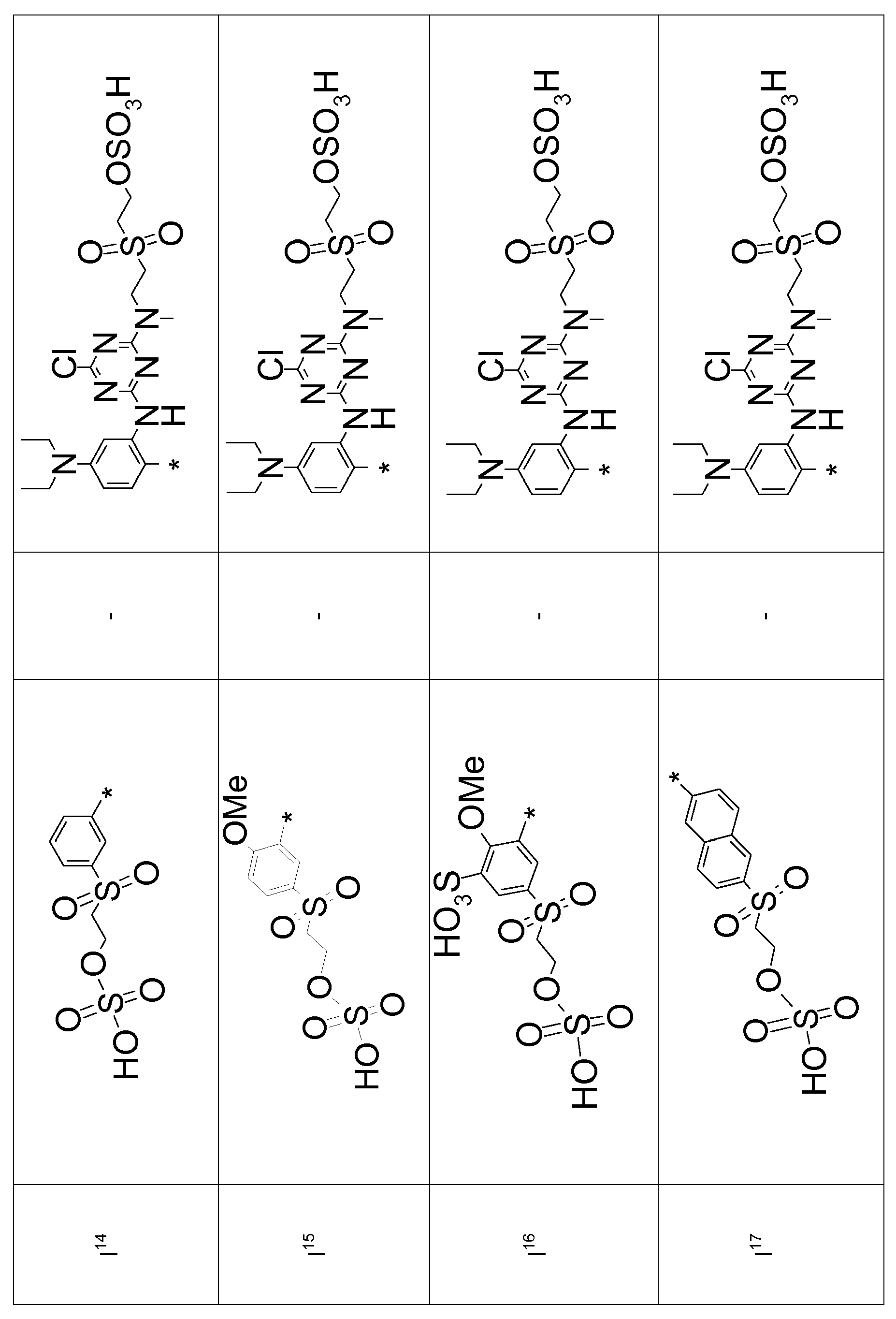

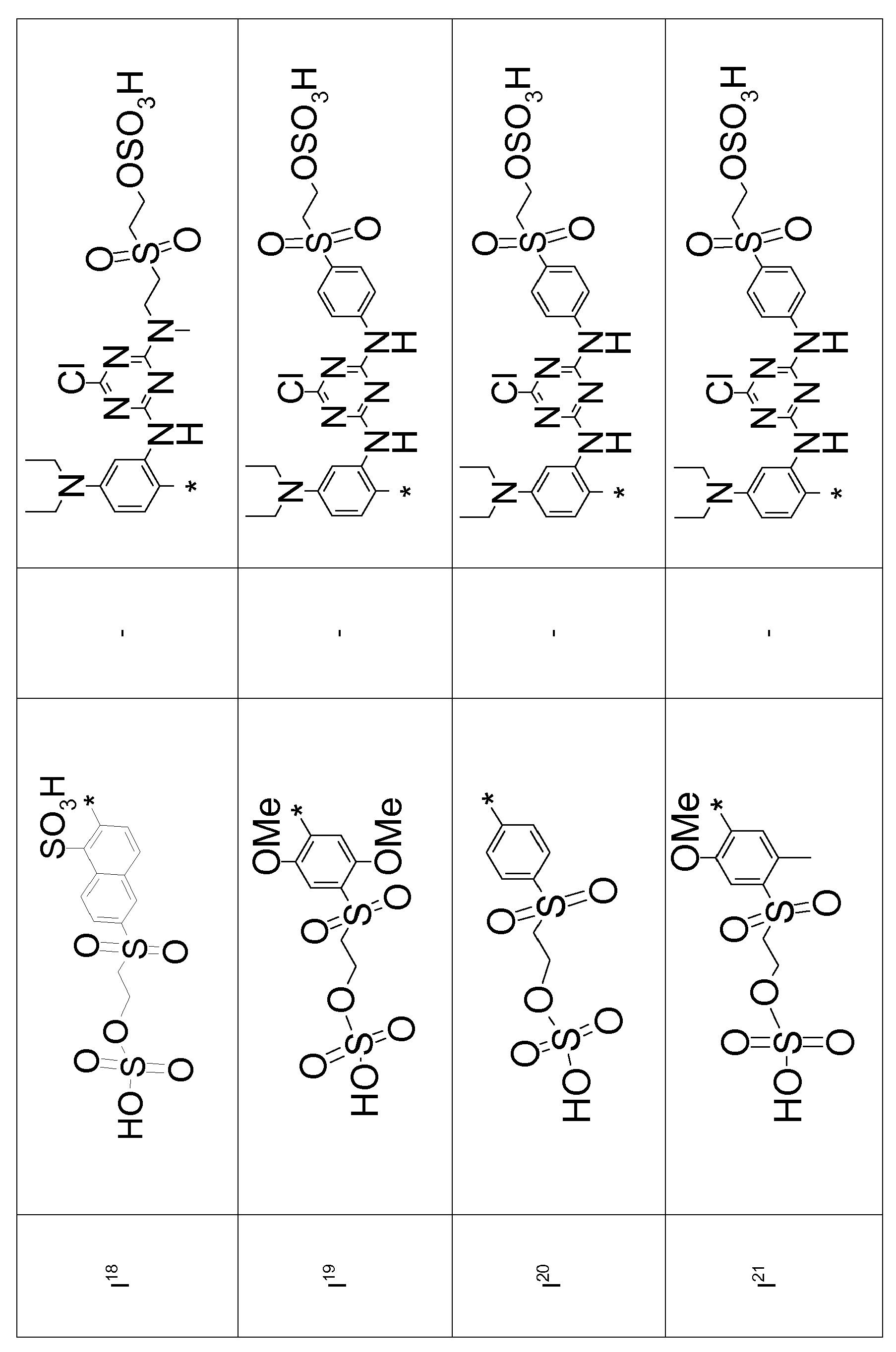

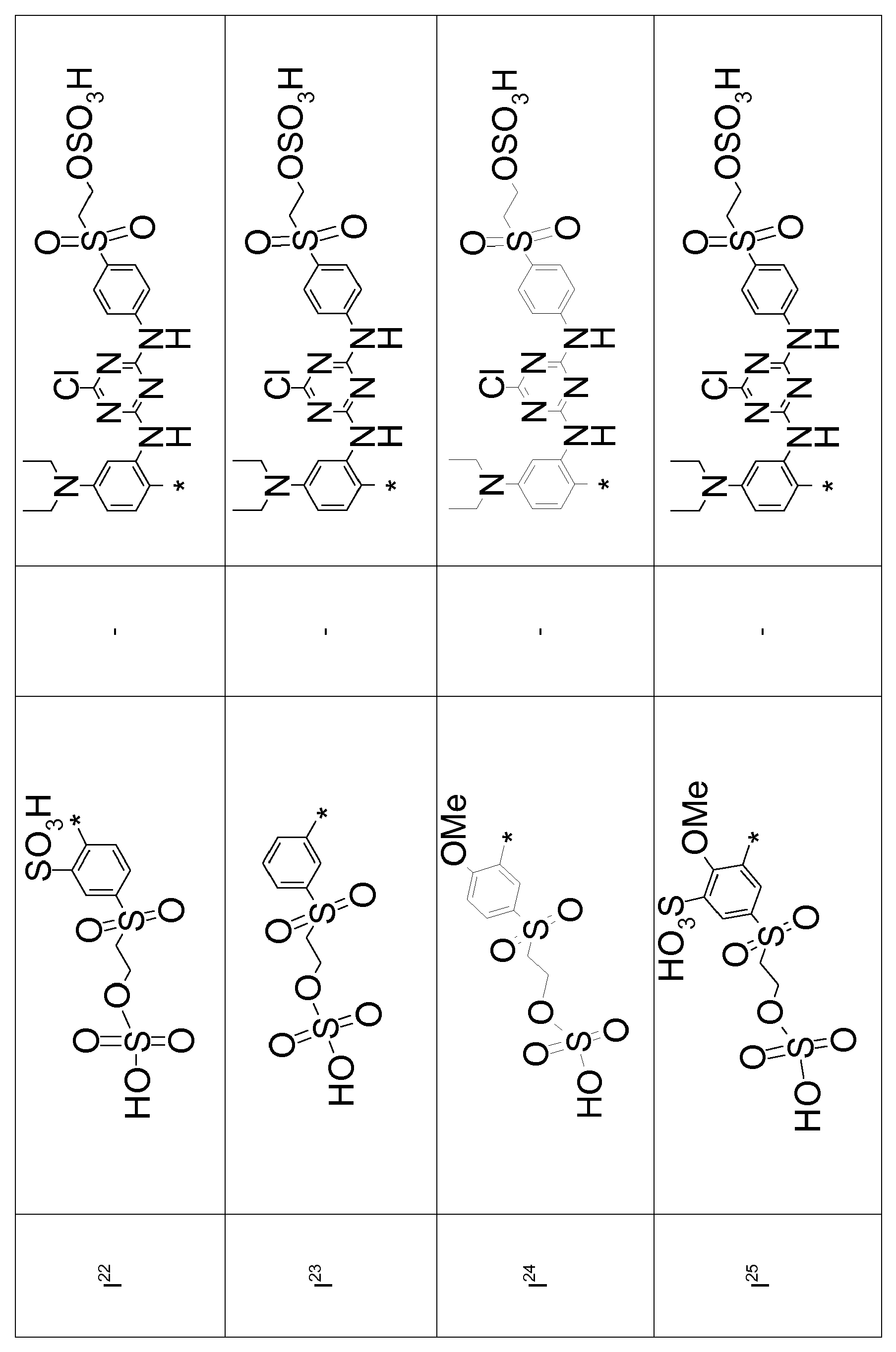

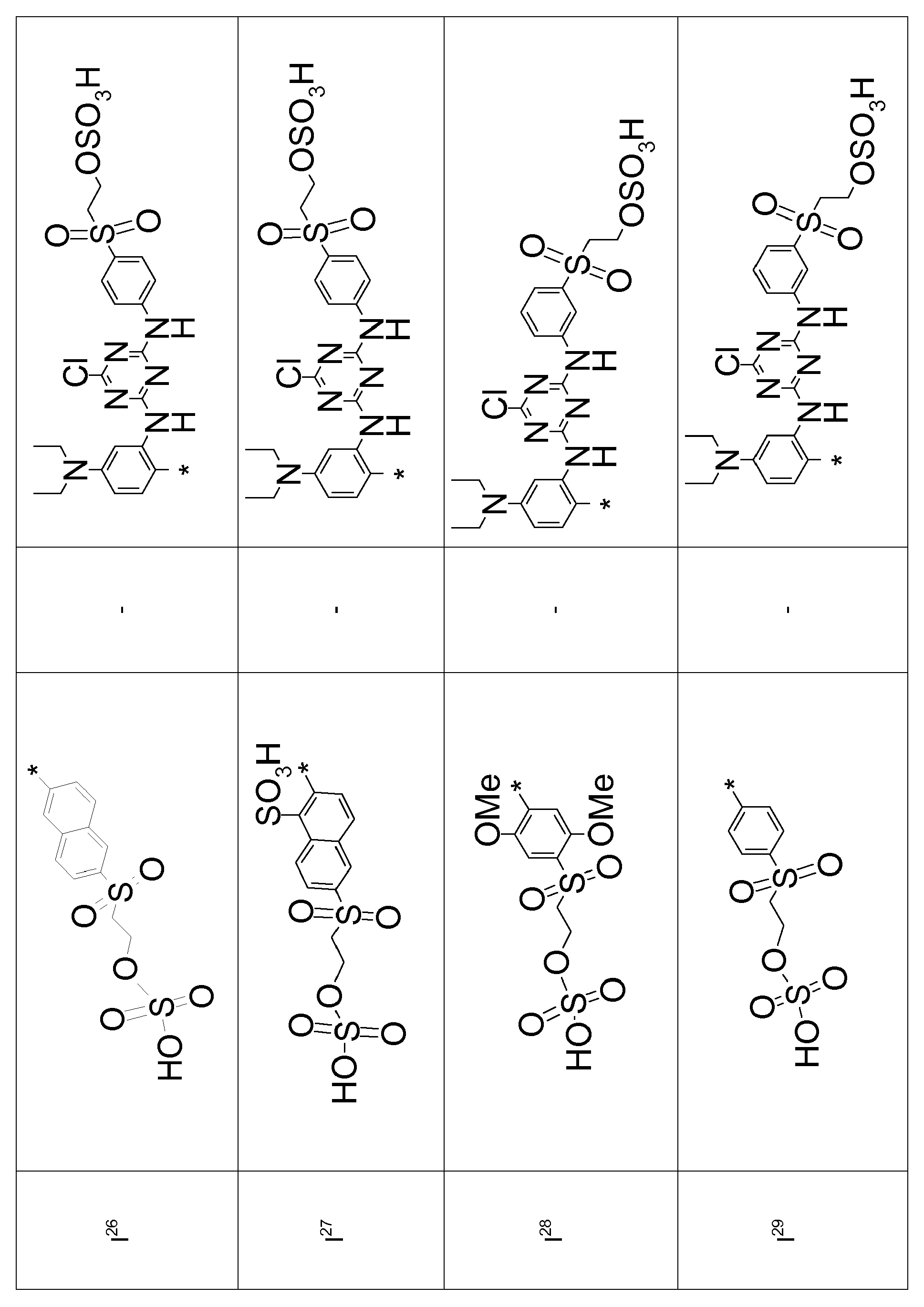

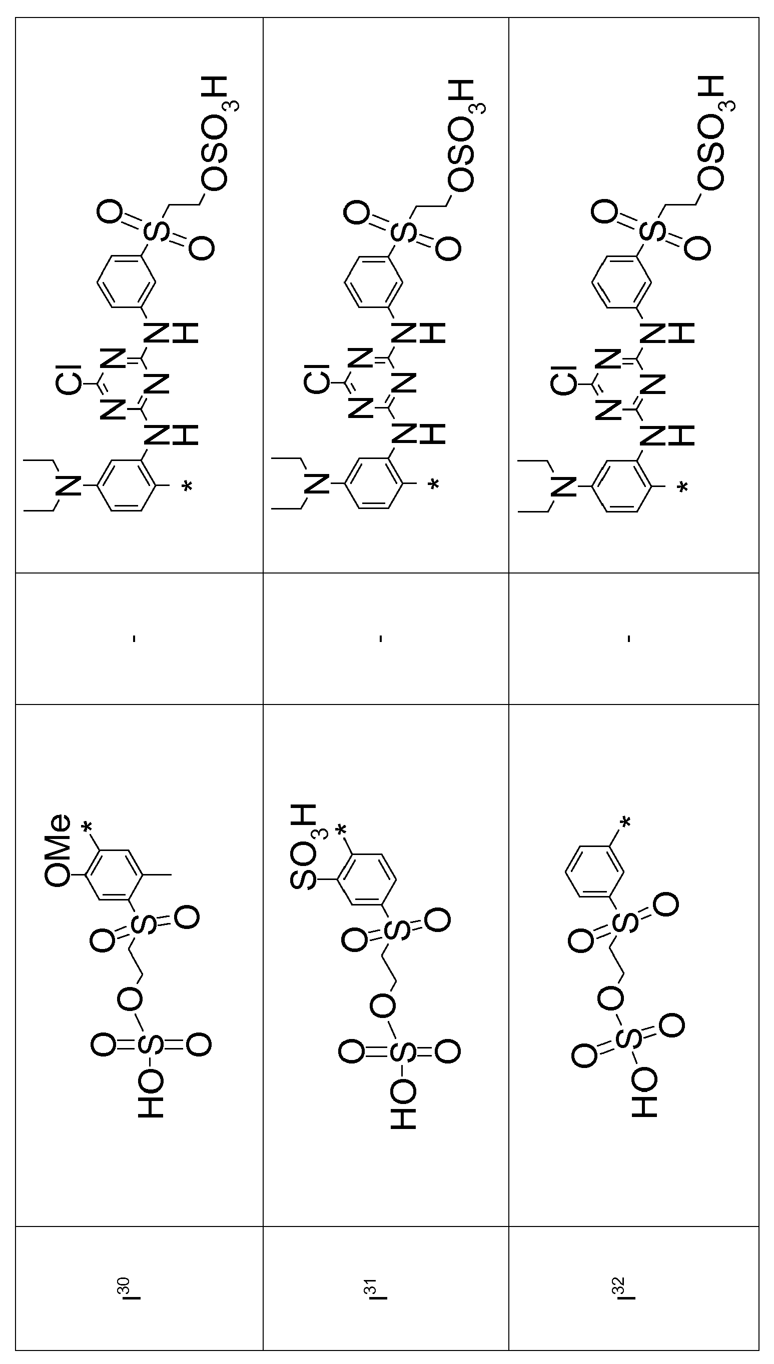

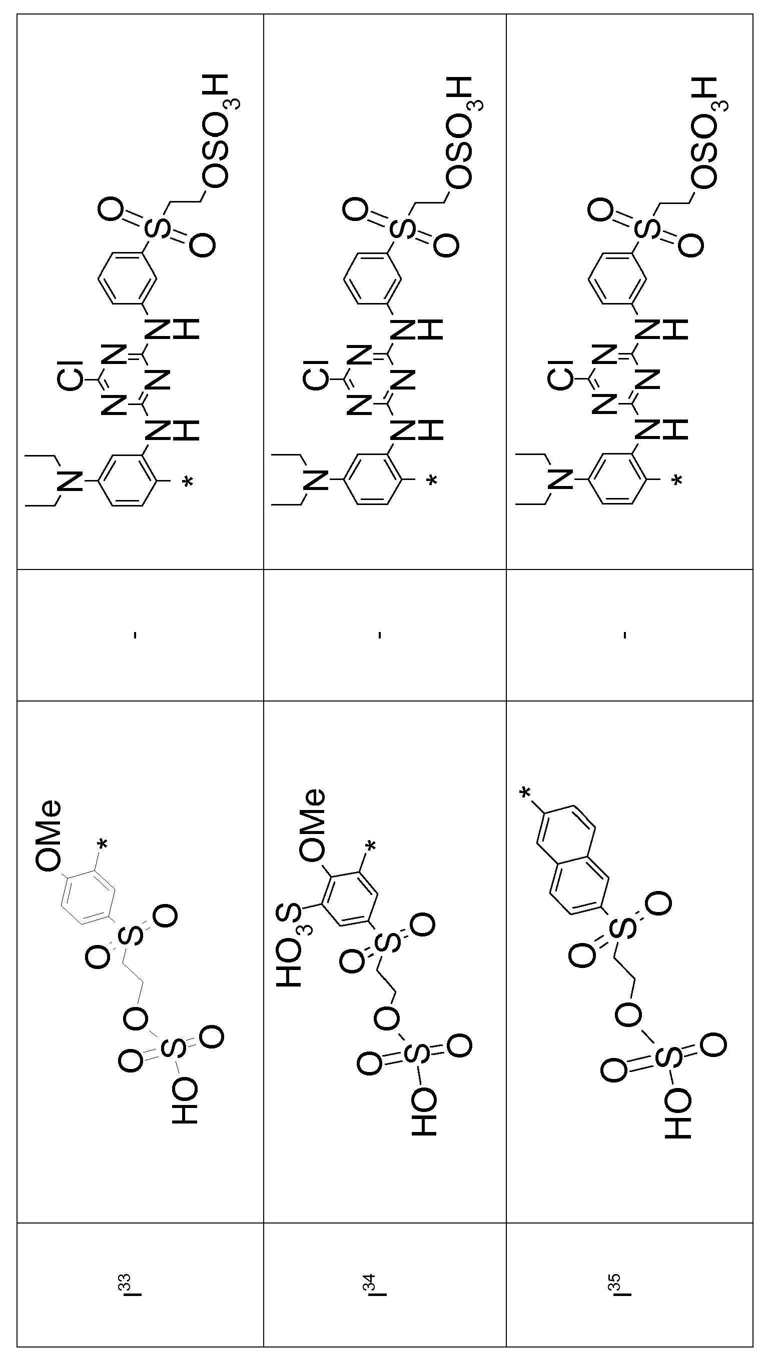

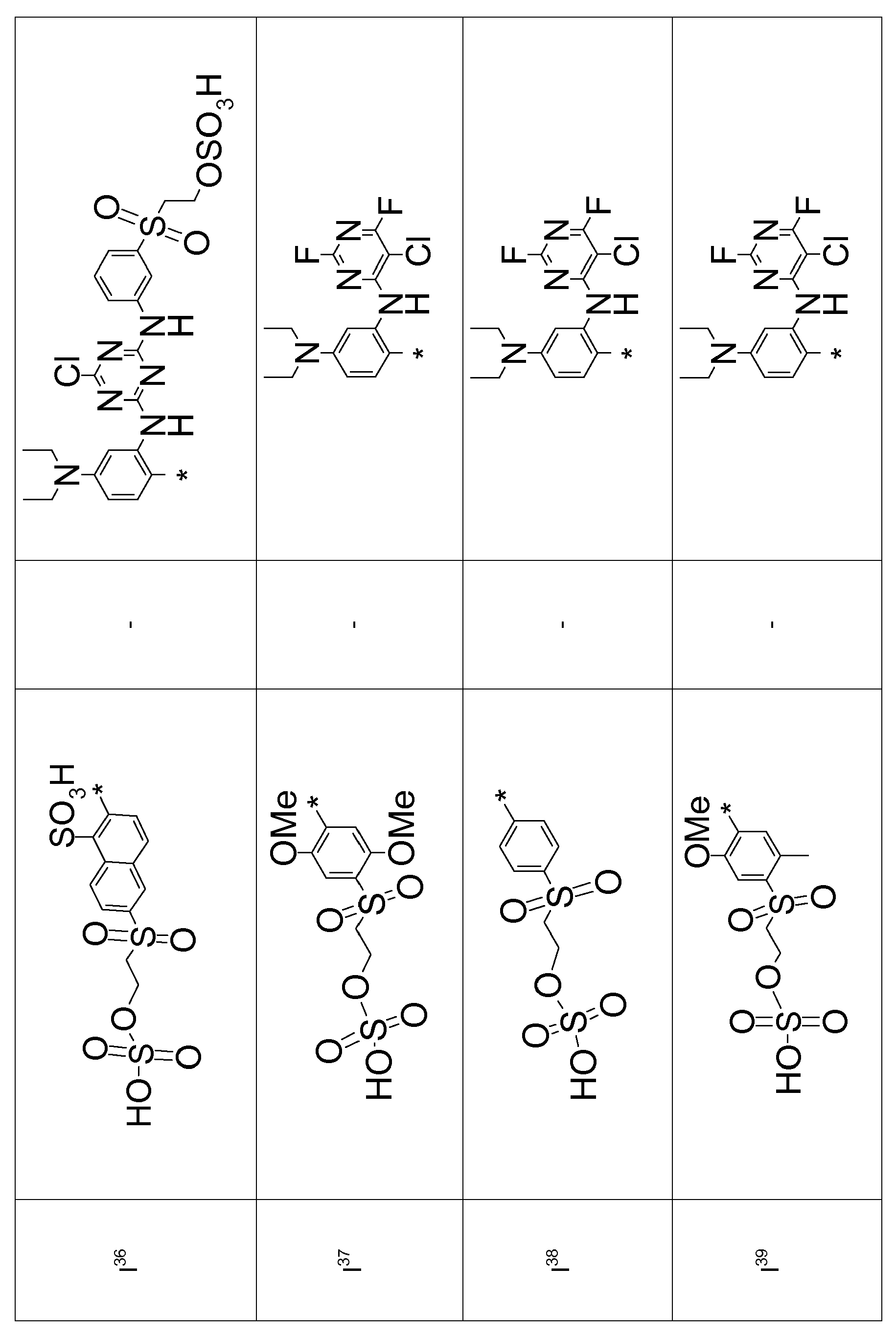

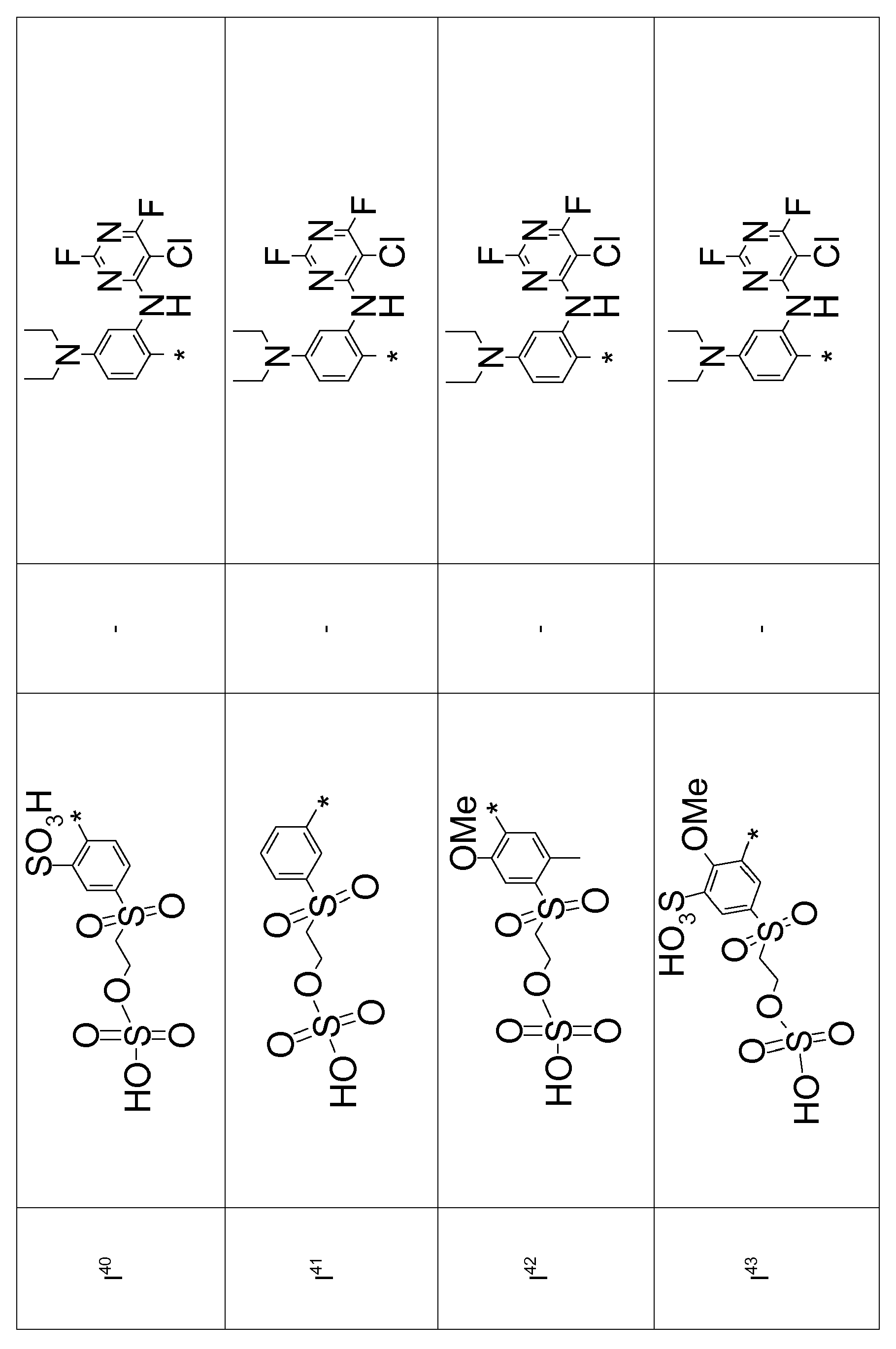

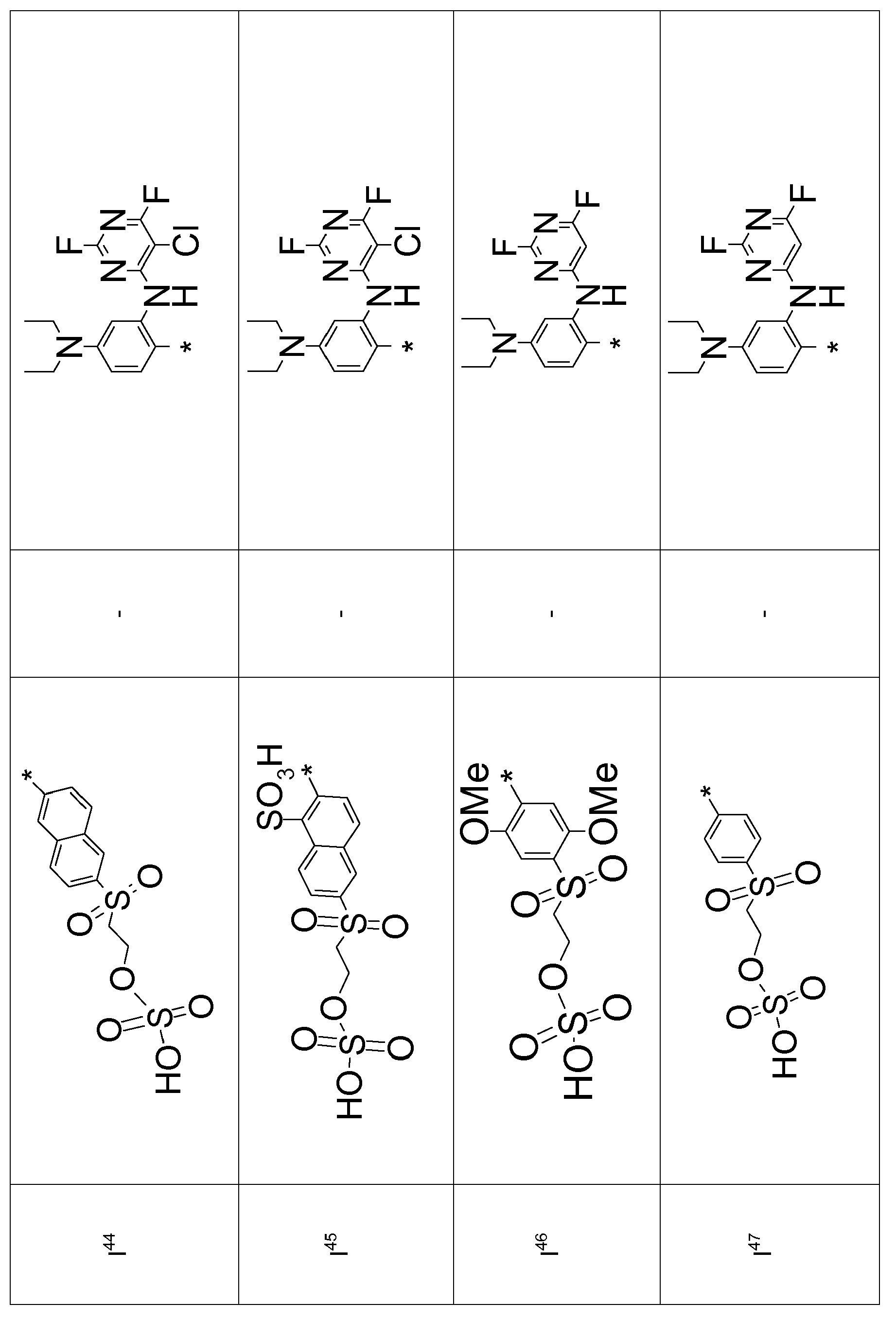

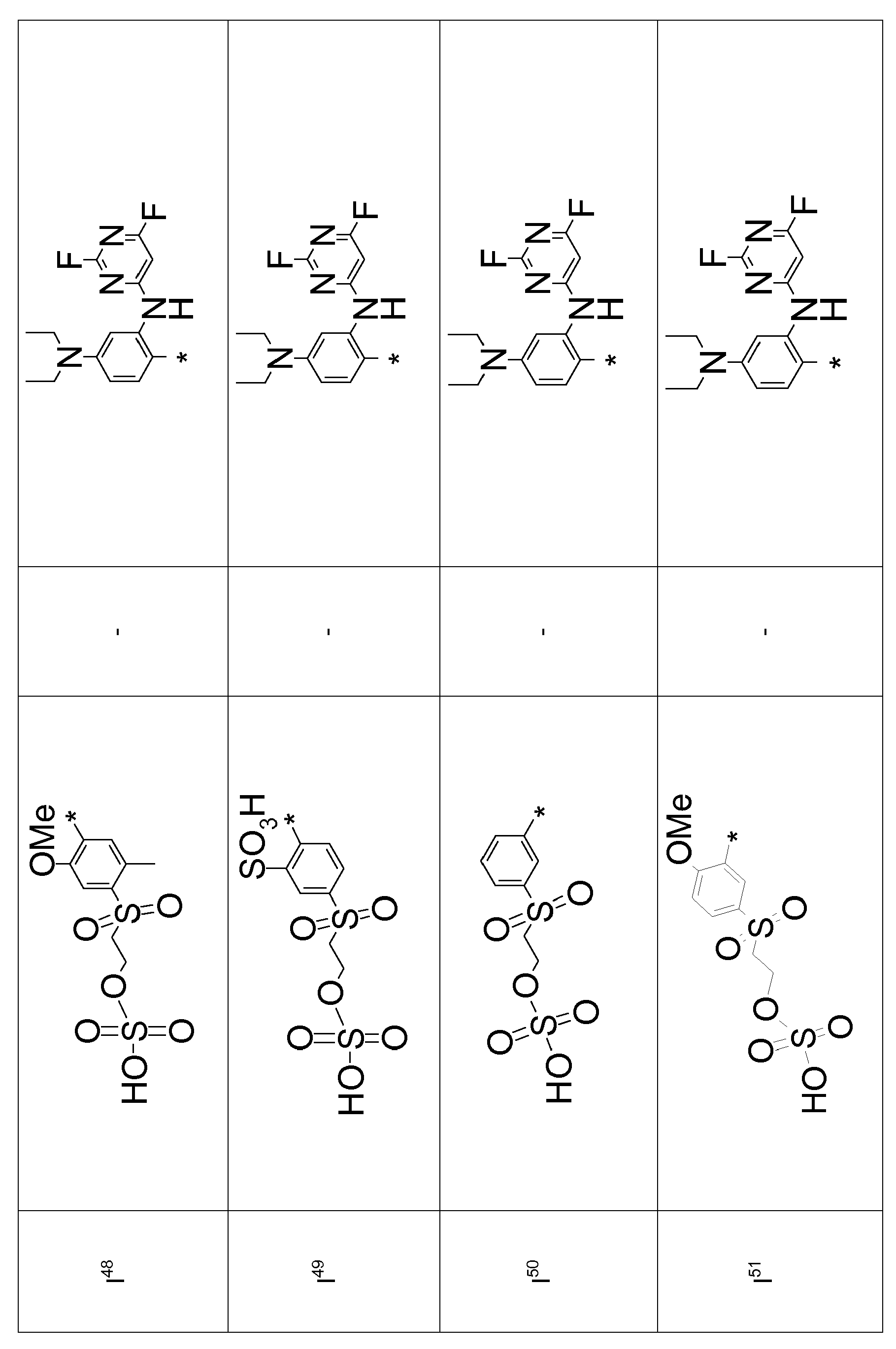

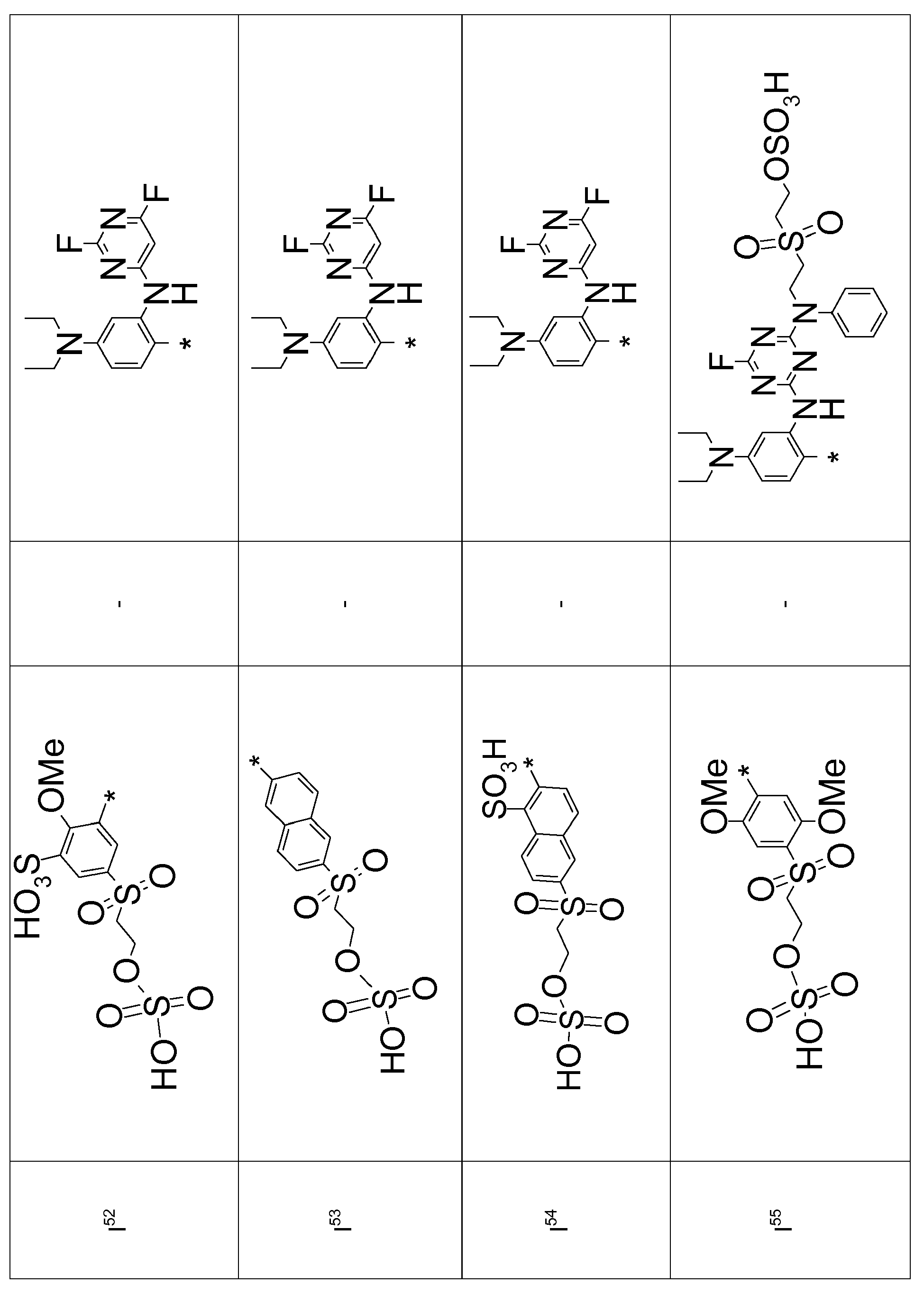

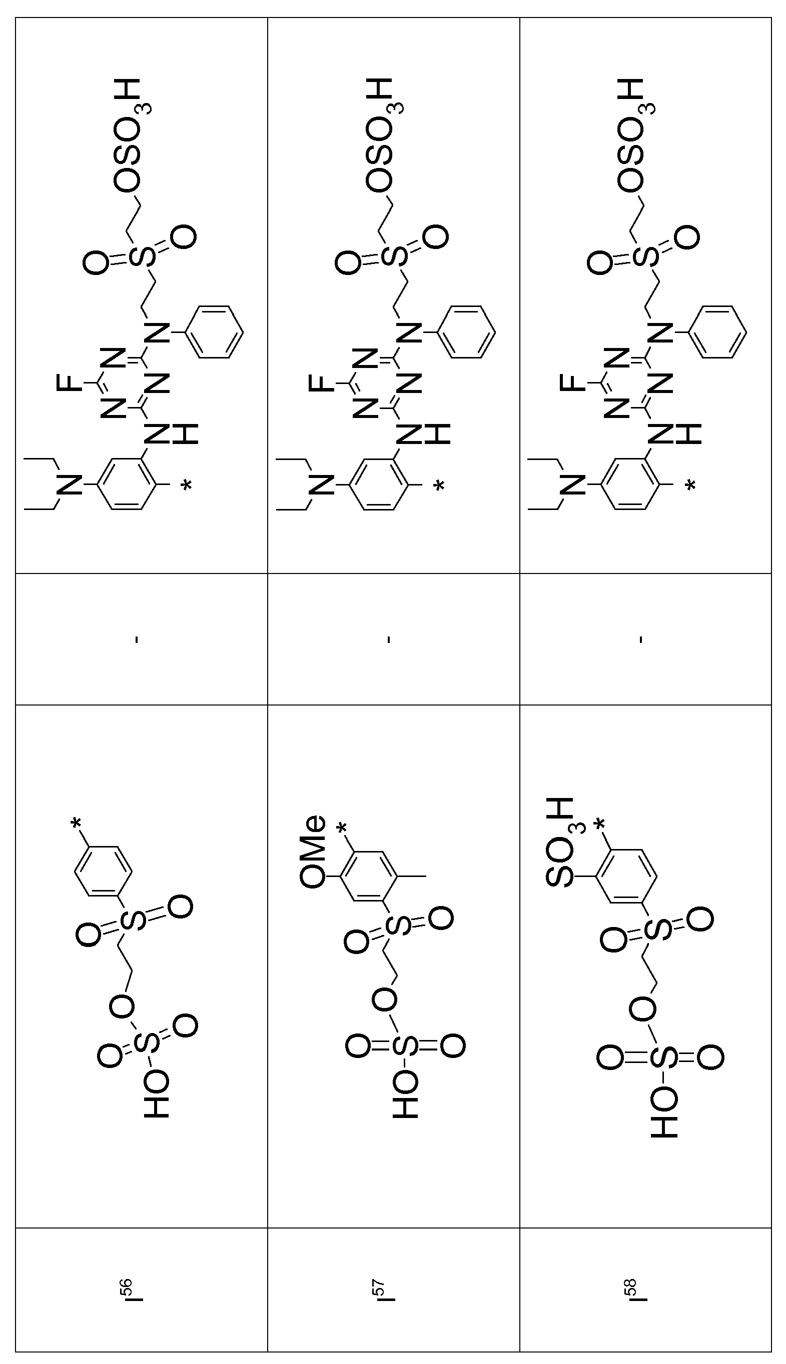

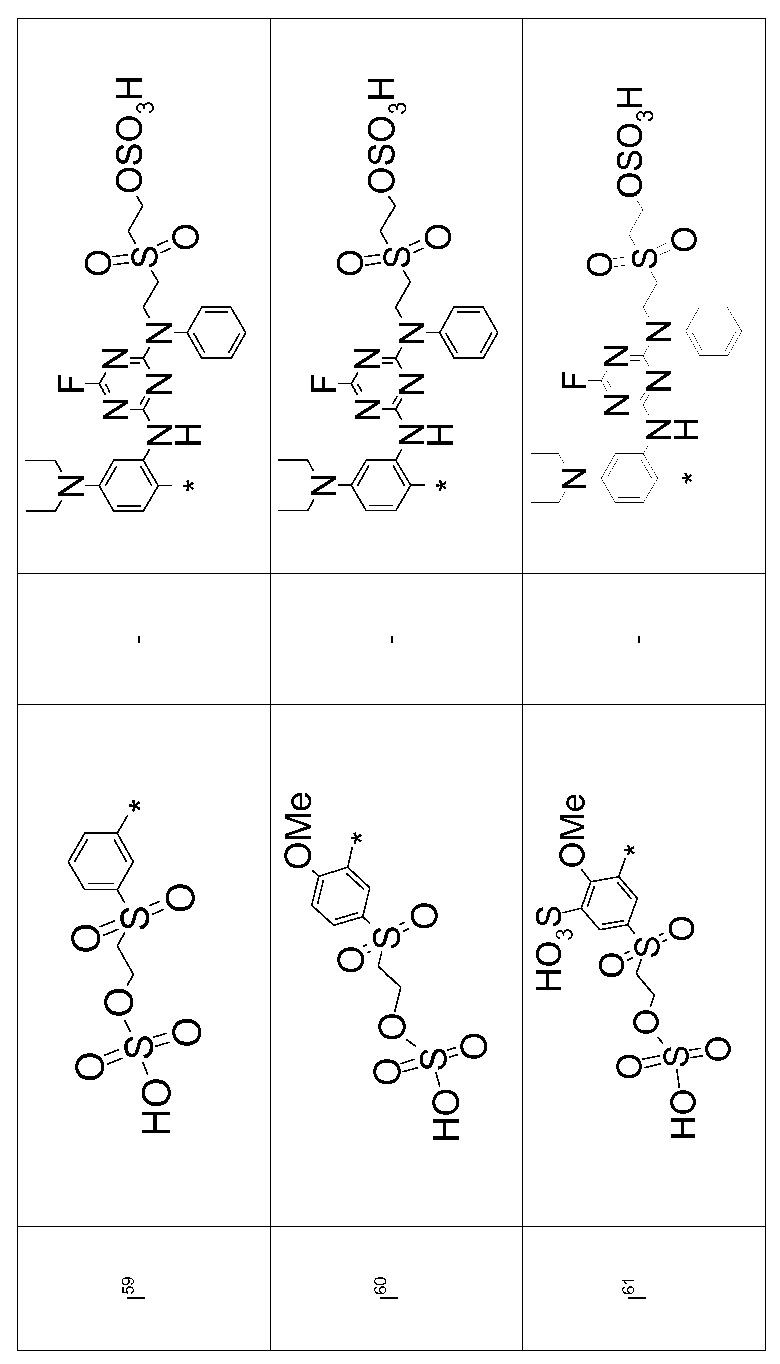

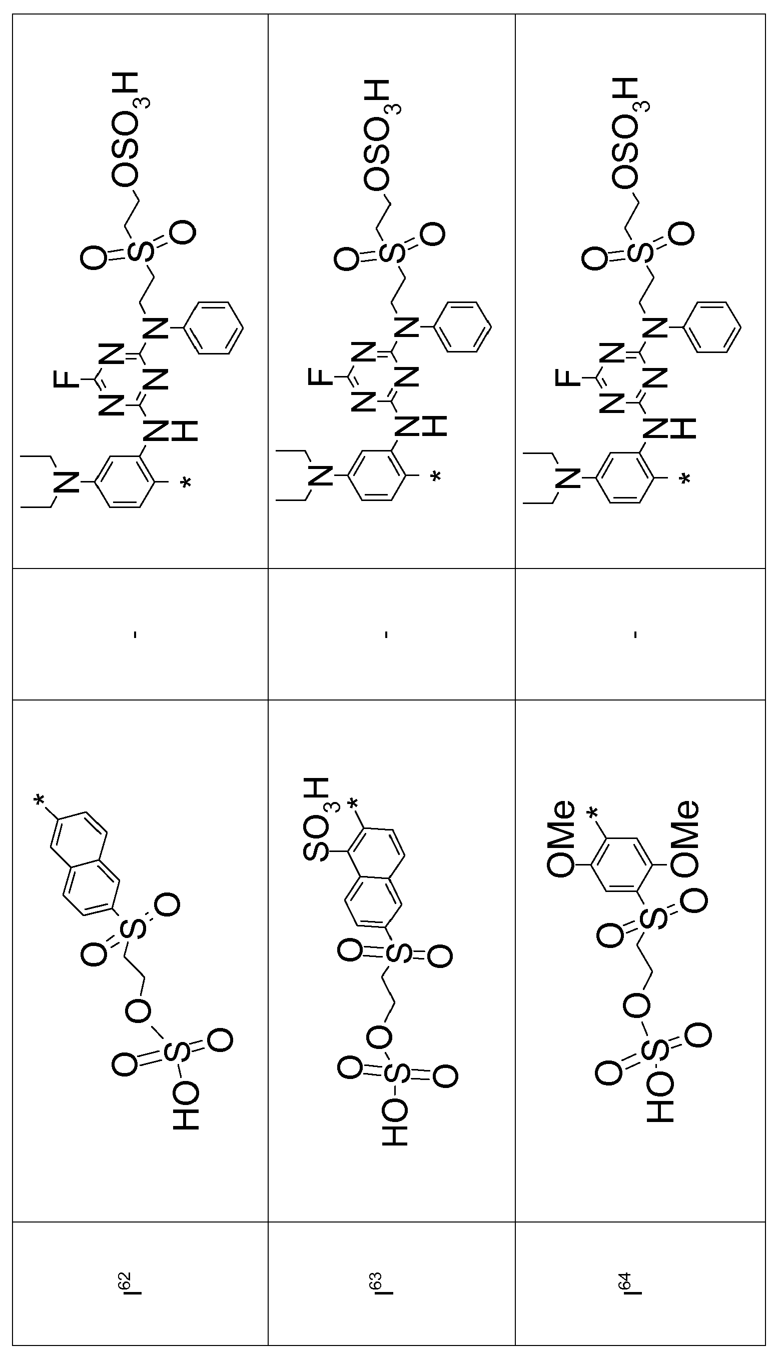

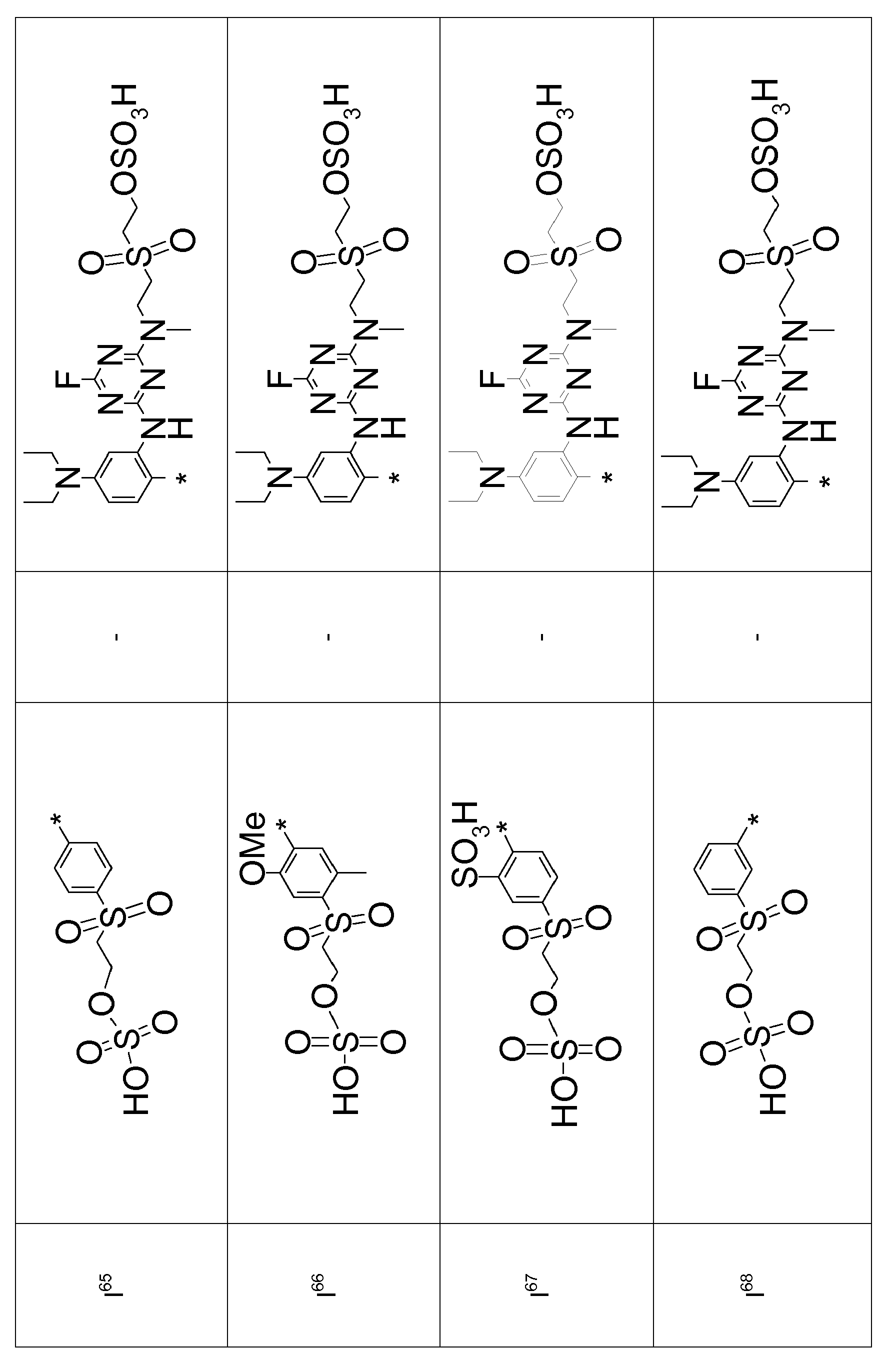

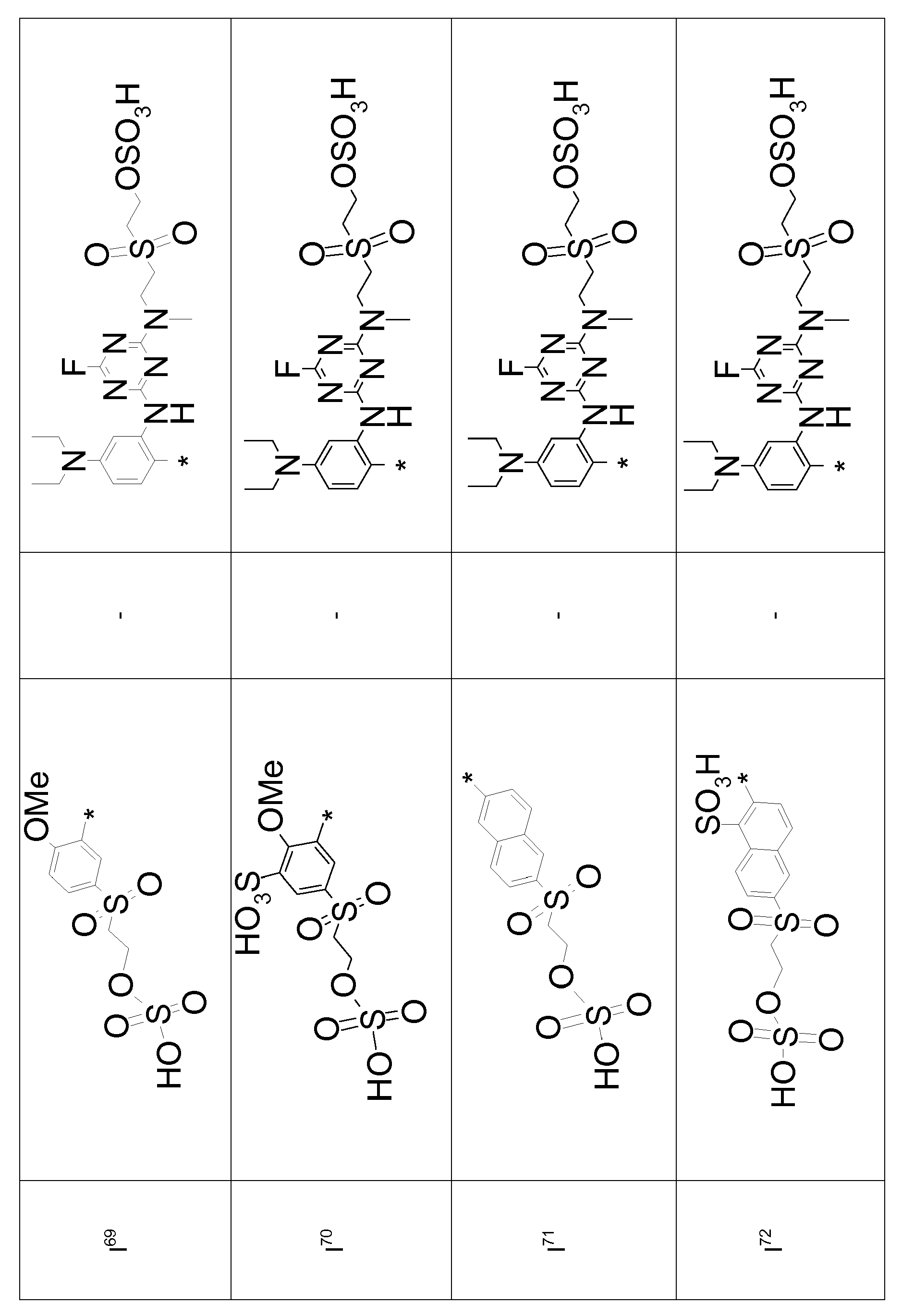

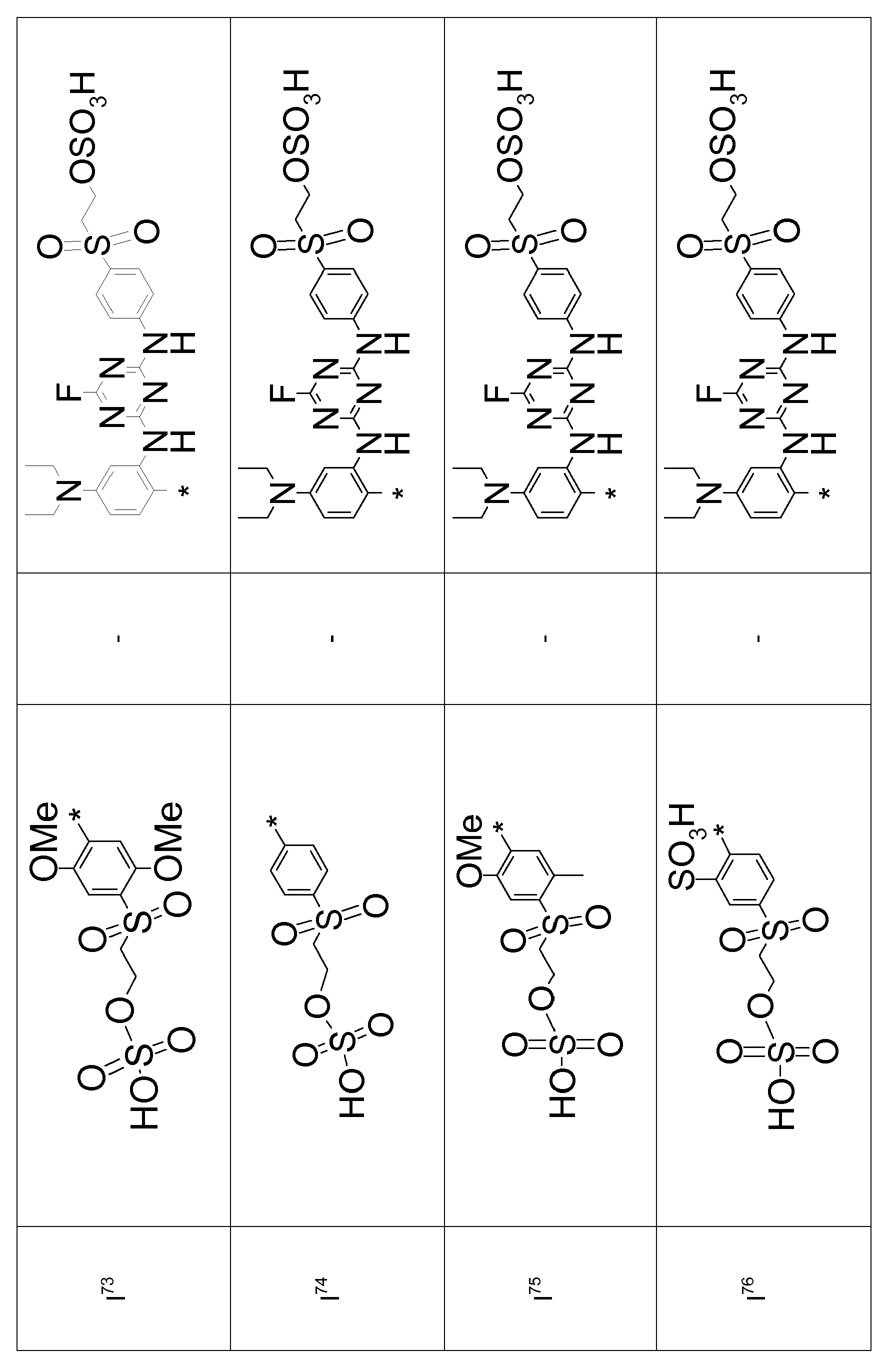

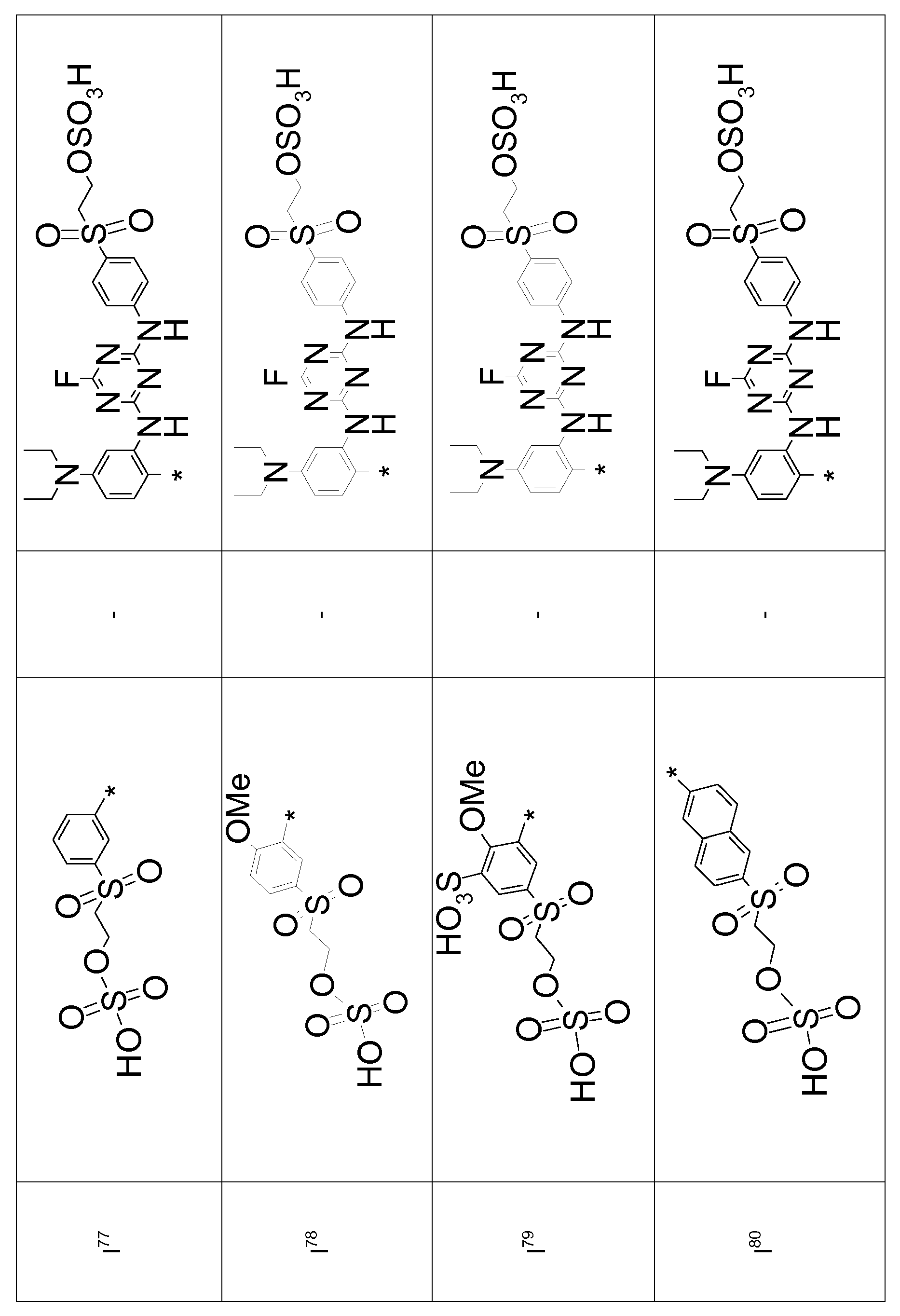

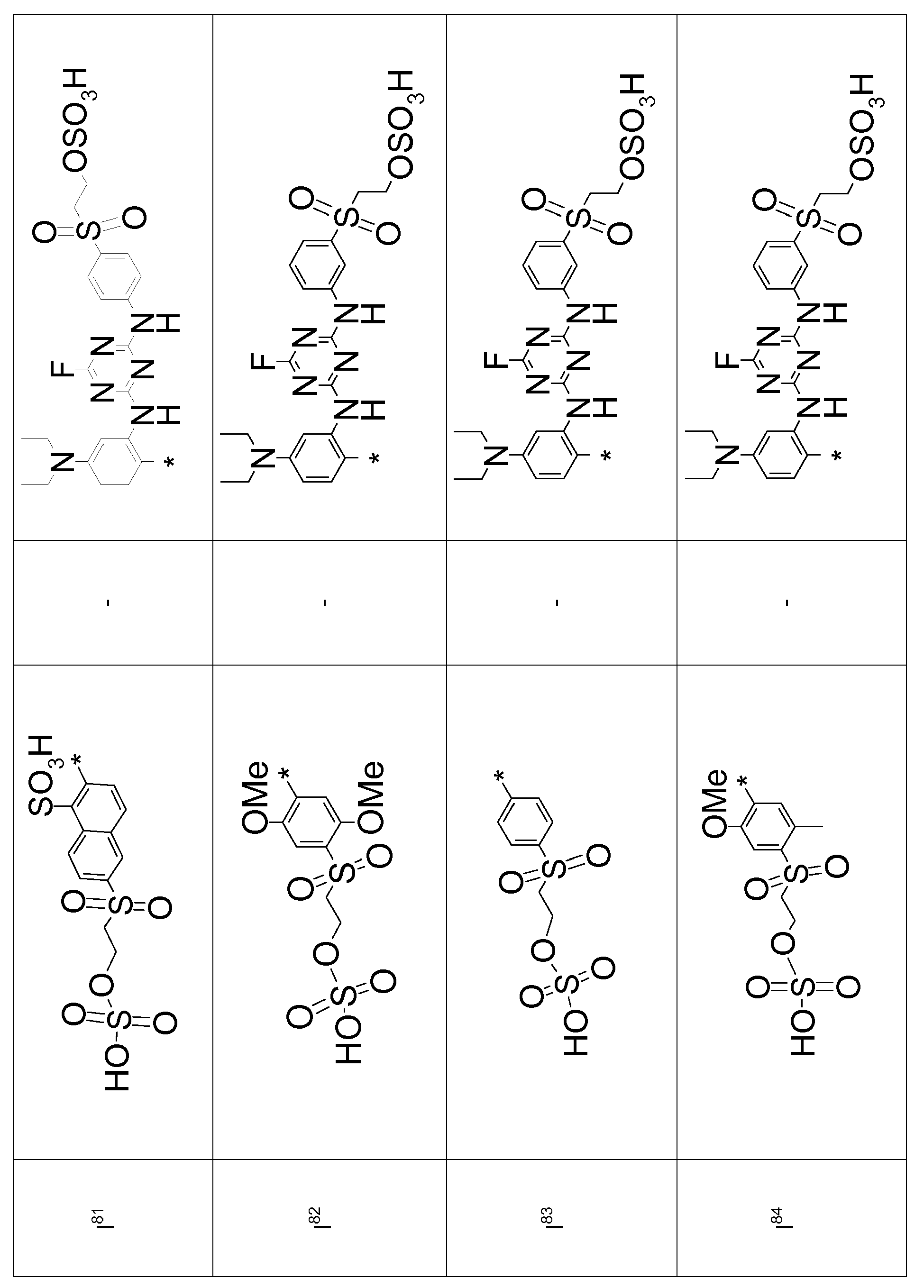

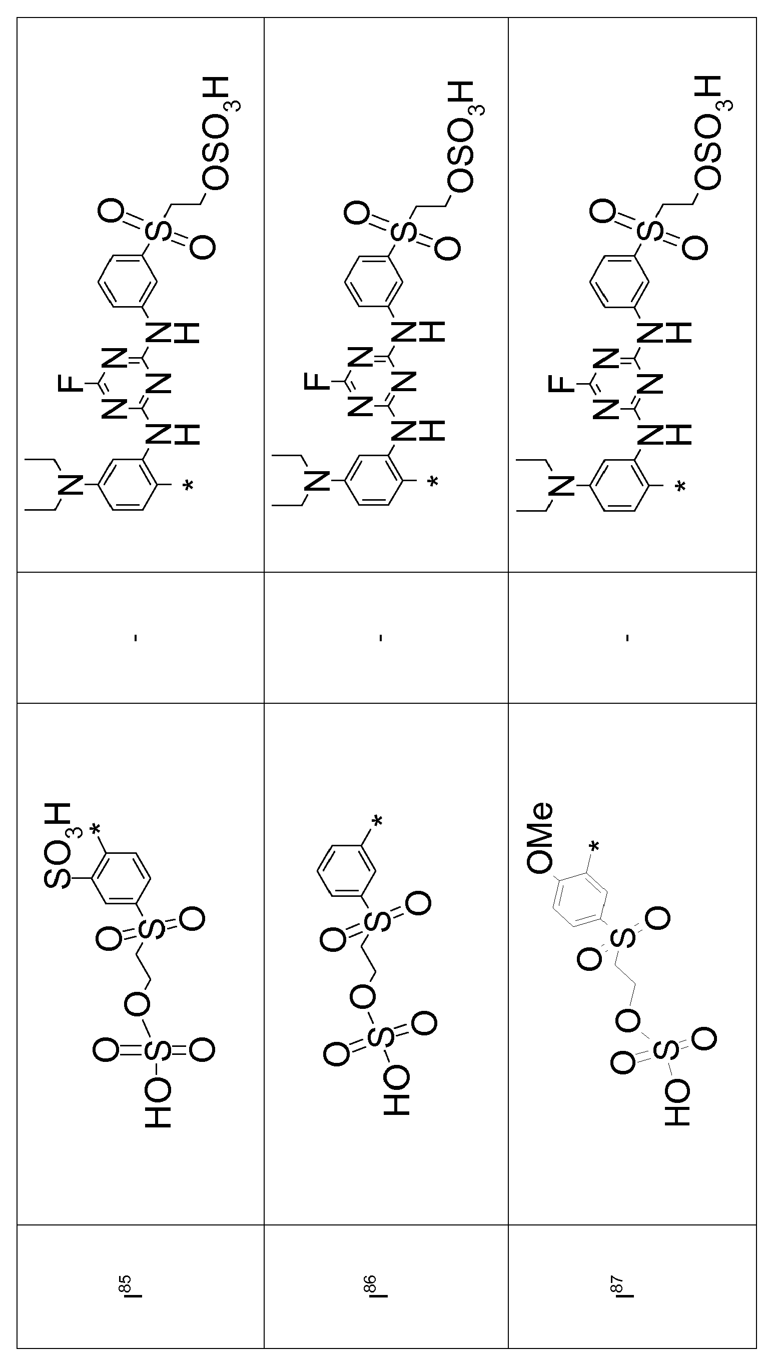

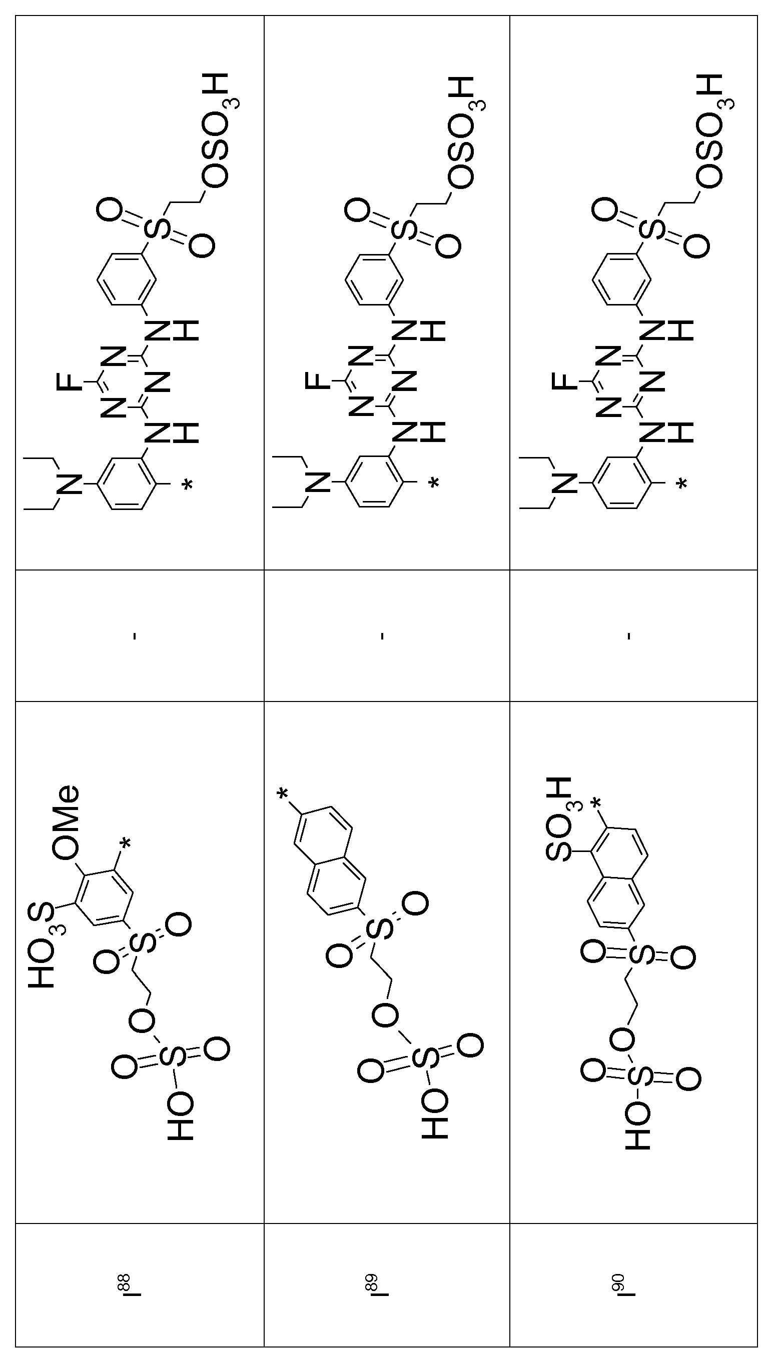

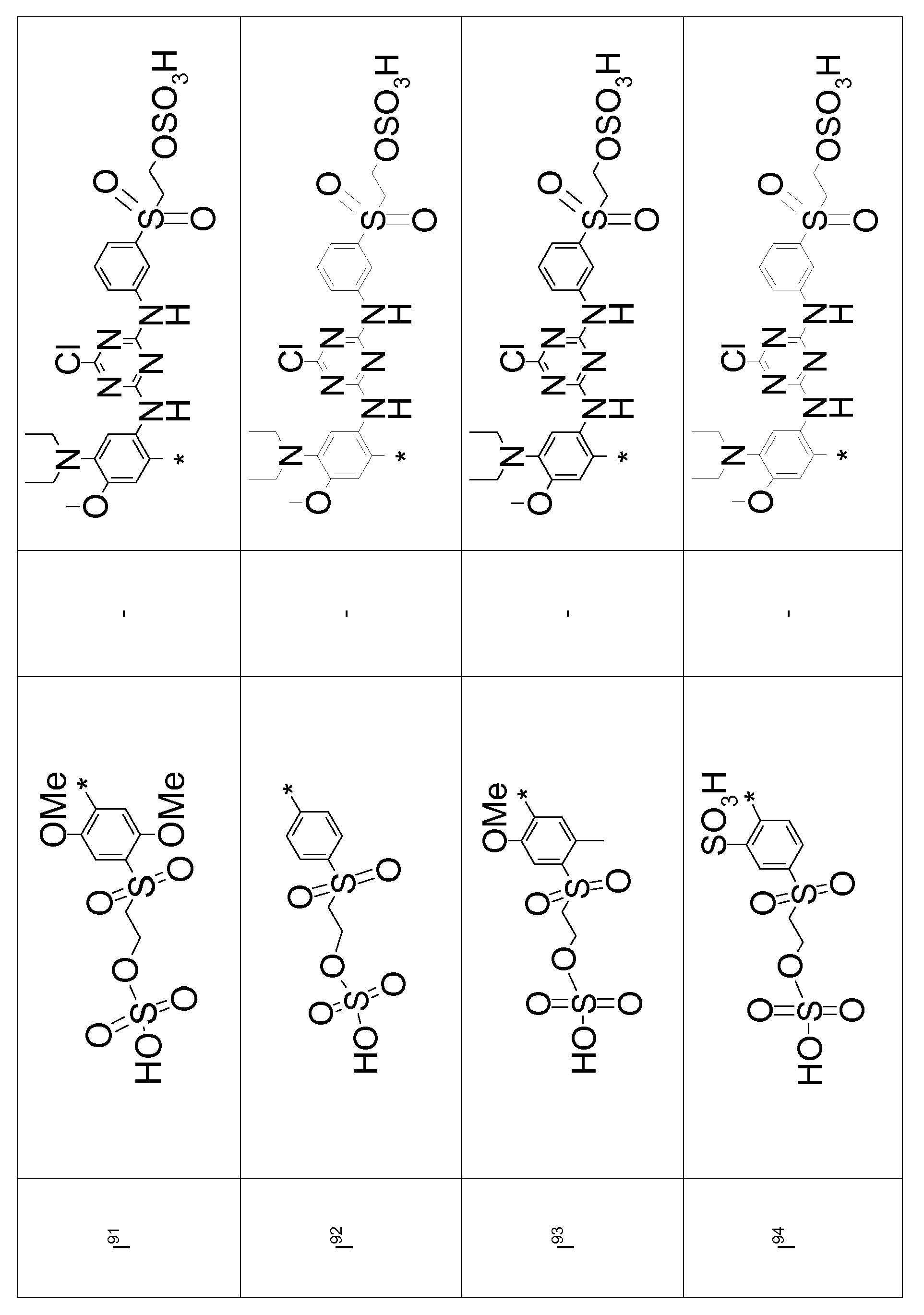

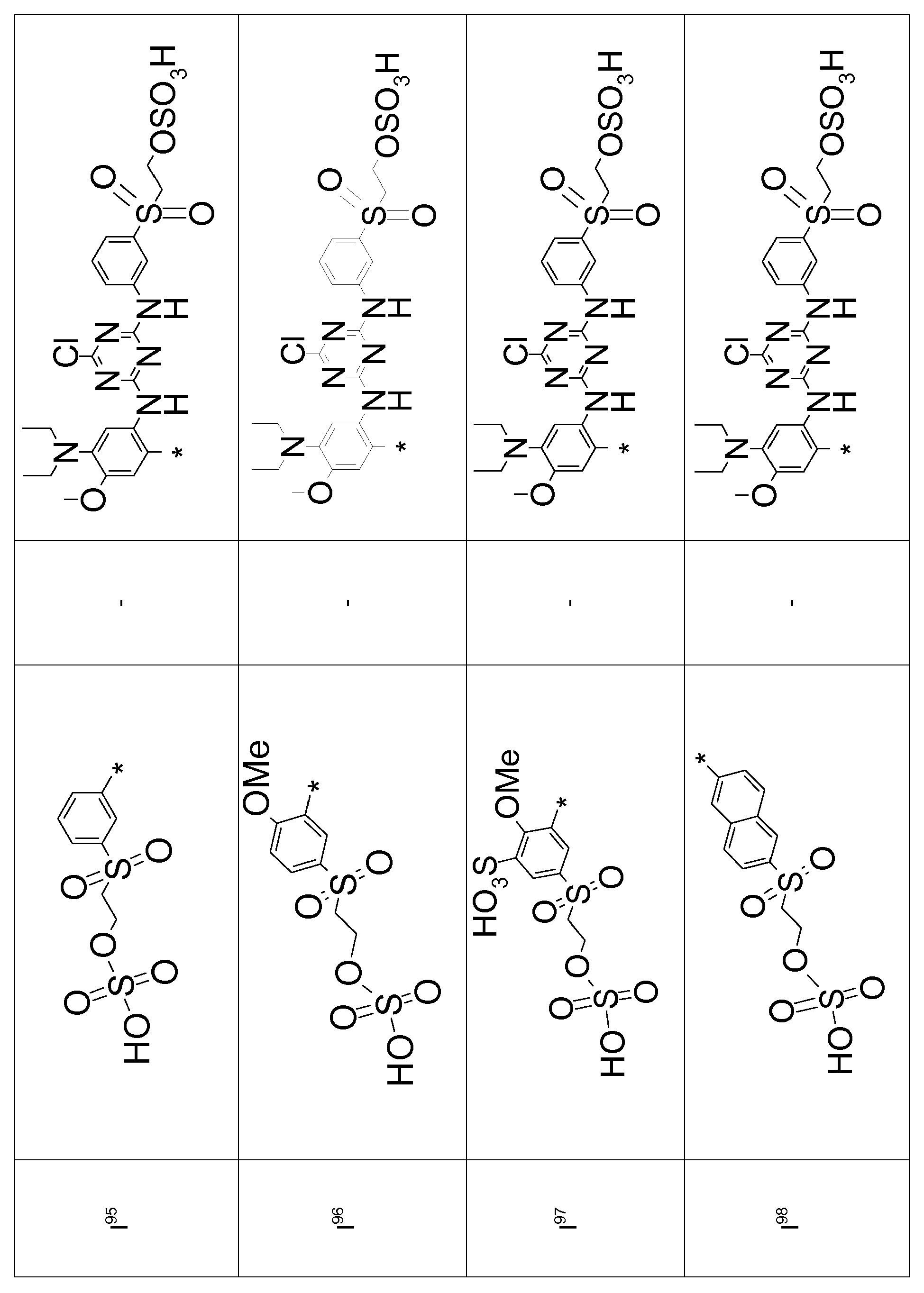

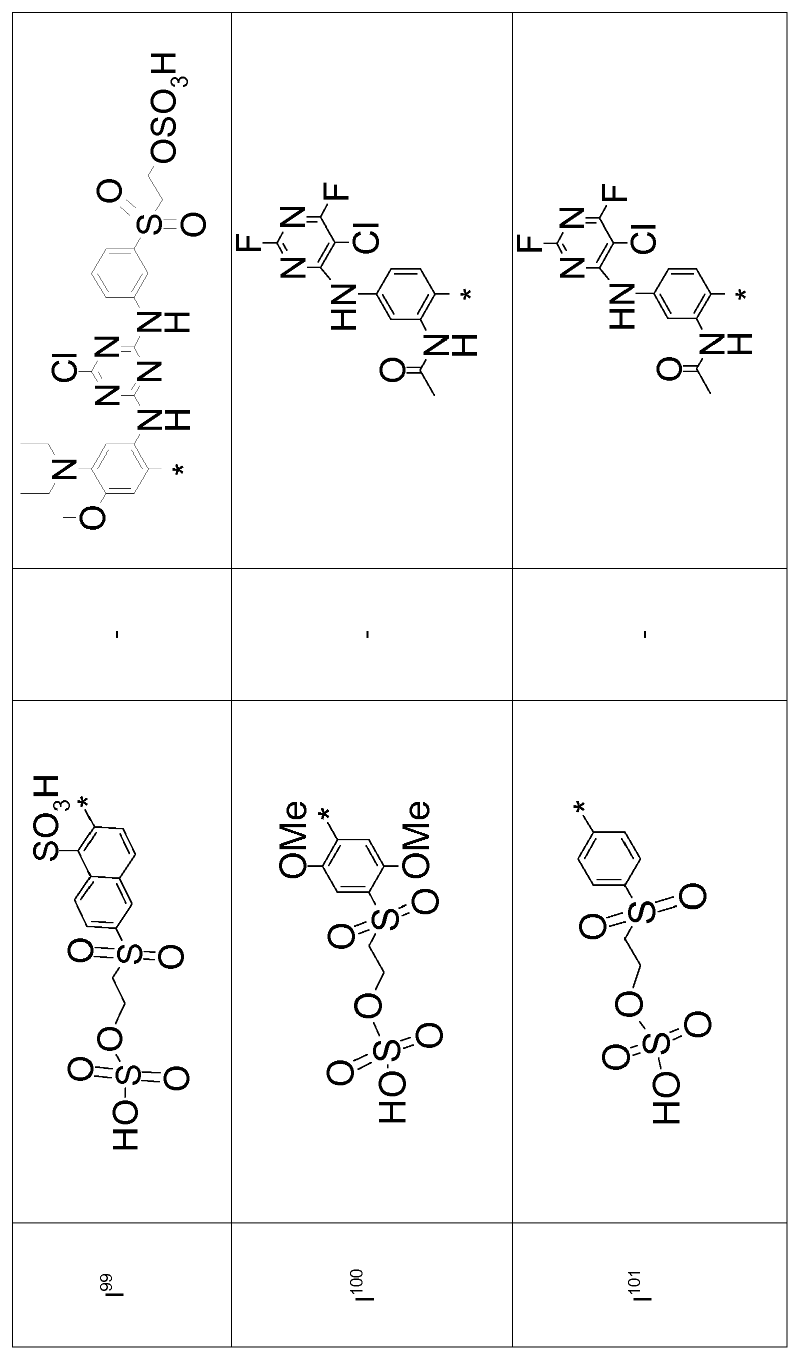

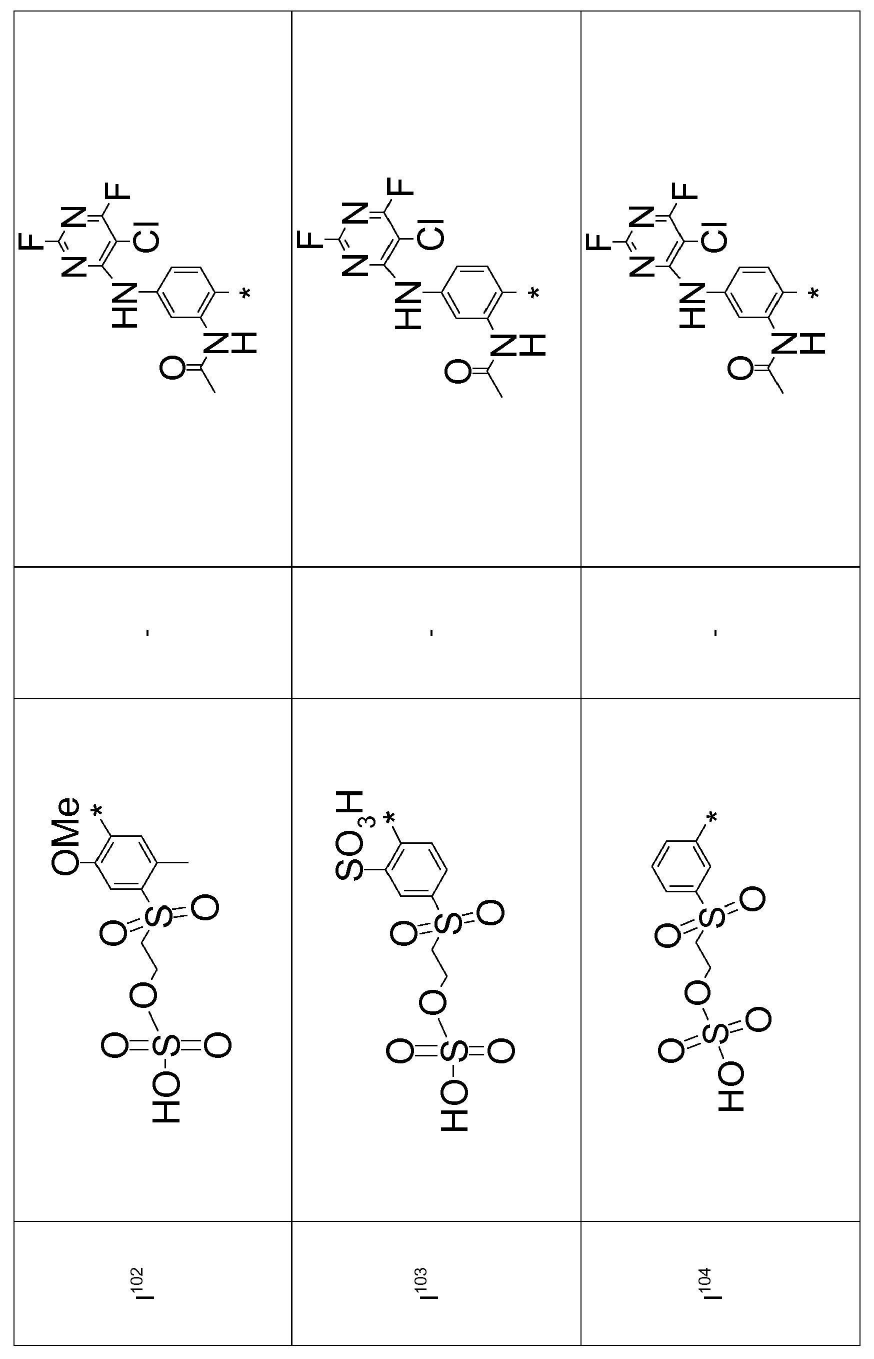

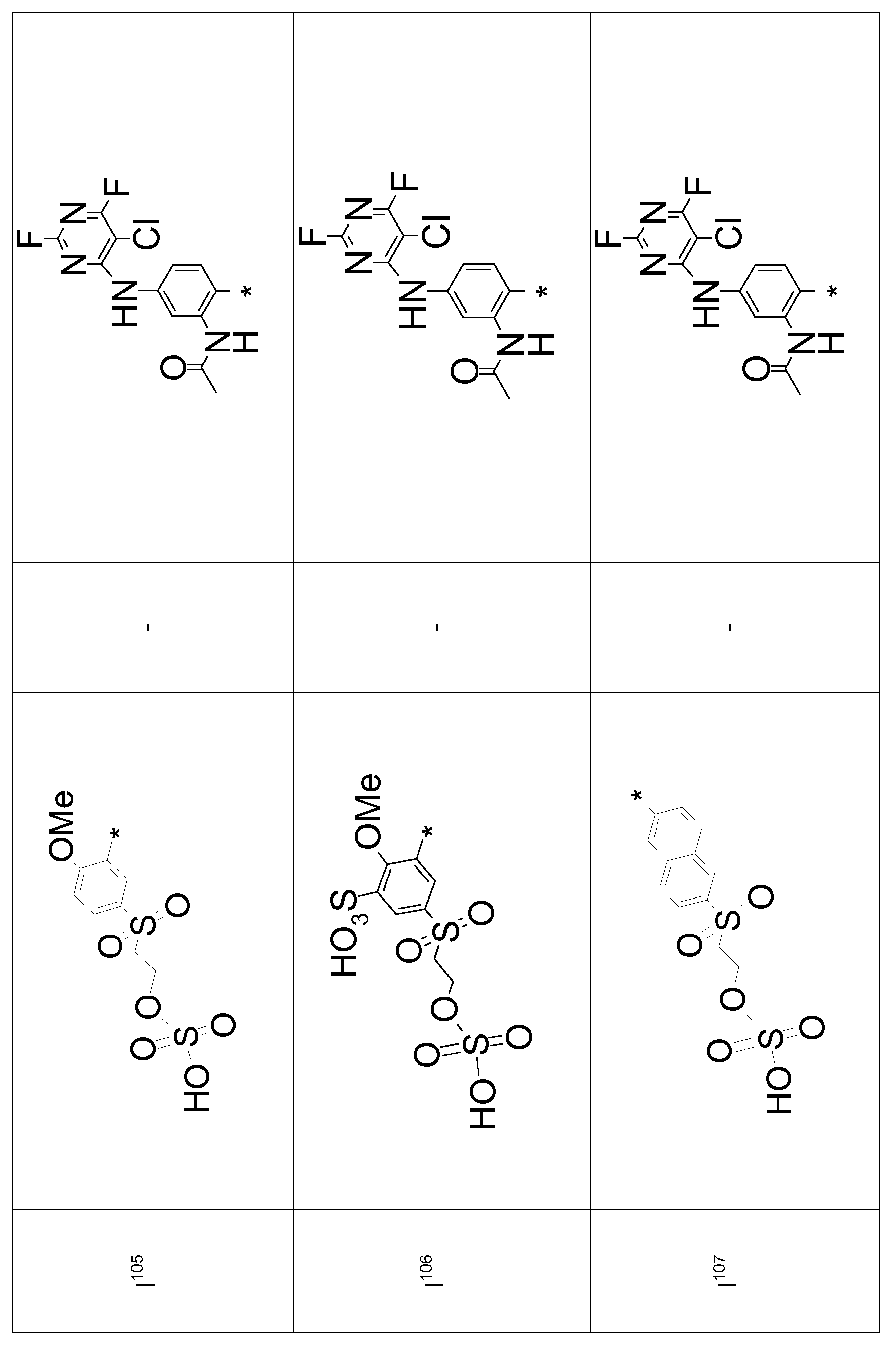

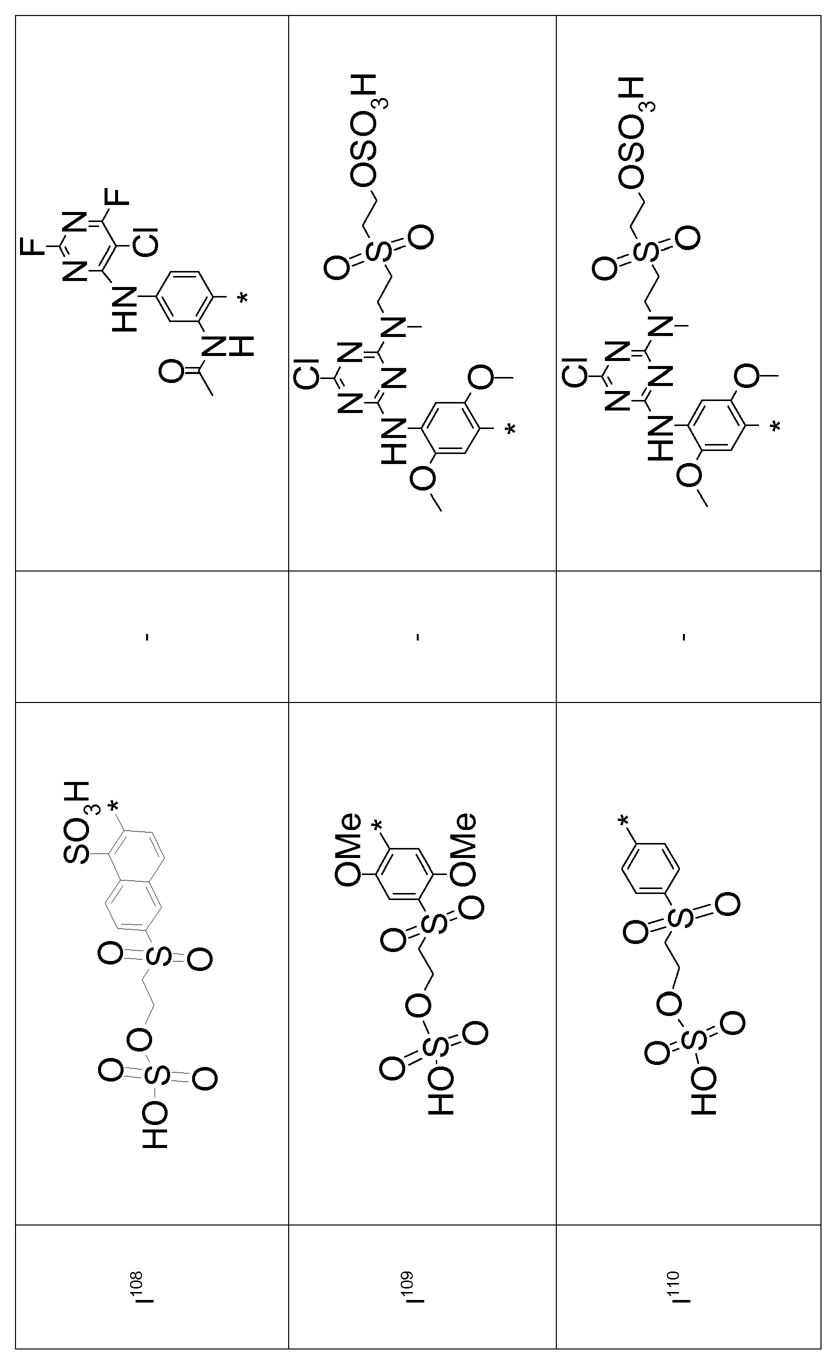

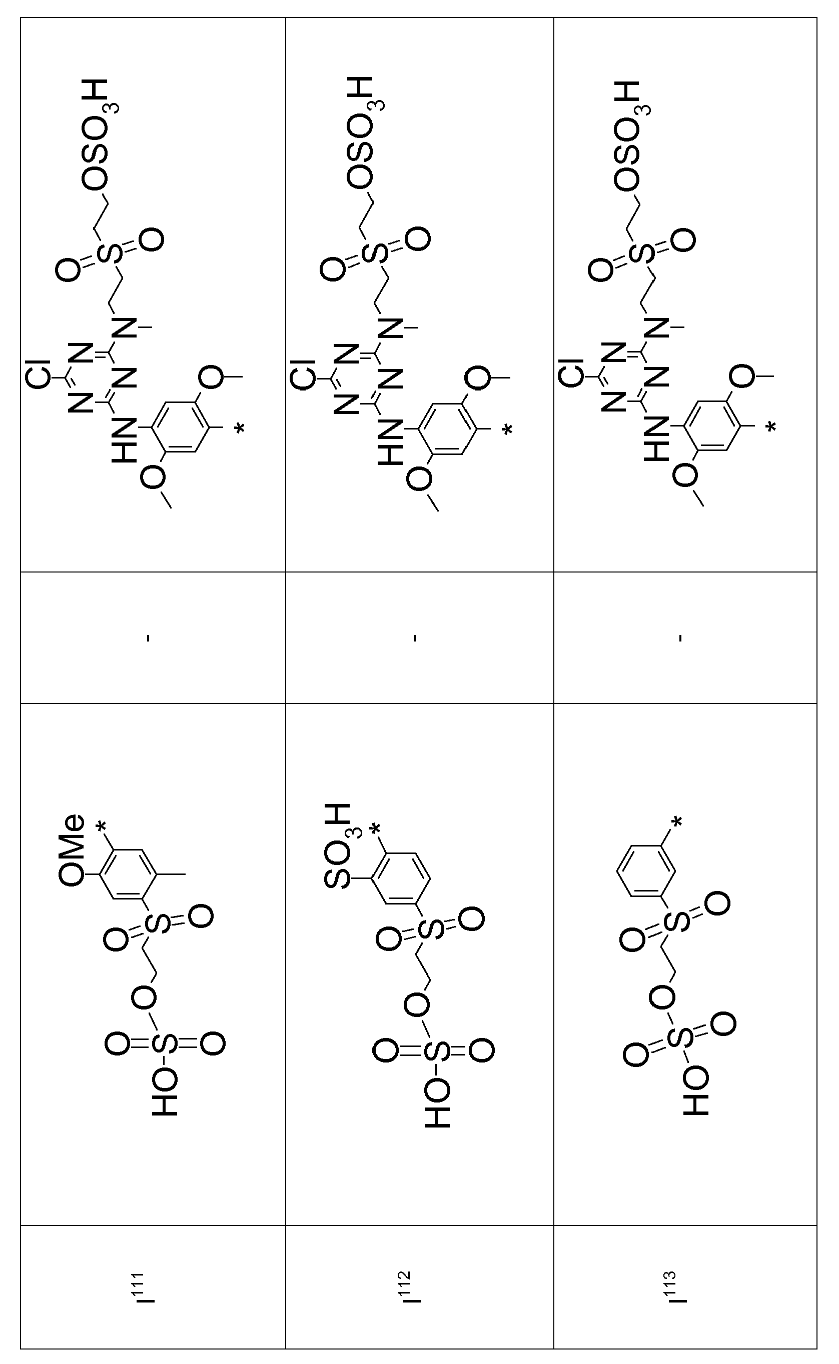

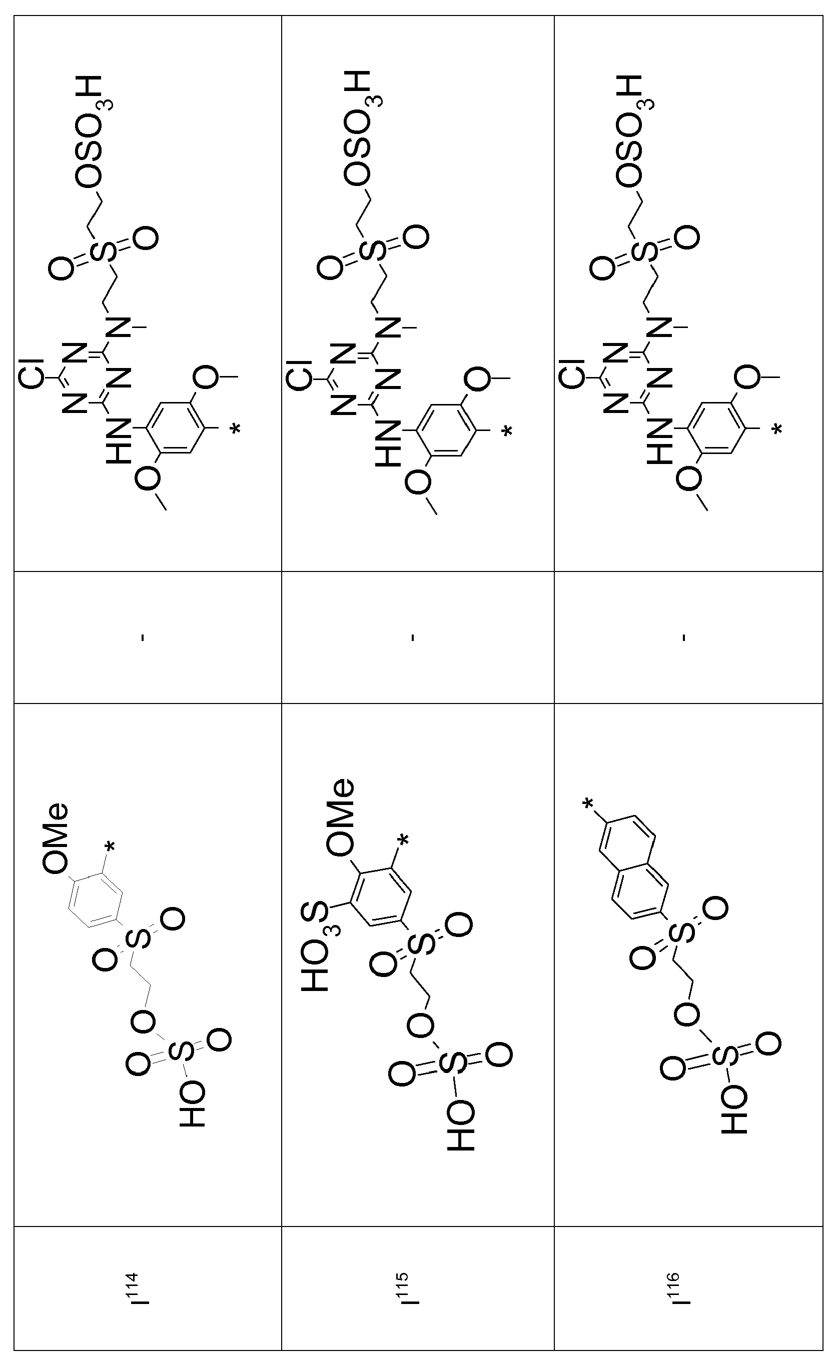

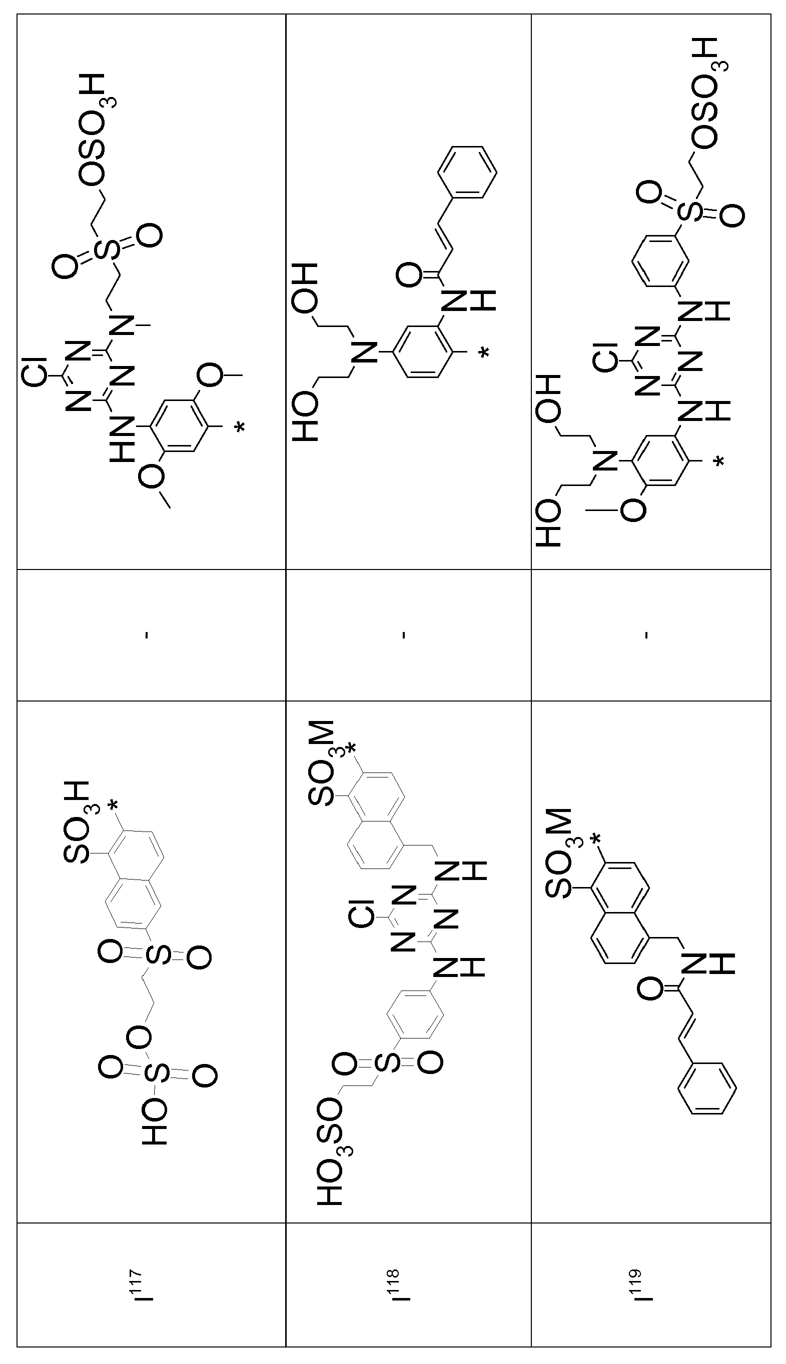

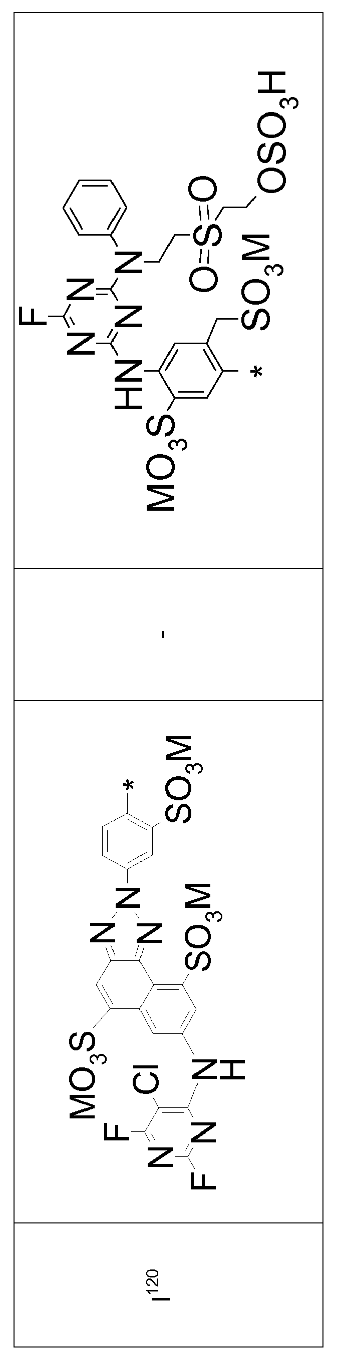

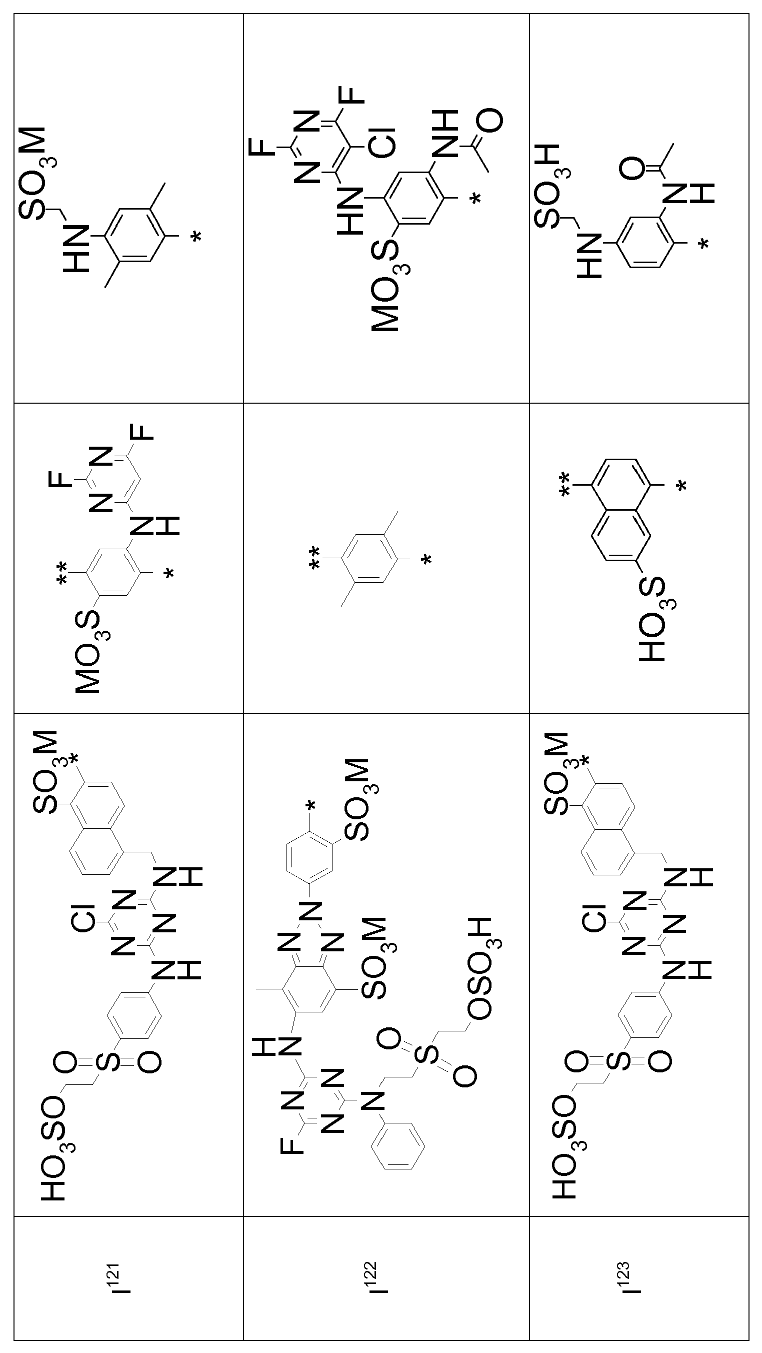

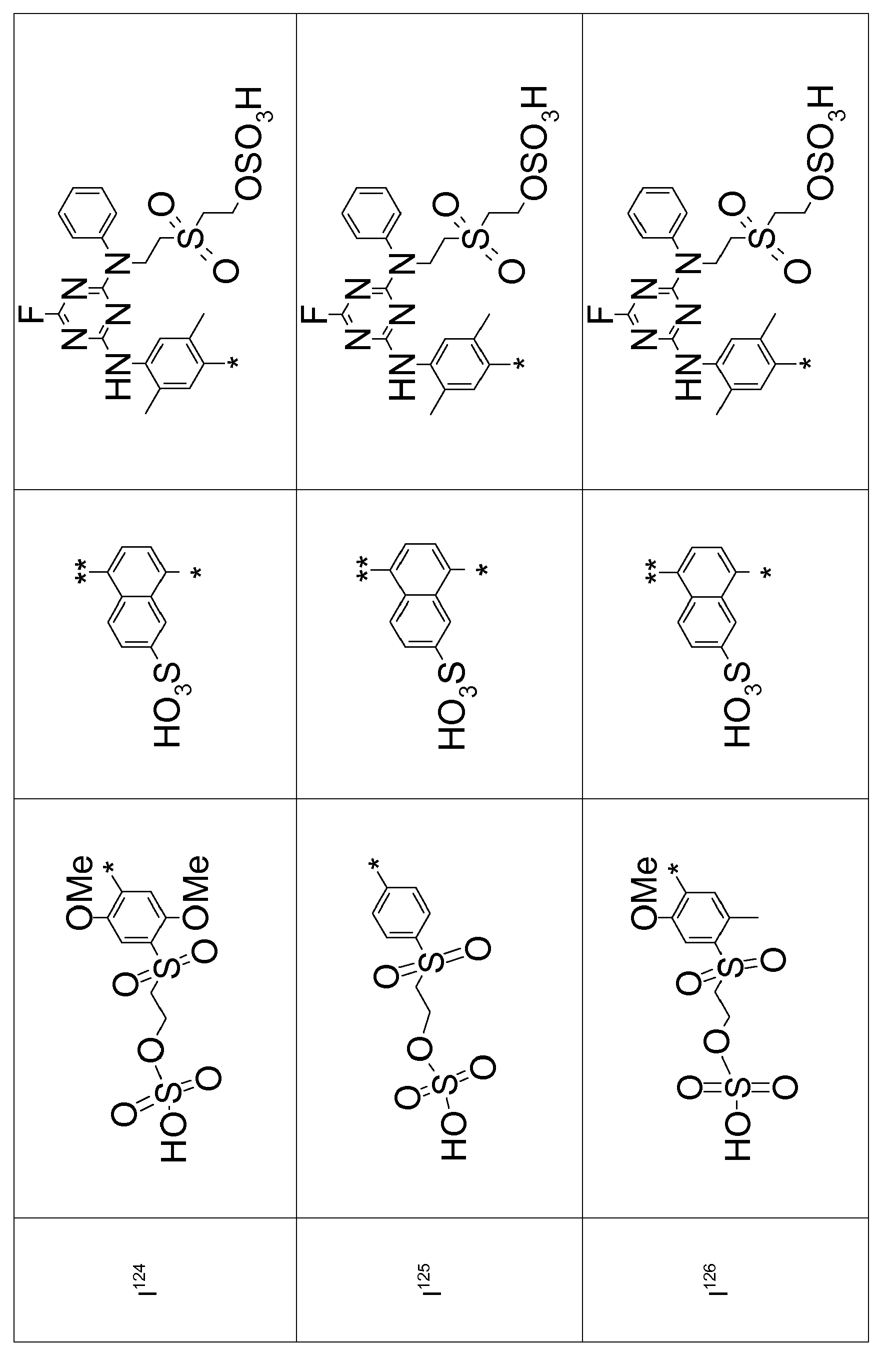

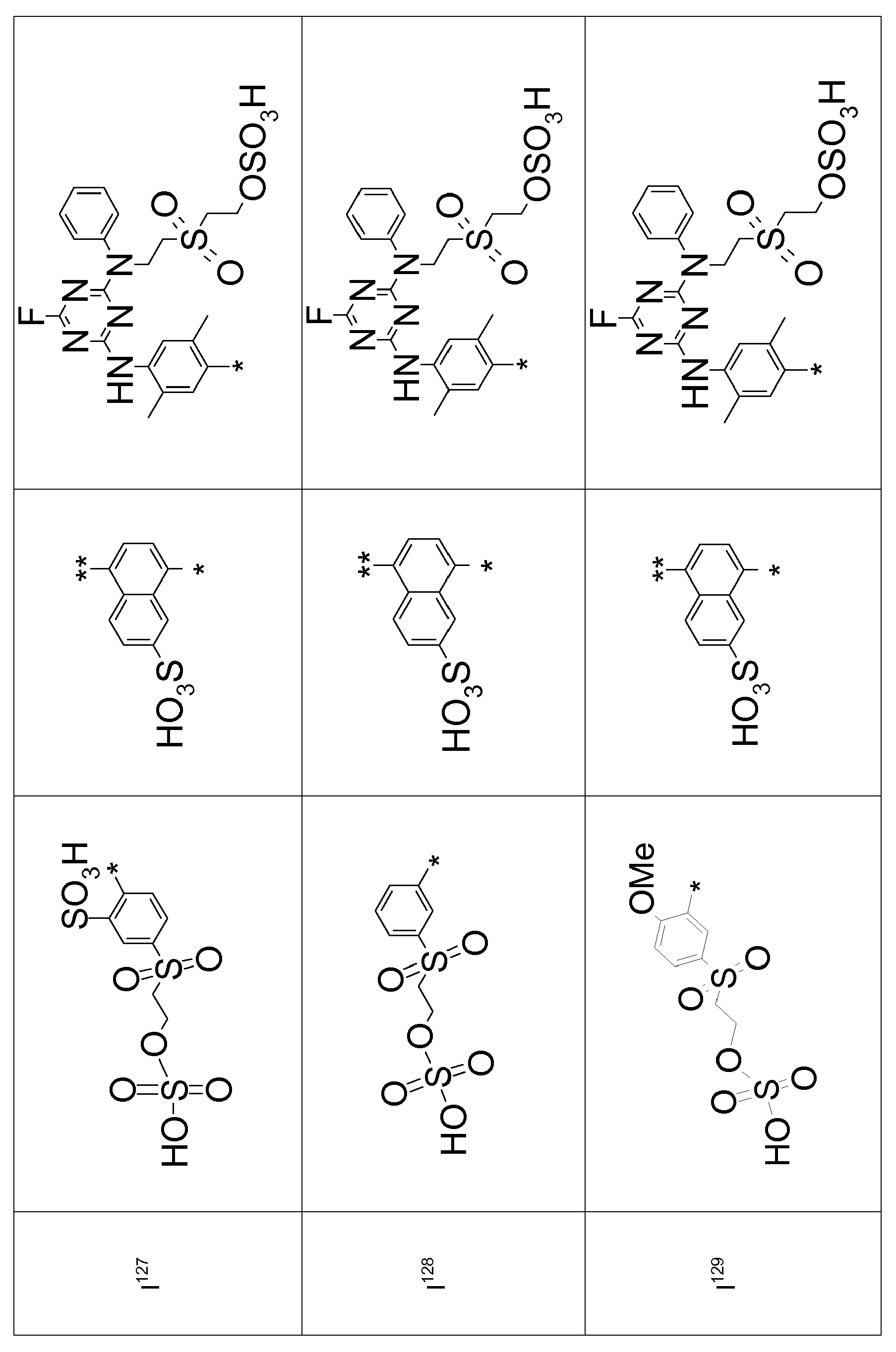

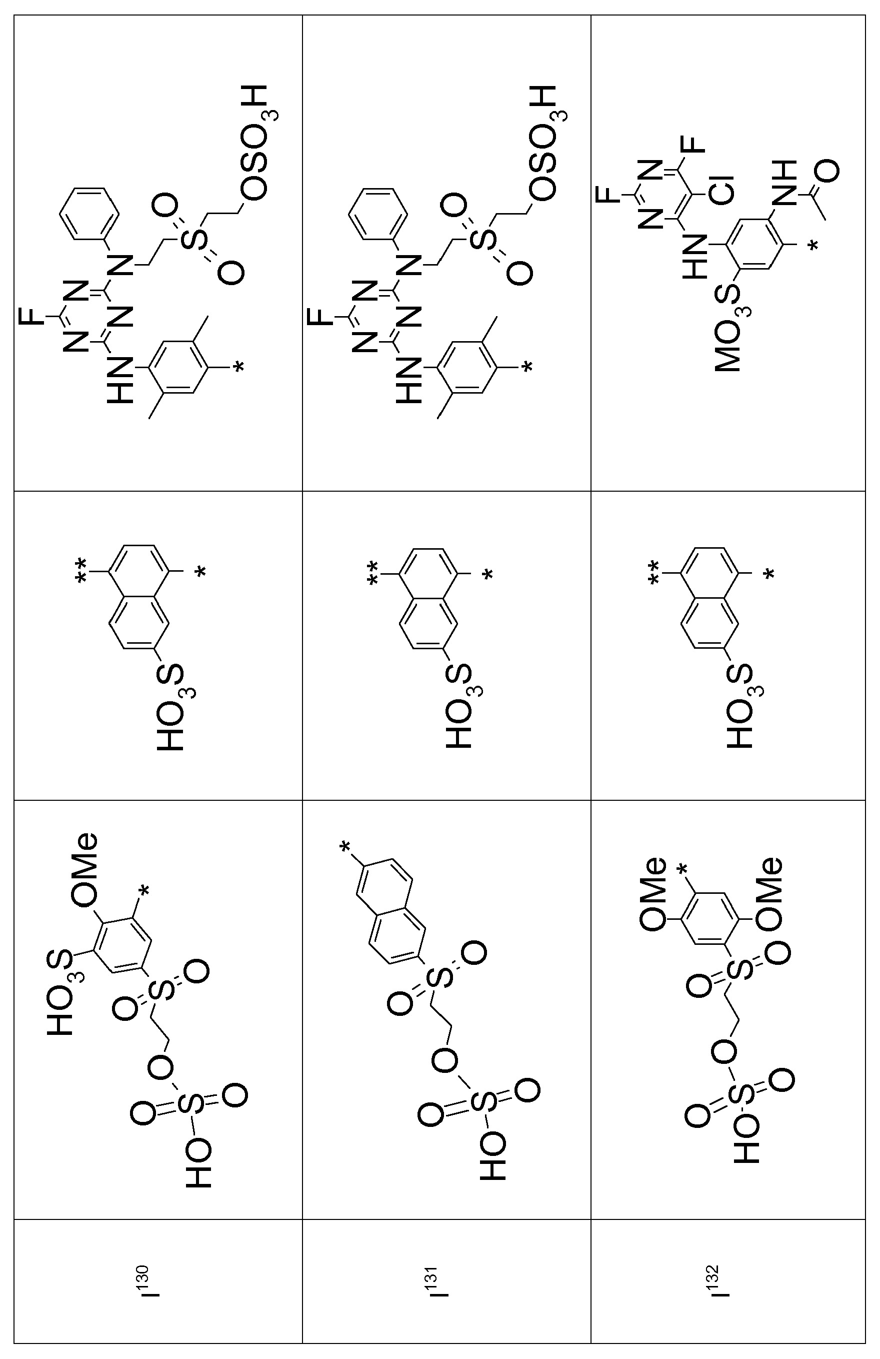

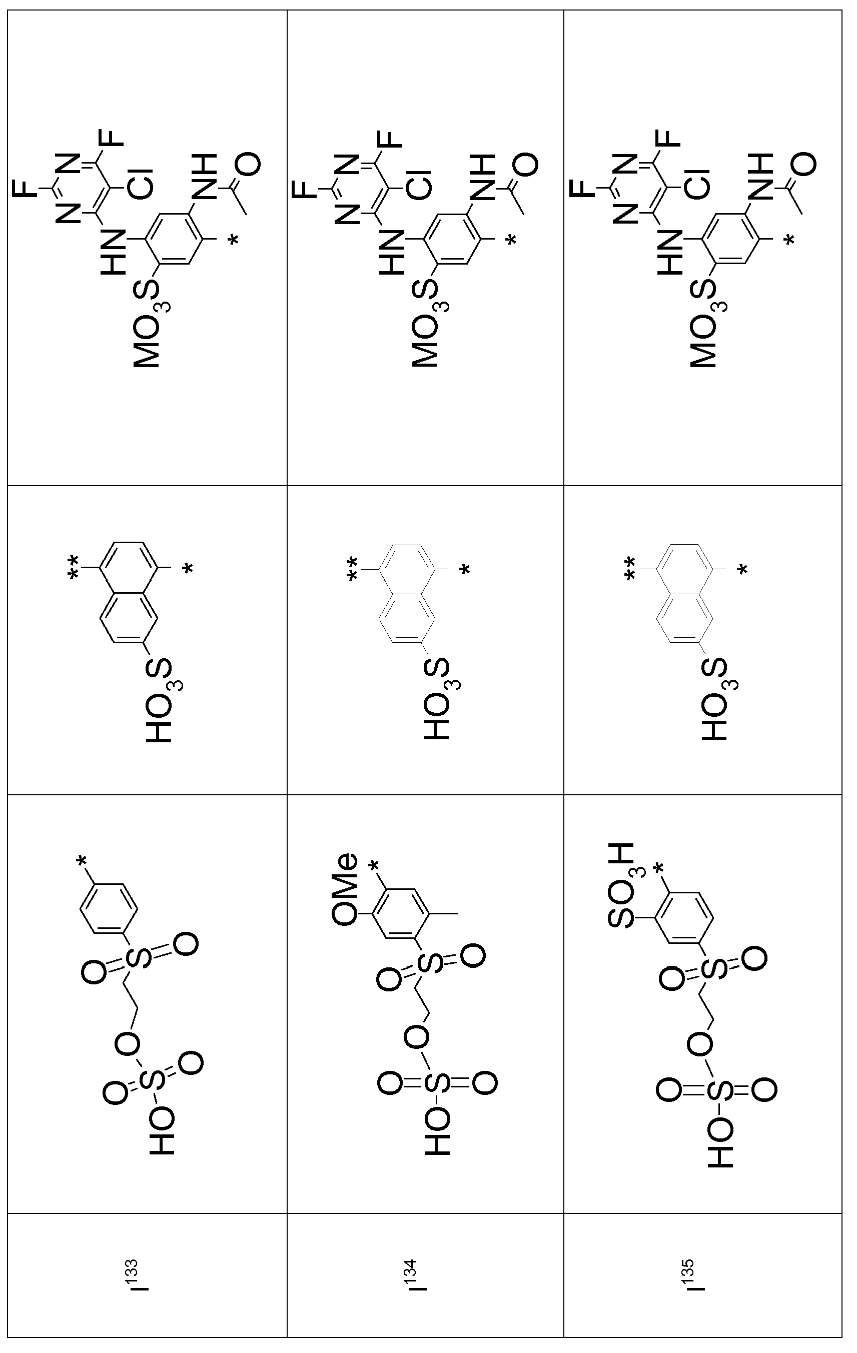

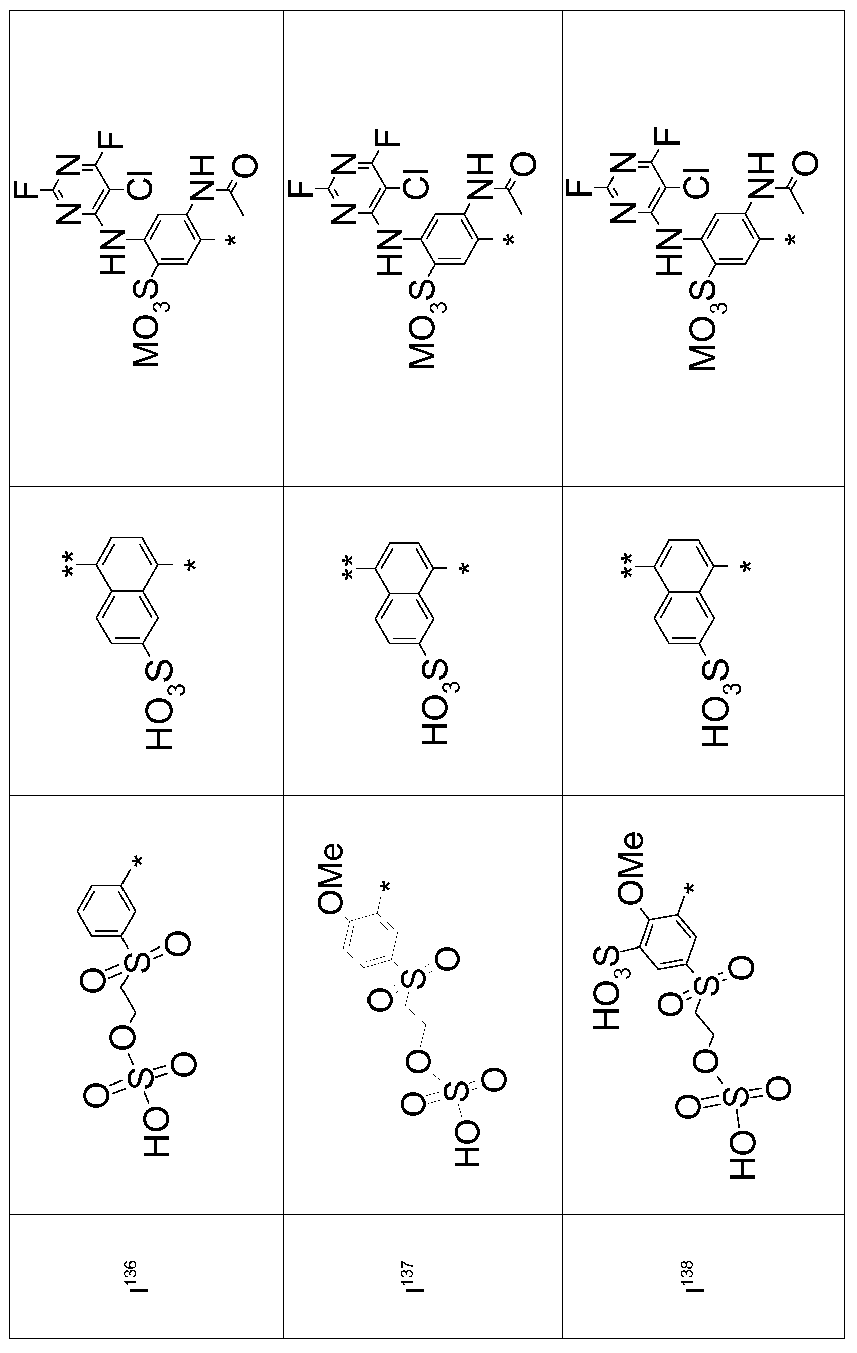

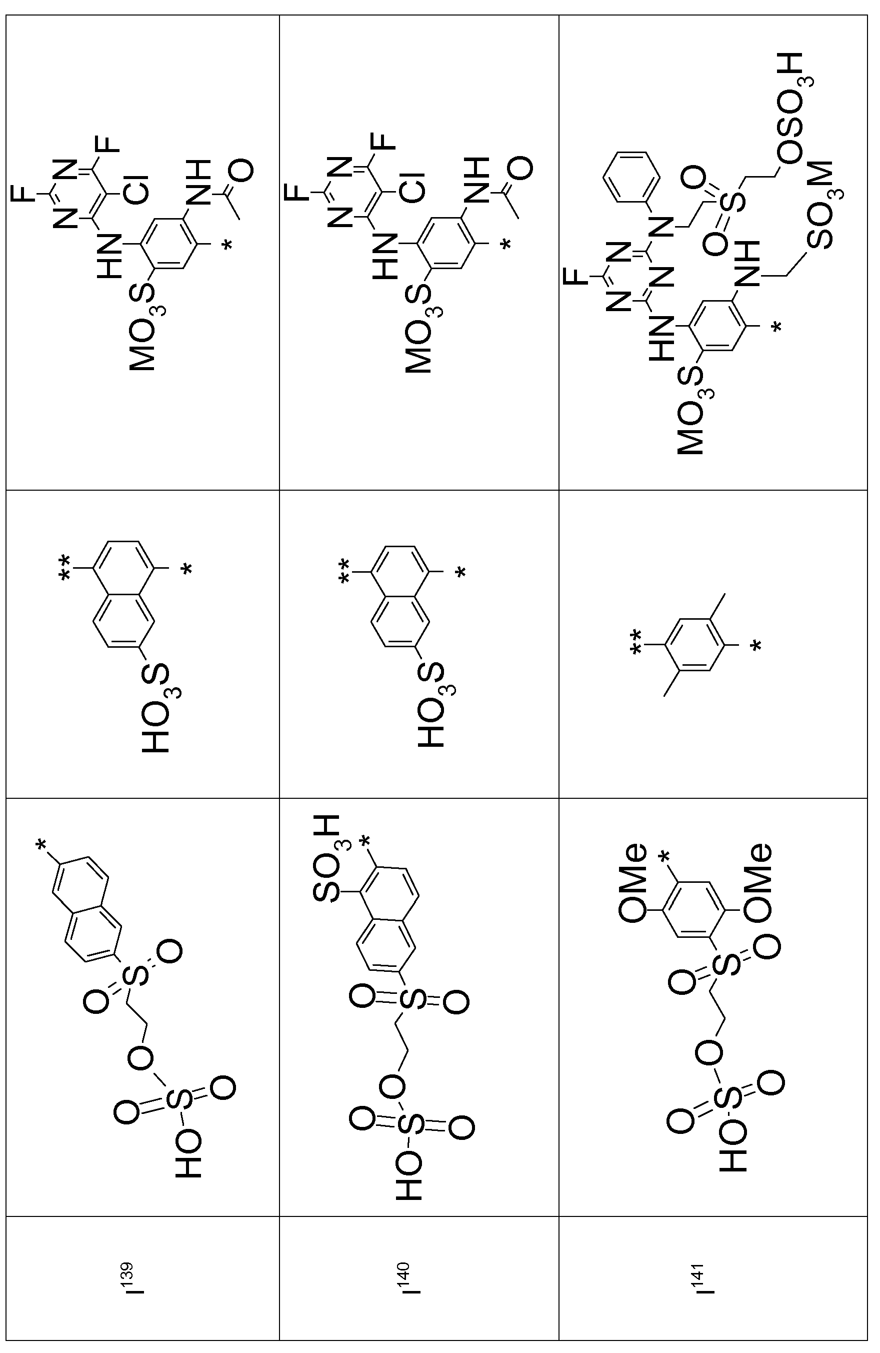

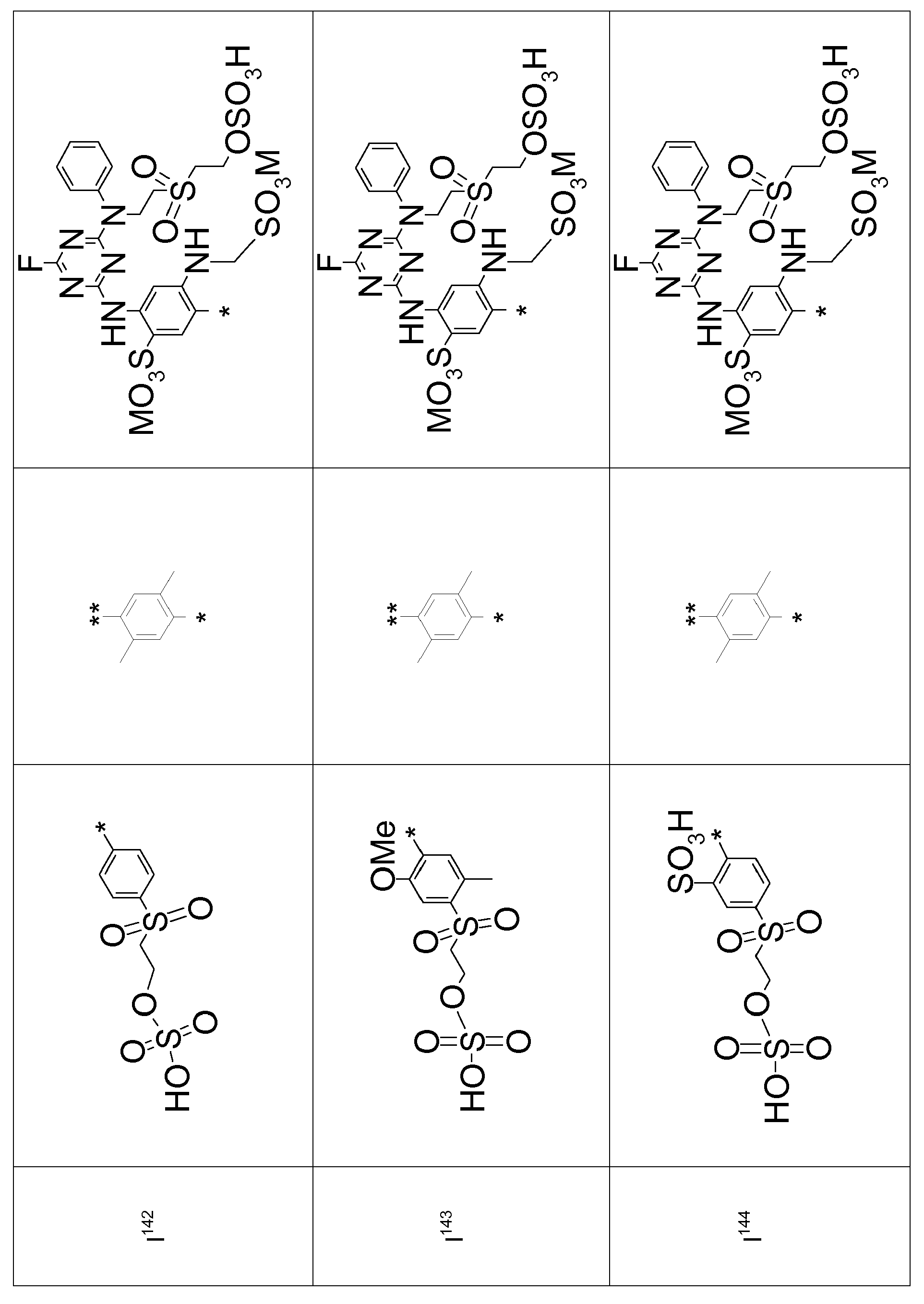

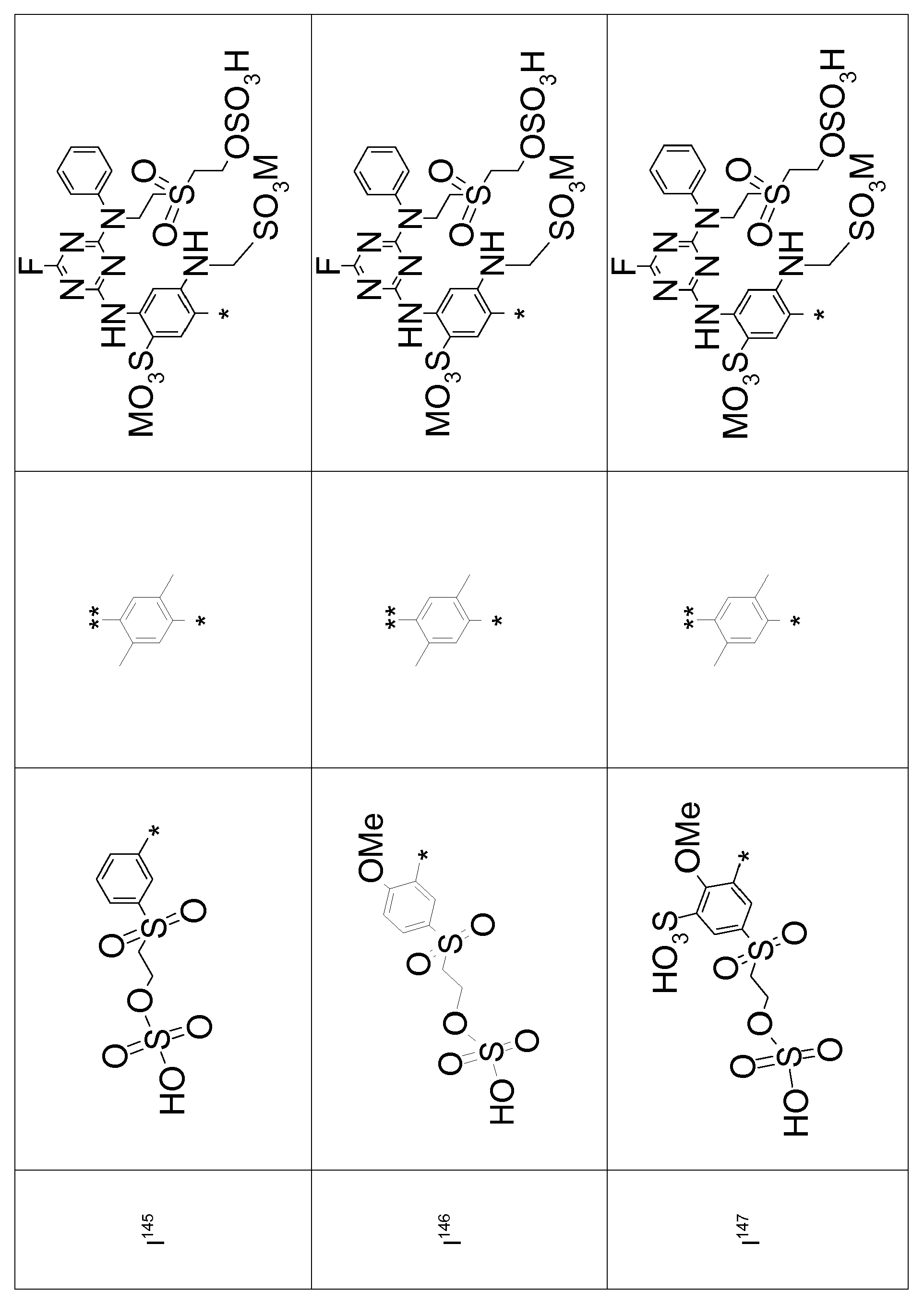

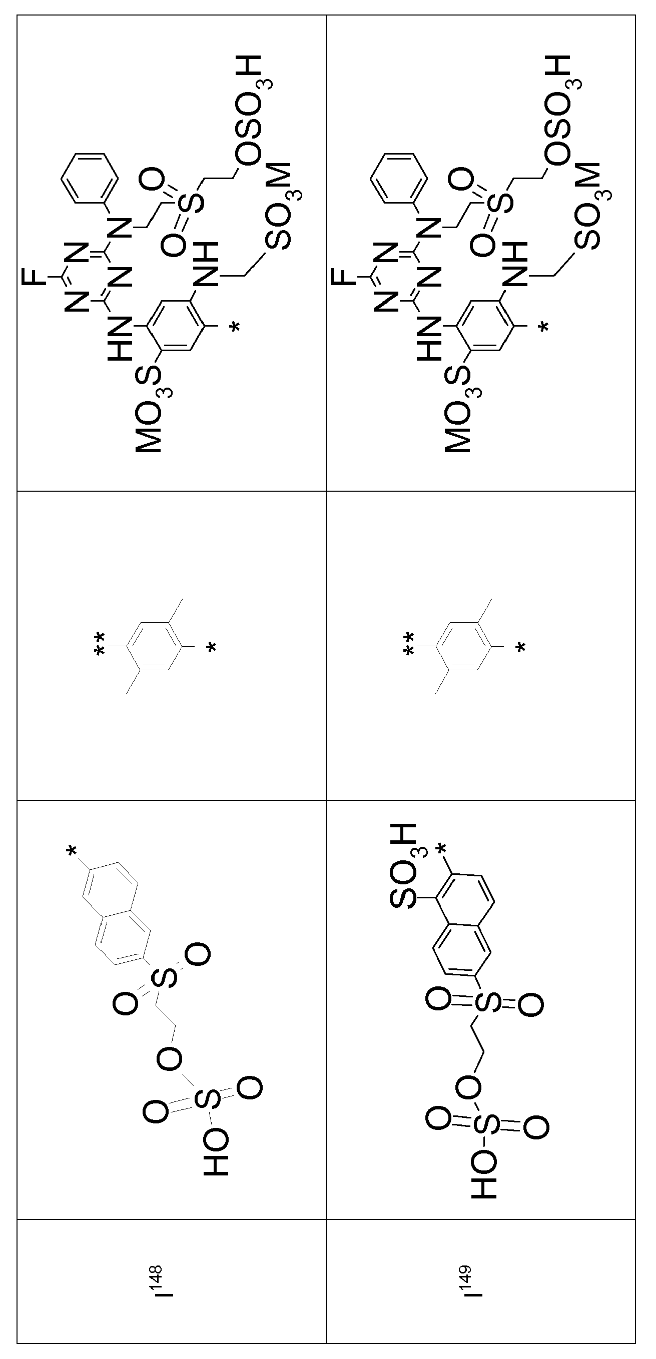

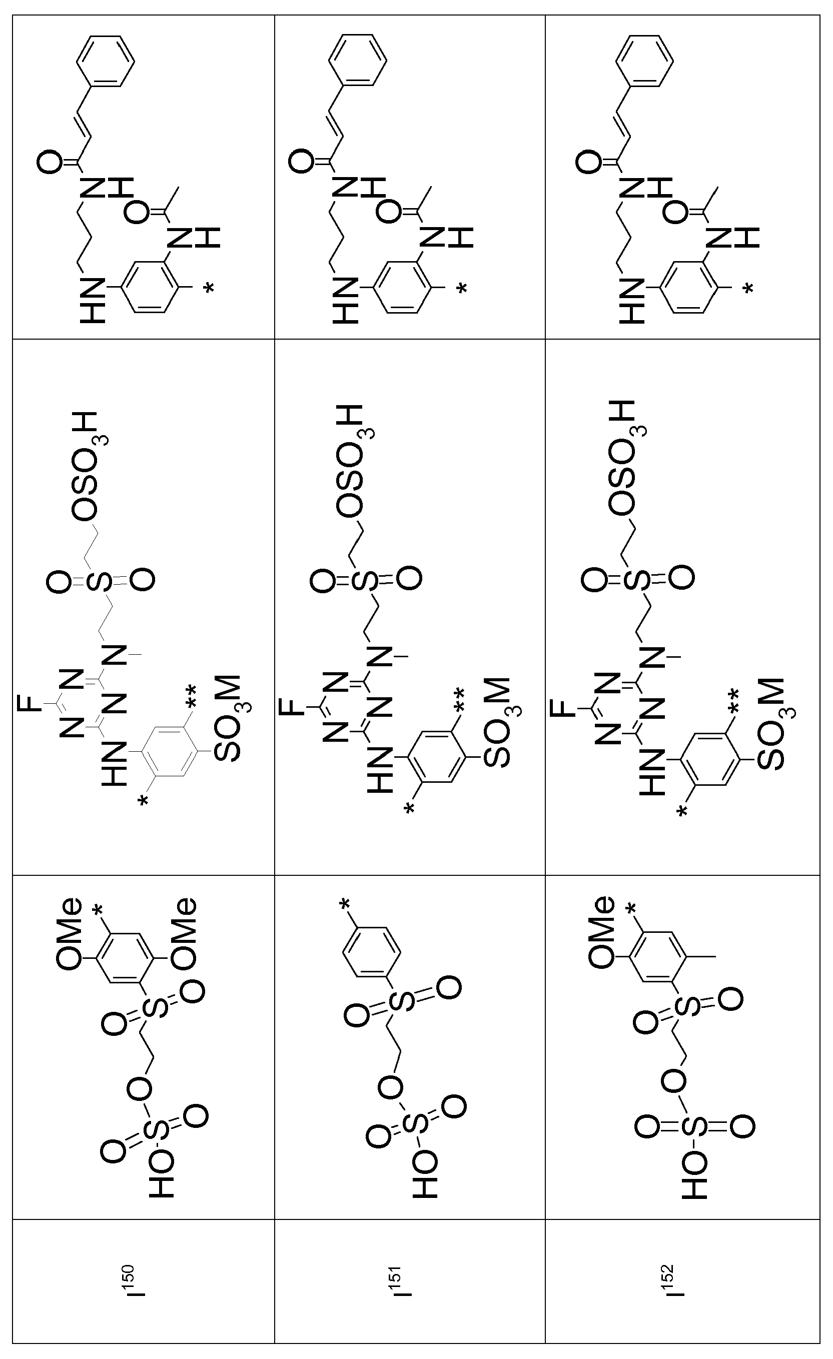

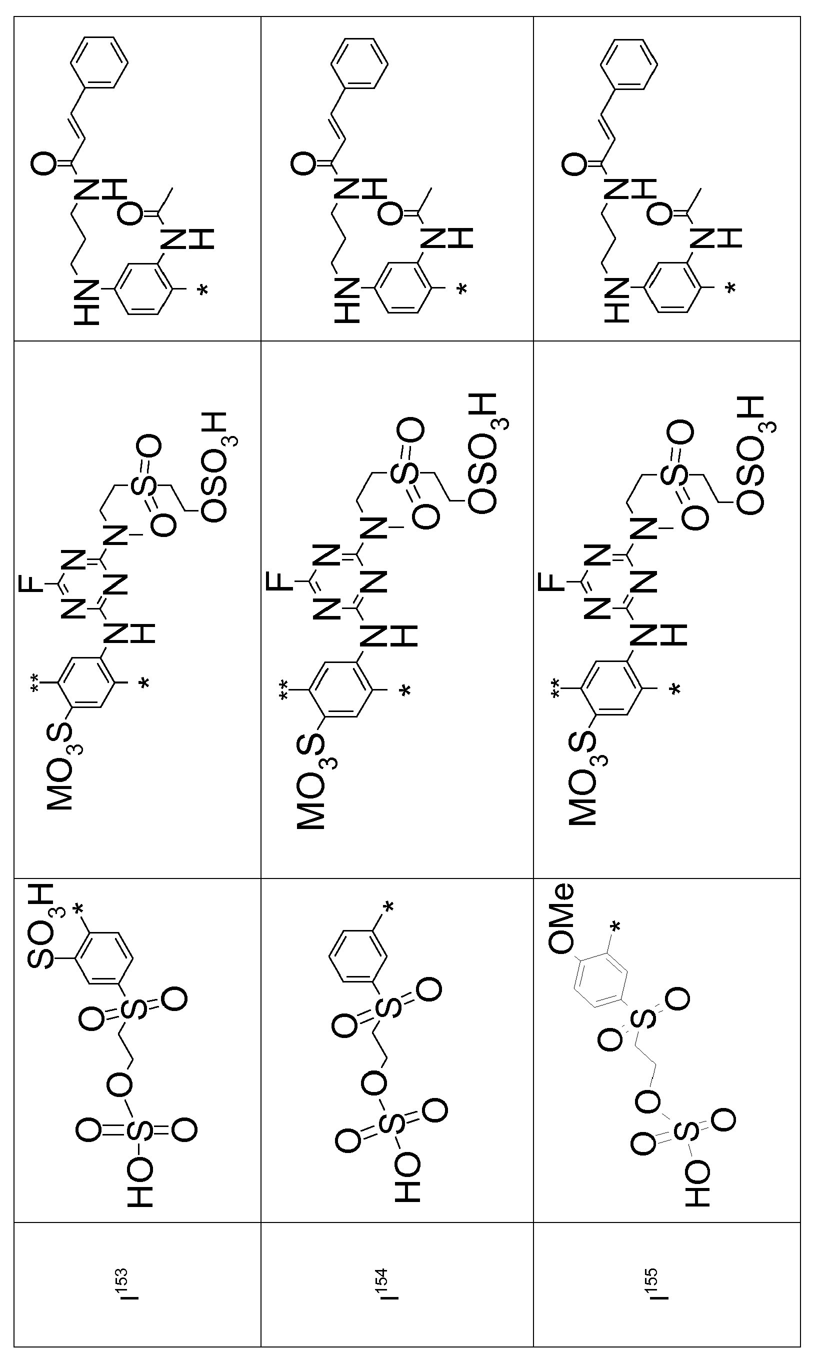

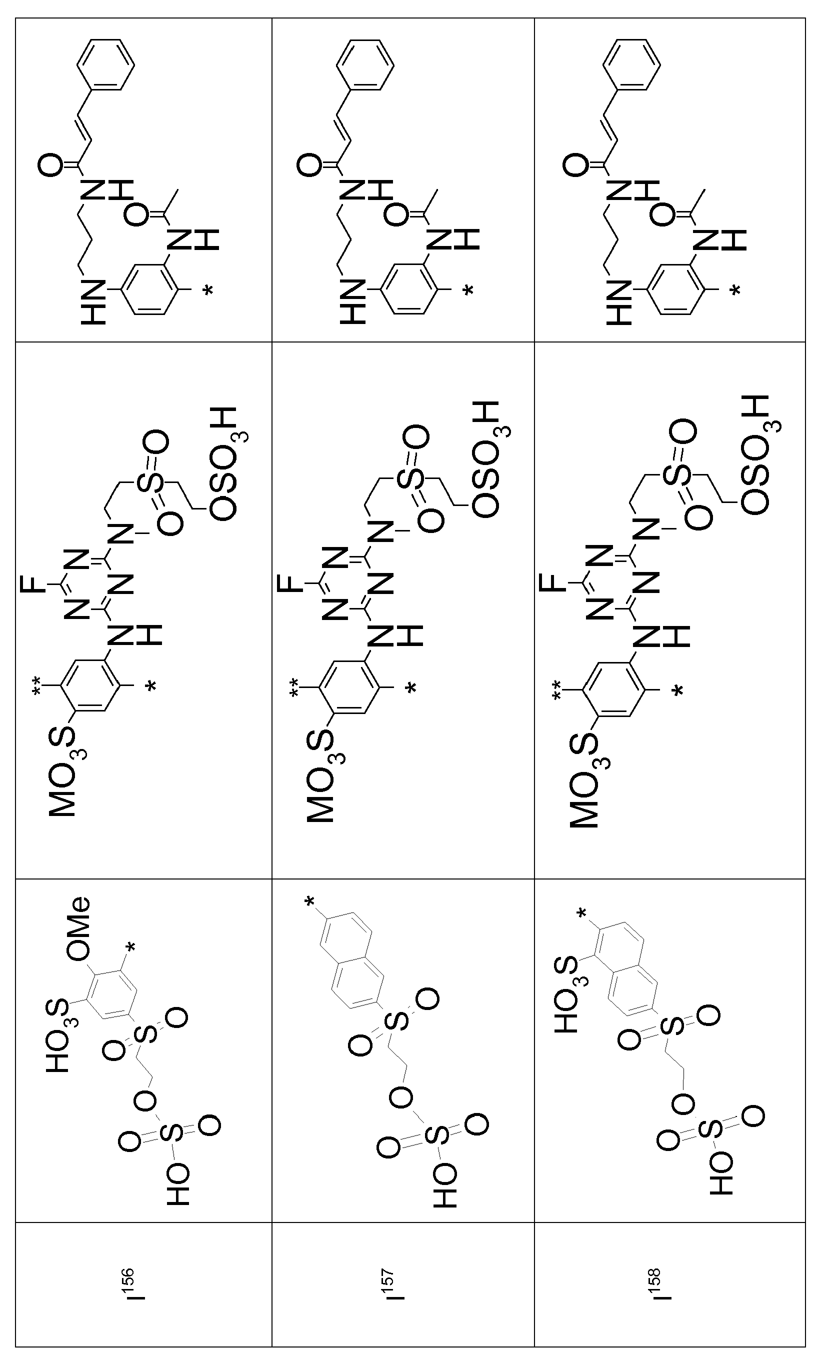

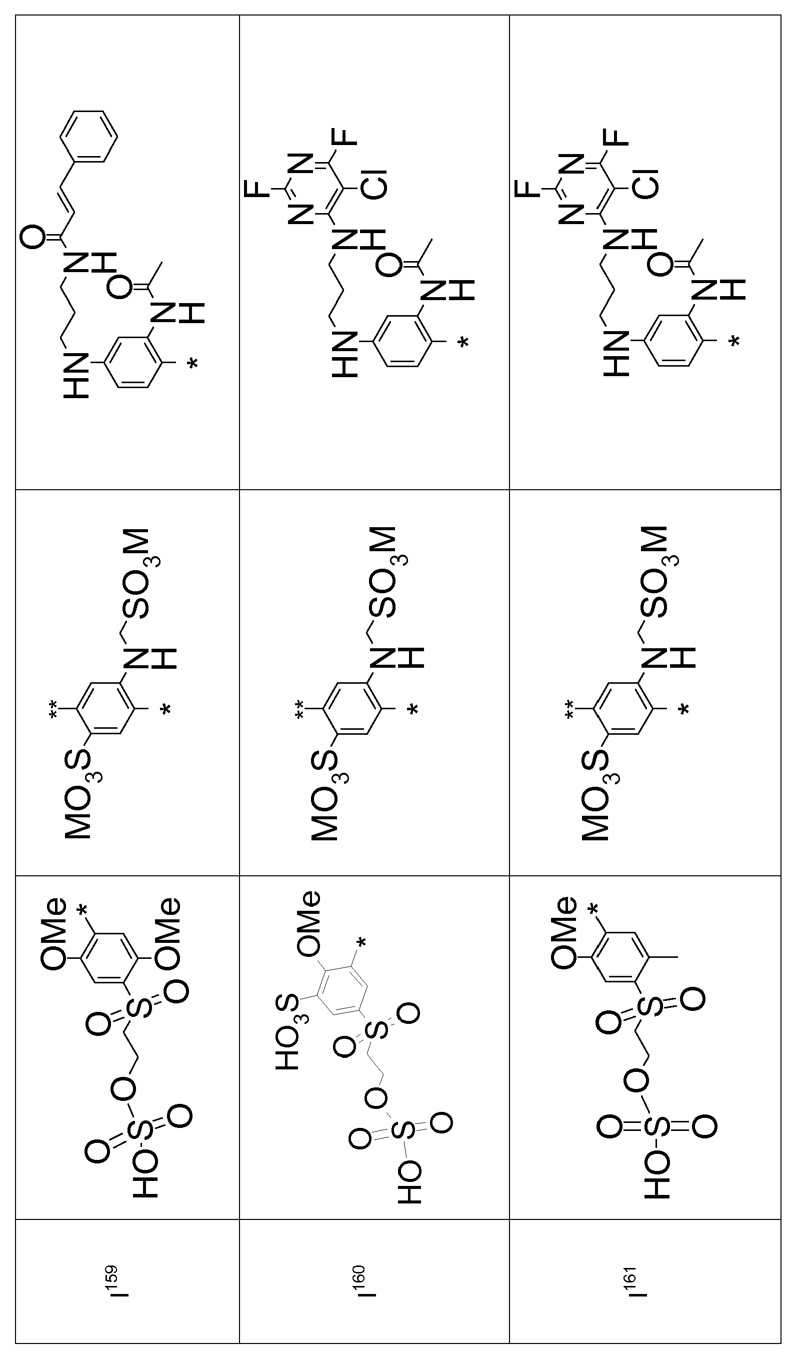

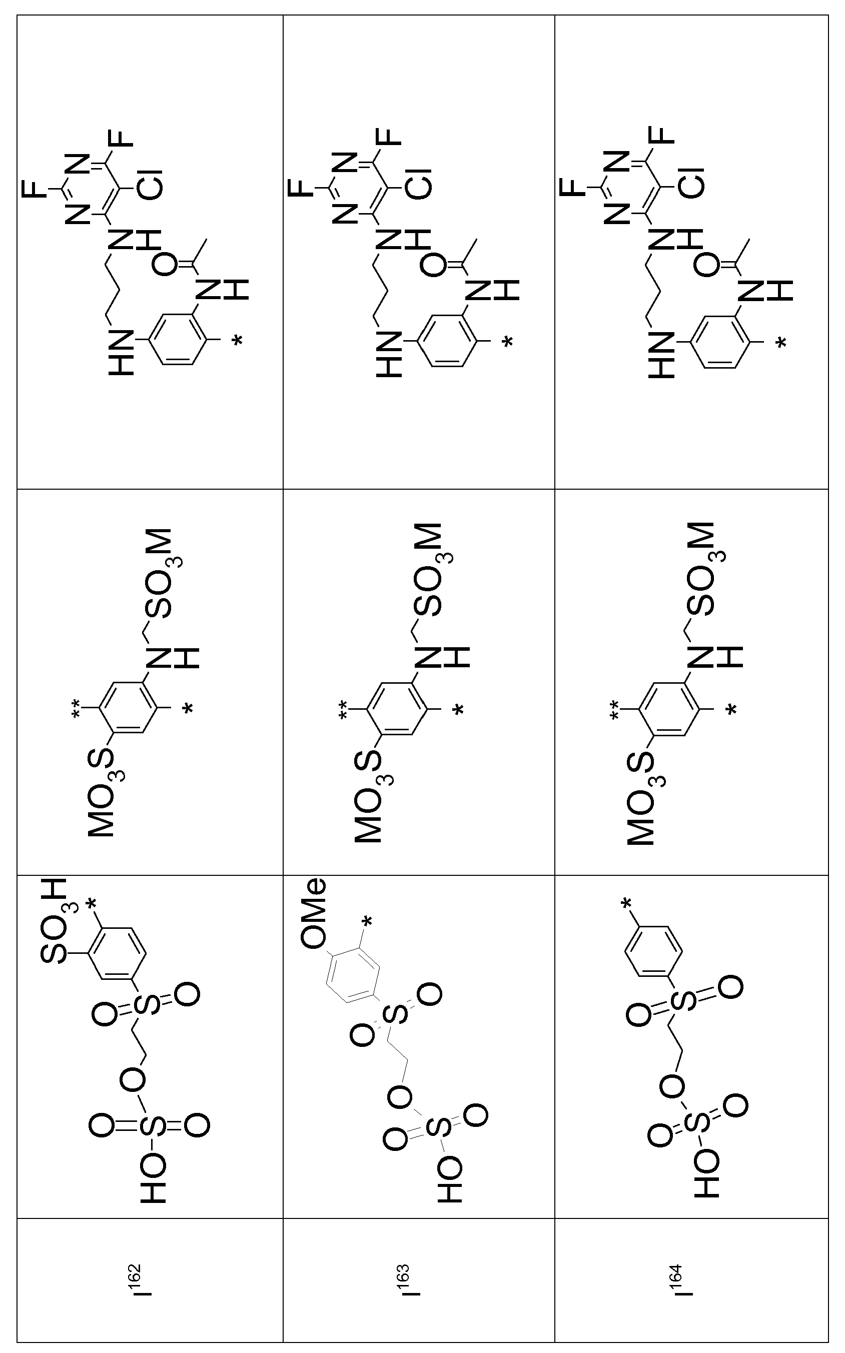

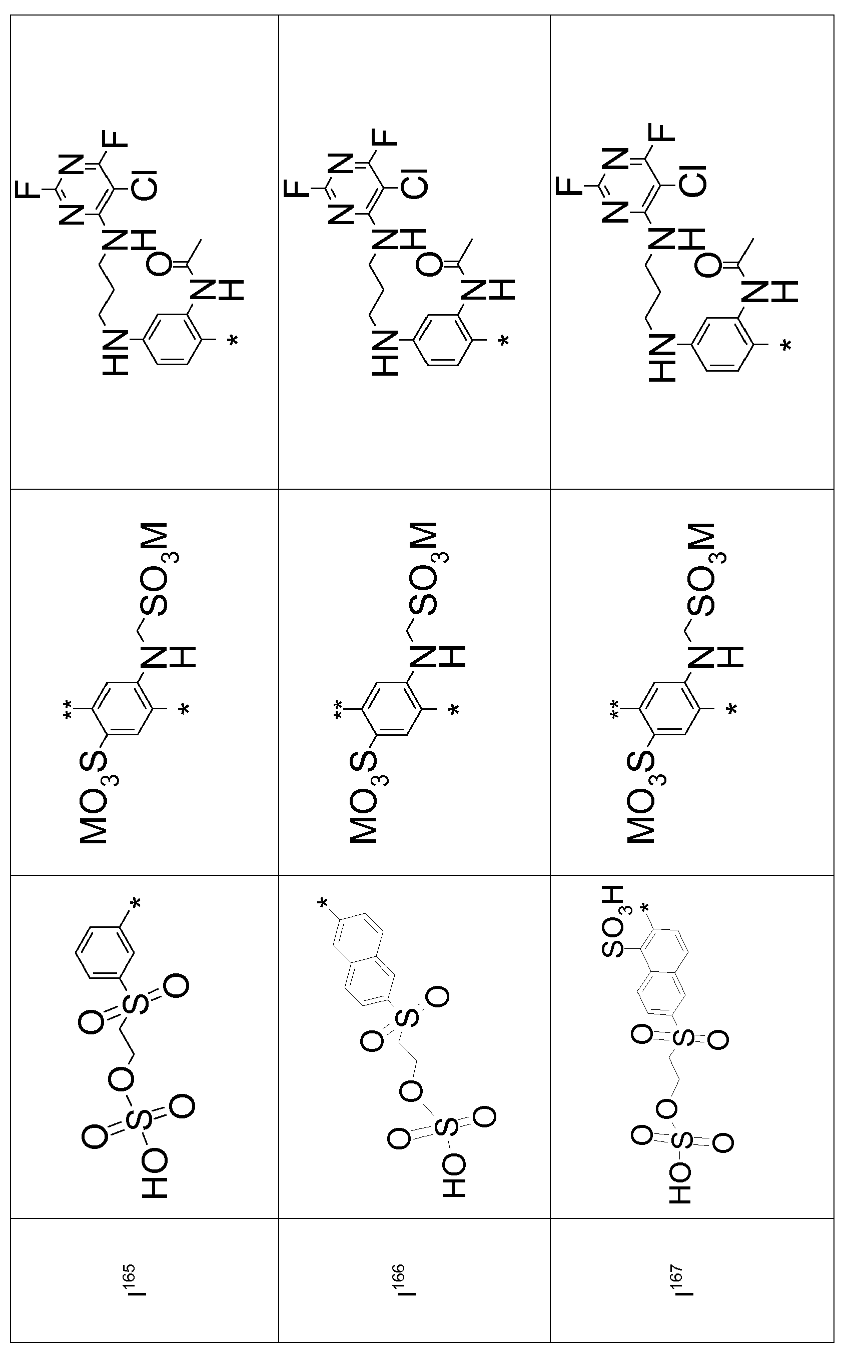

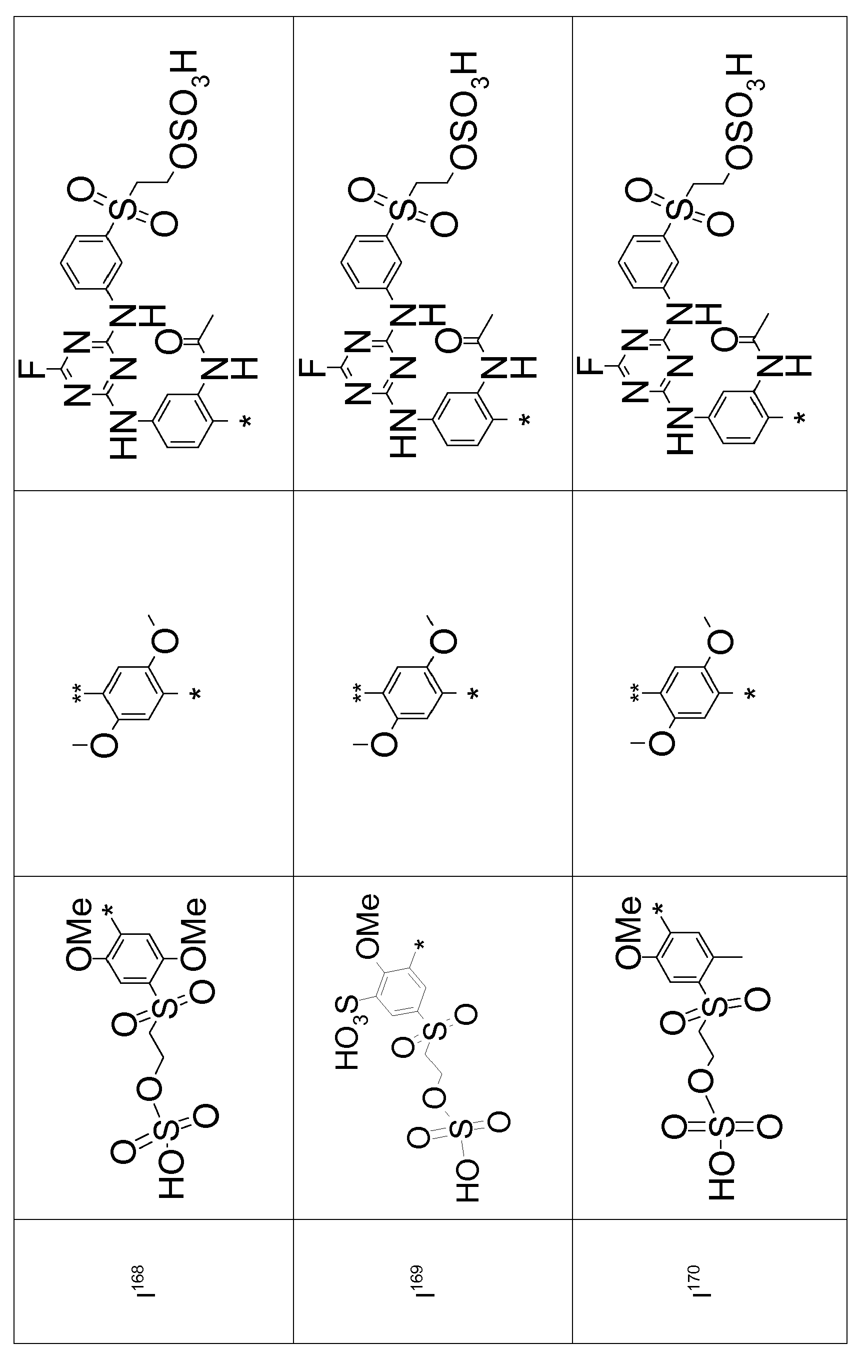

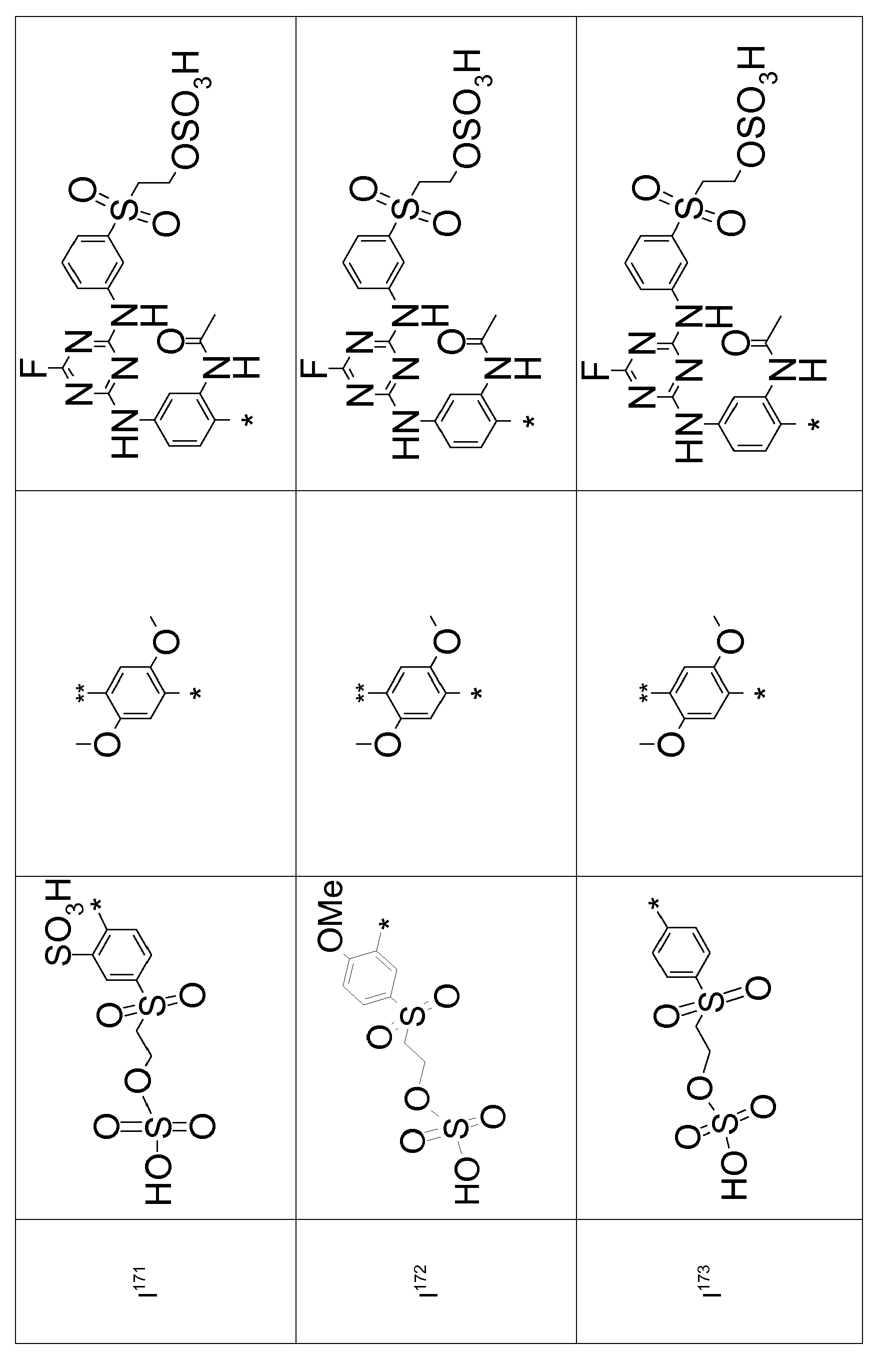

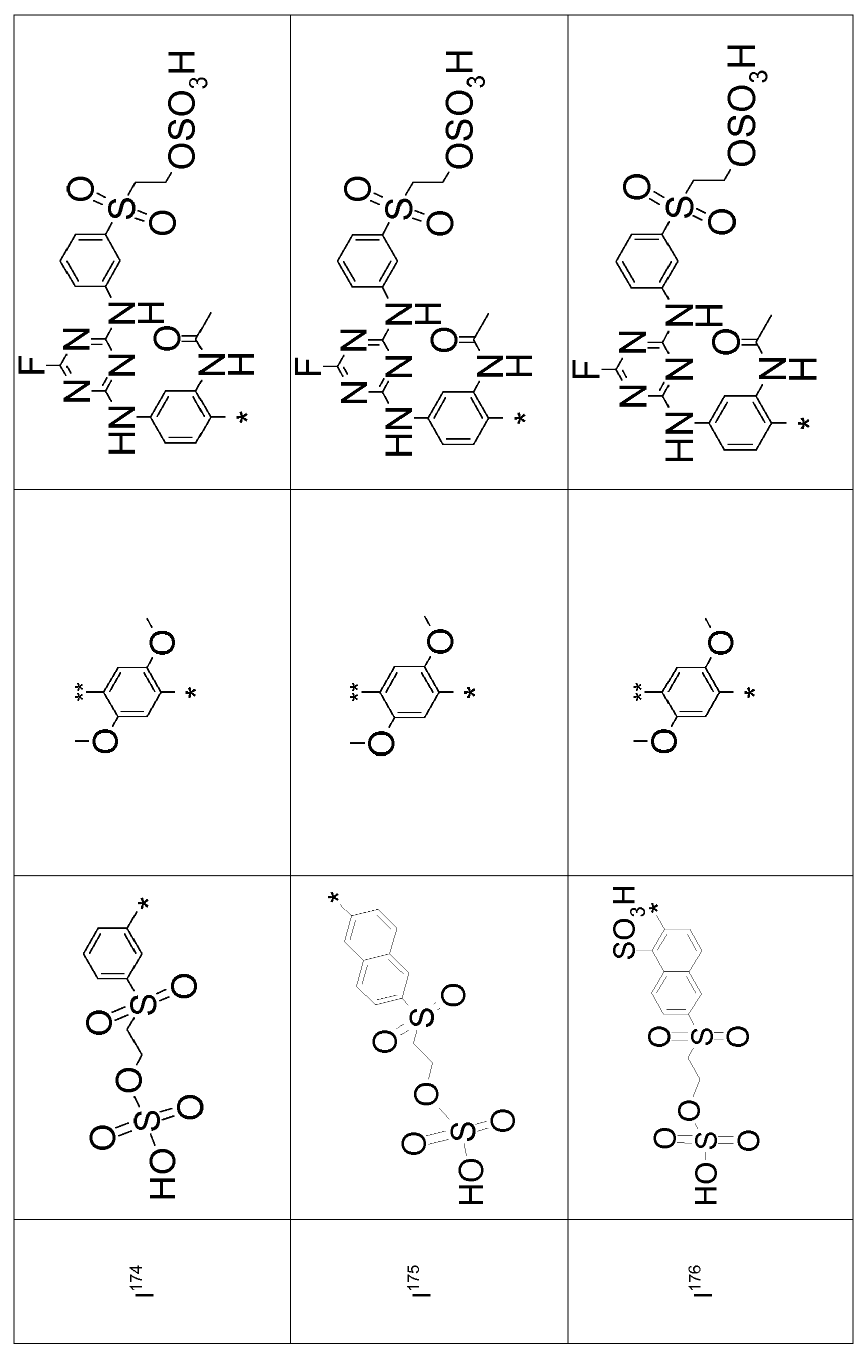

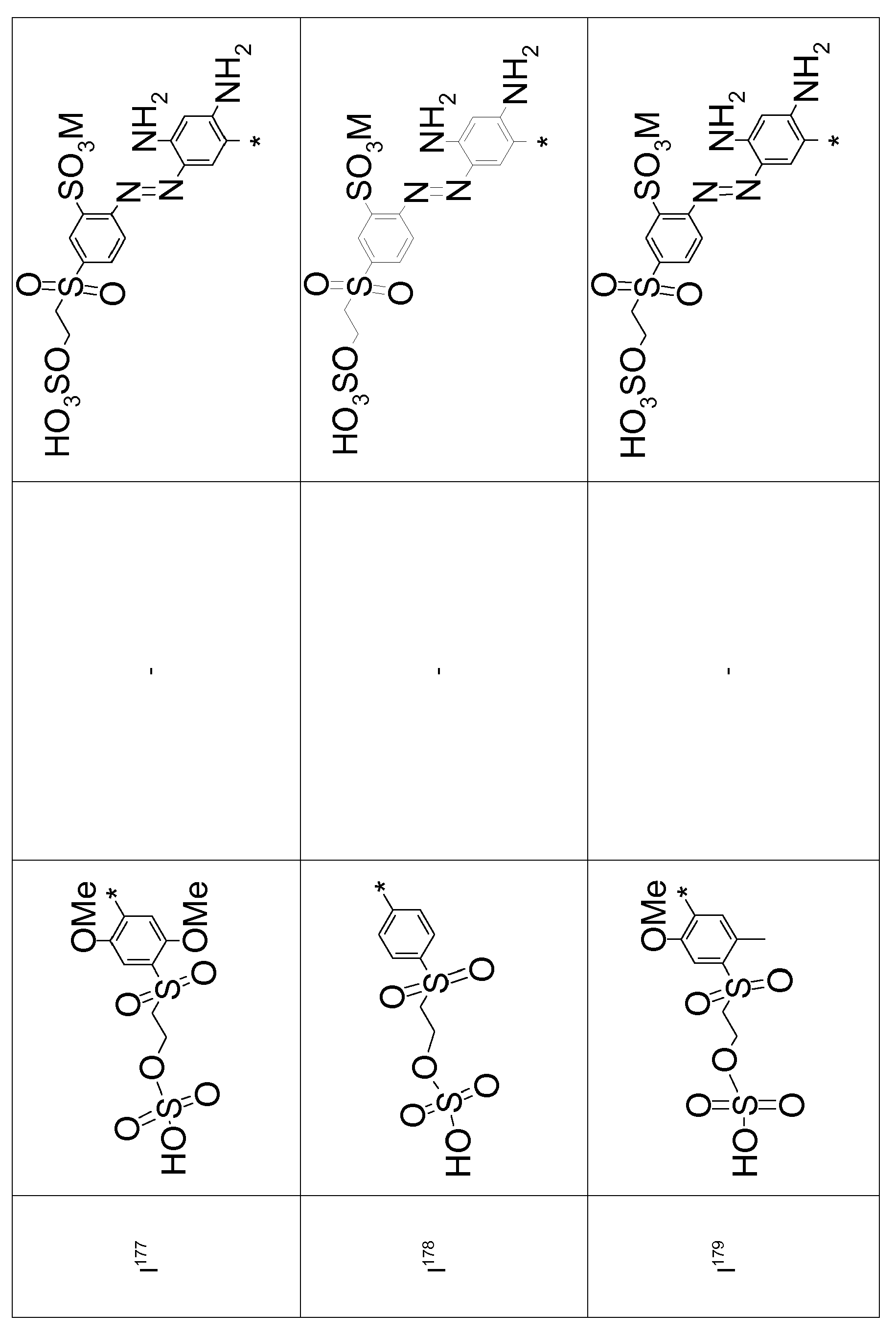

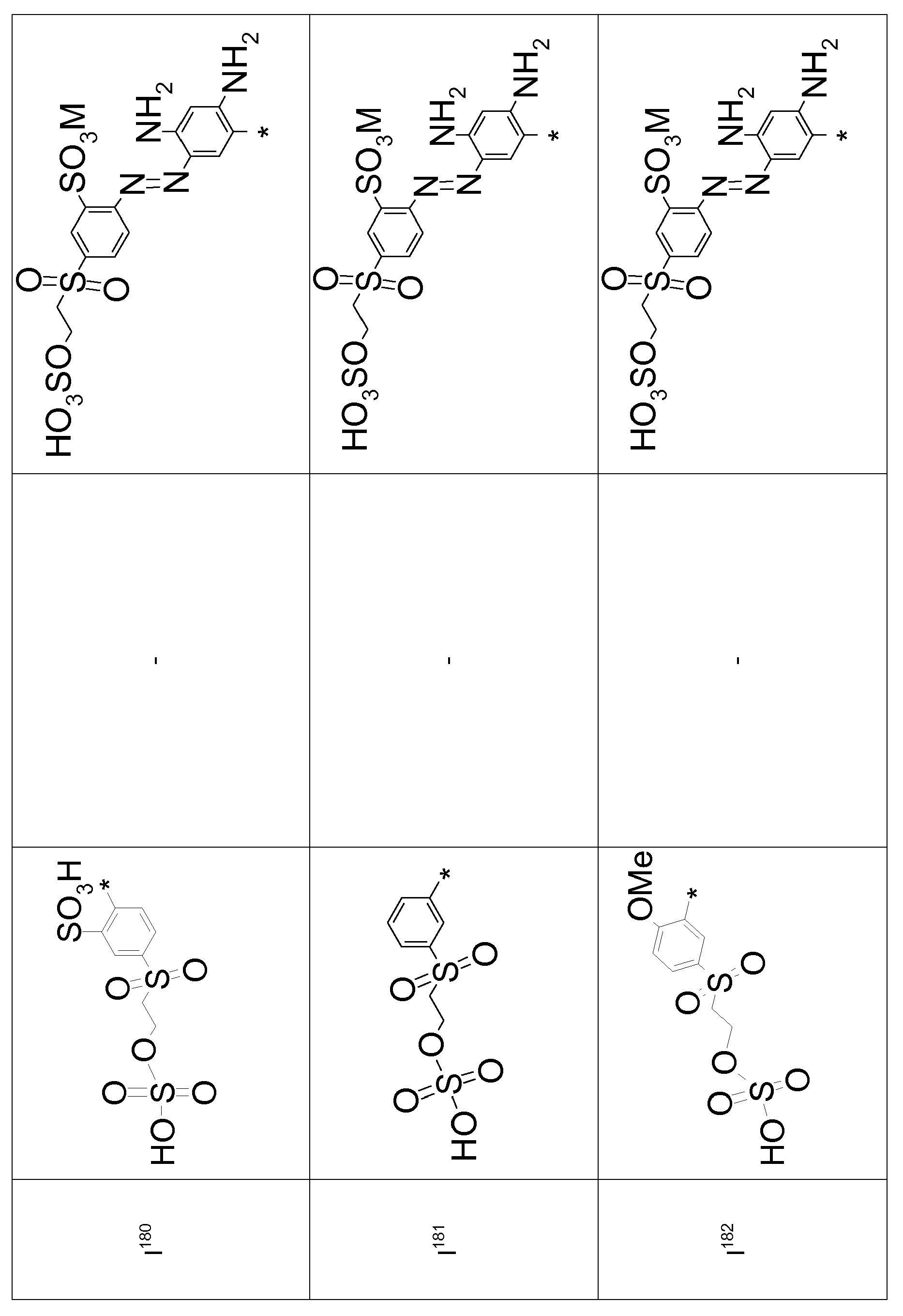

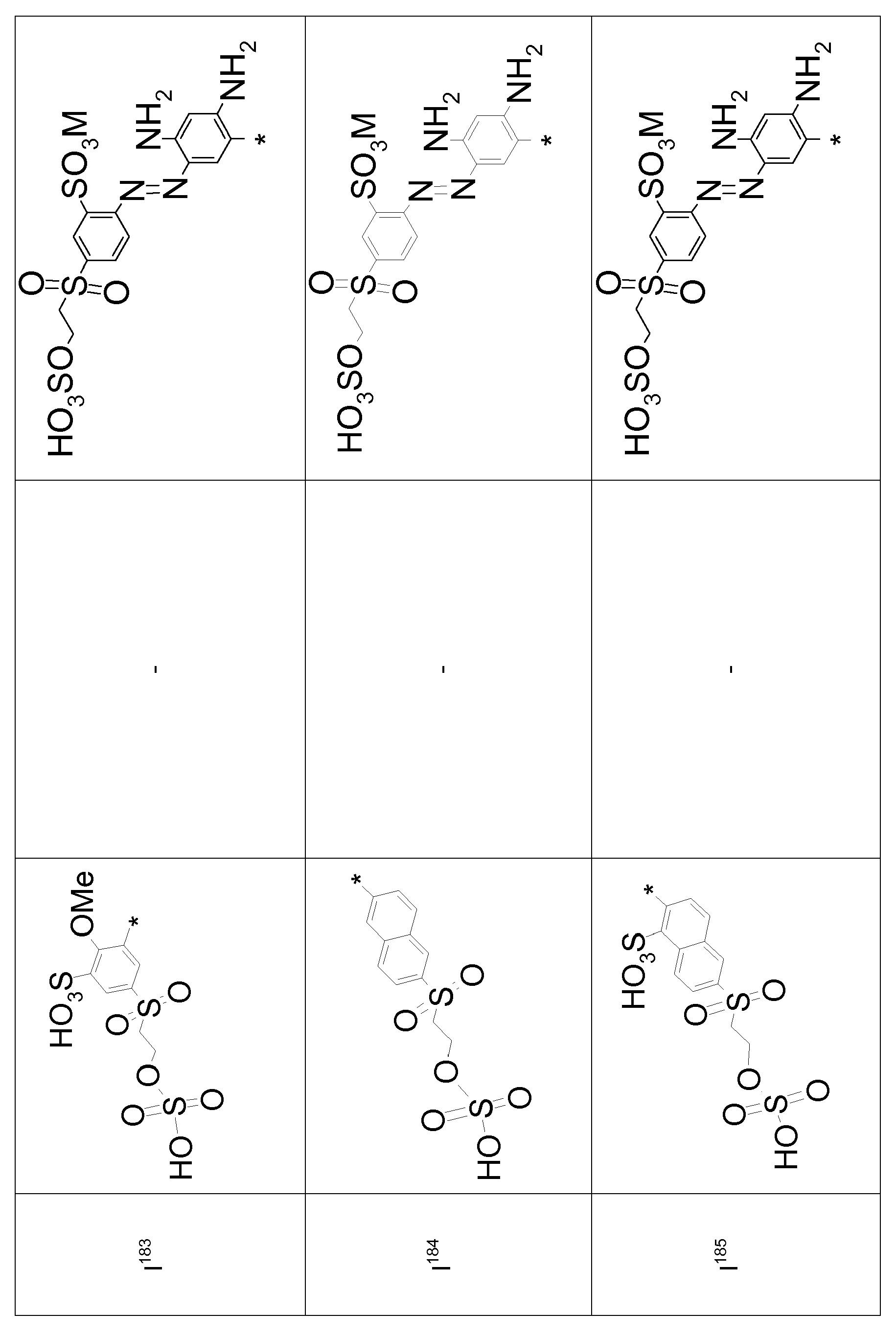

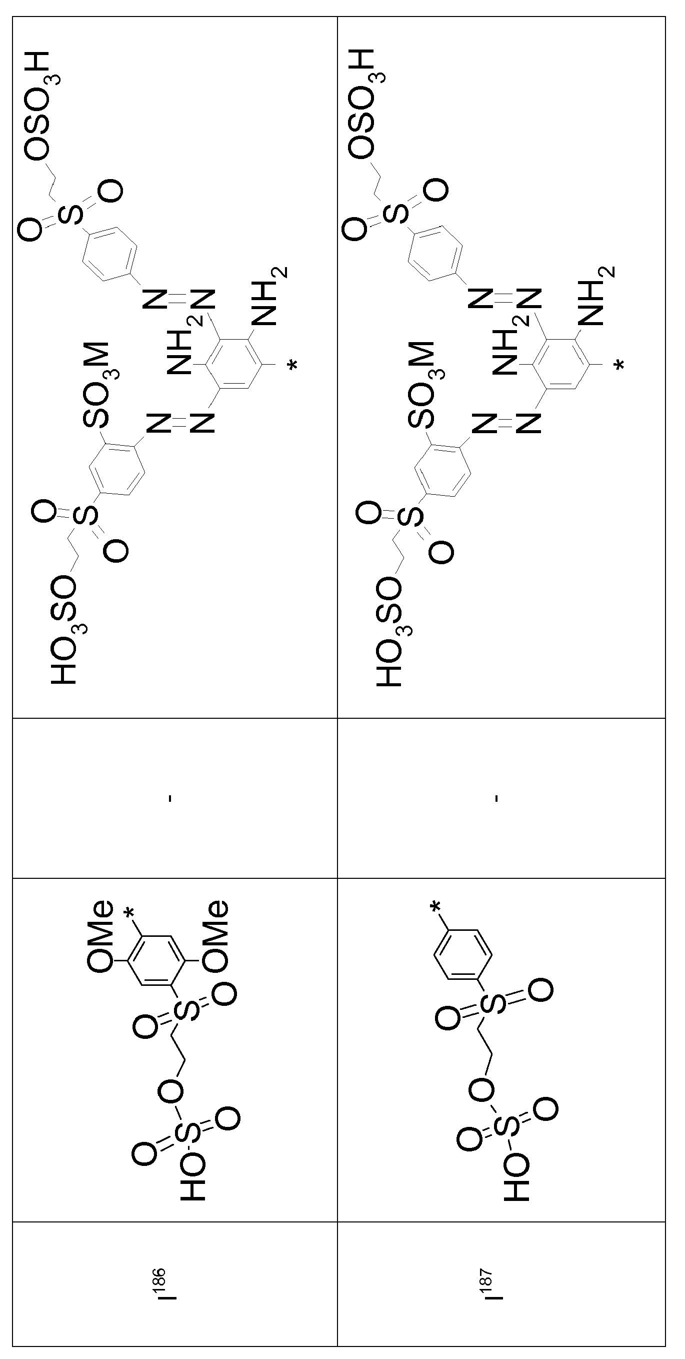

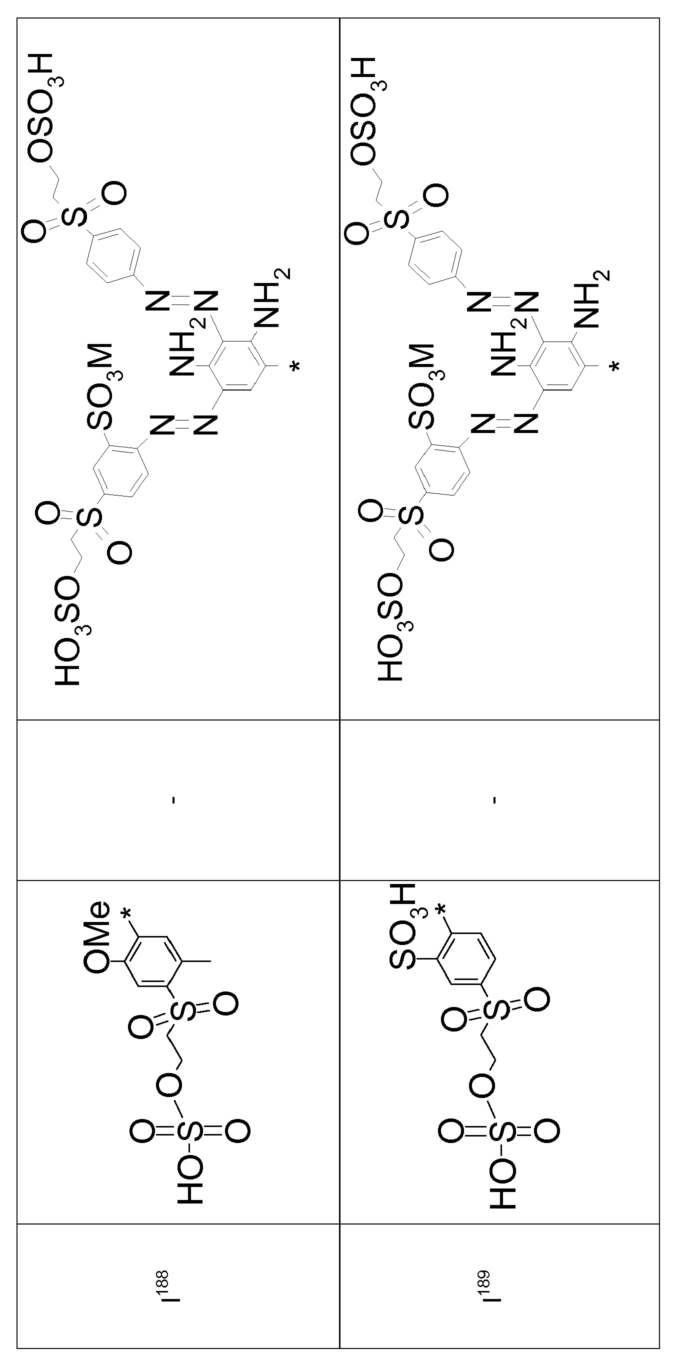

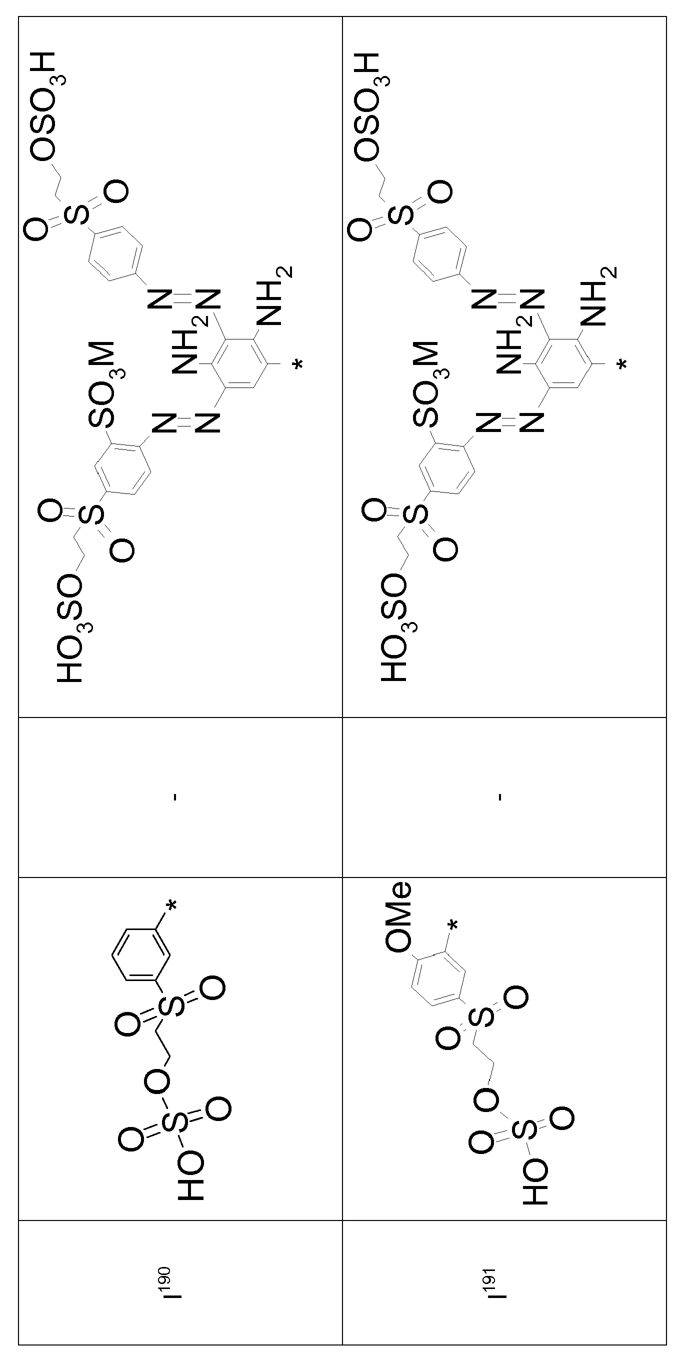

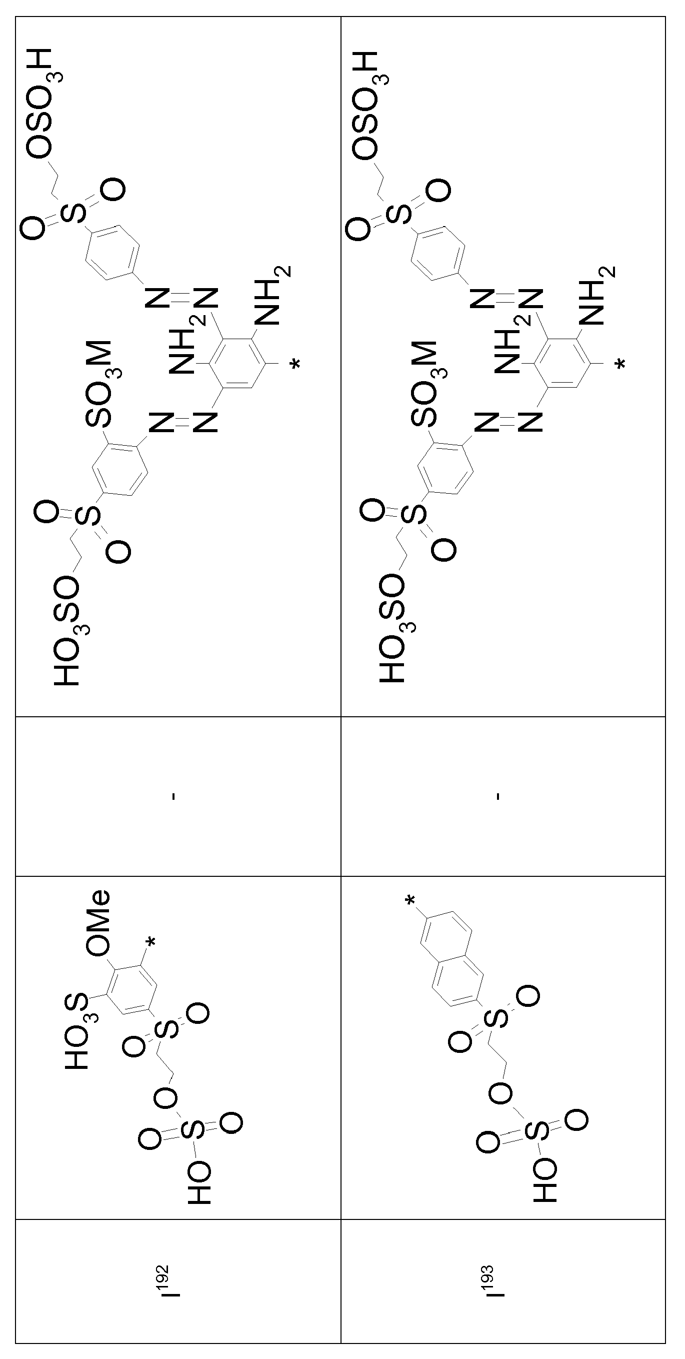

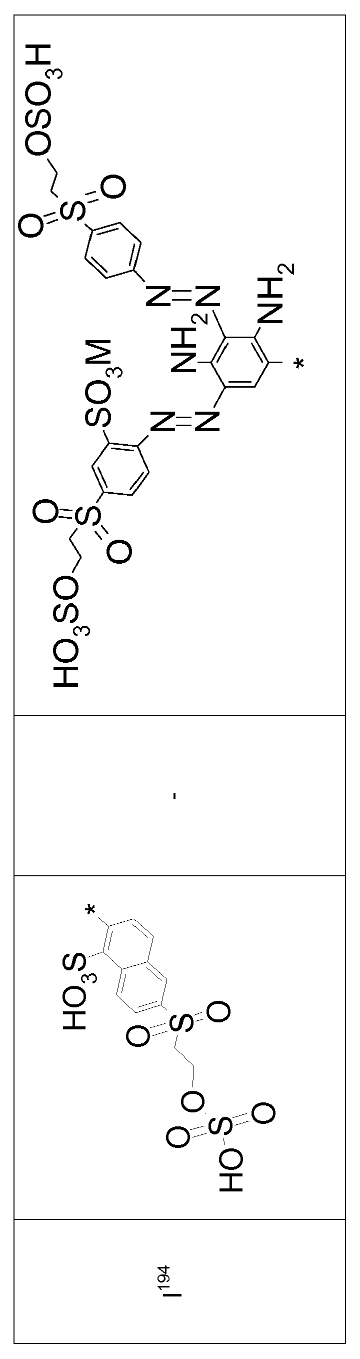

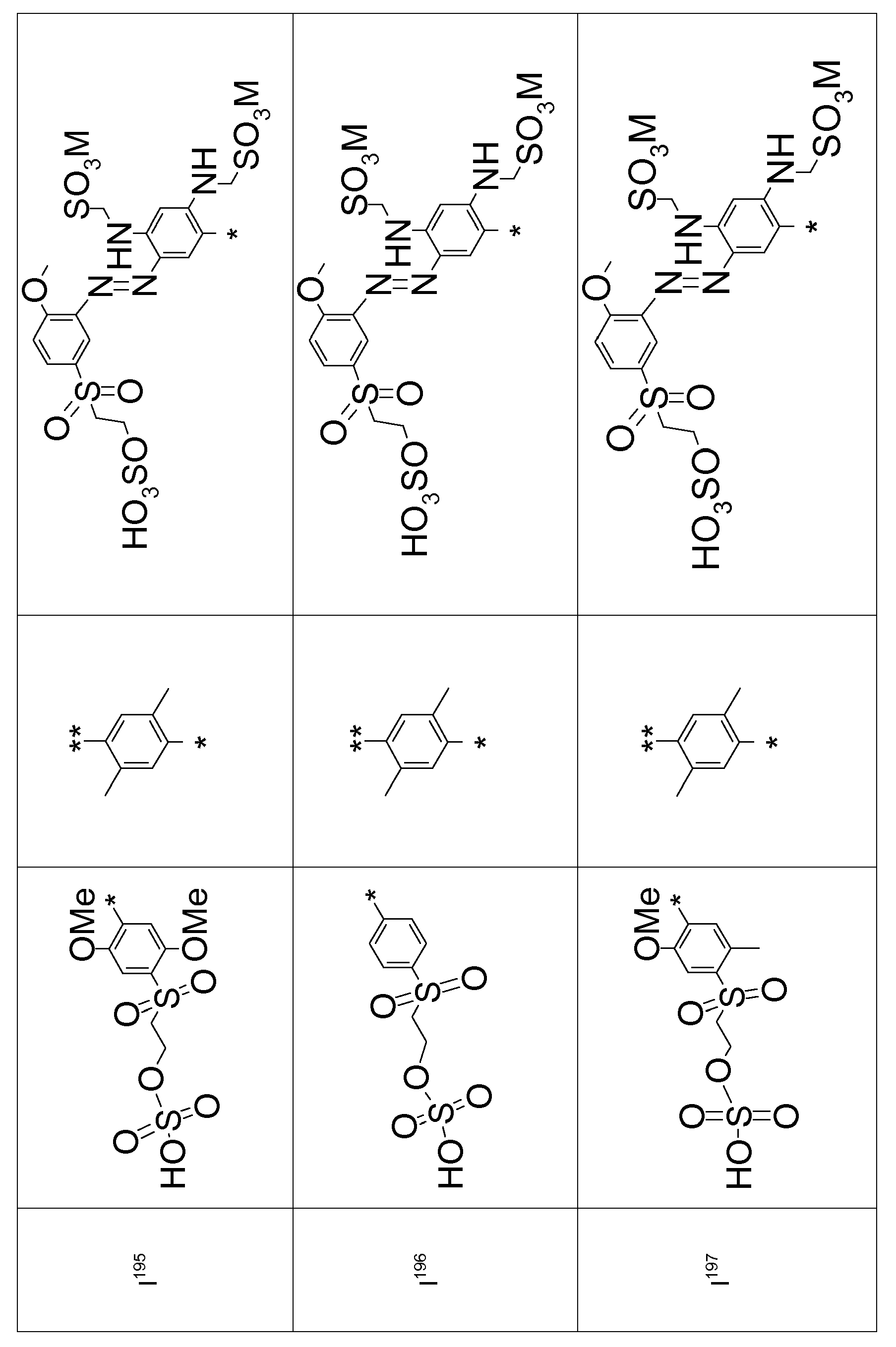

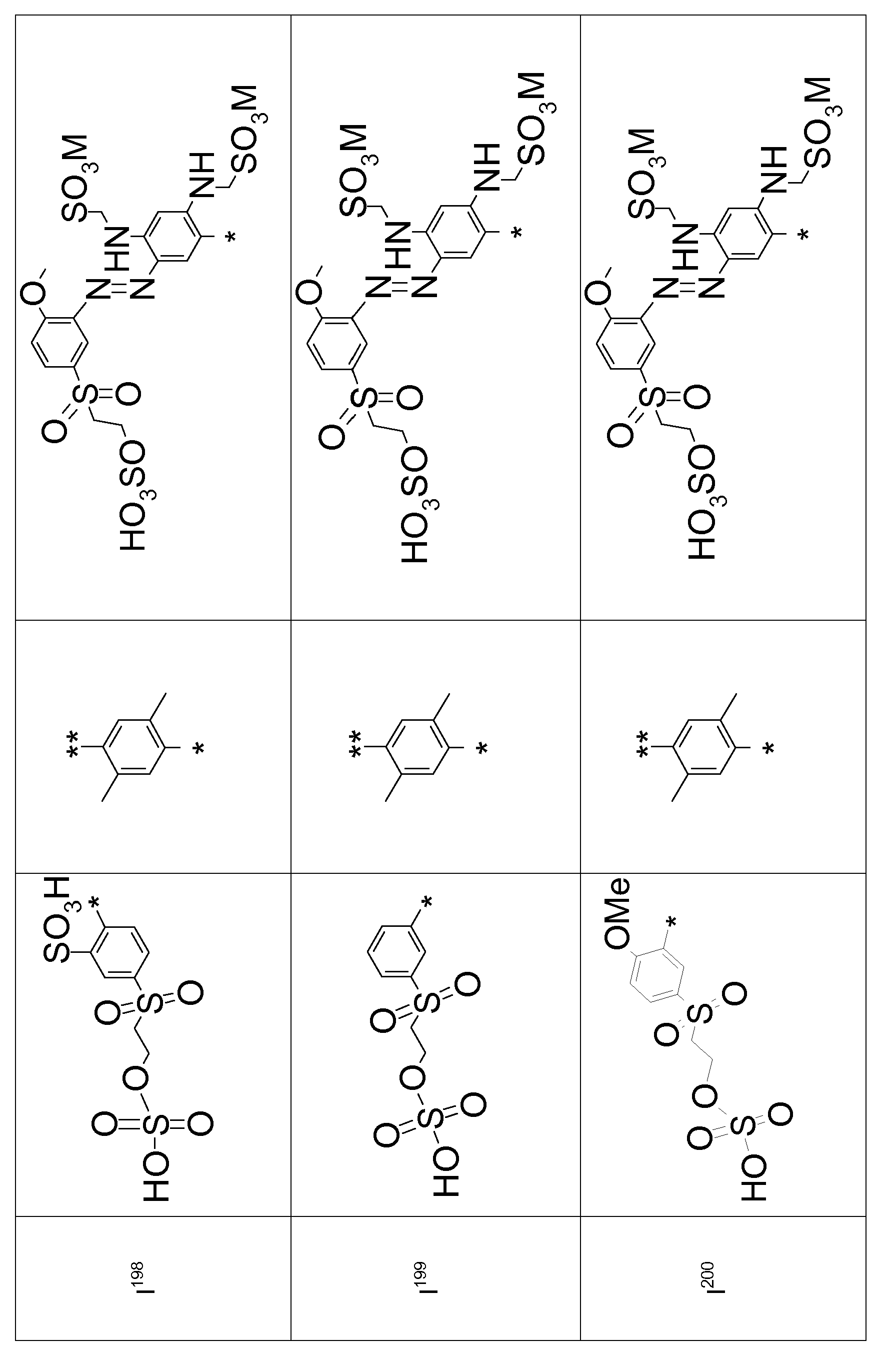

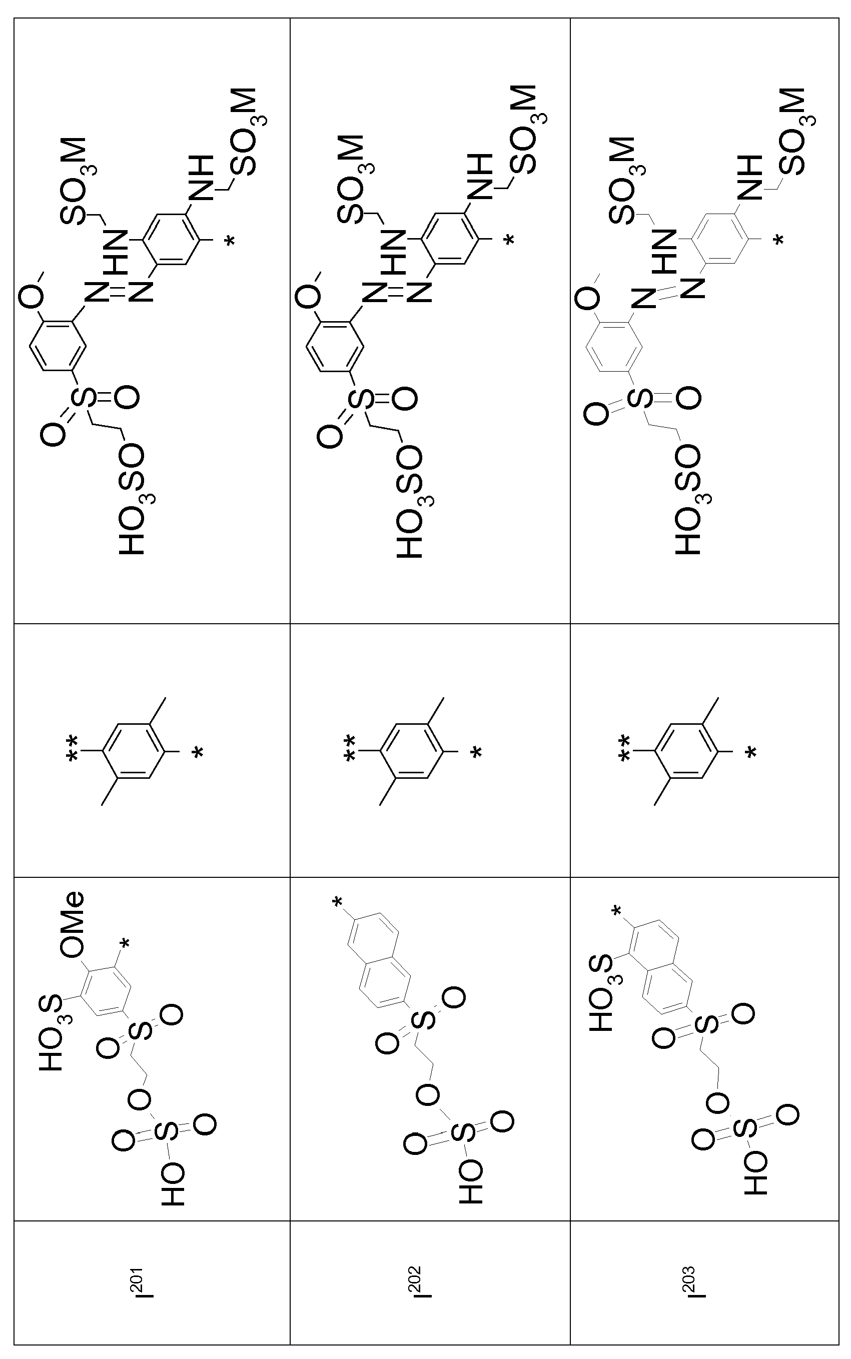

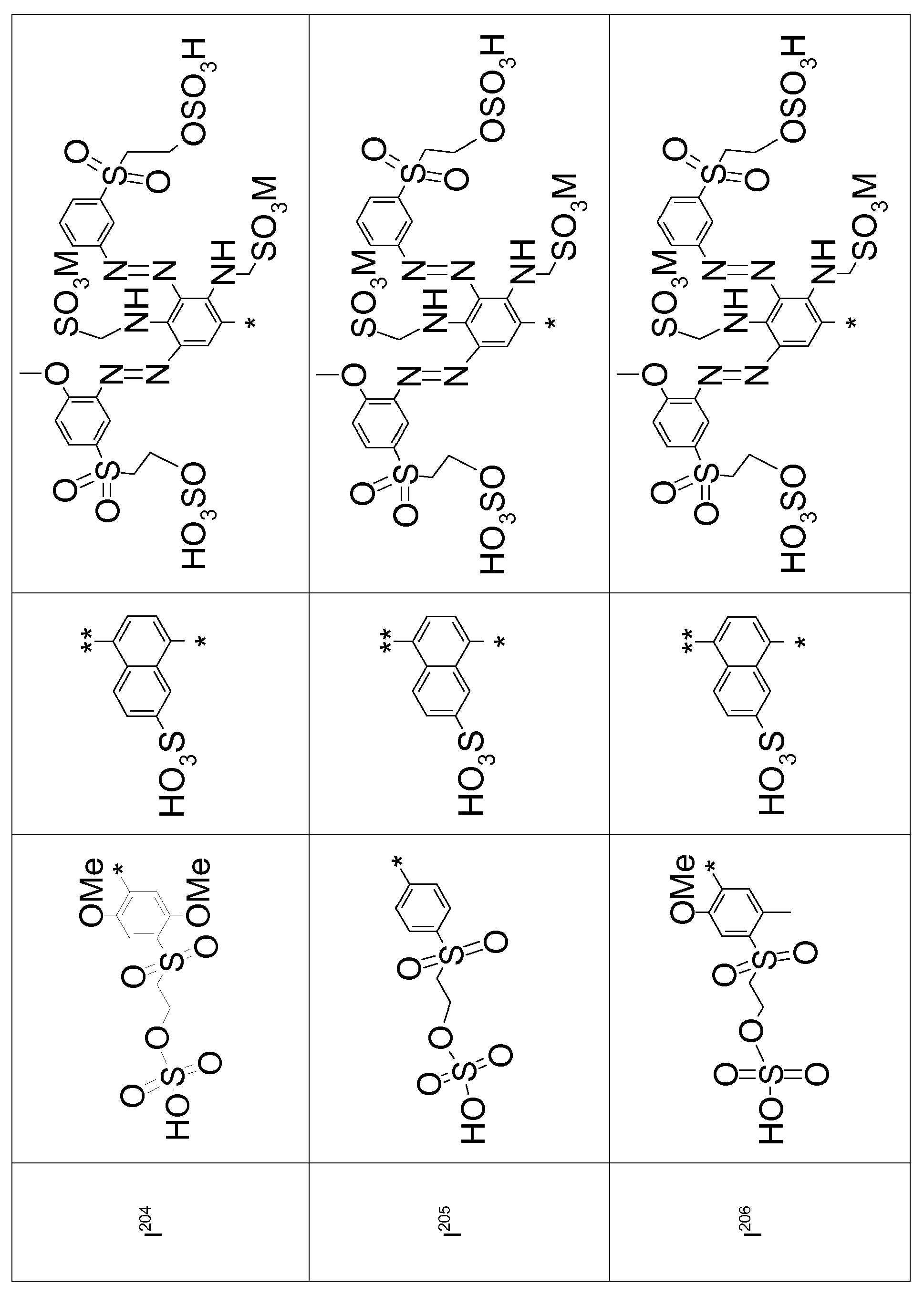

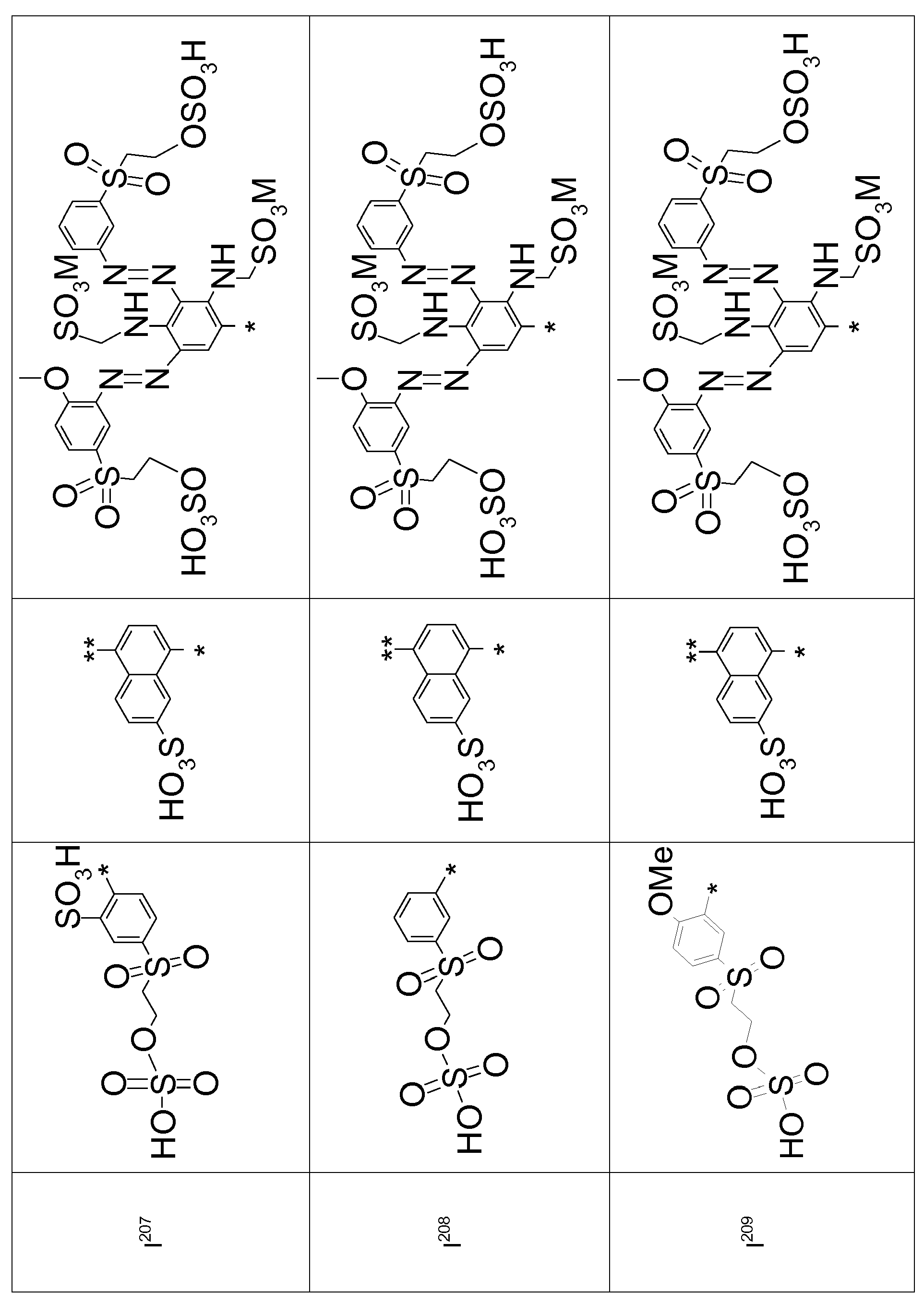

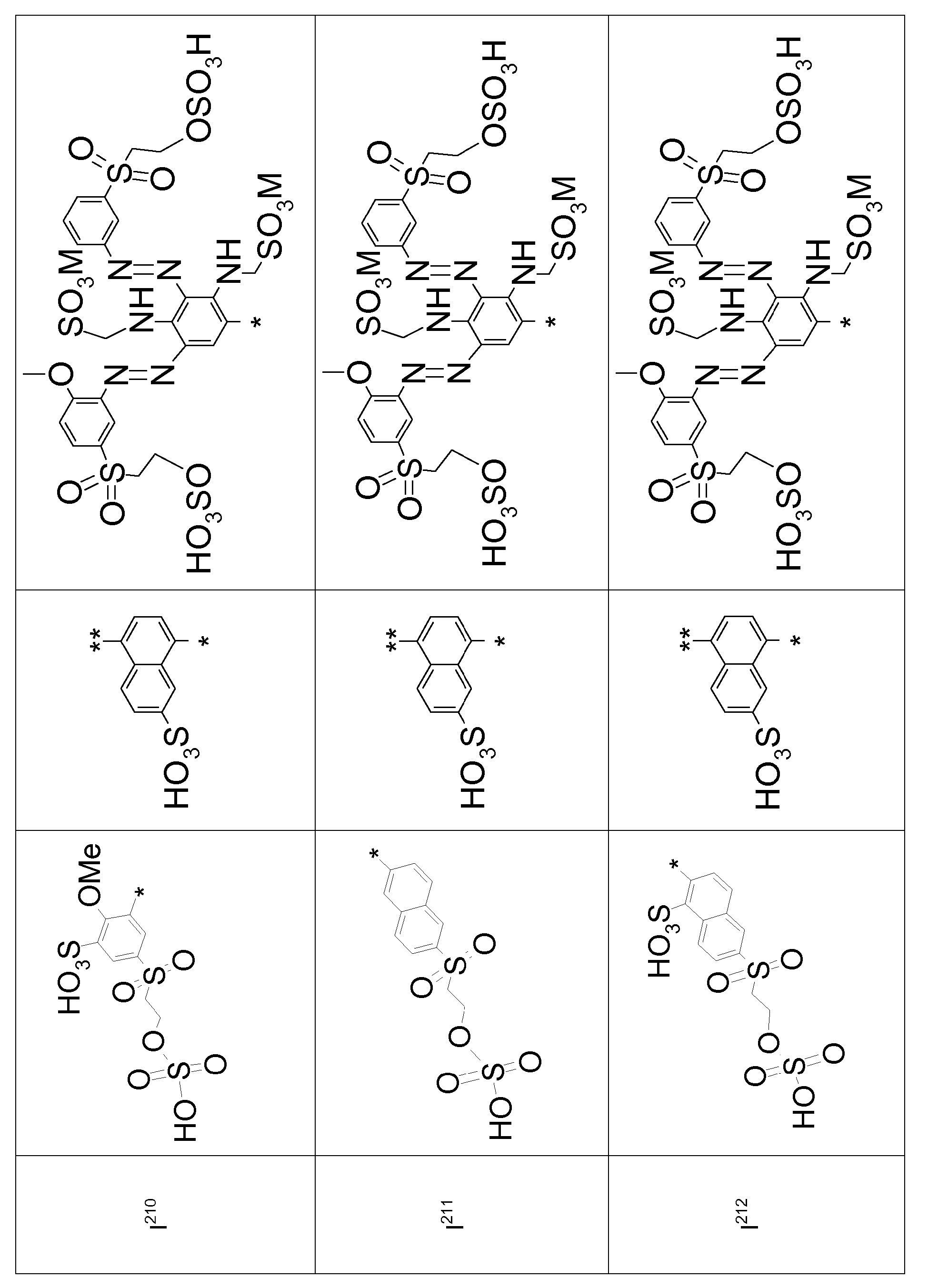

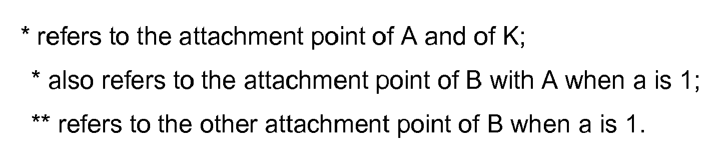

Further examples of preferred dyes of the formulae (Ia) to (Ih) are the compounds I²¹³ to I⁴²⁴ listed in the table 2 below and having the general formula (I").

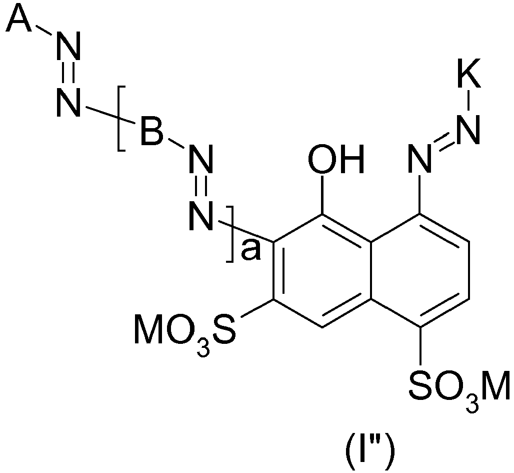

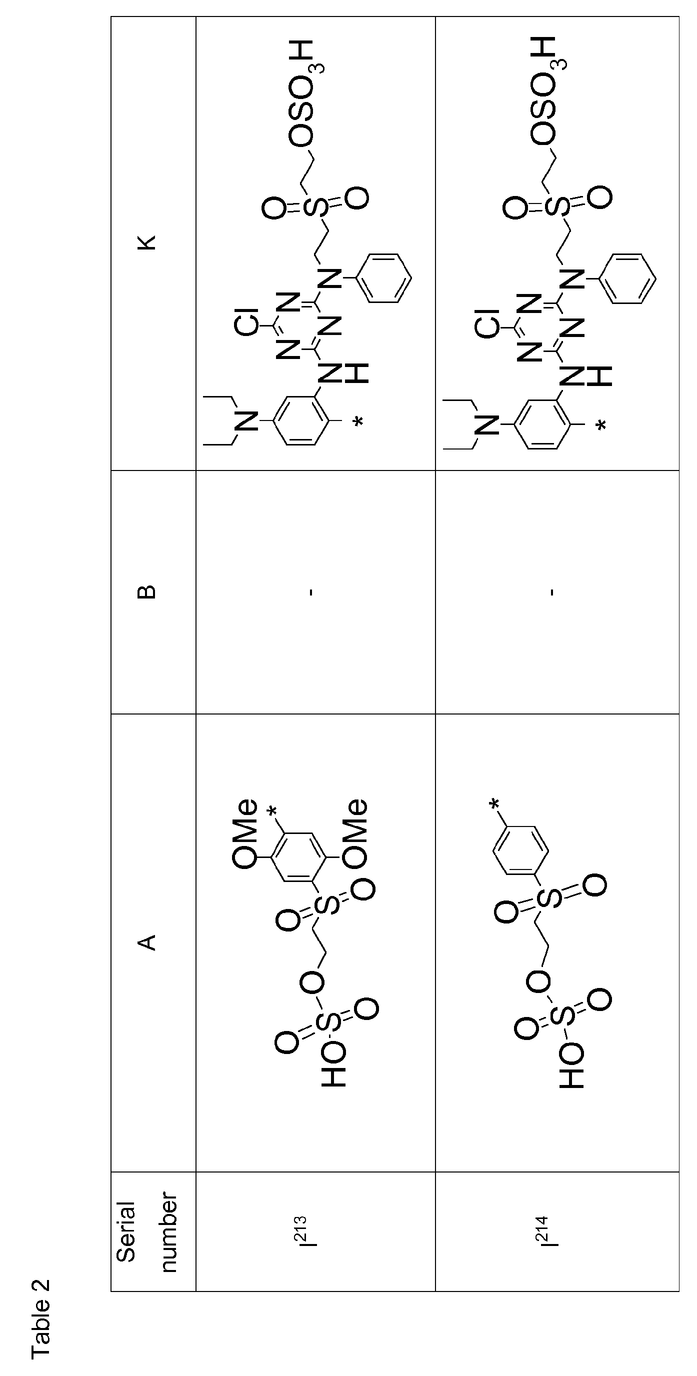

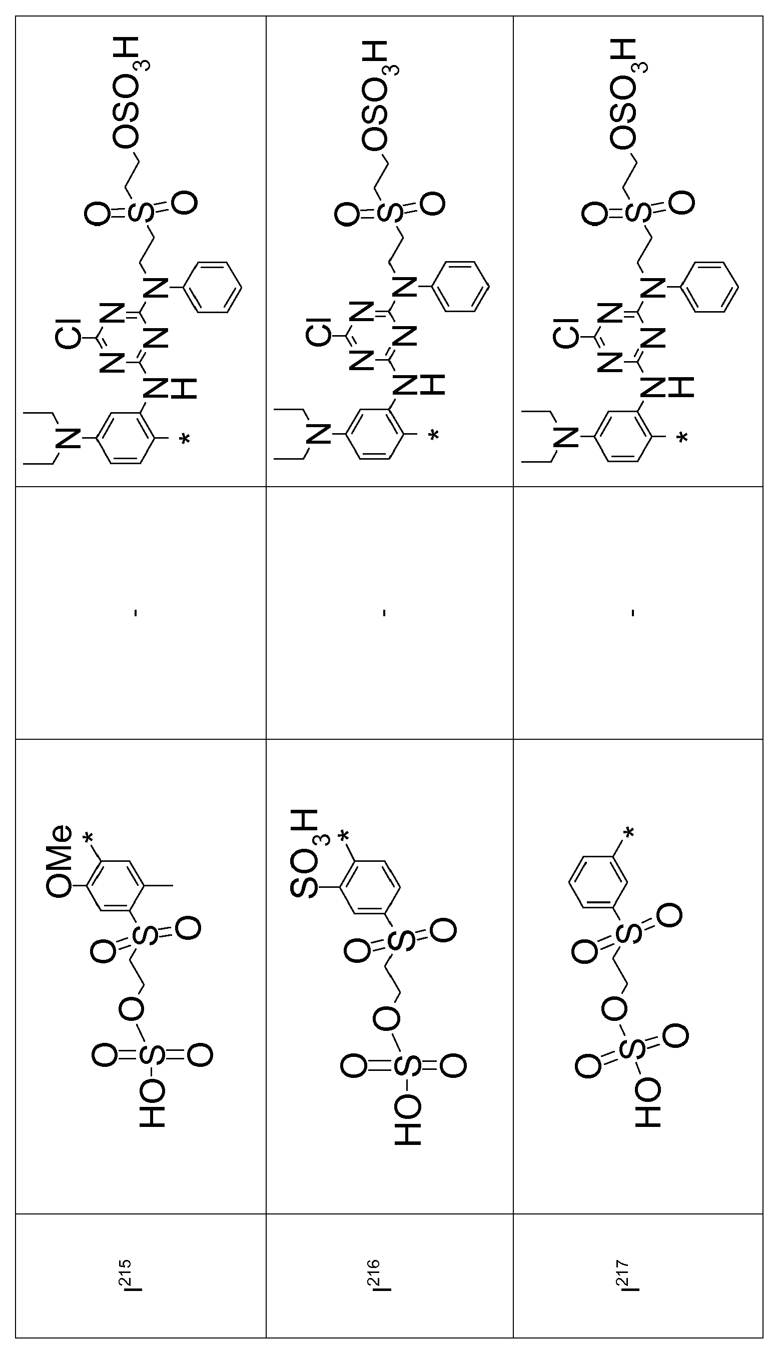

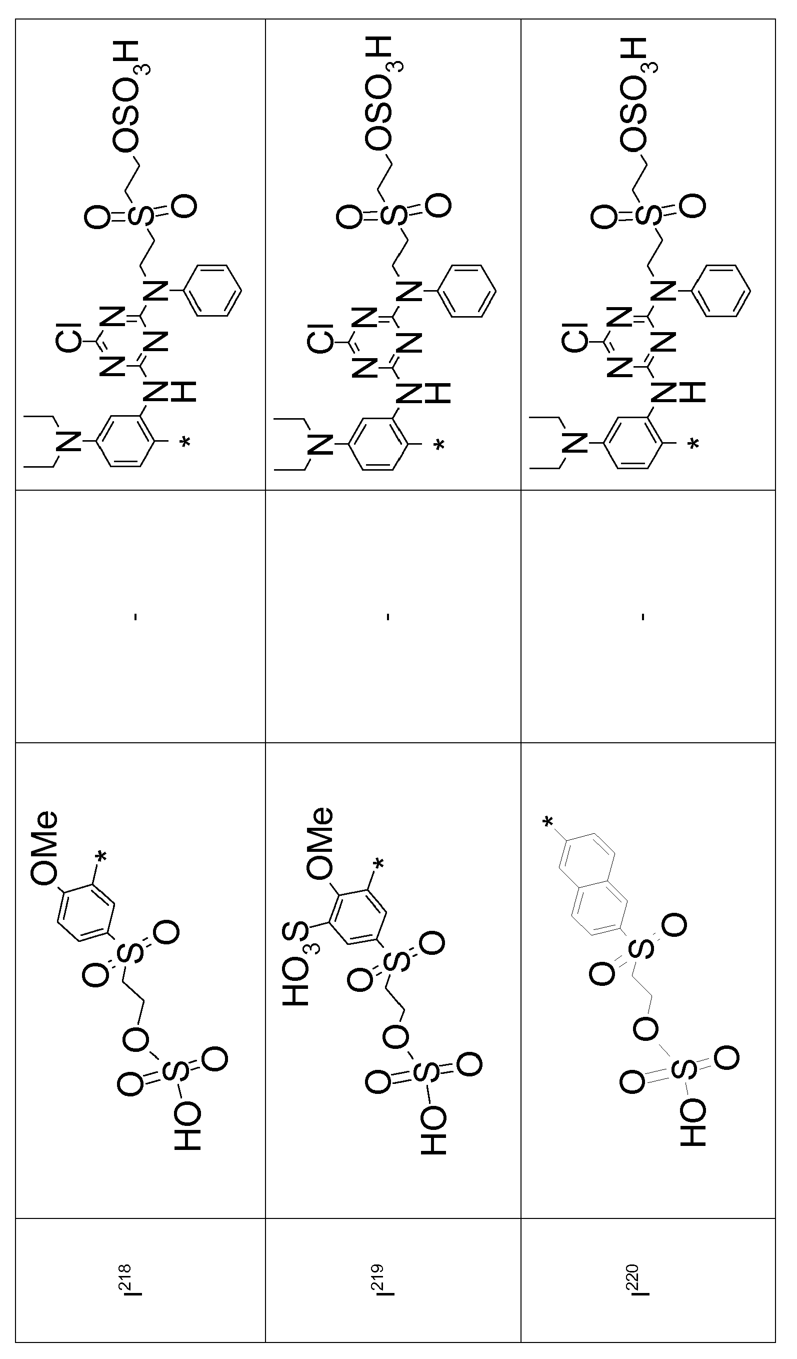

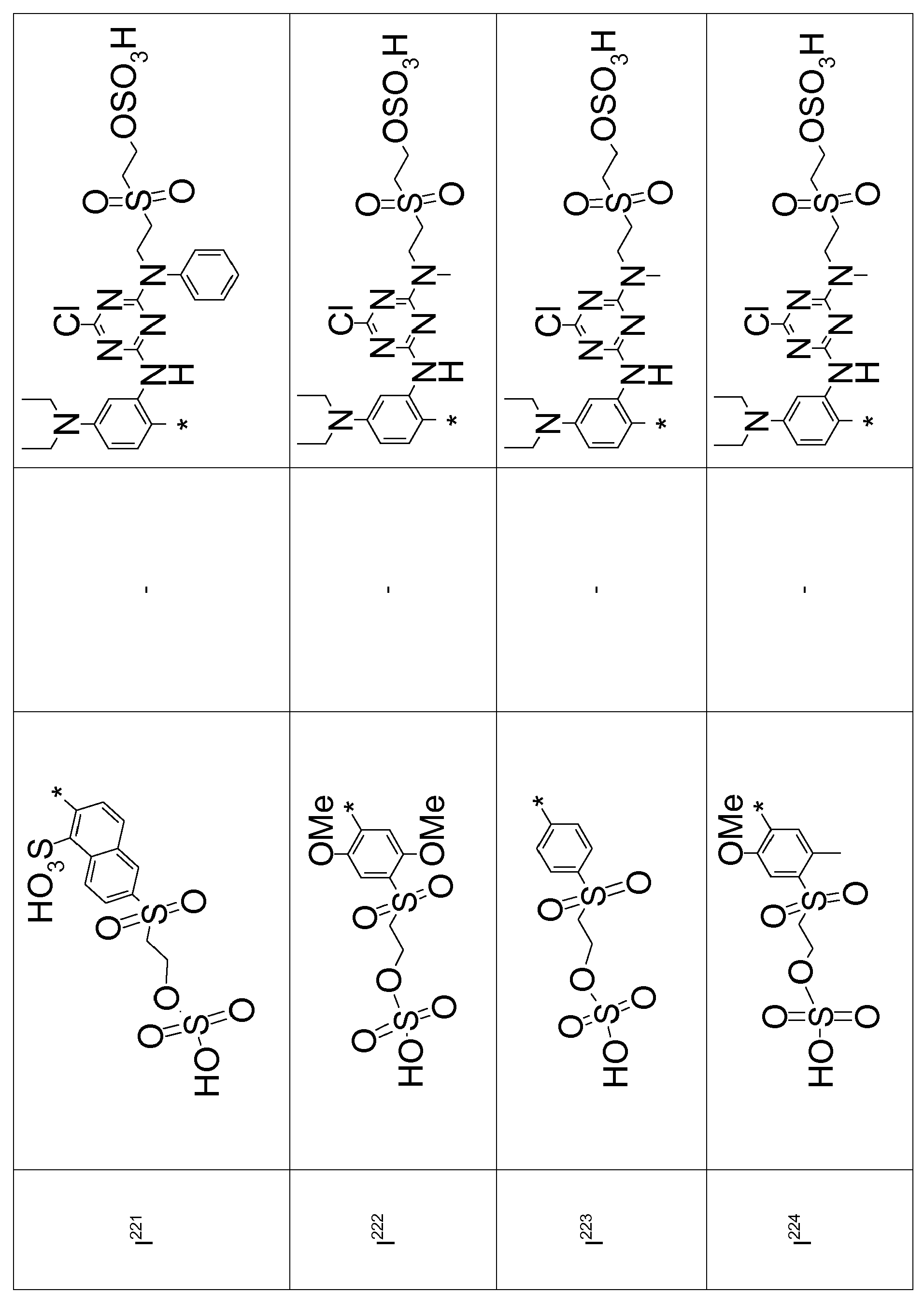

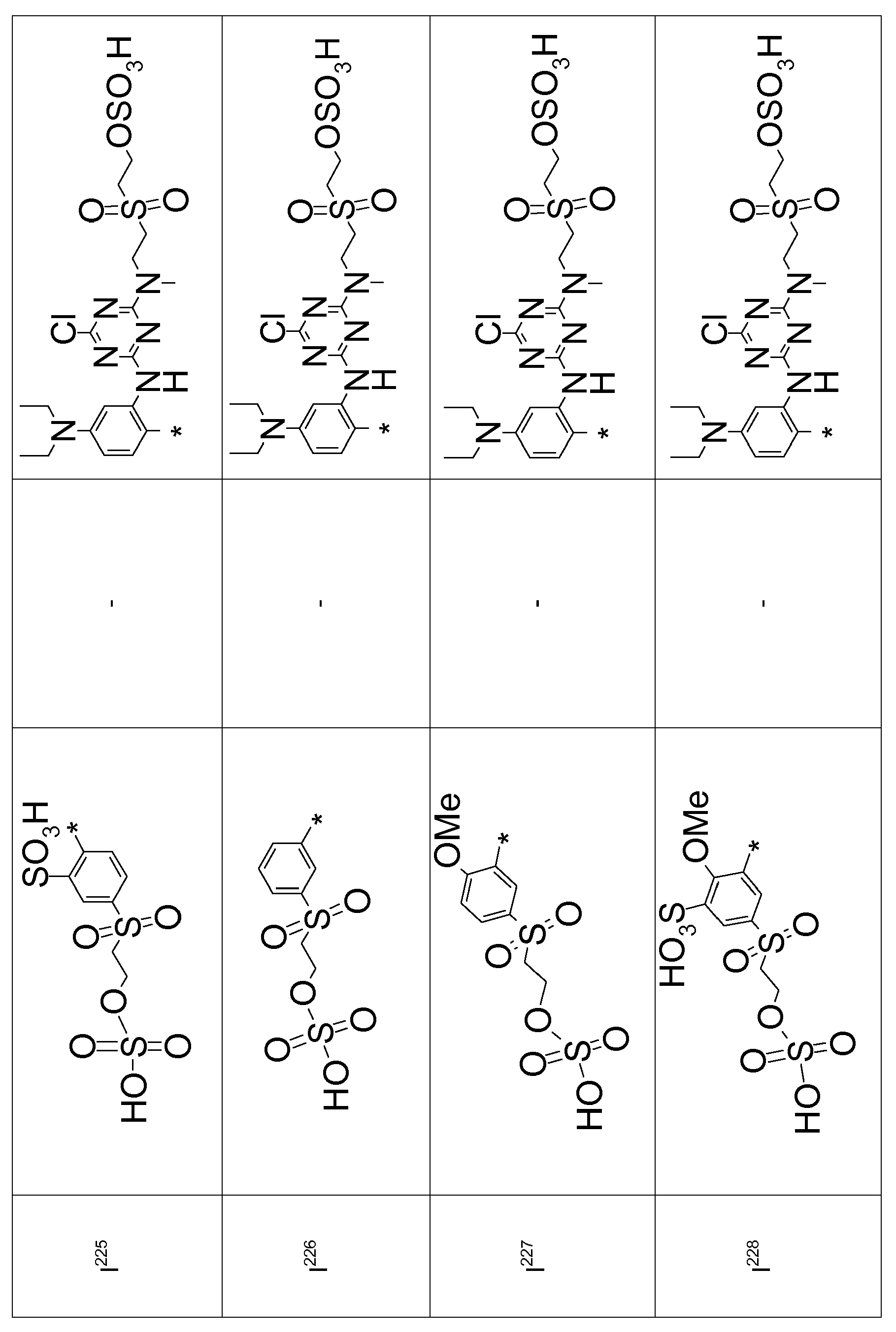

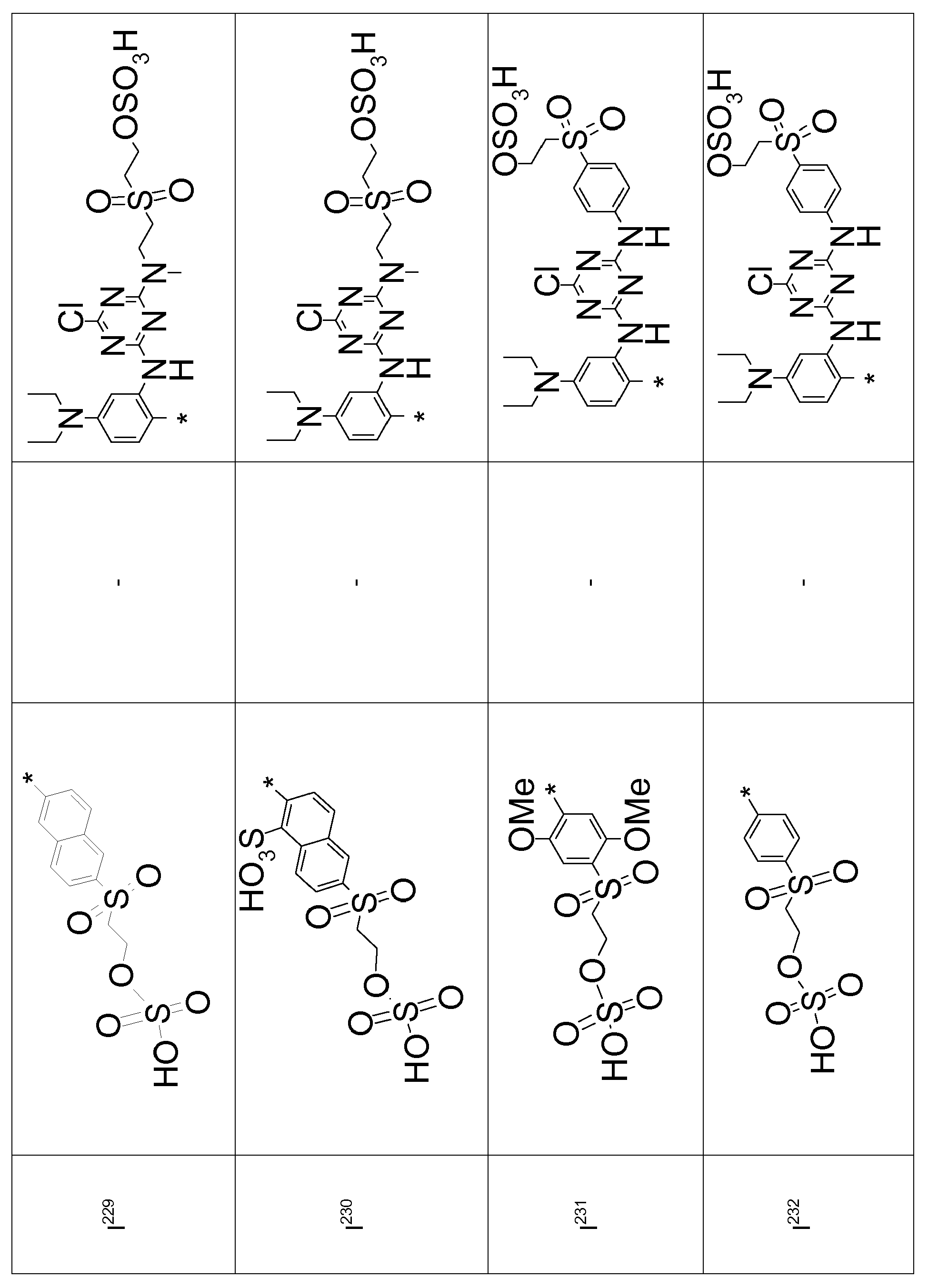

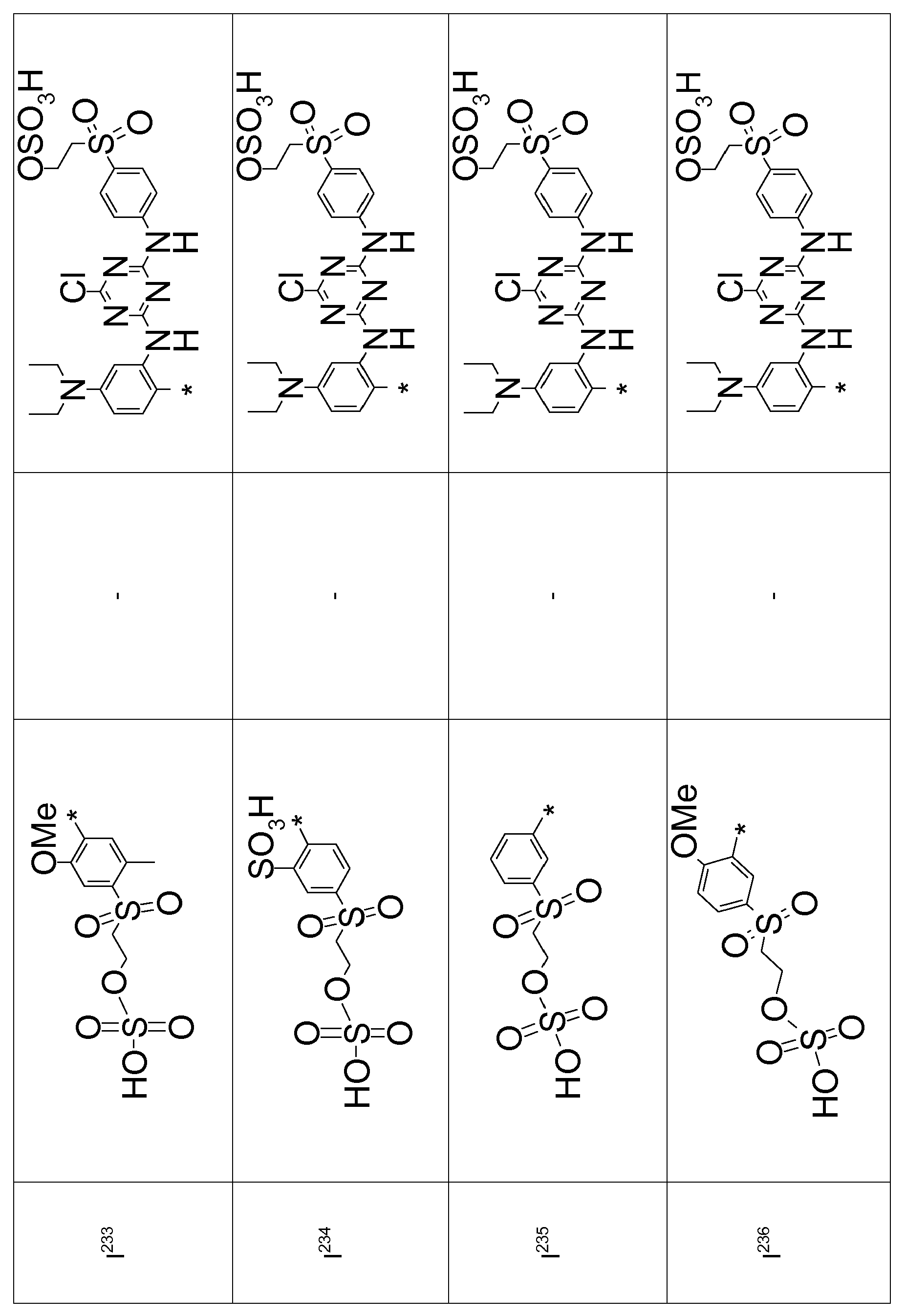

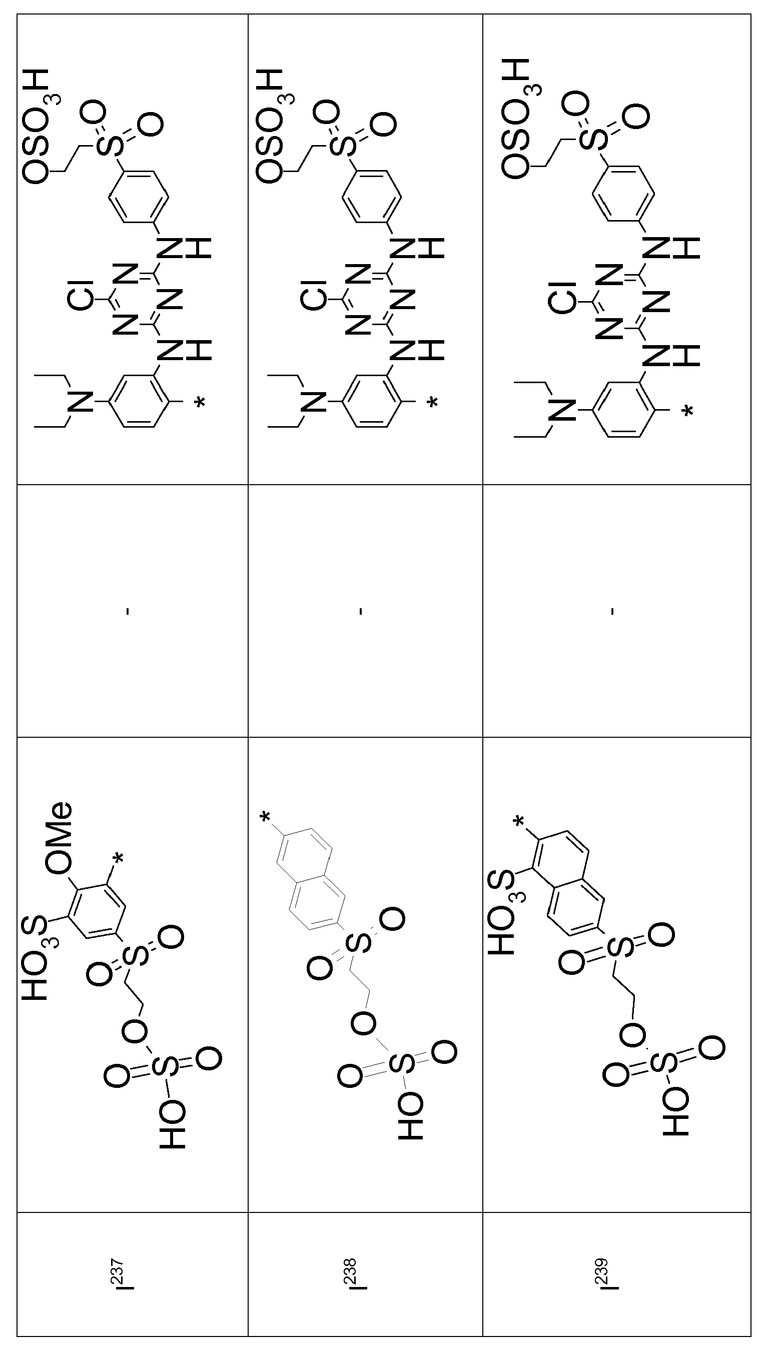

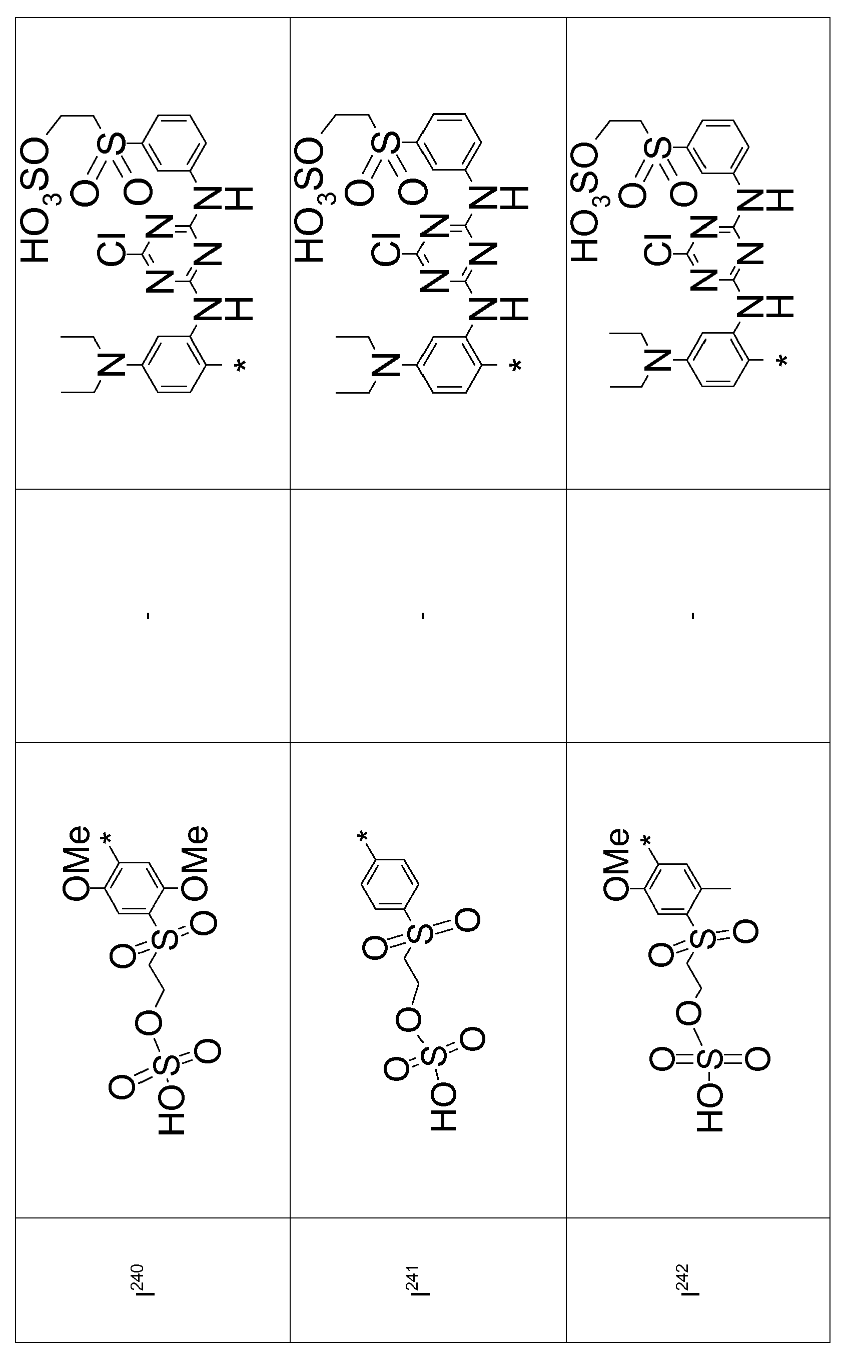

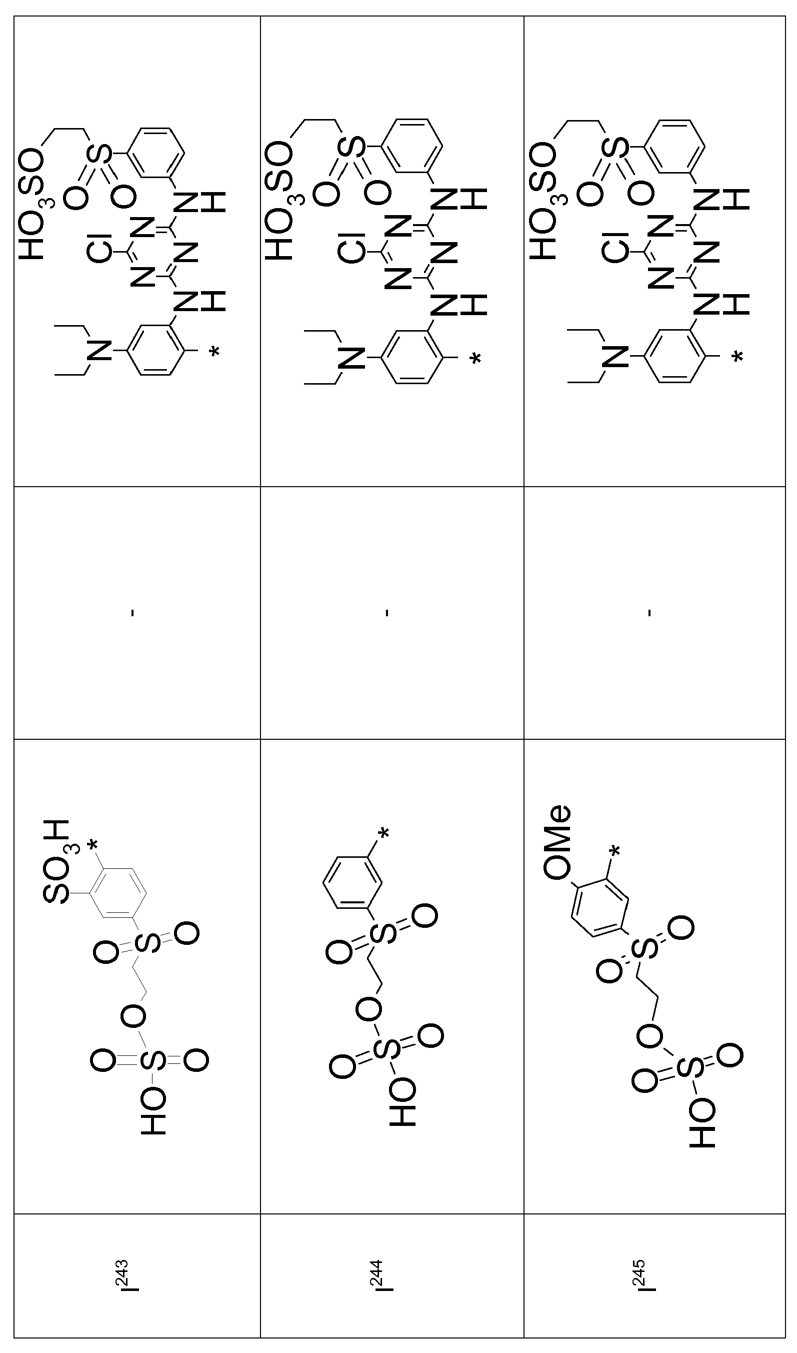

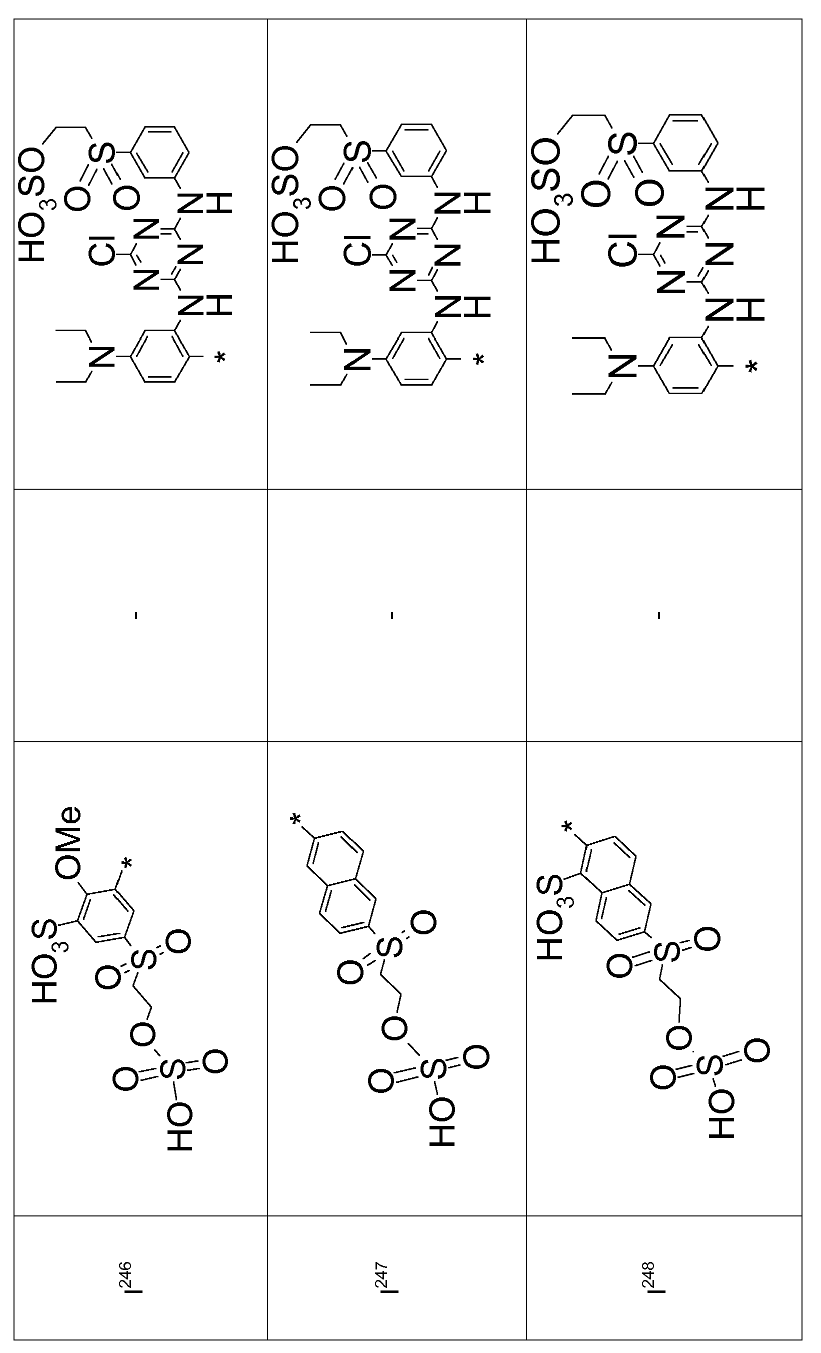

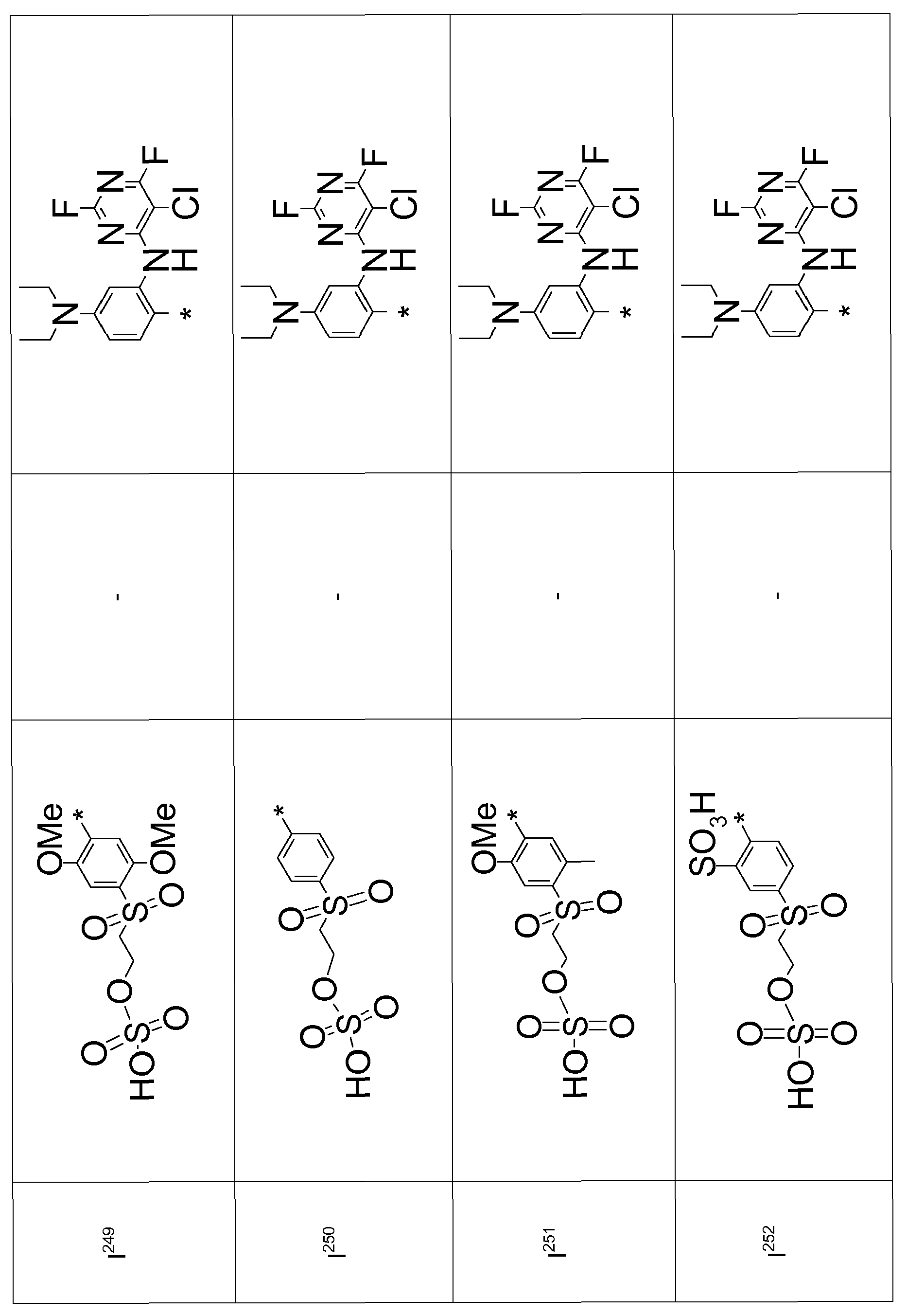

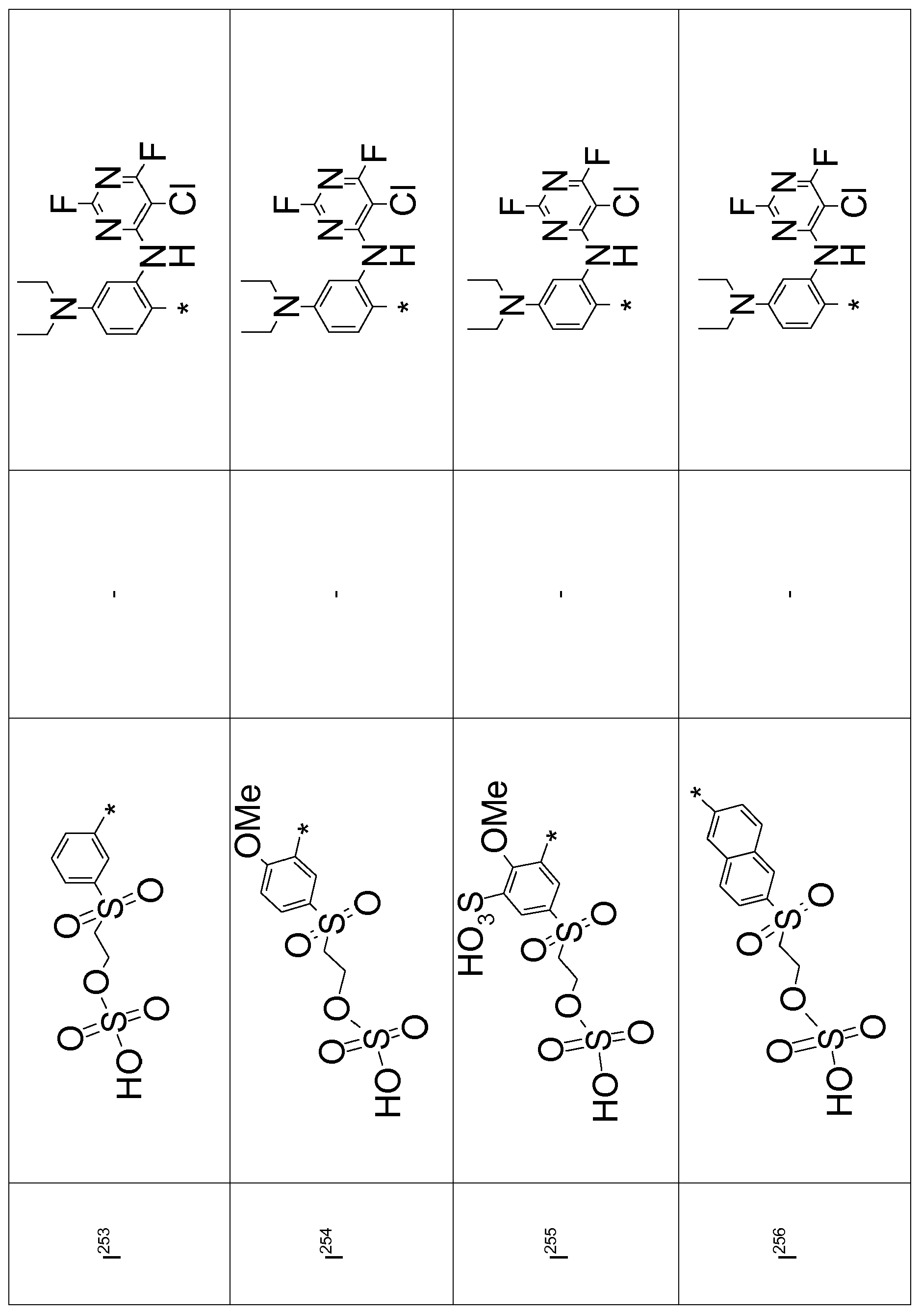

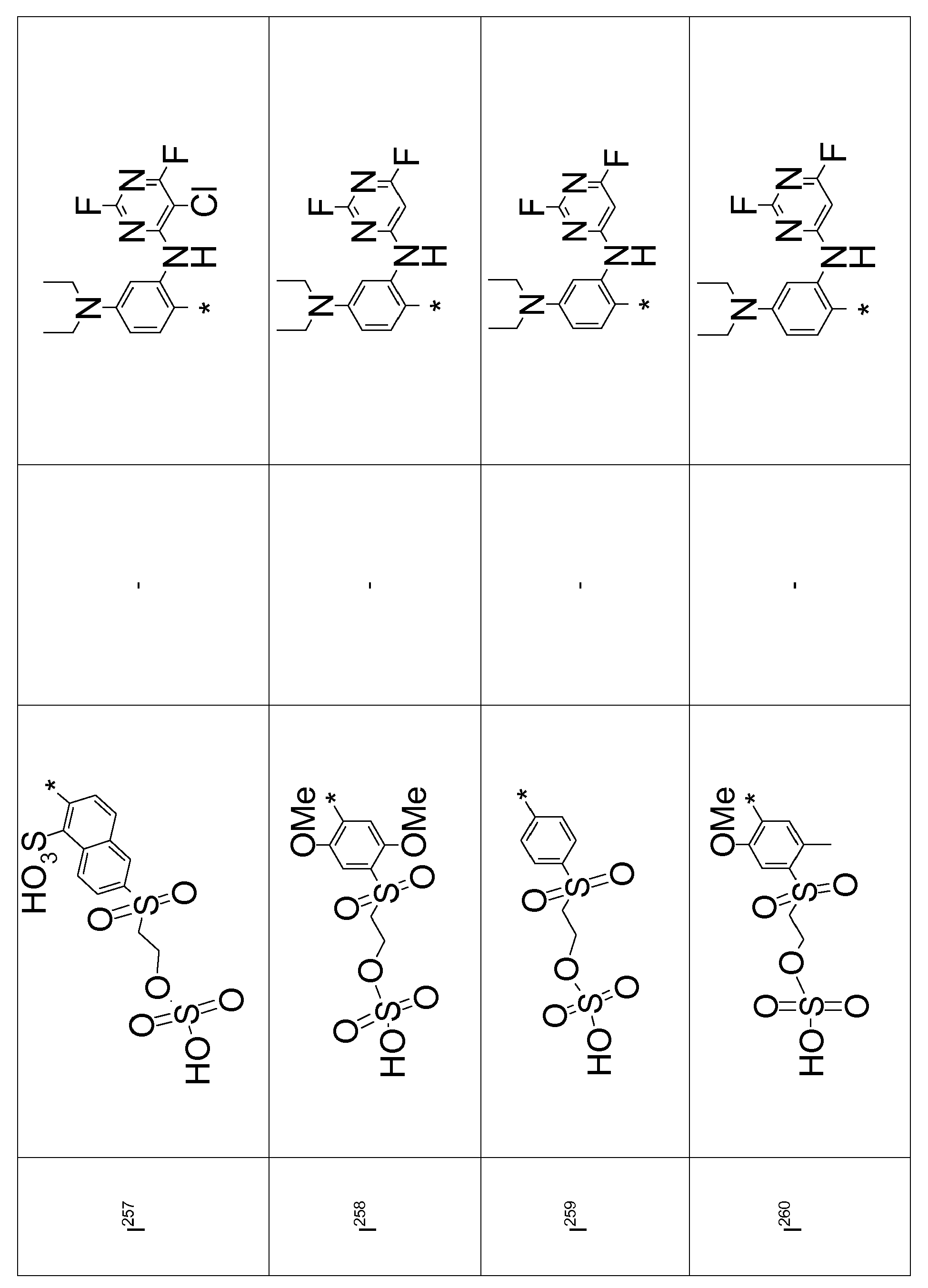

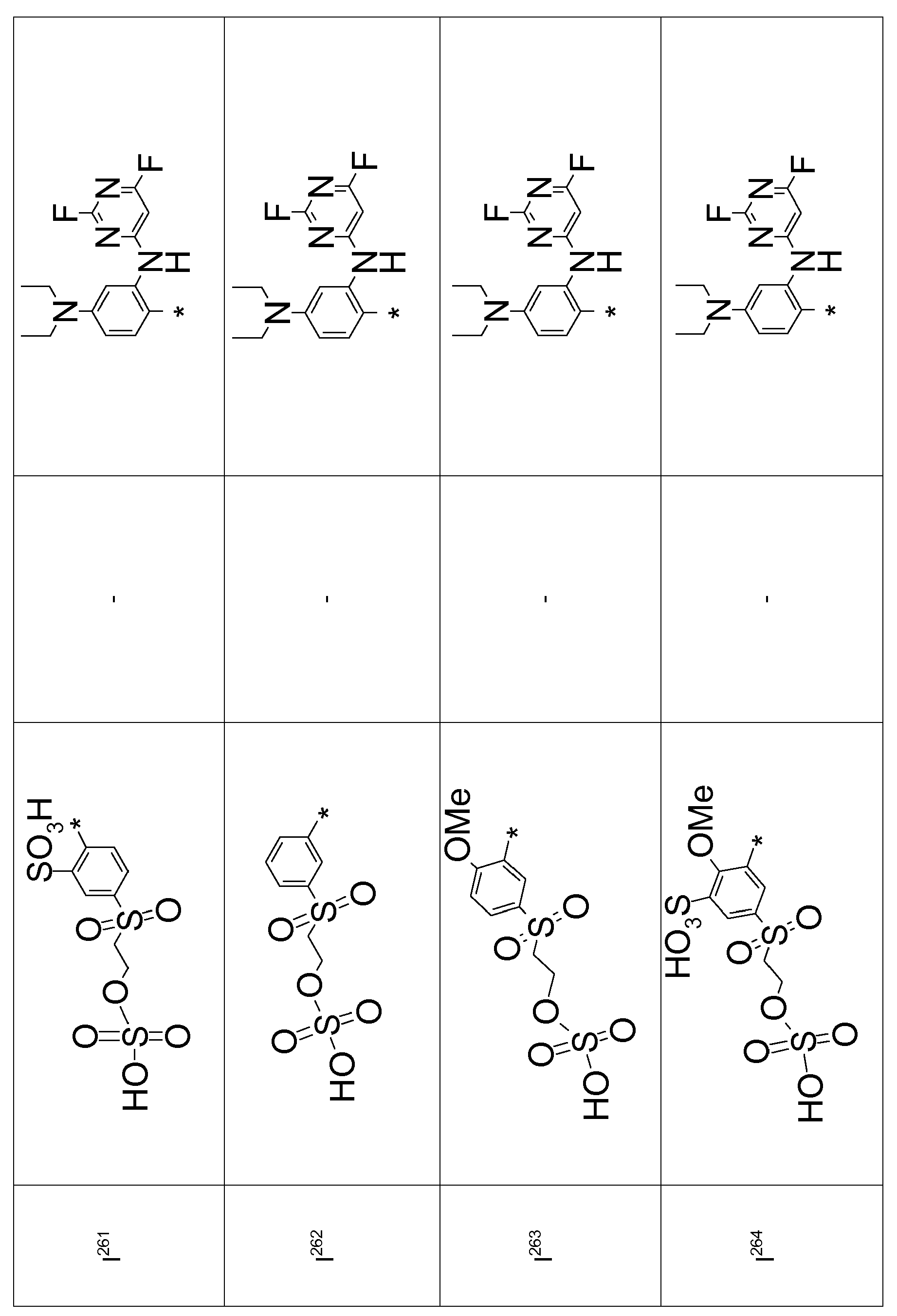

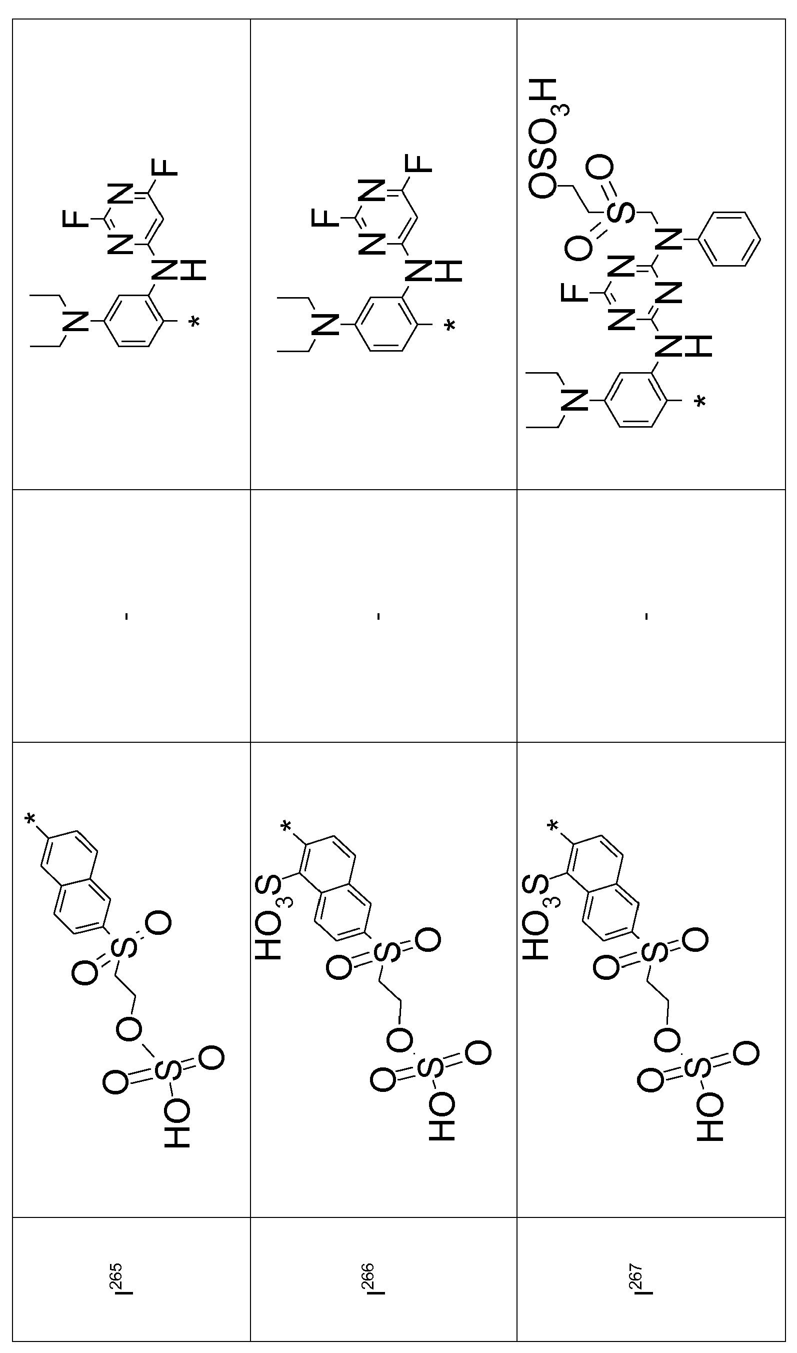

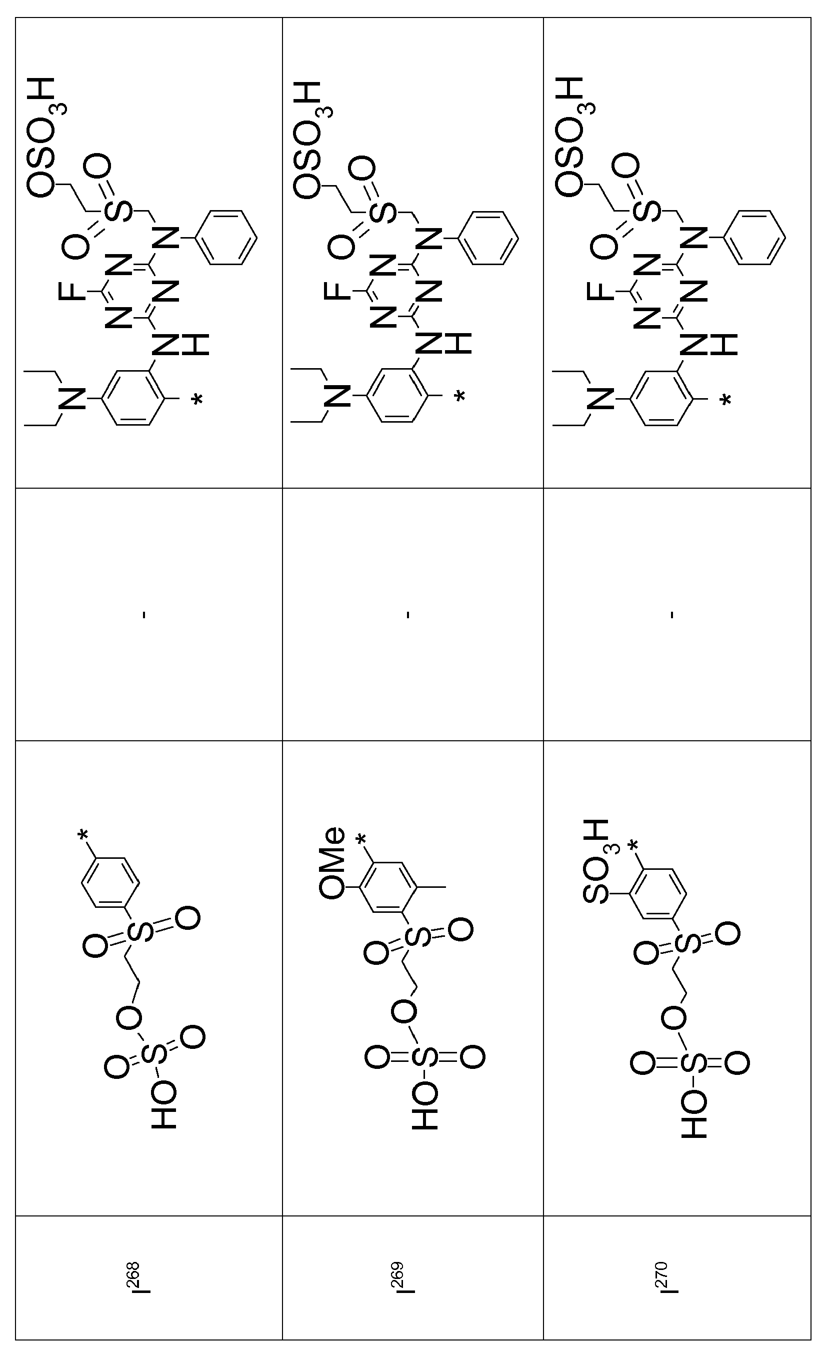

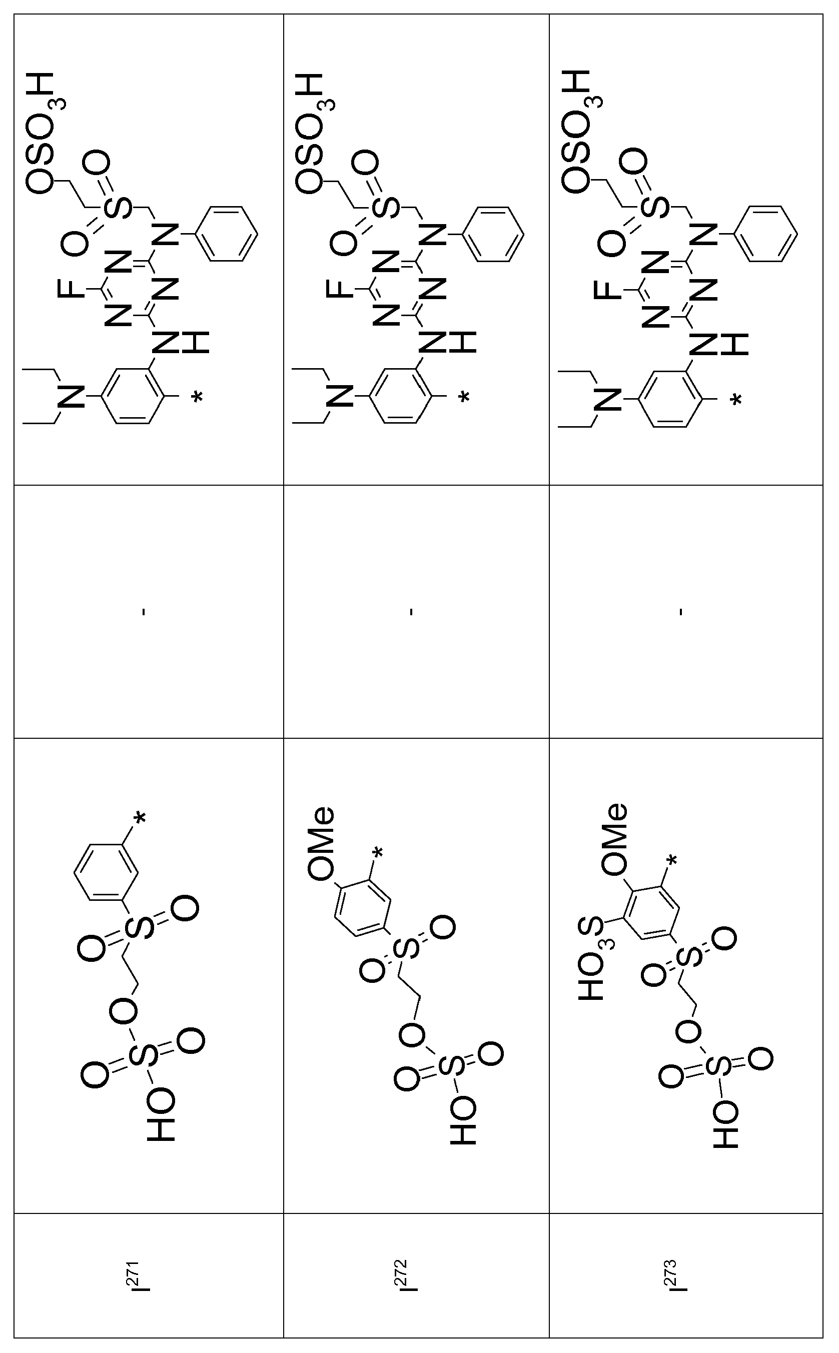

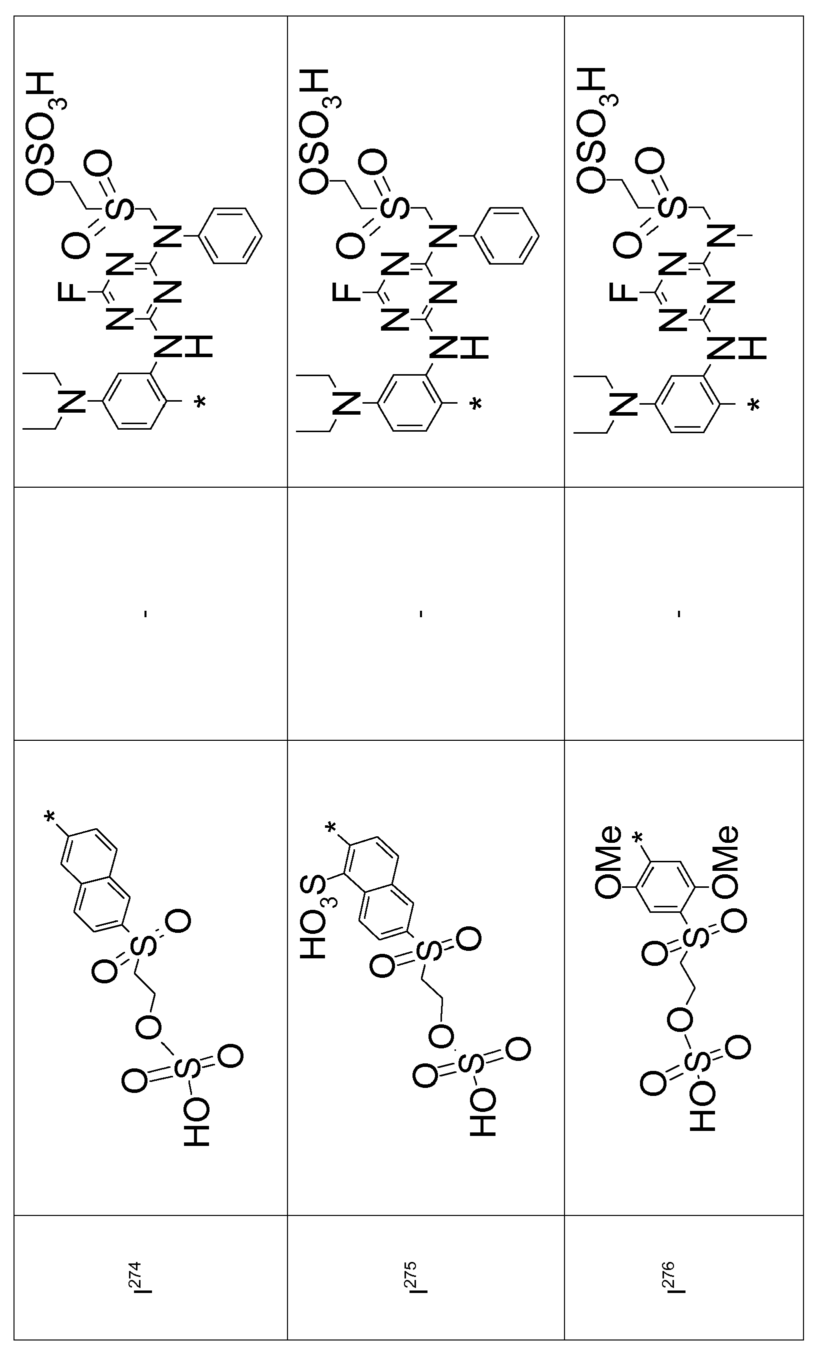

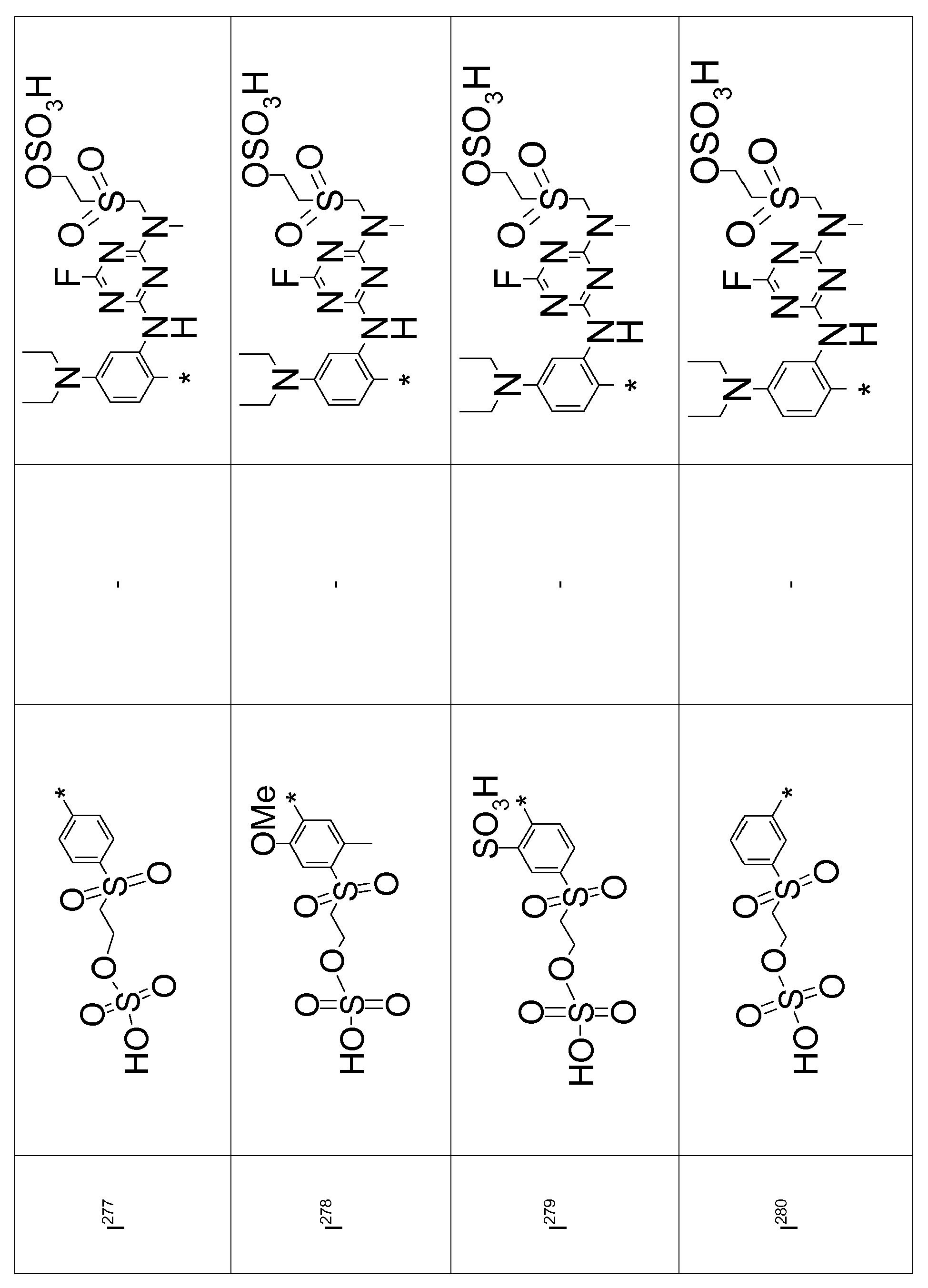

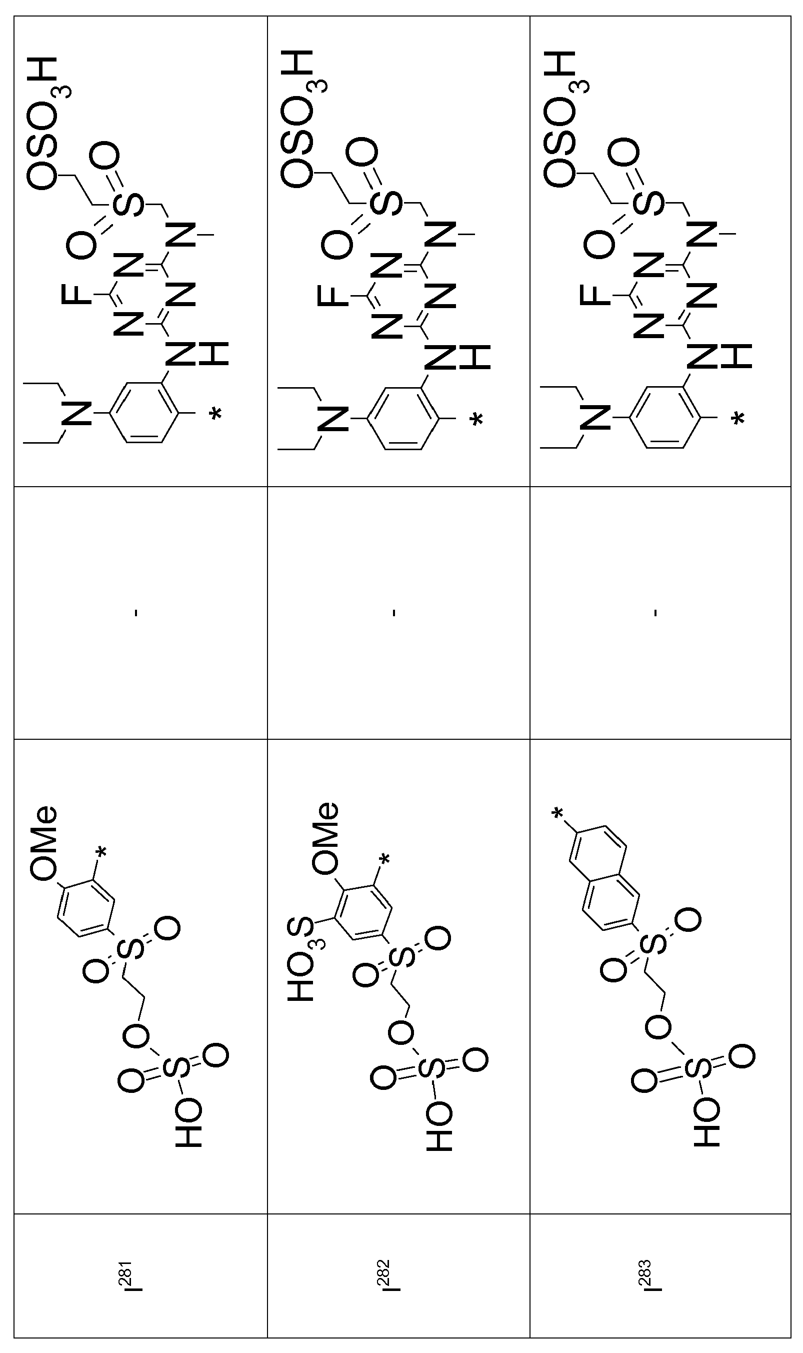

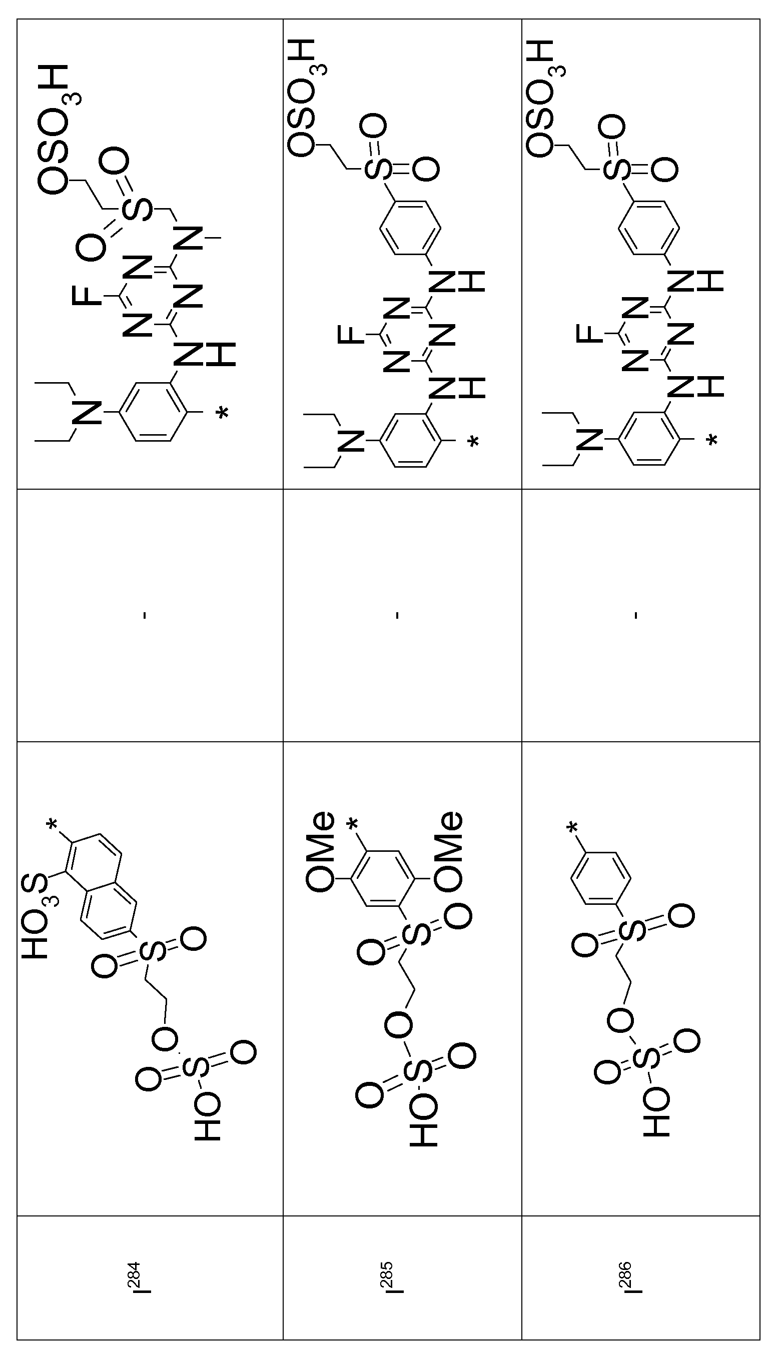

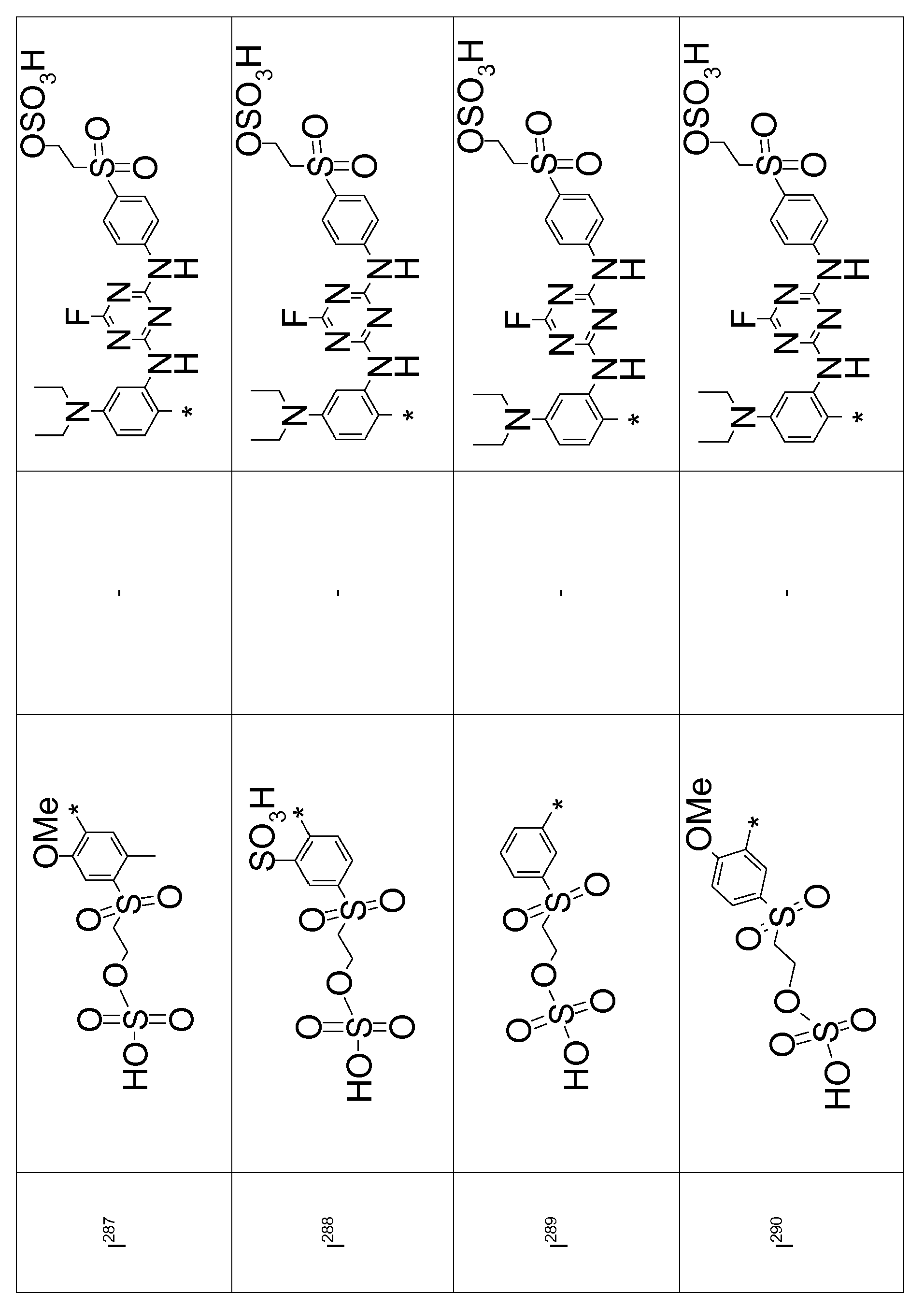

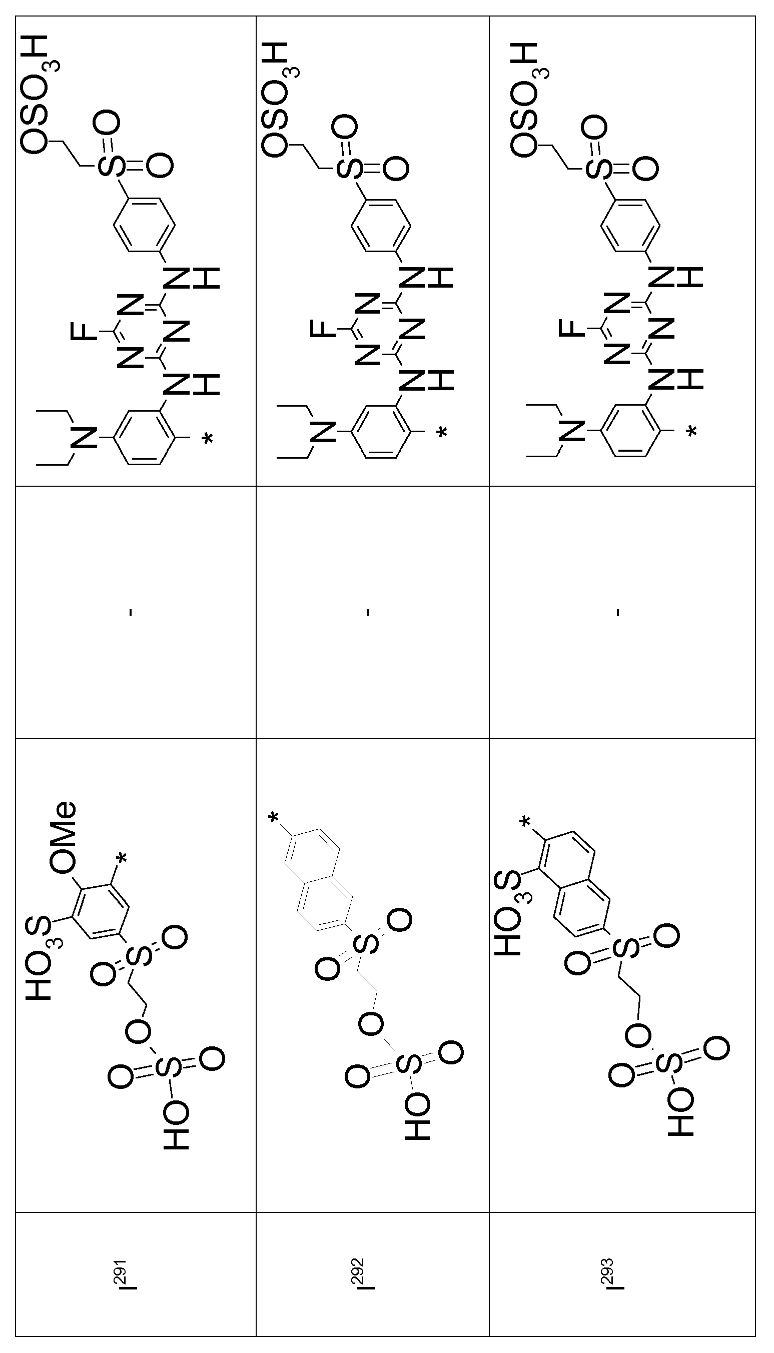

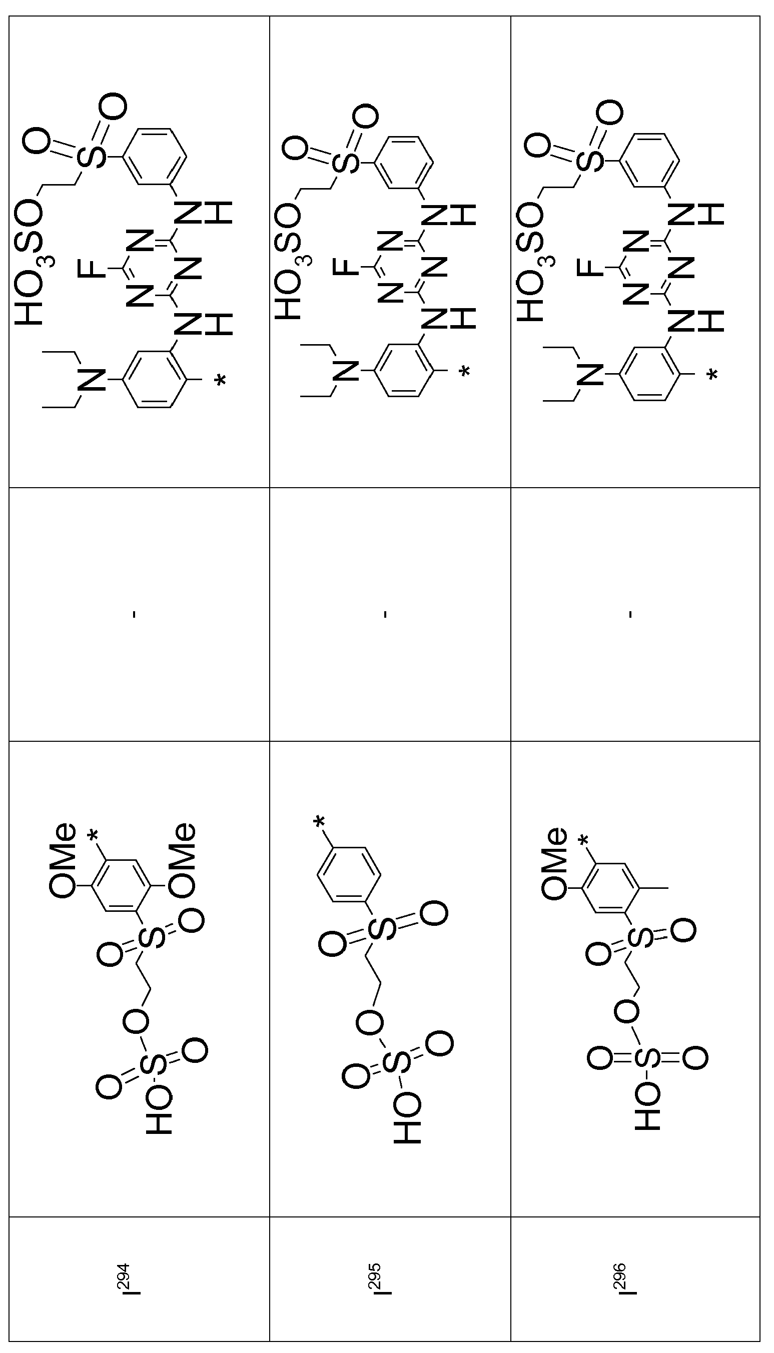

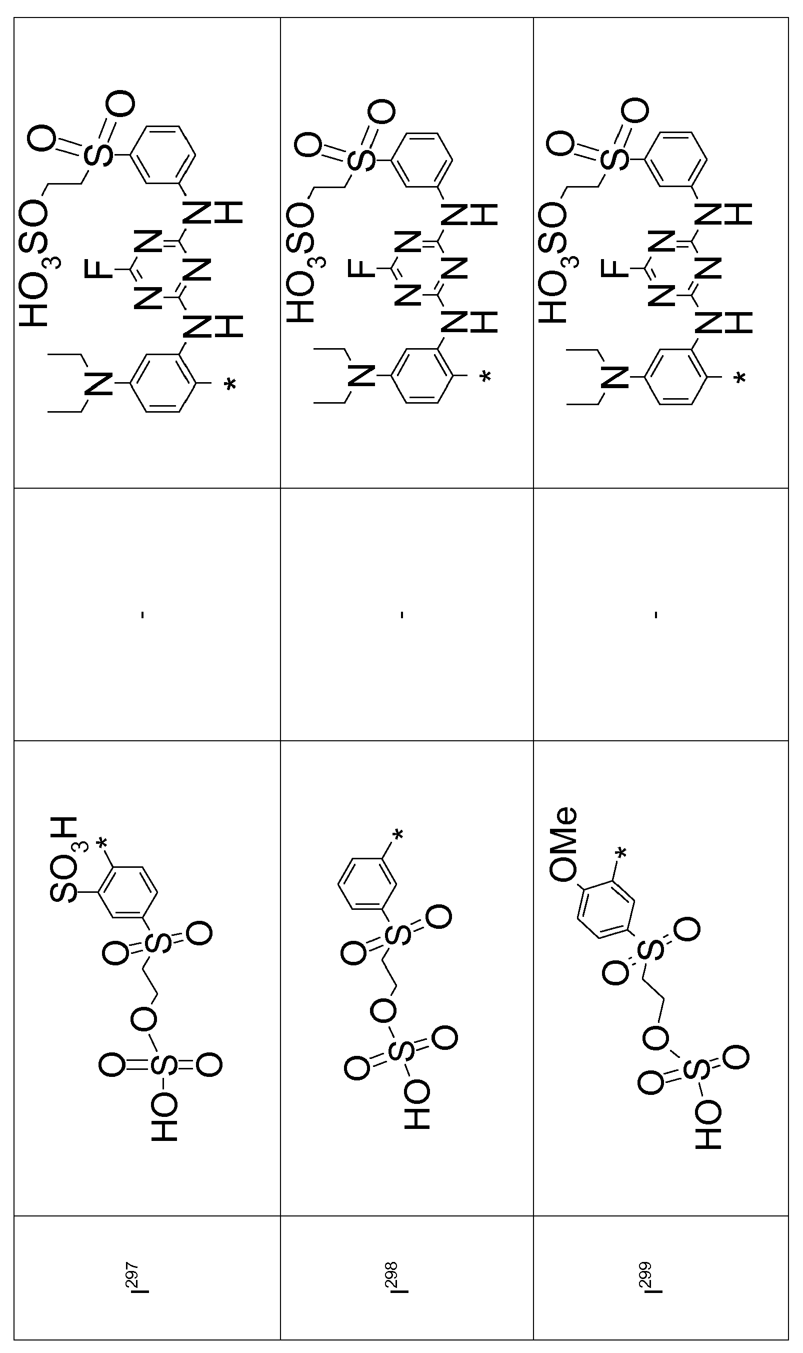

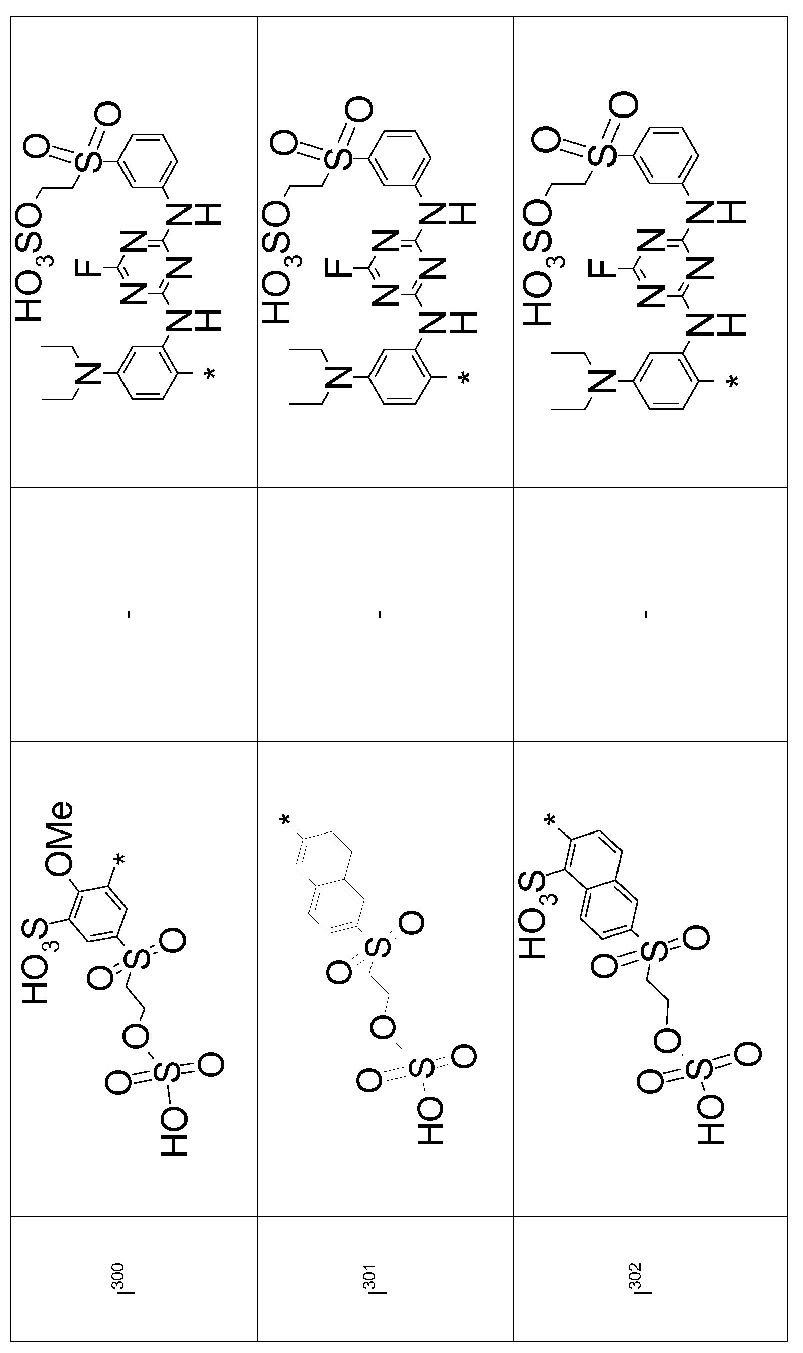

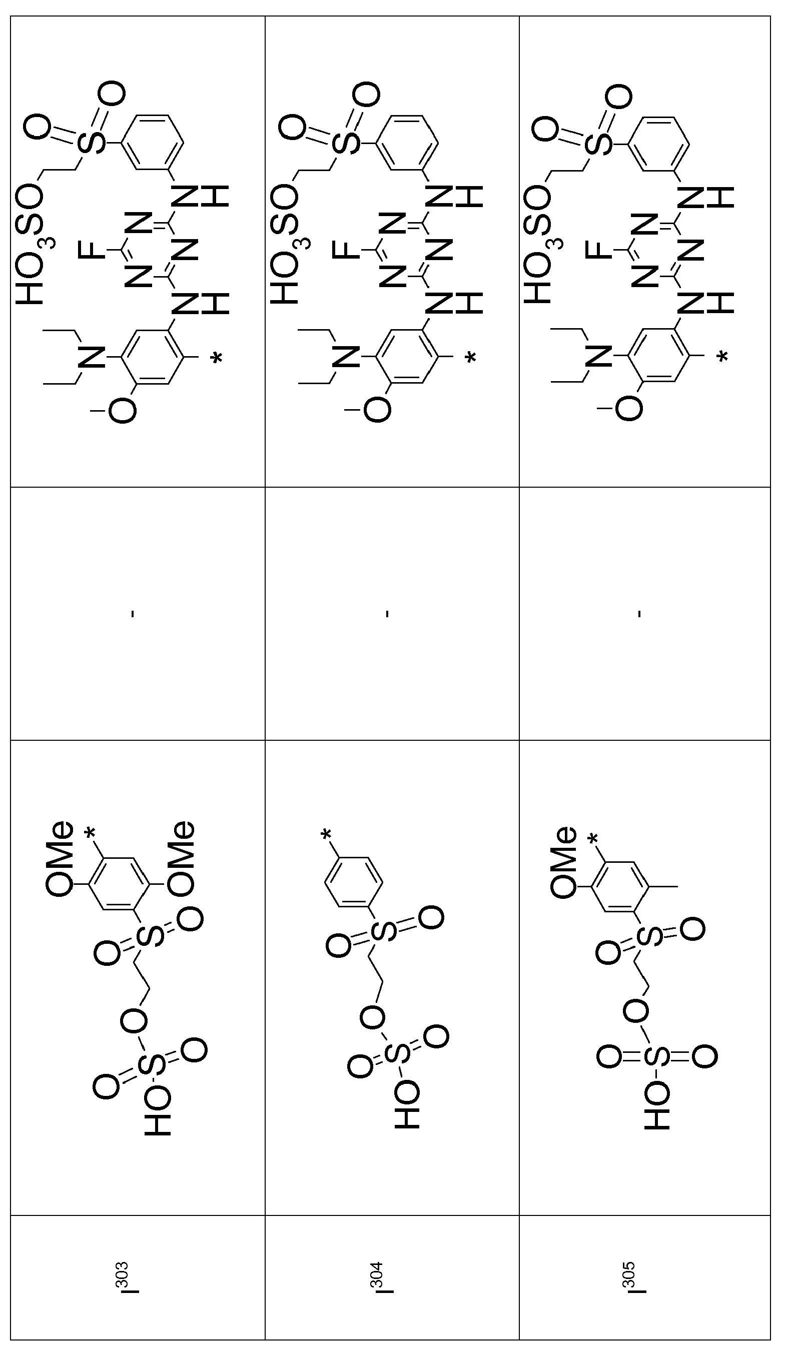

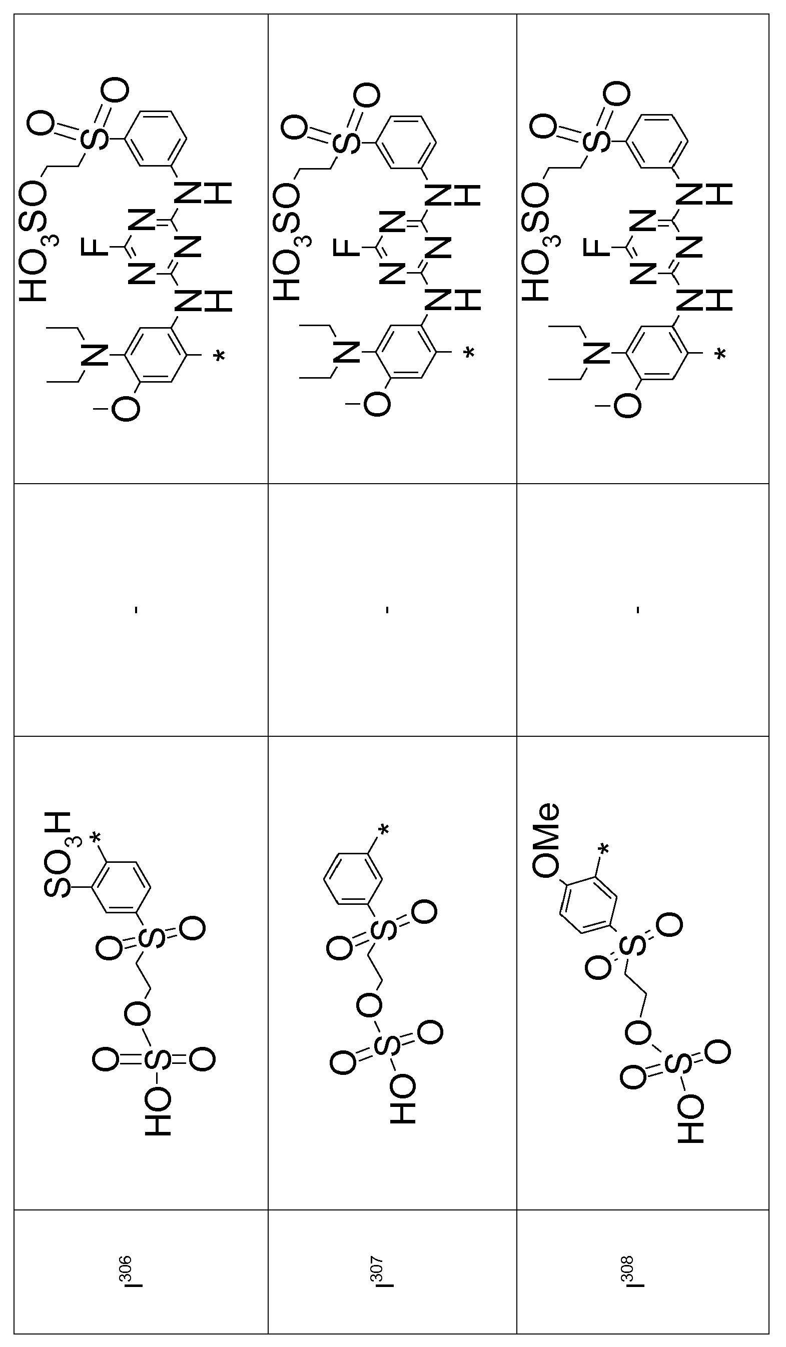

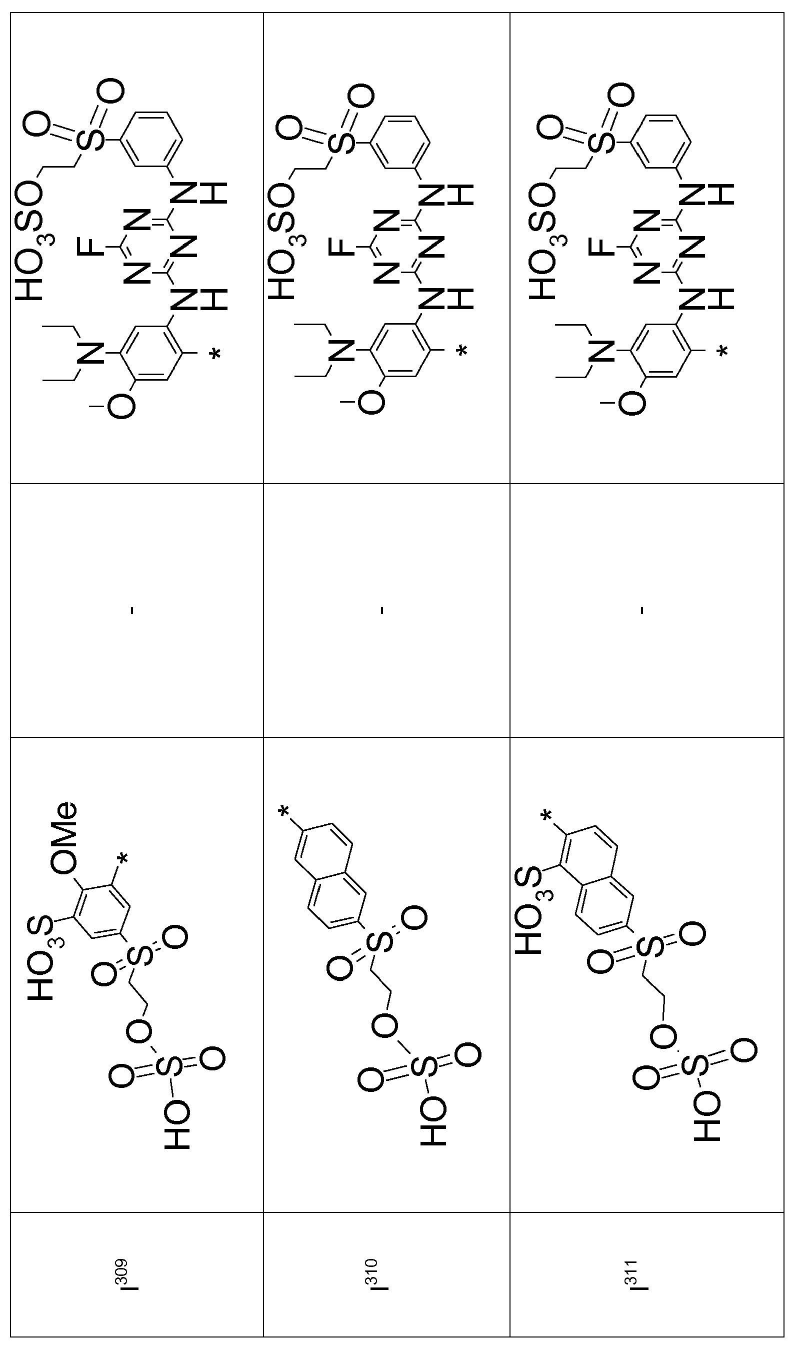

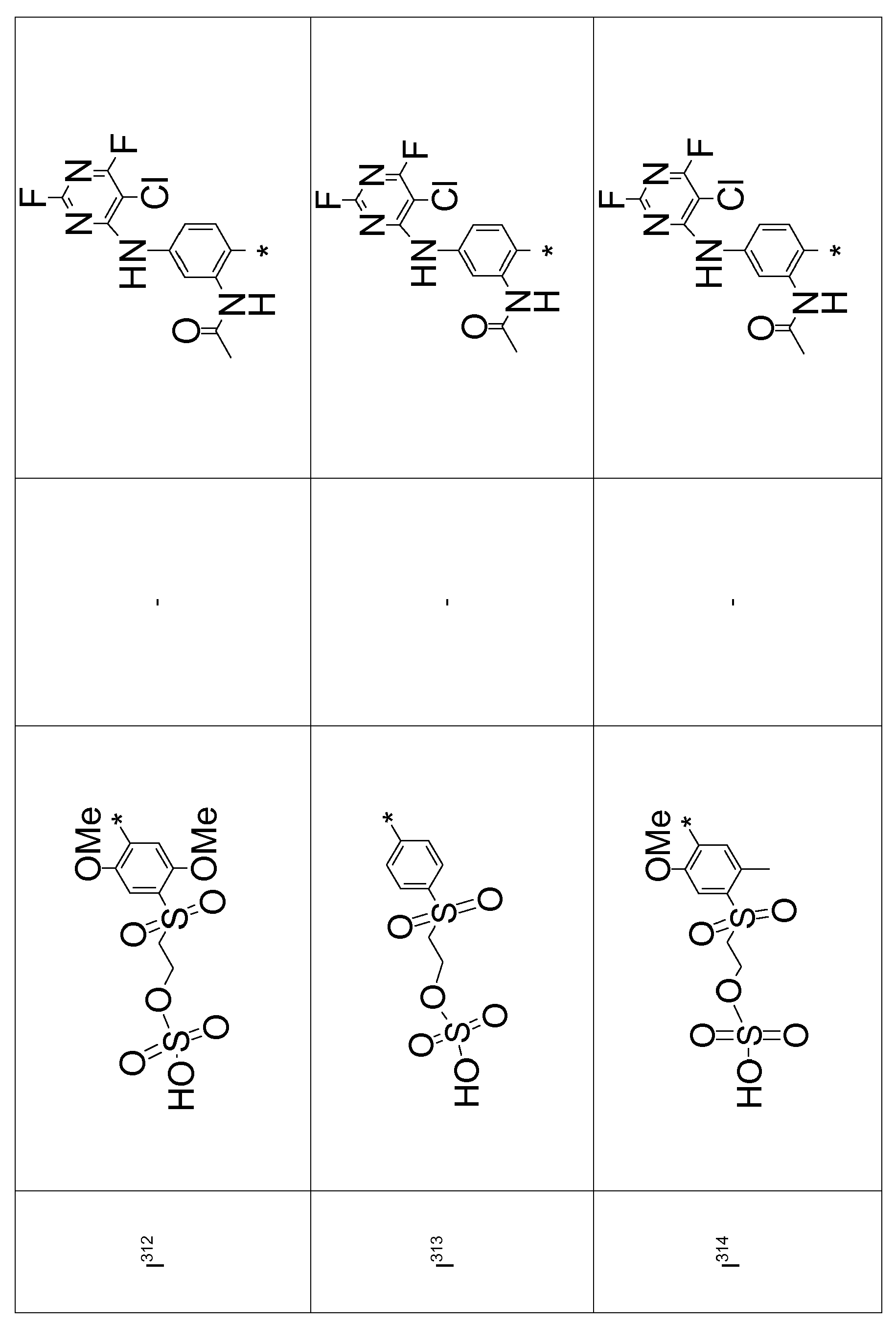

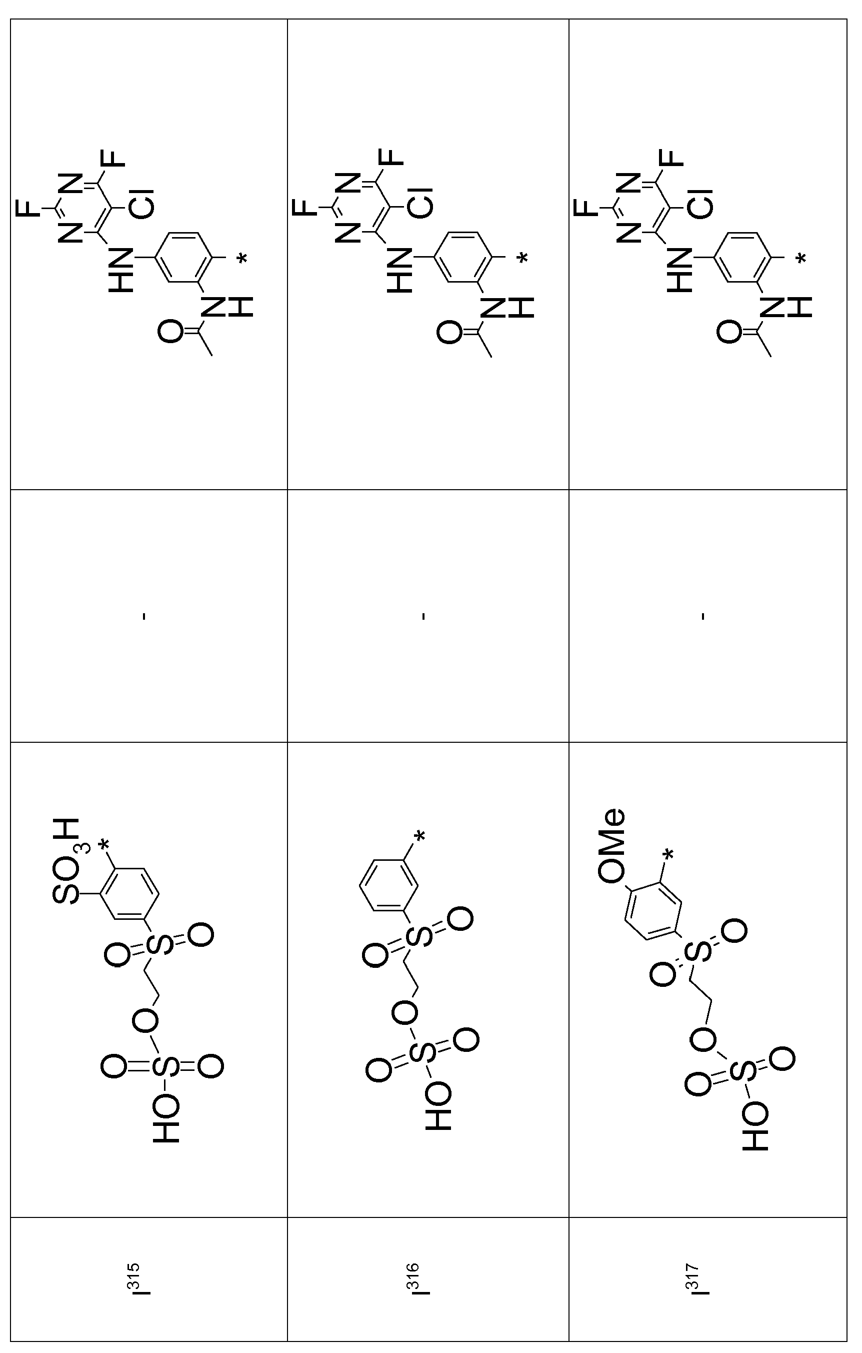

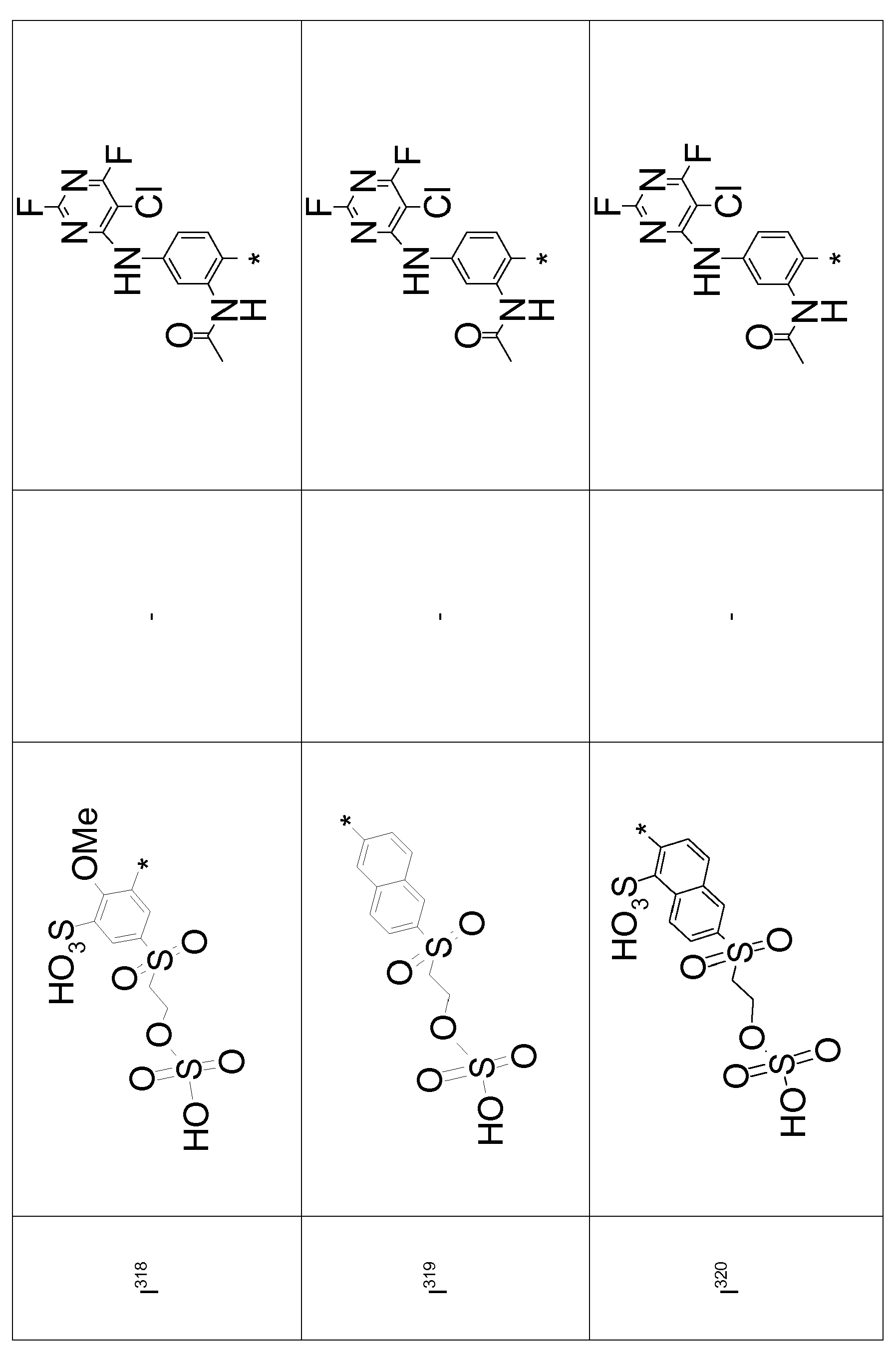

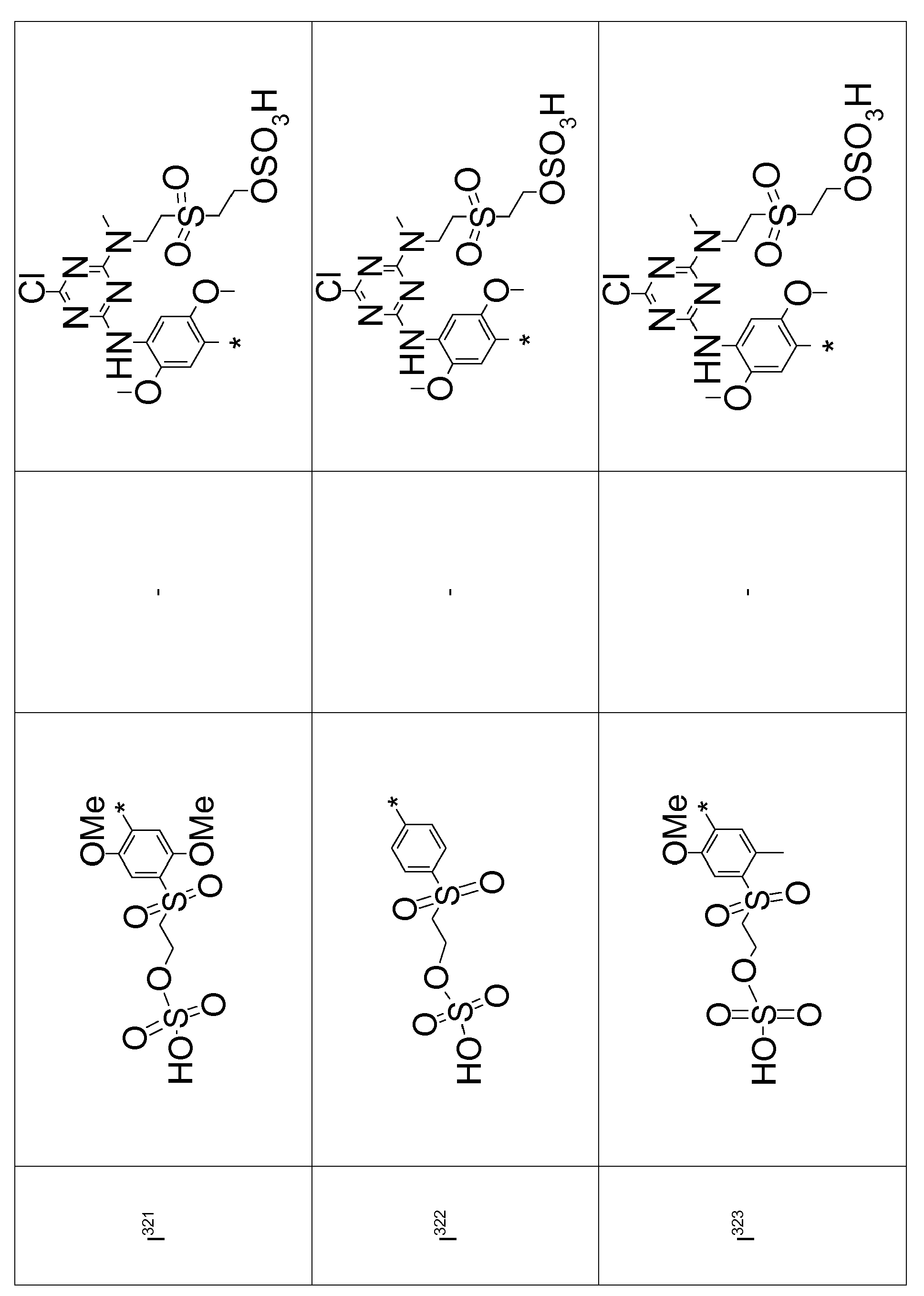

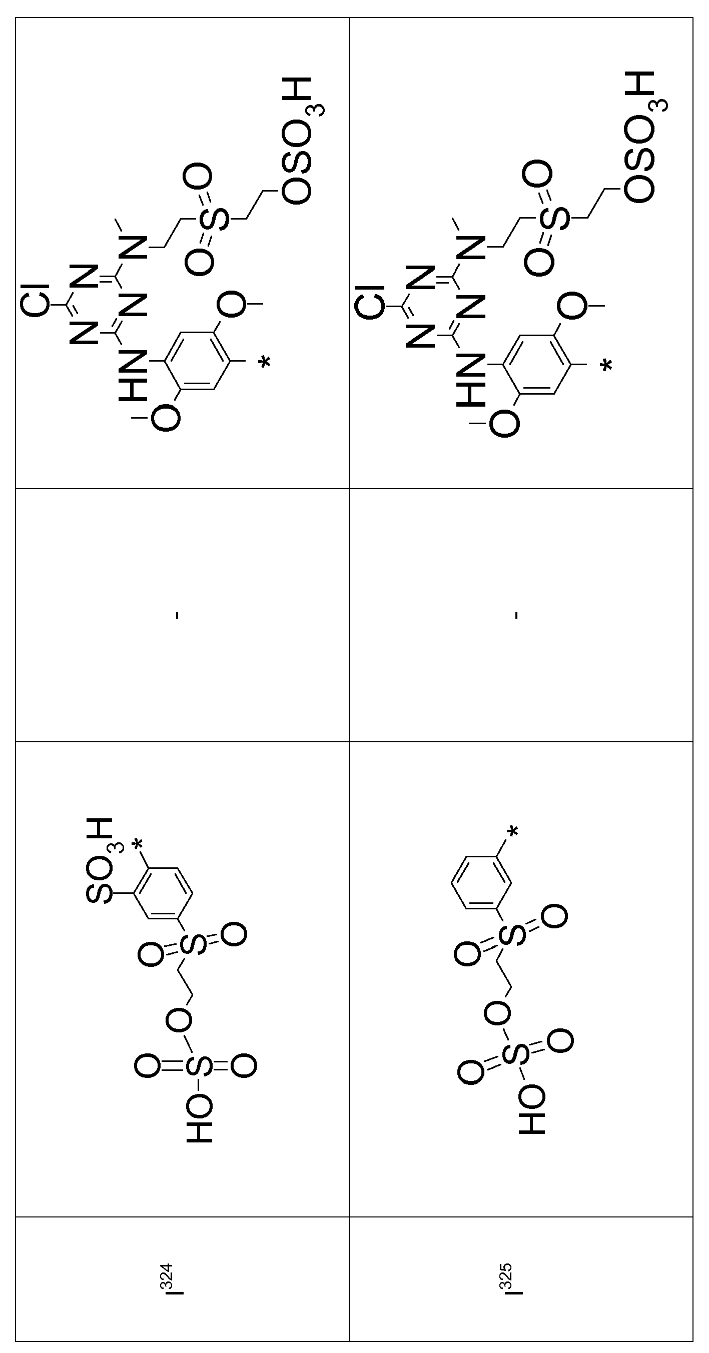

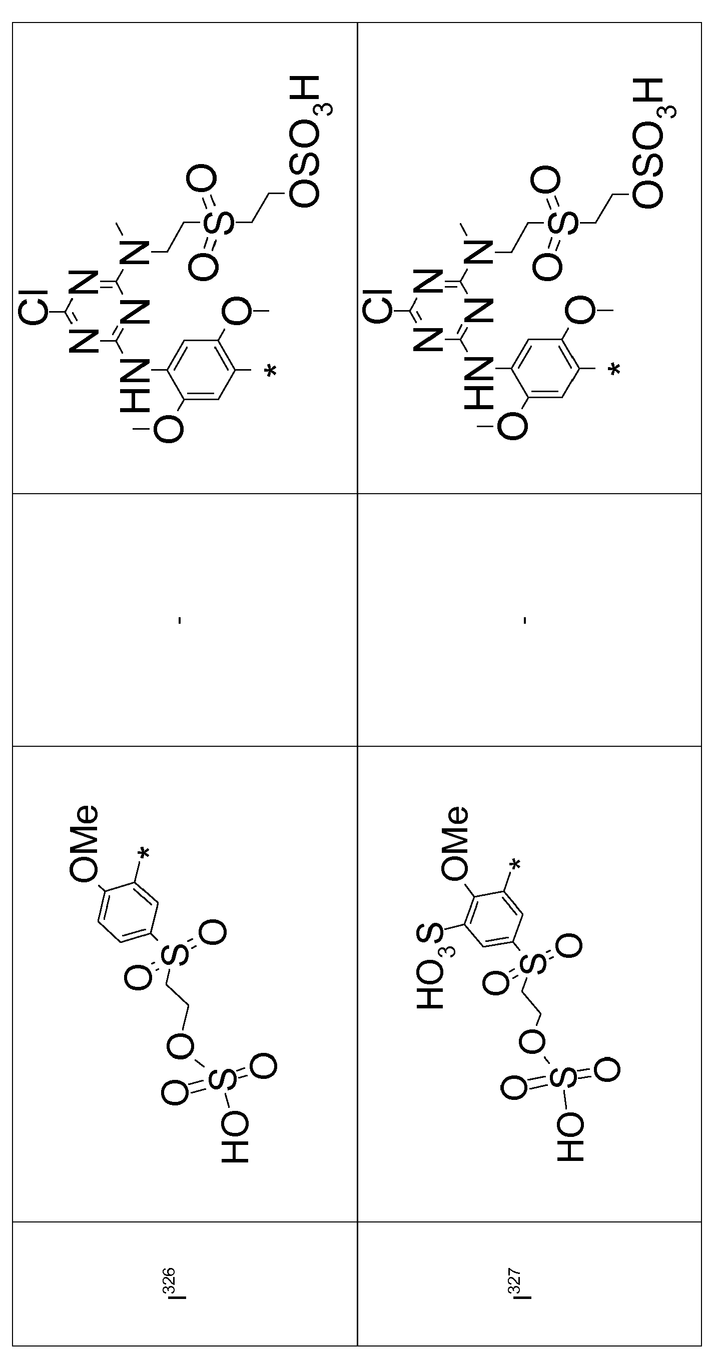

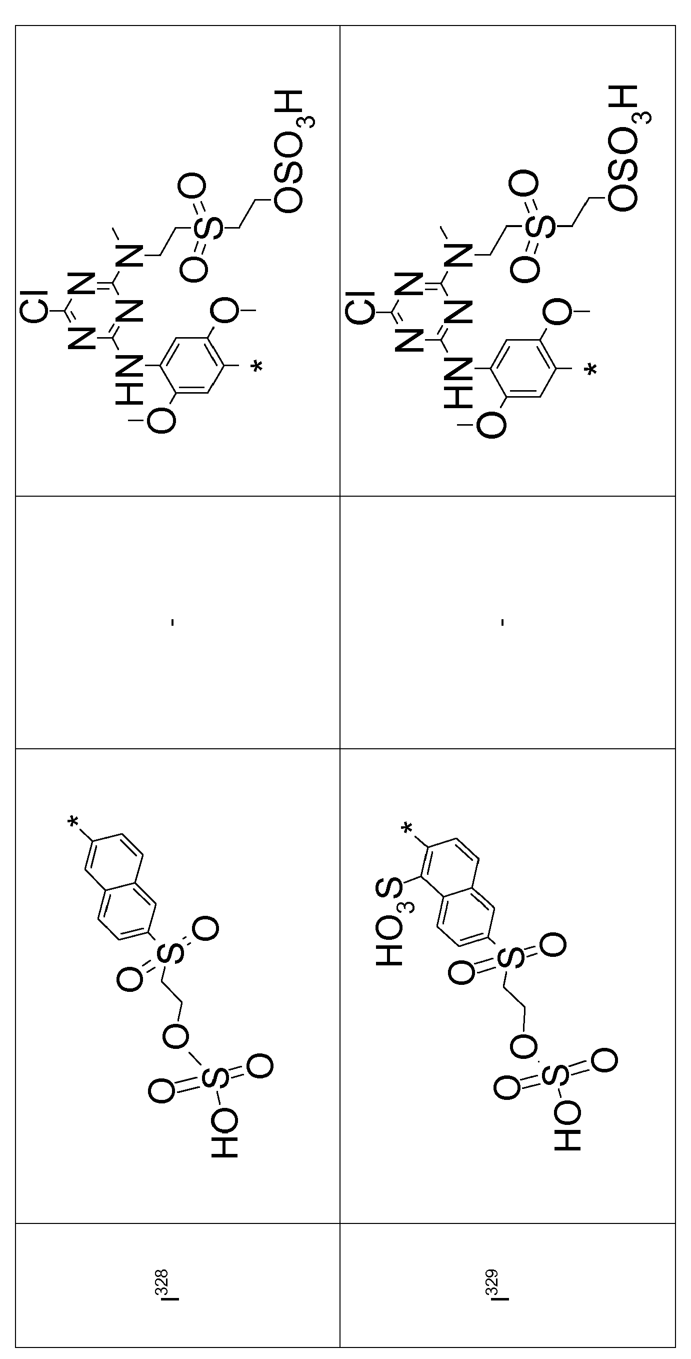

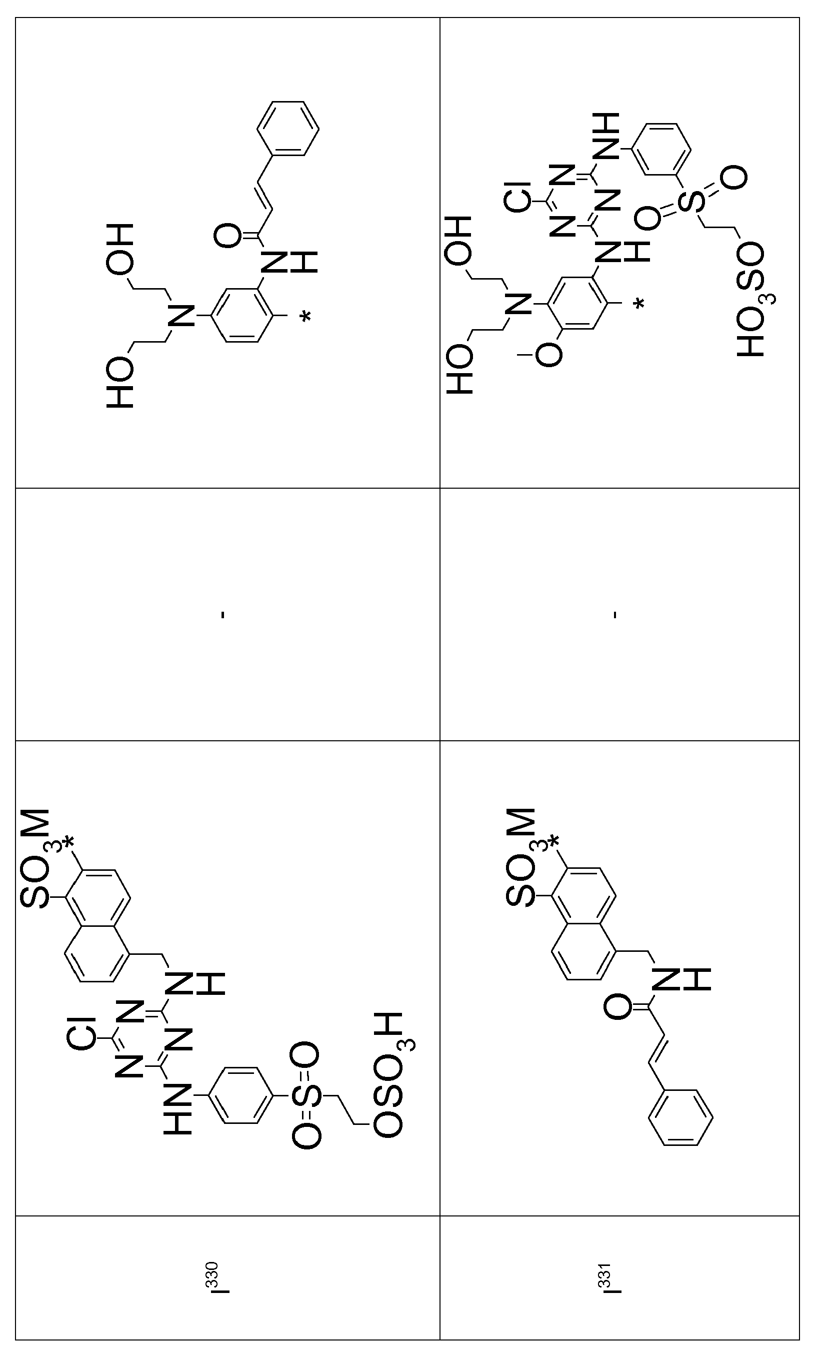

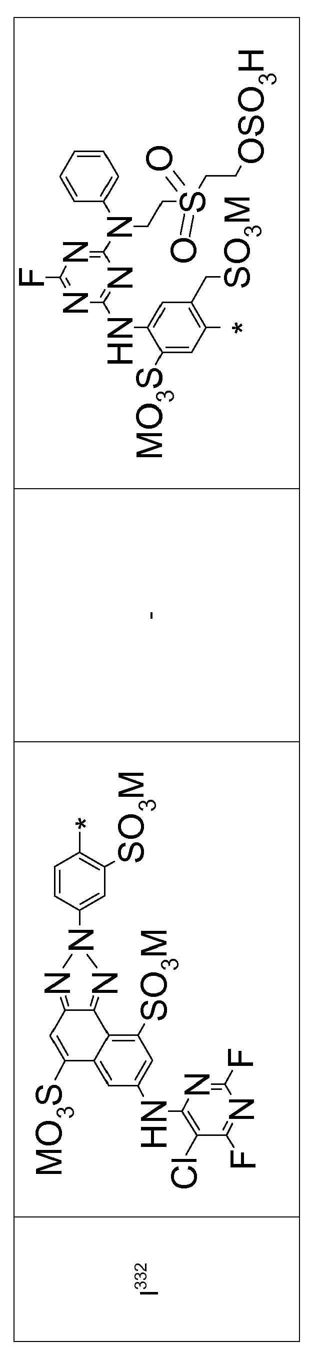

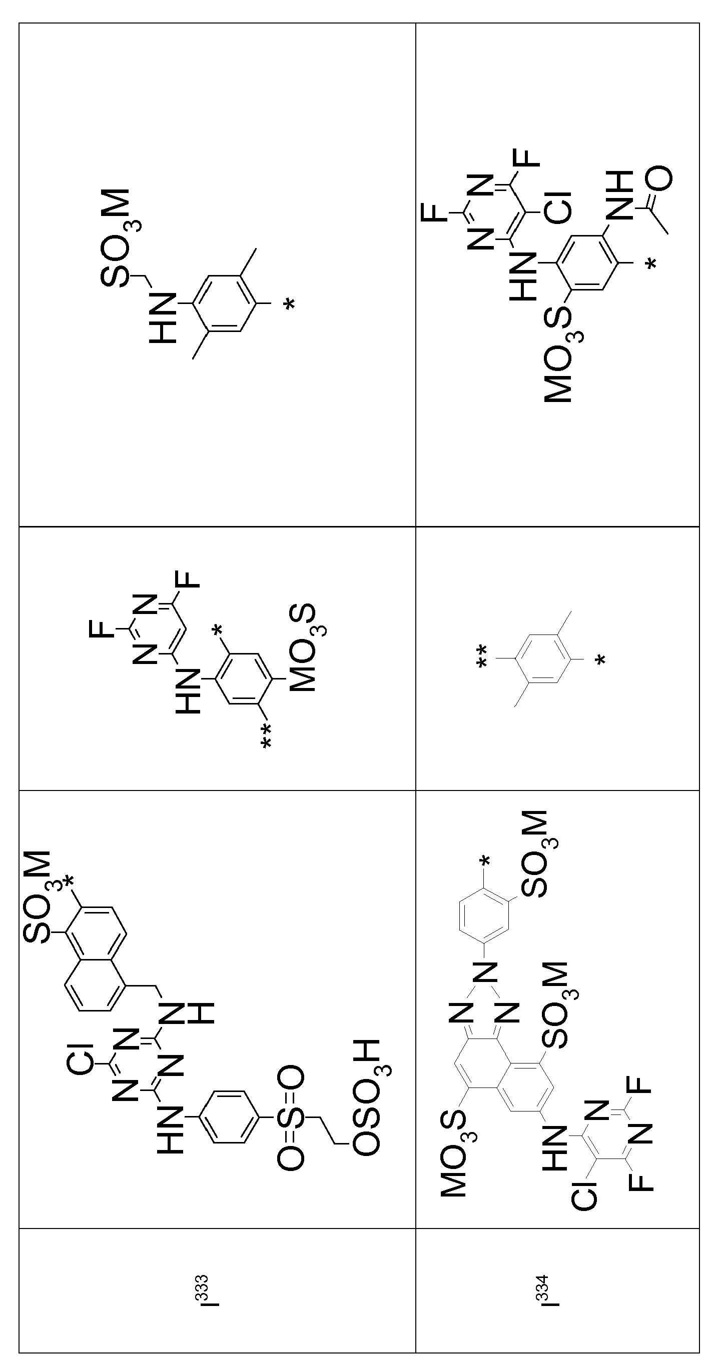

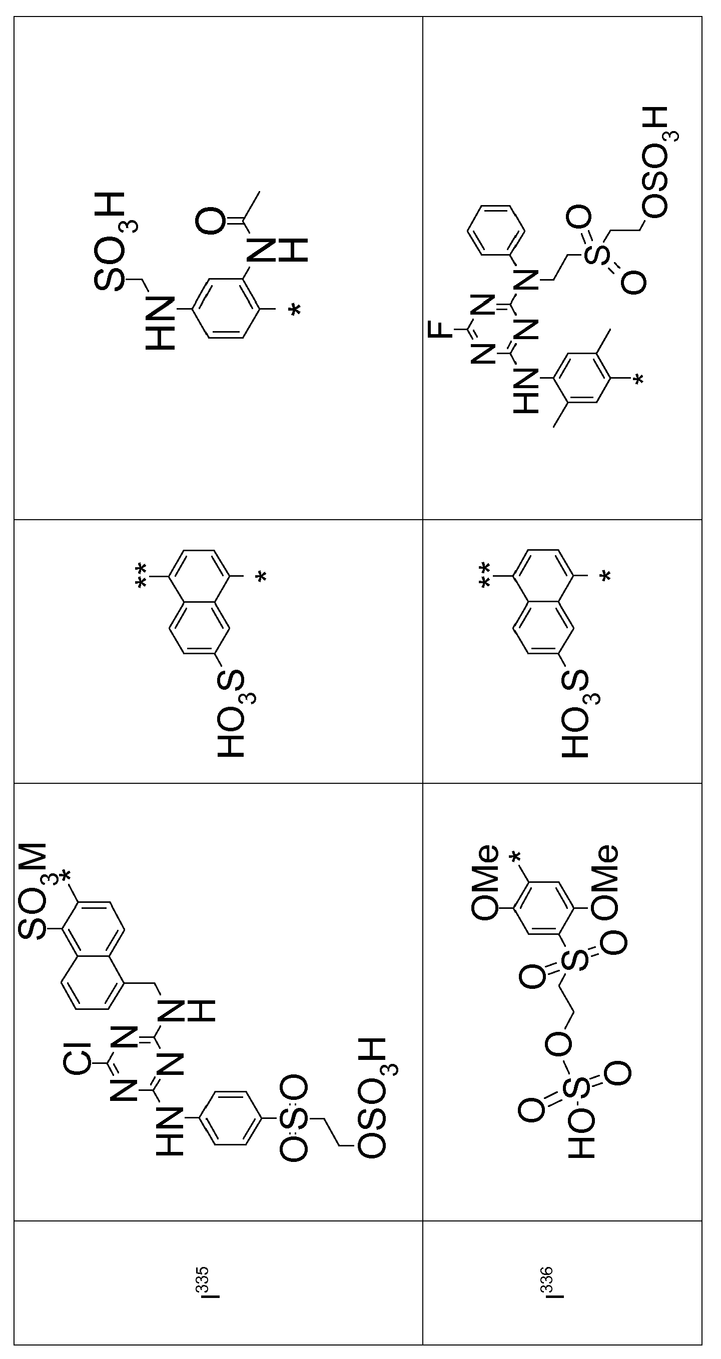

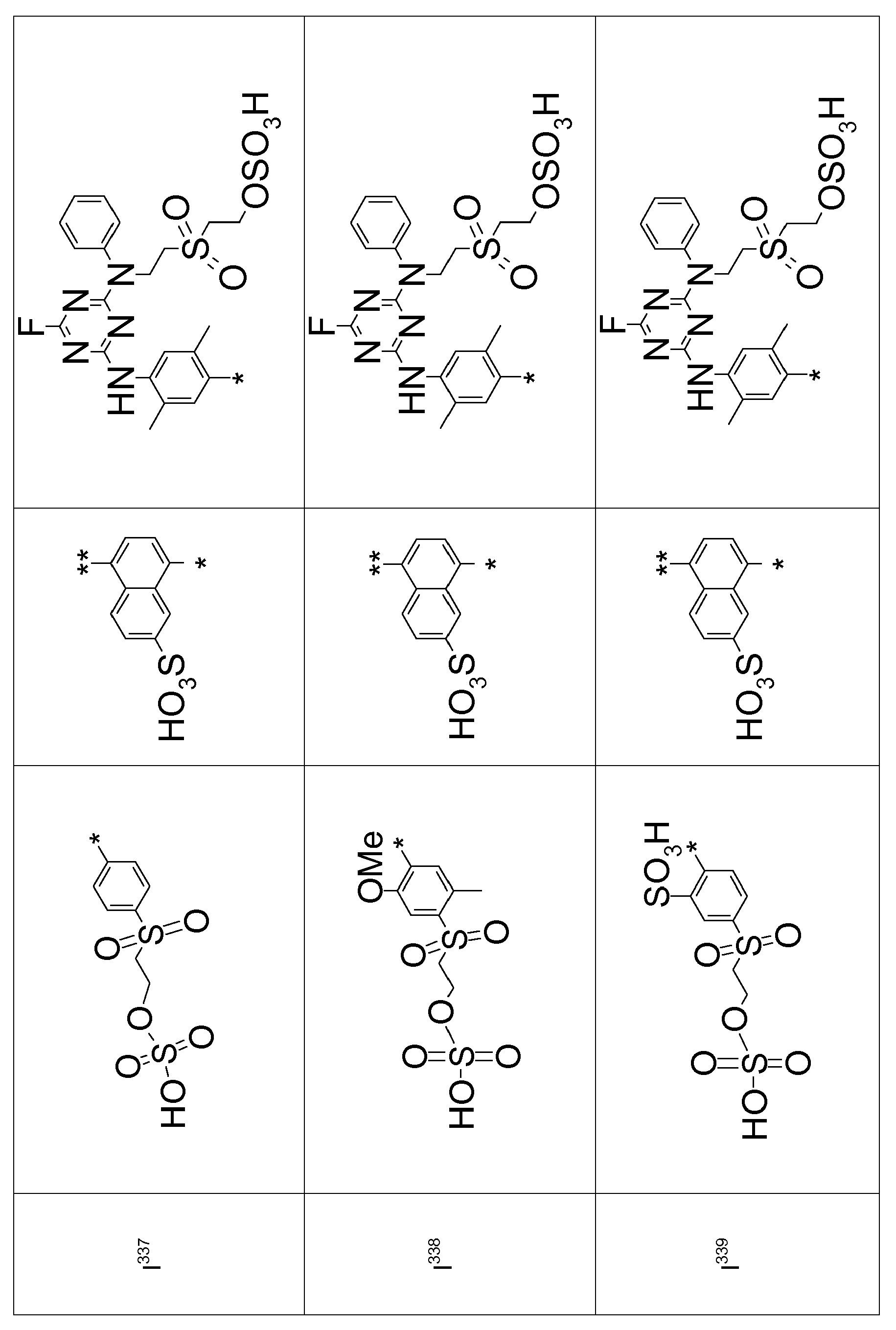

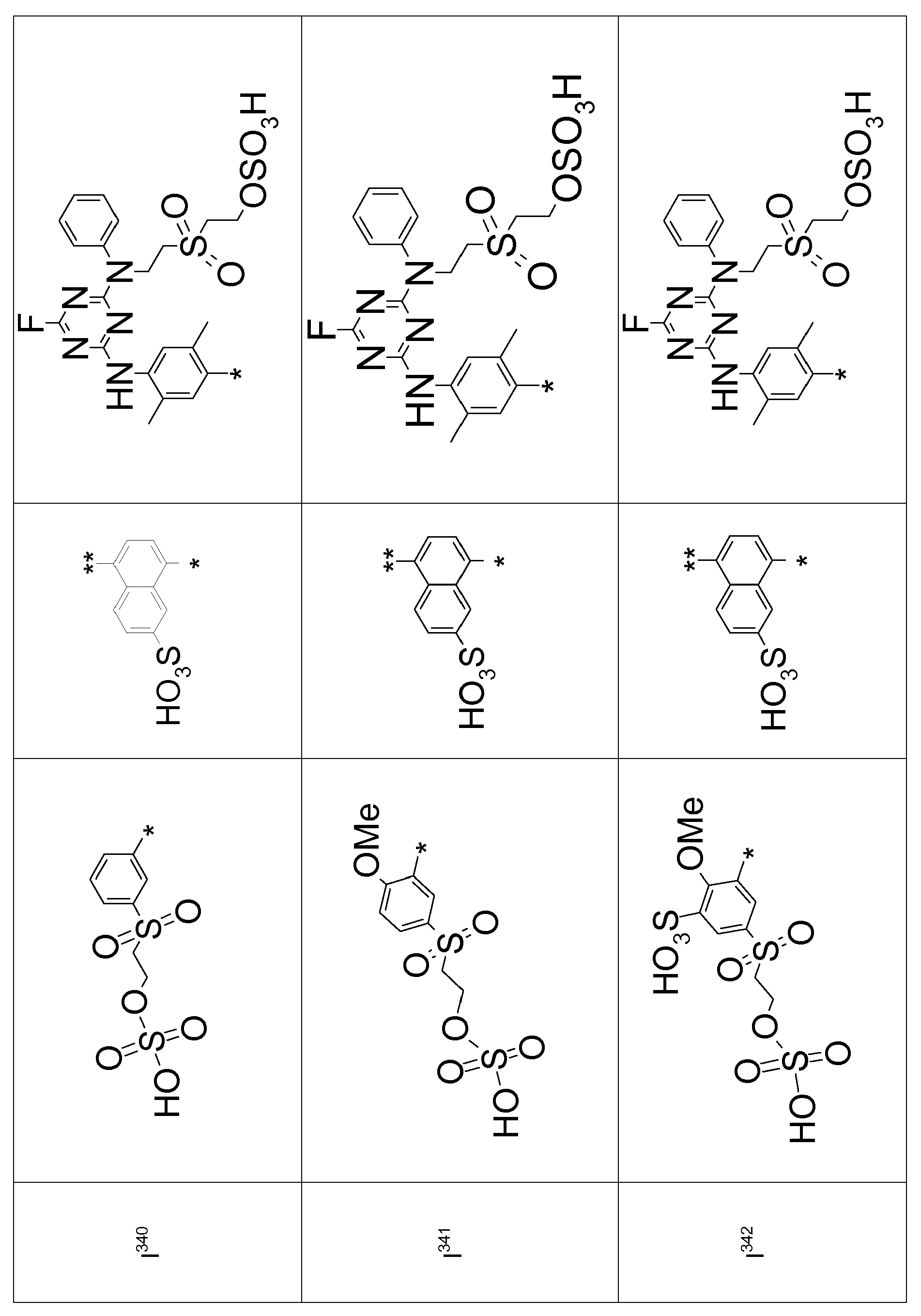

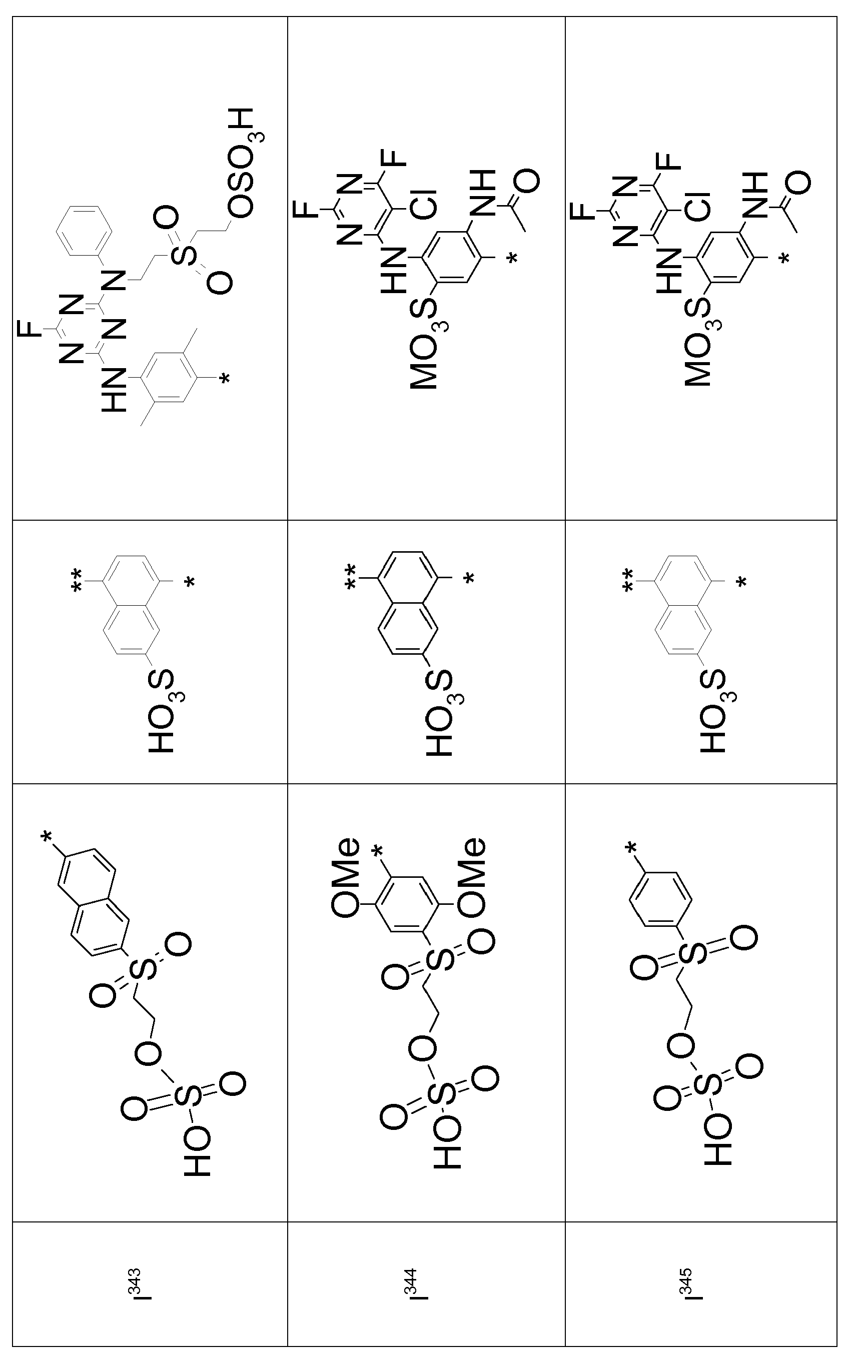

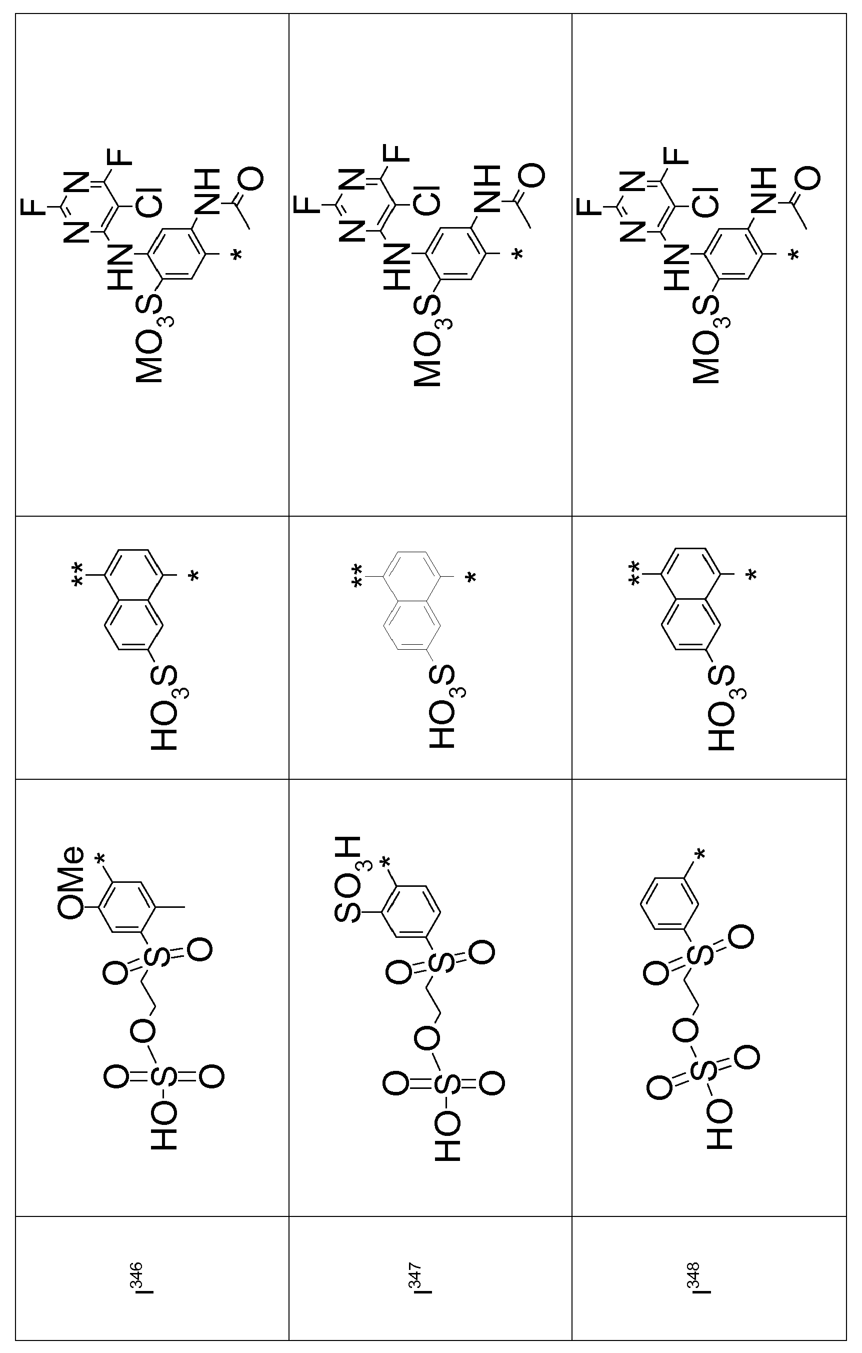

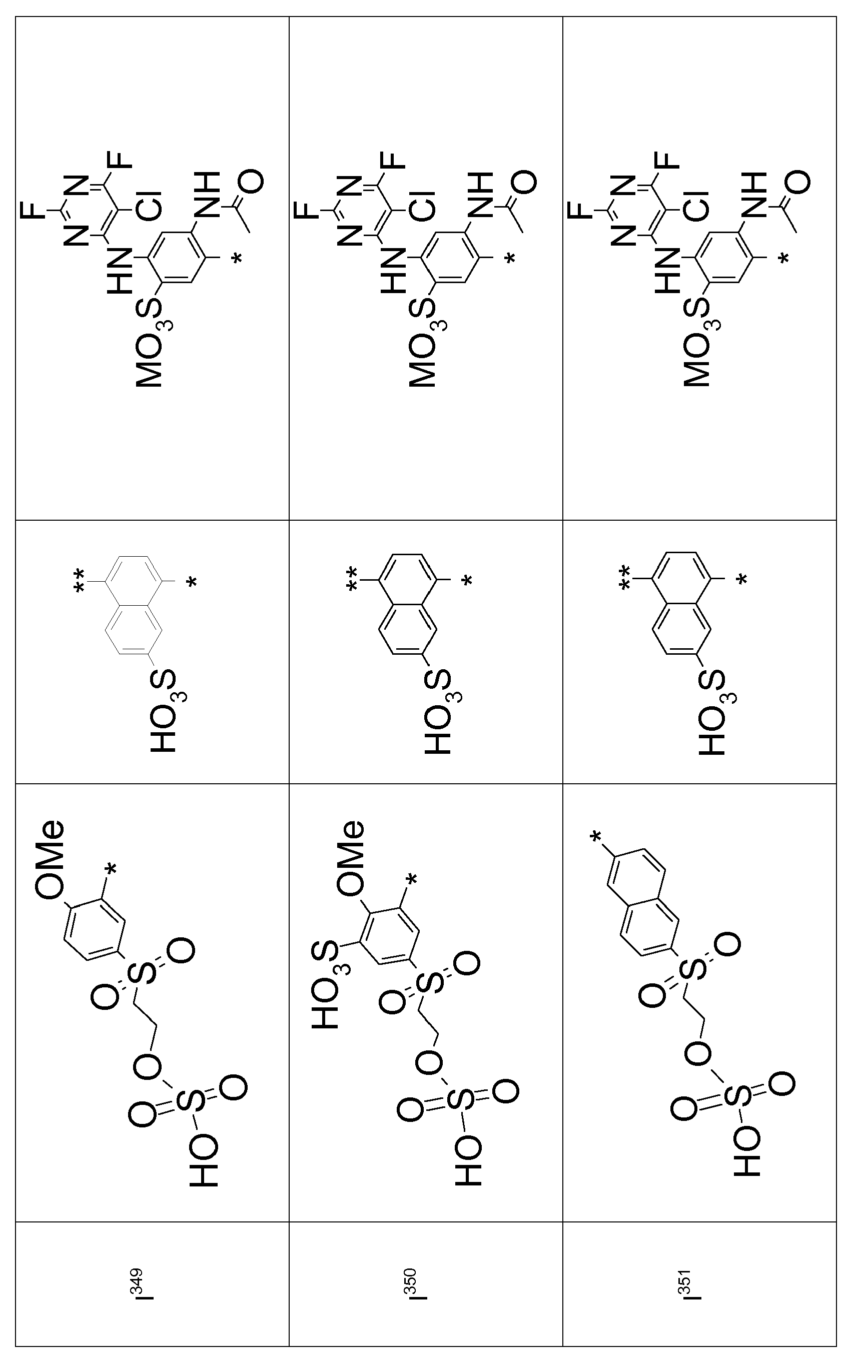

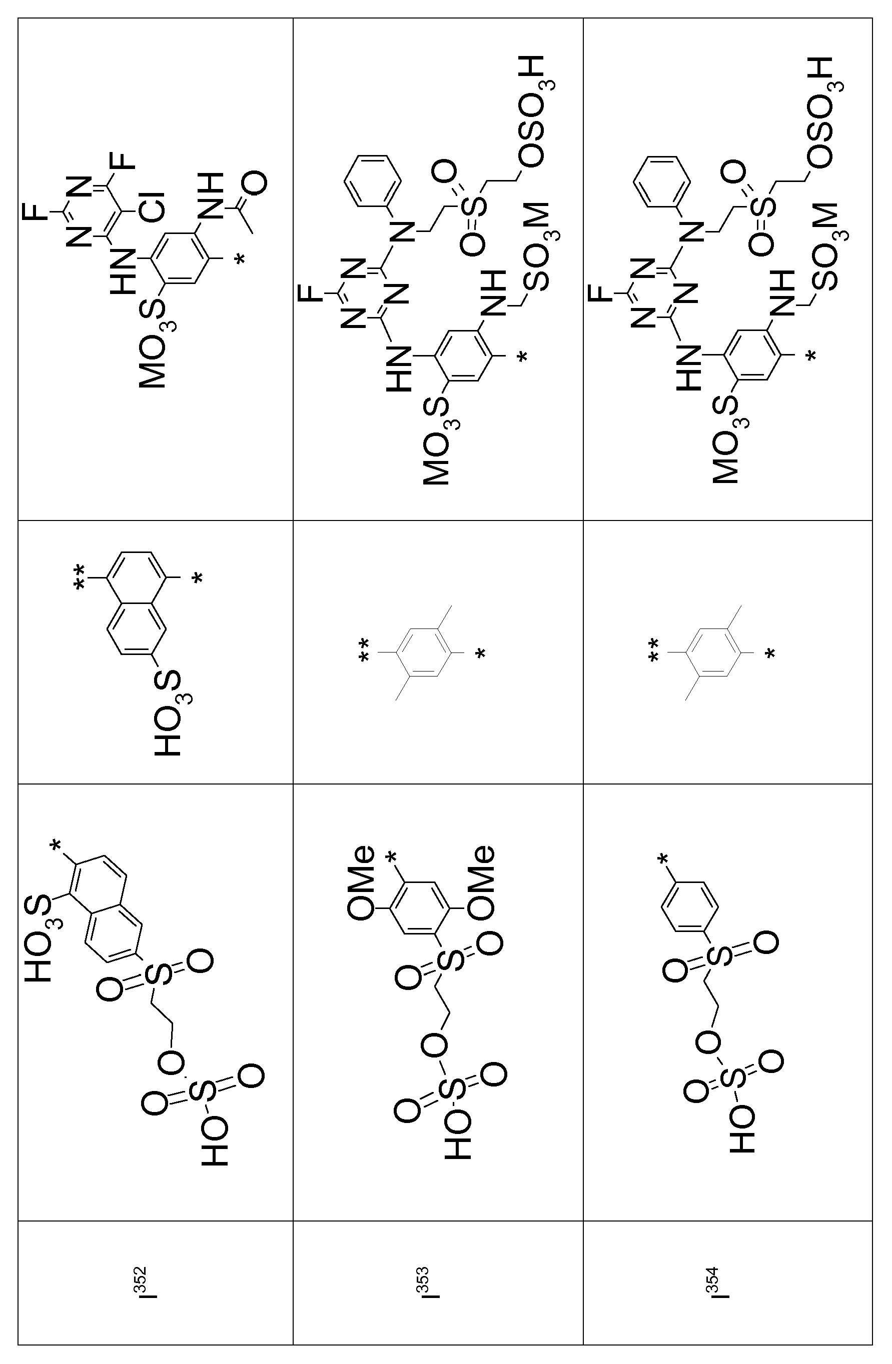

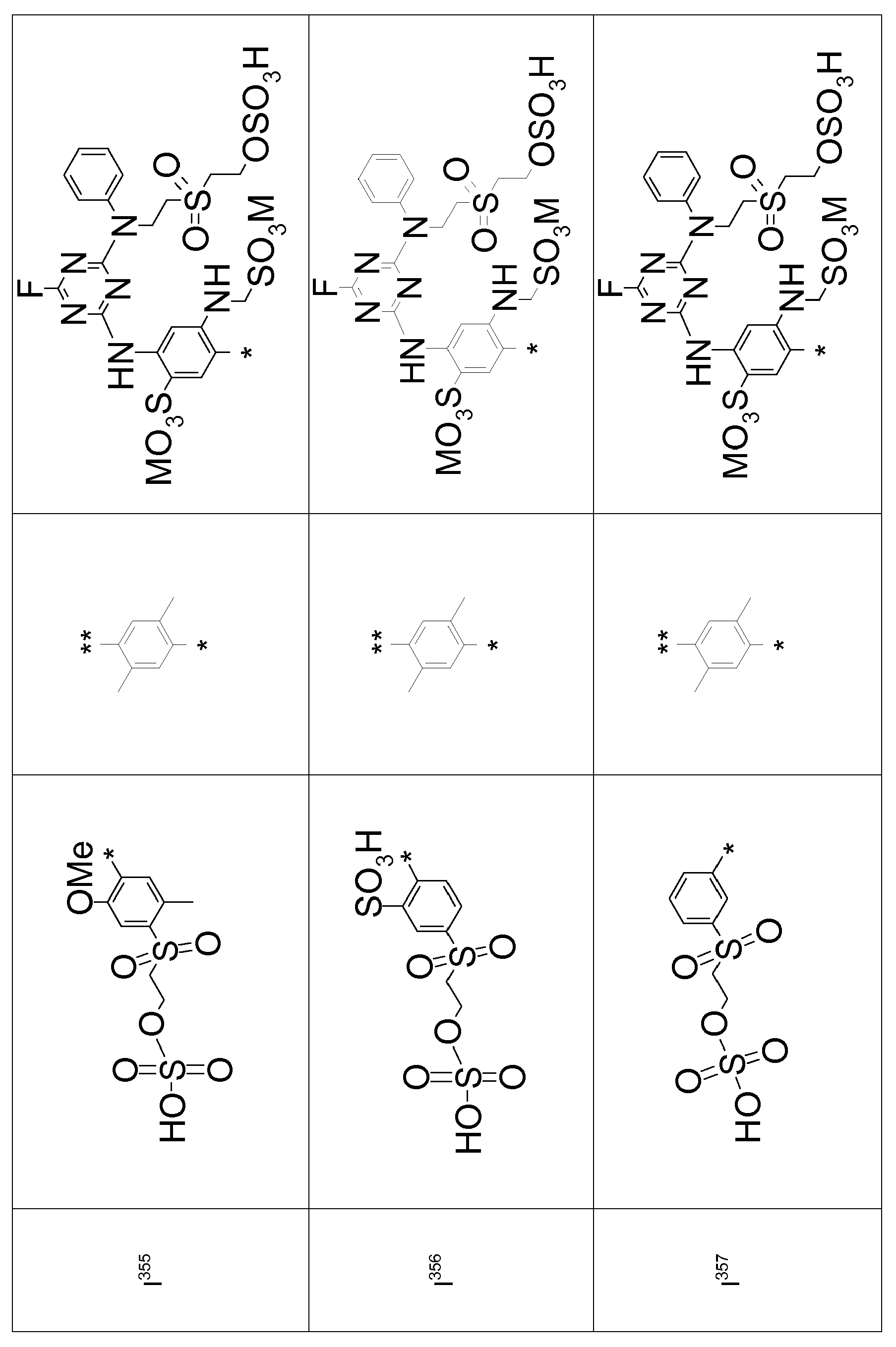

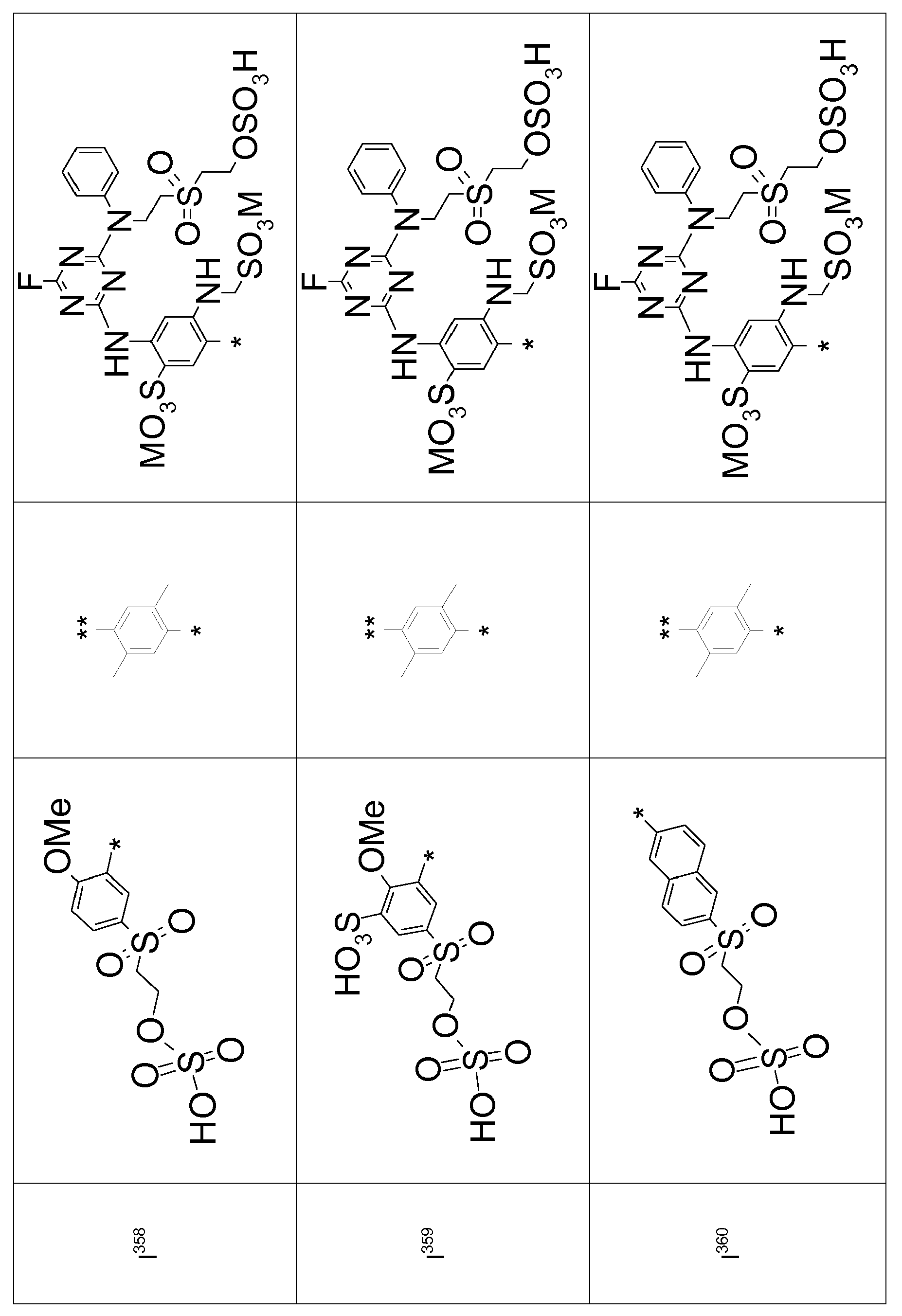

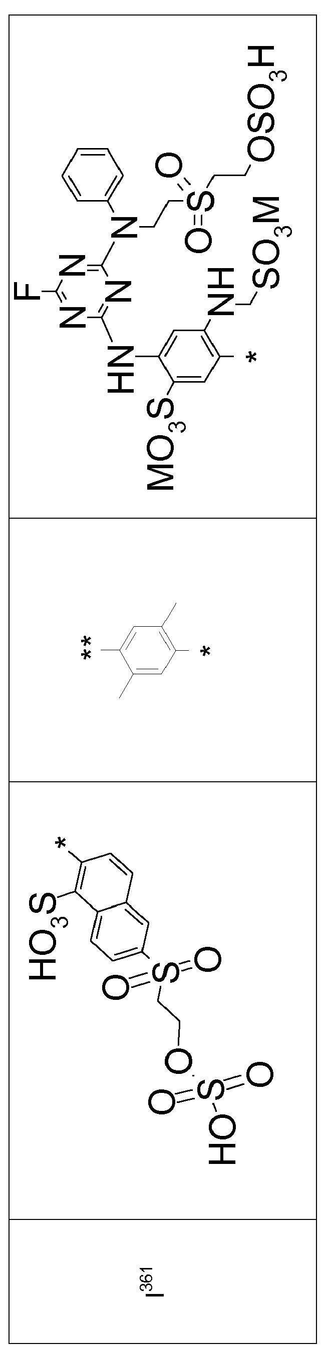

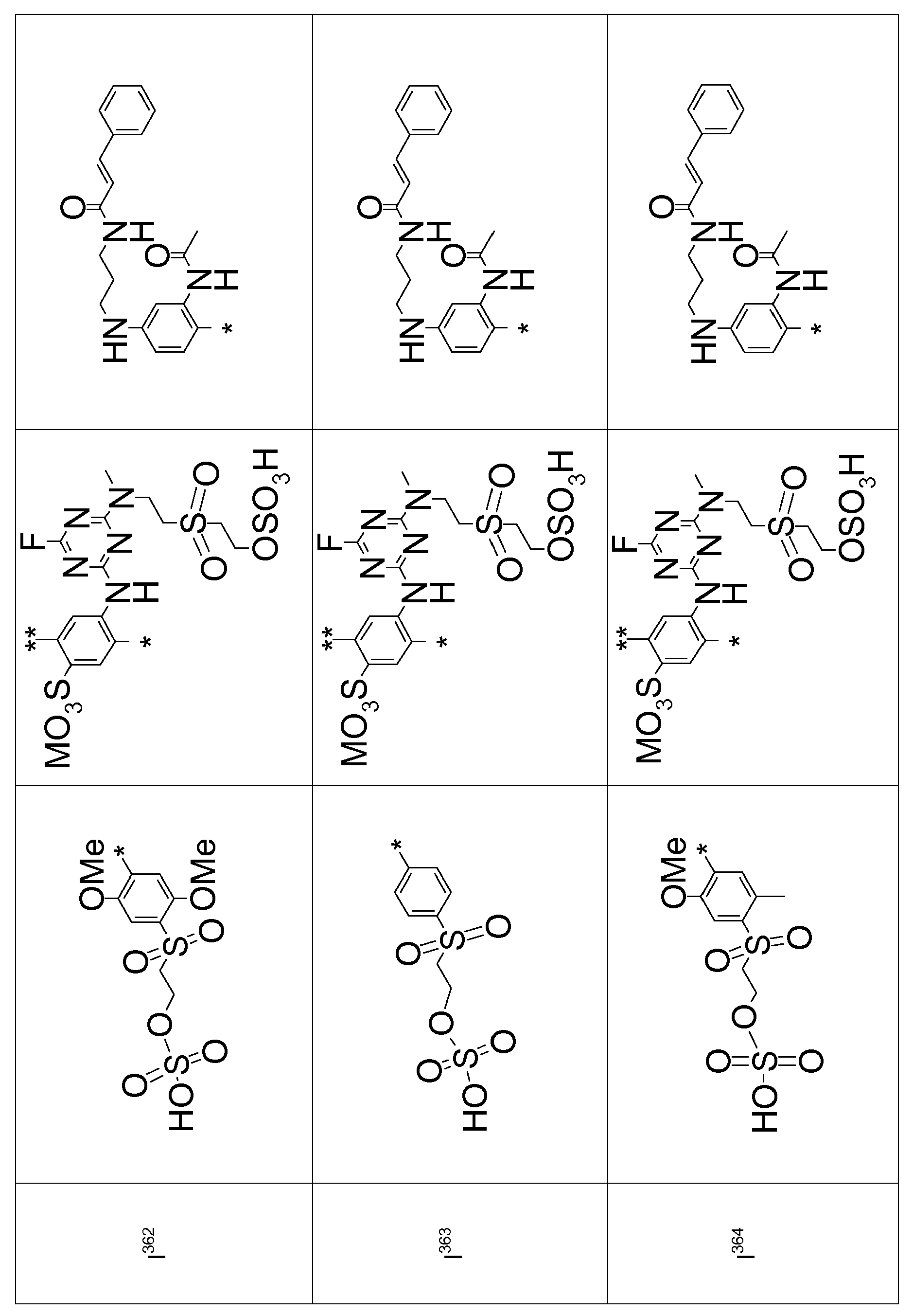

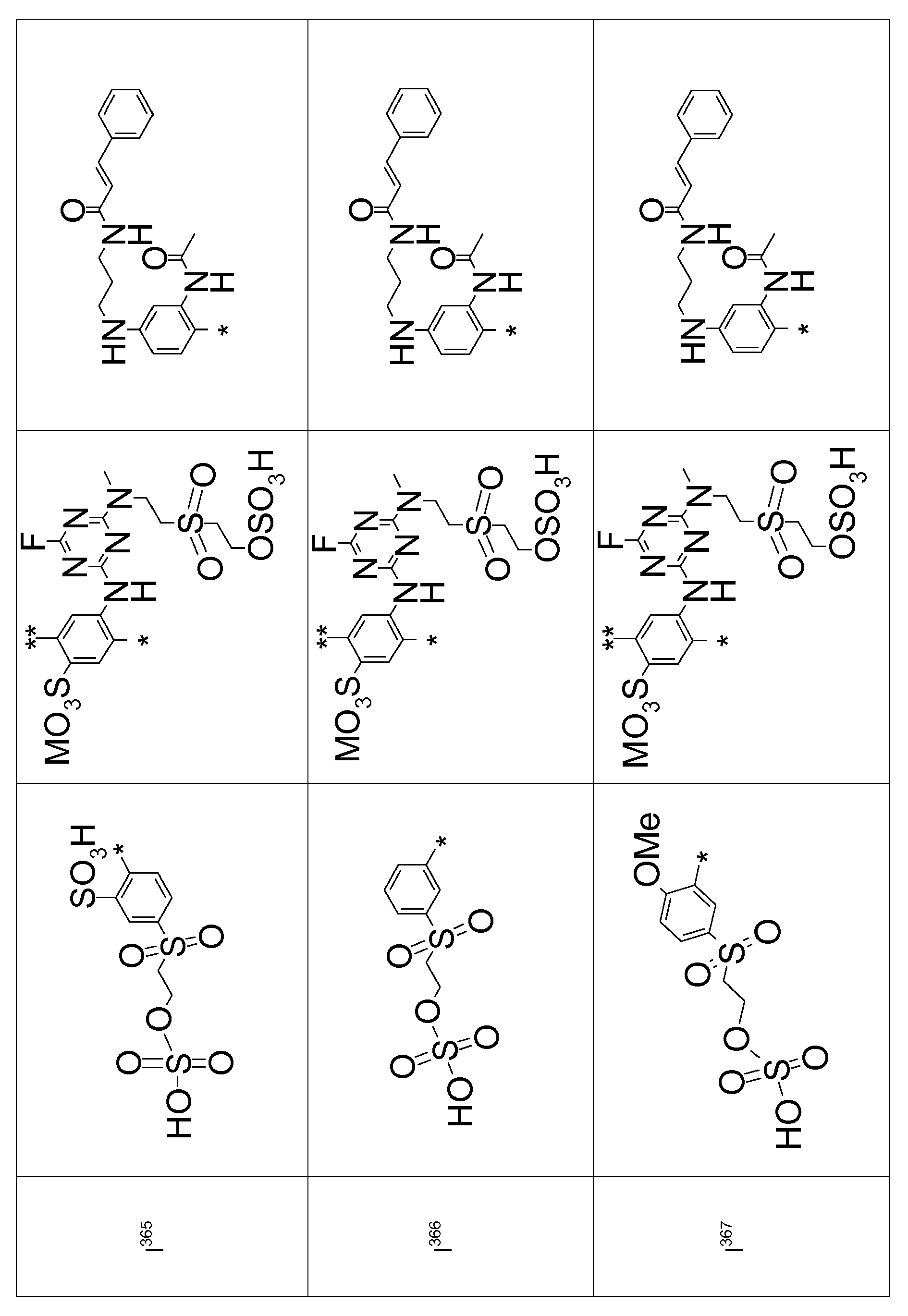

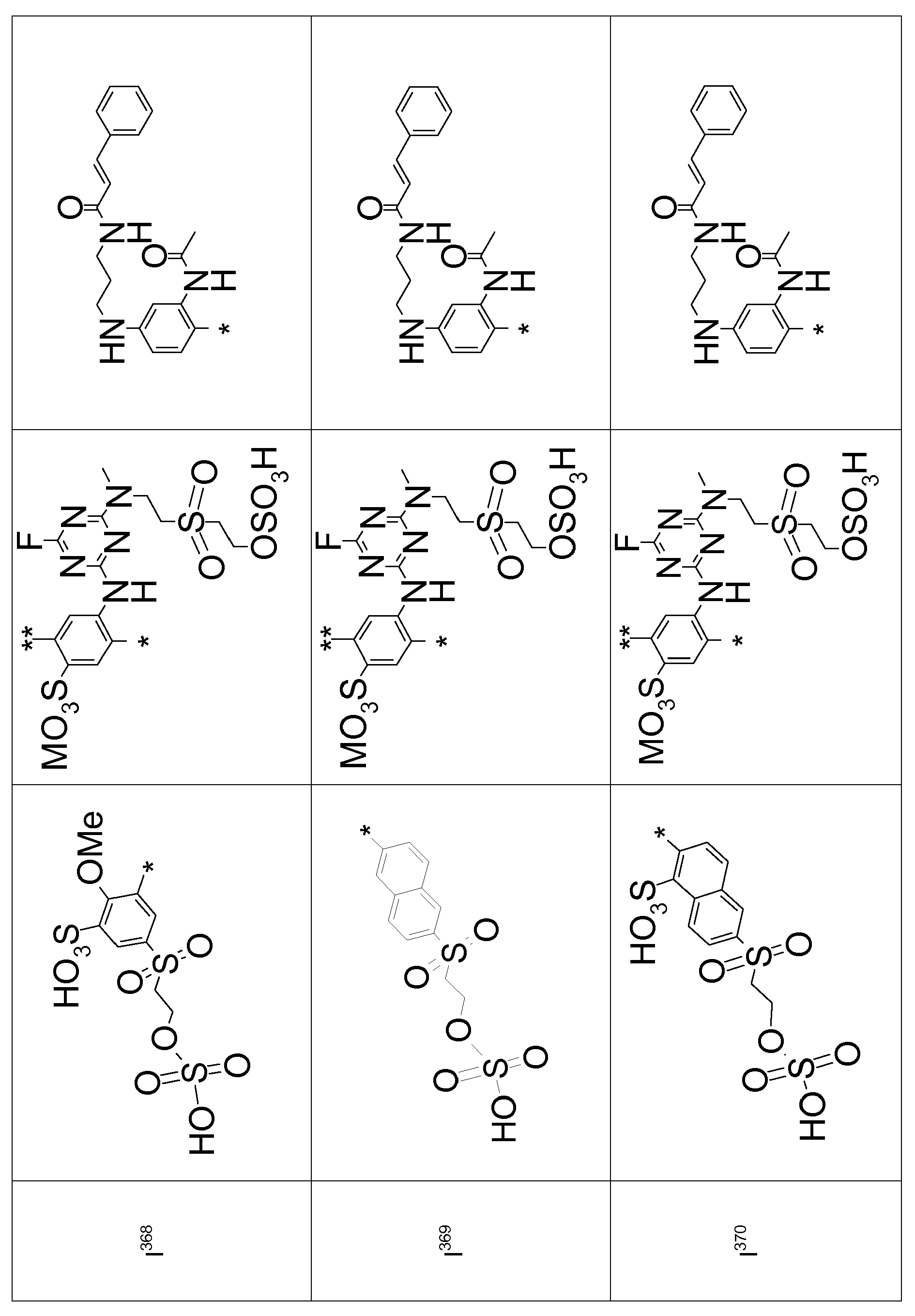

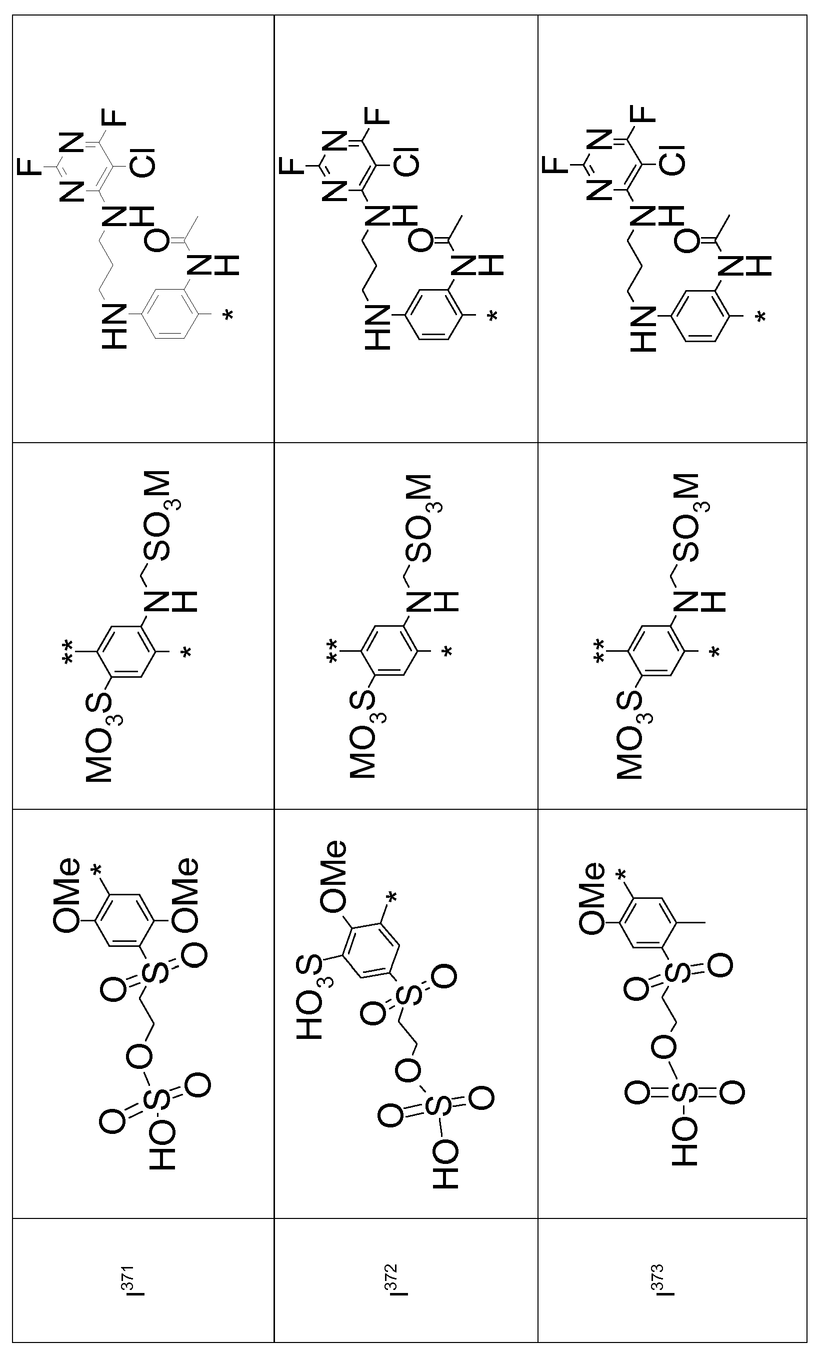

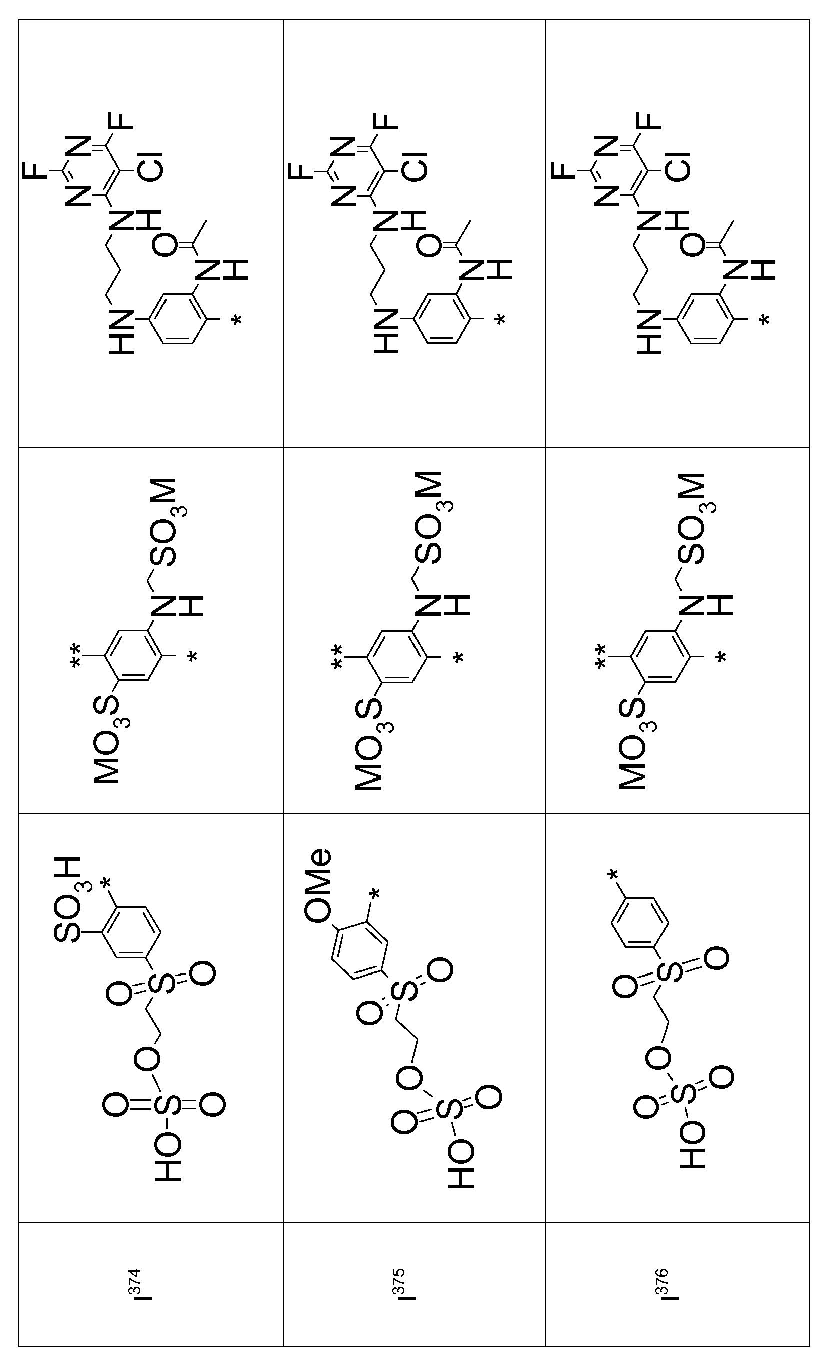

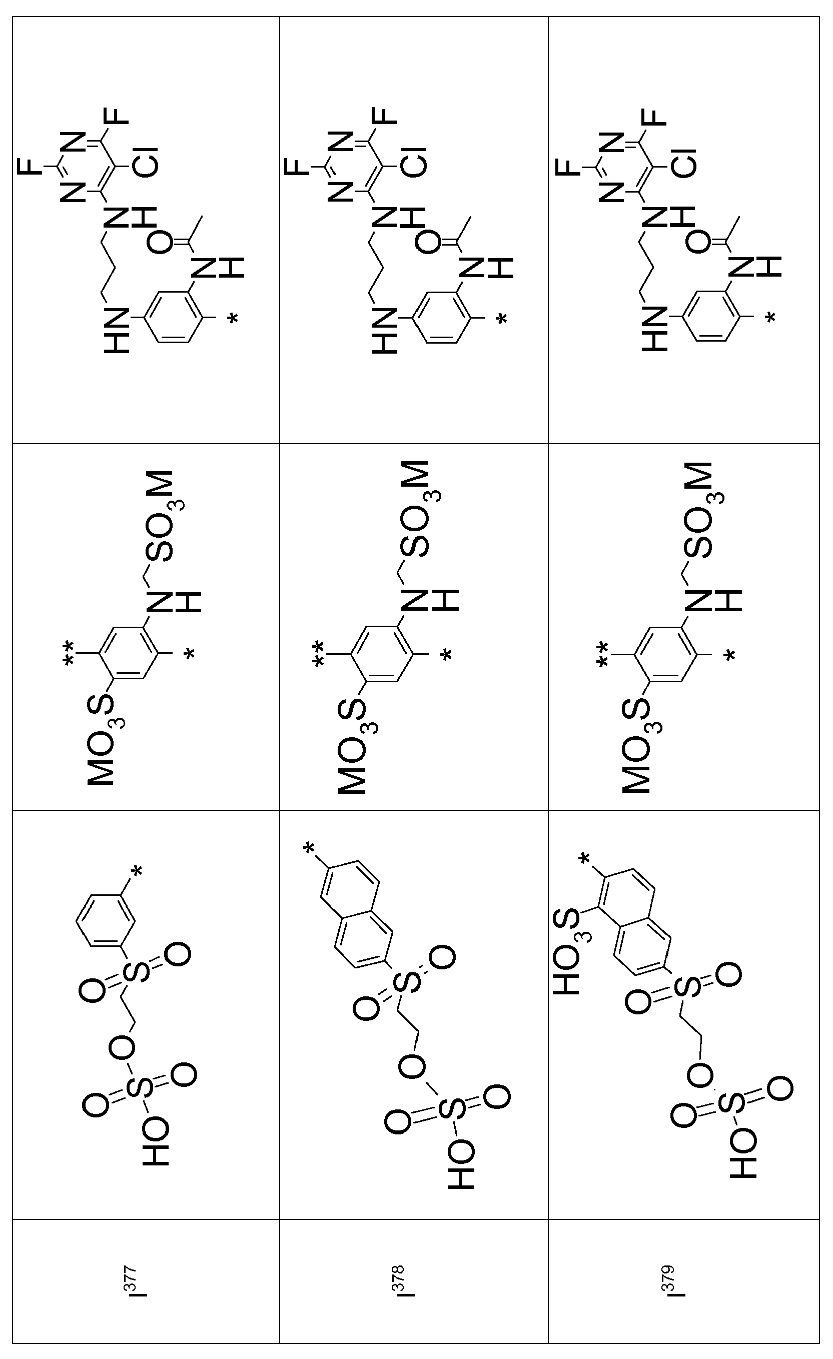

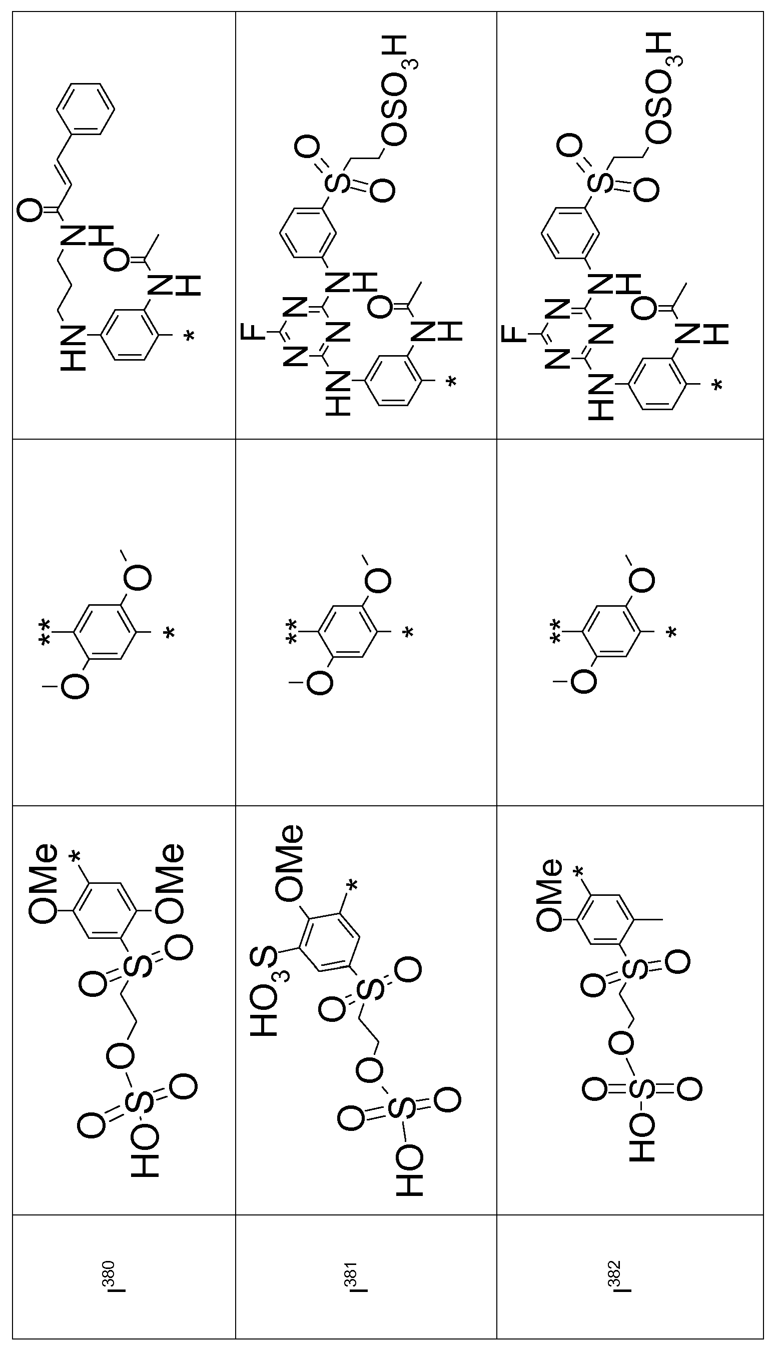

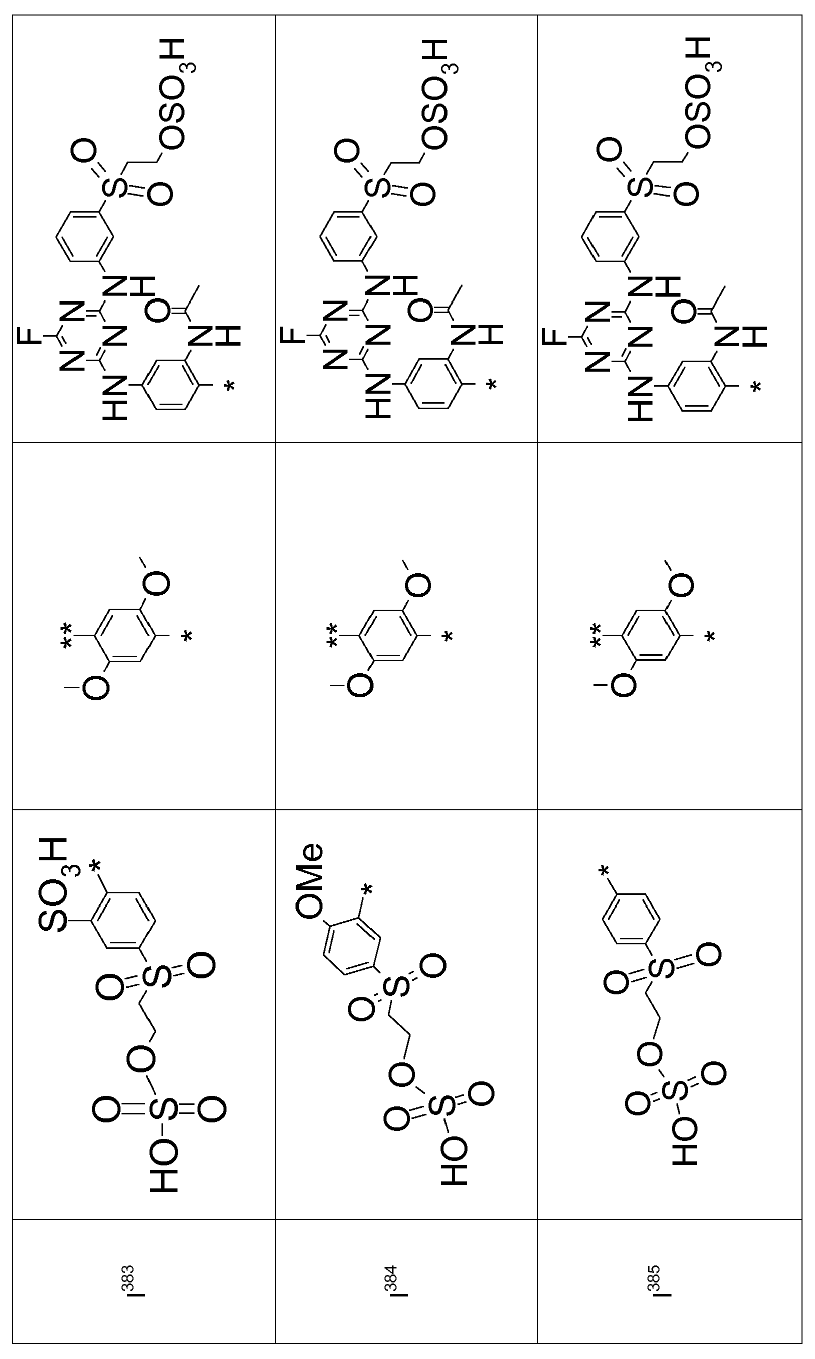

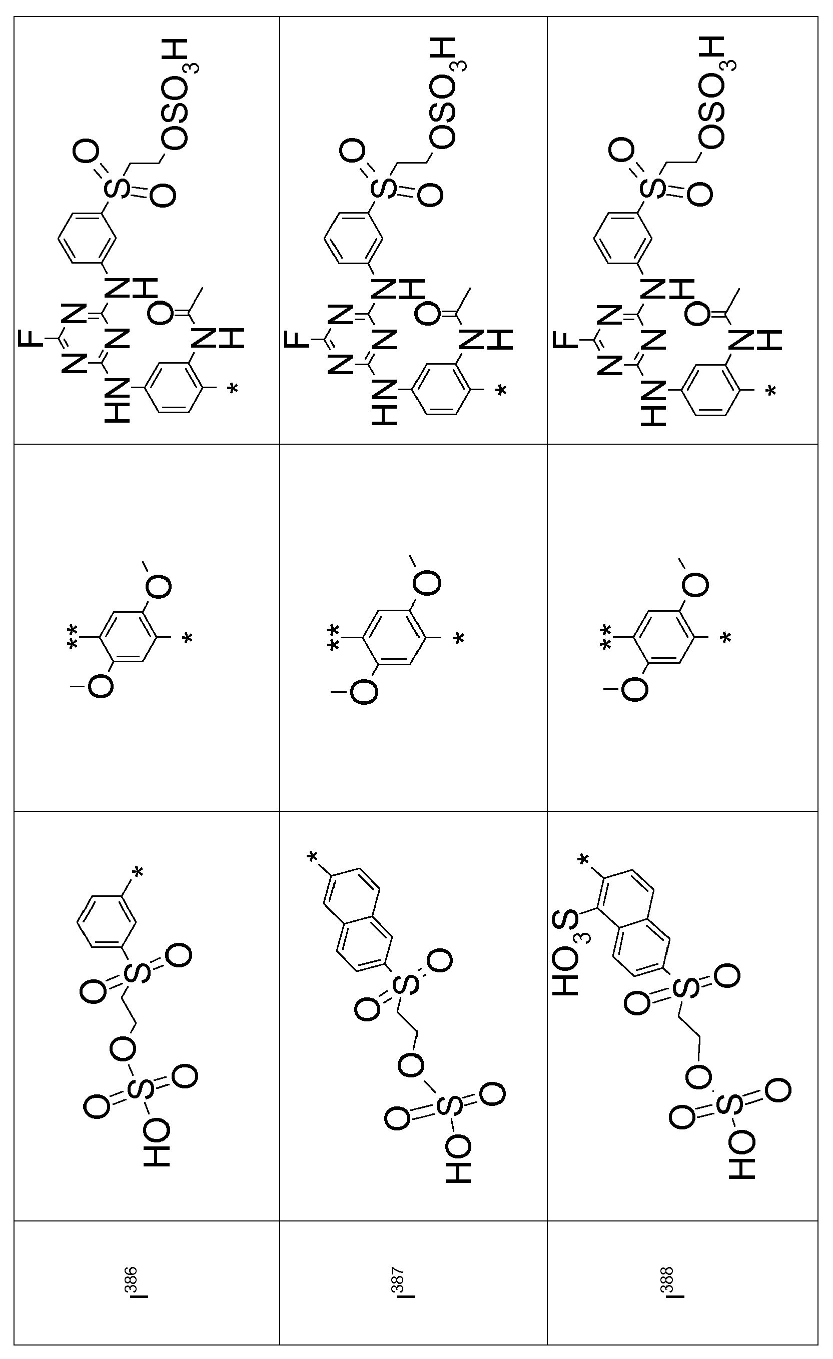

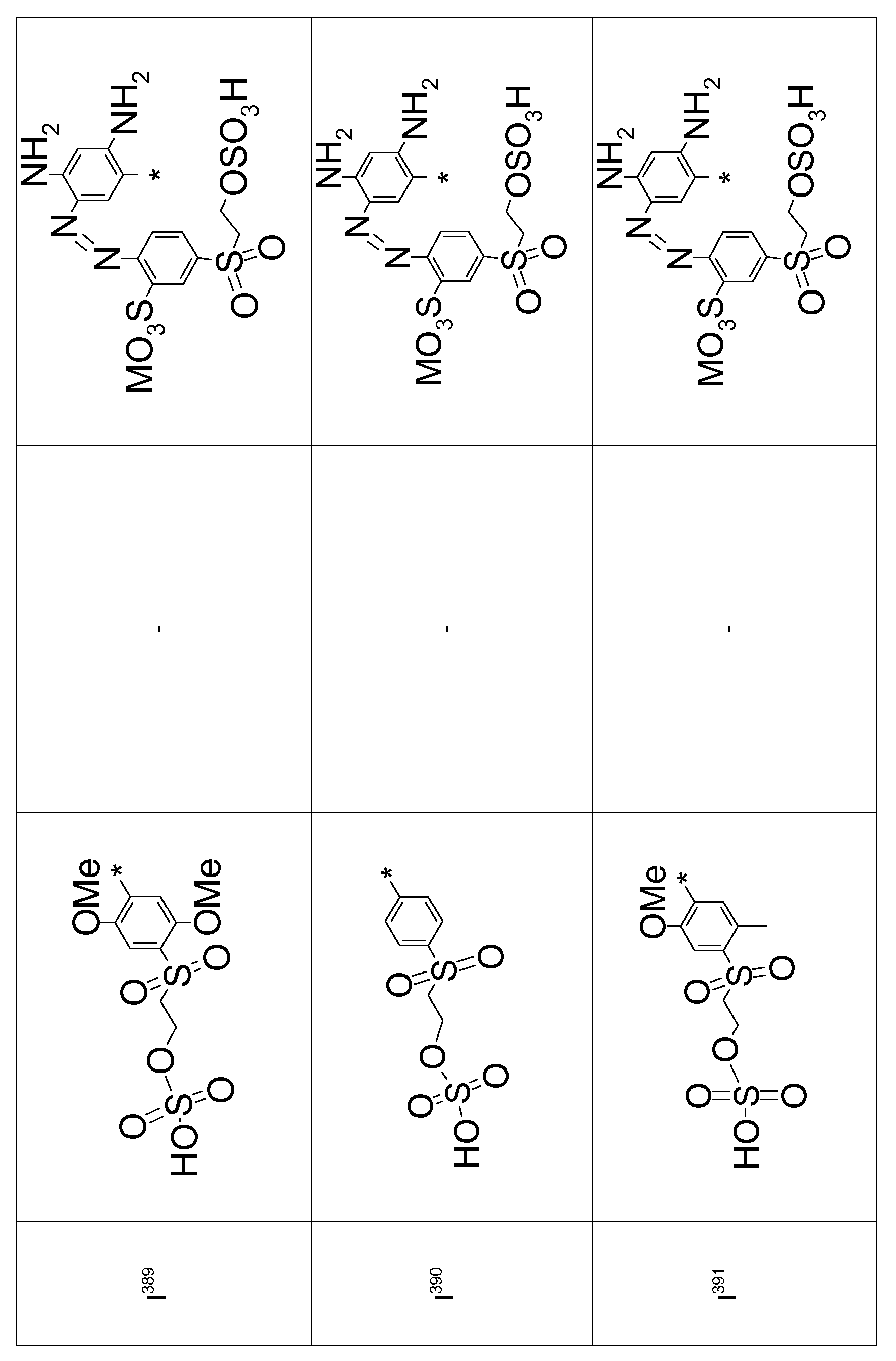

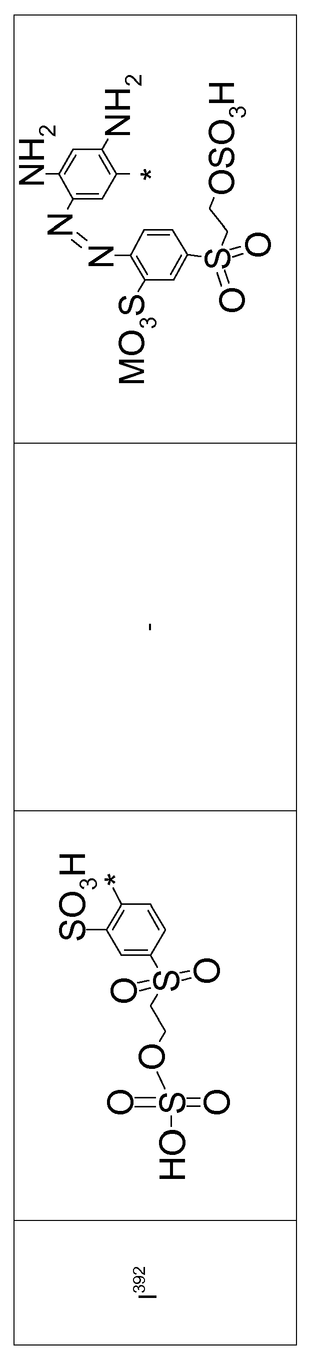

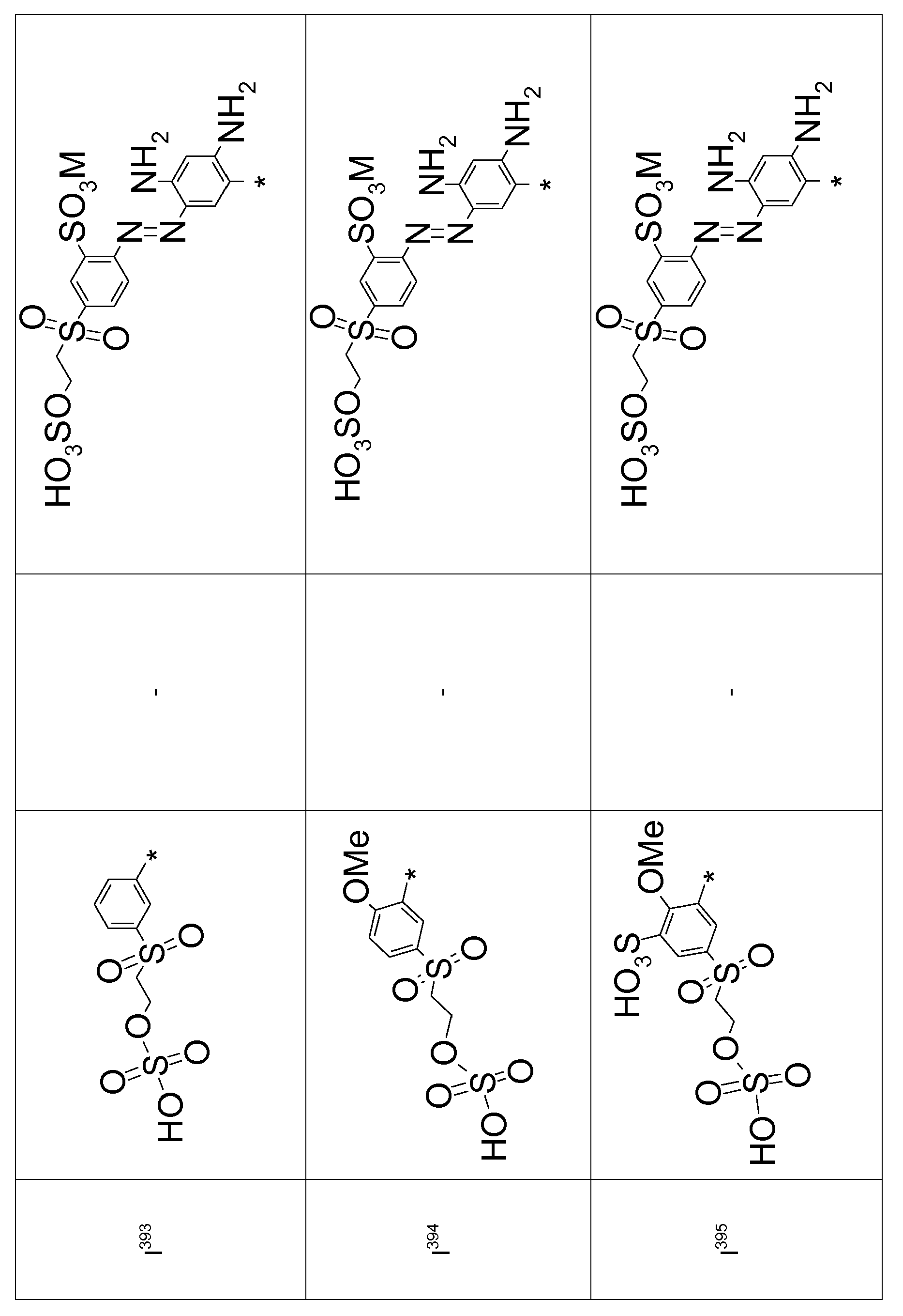

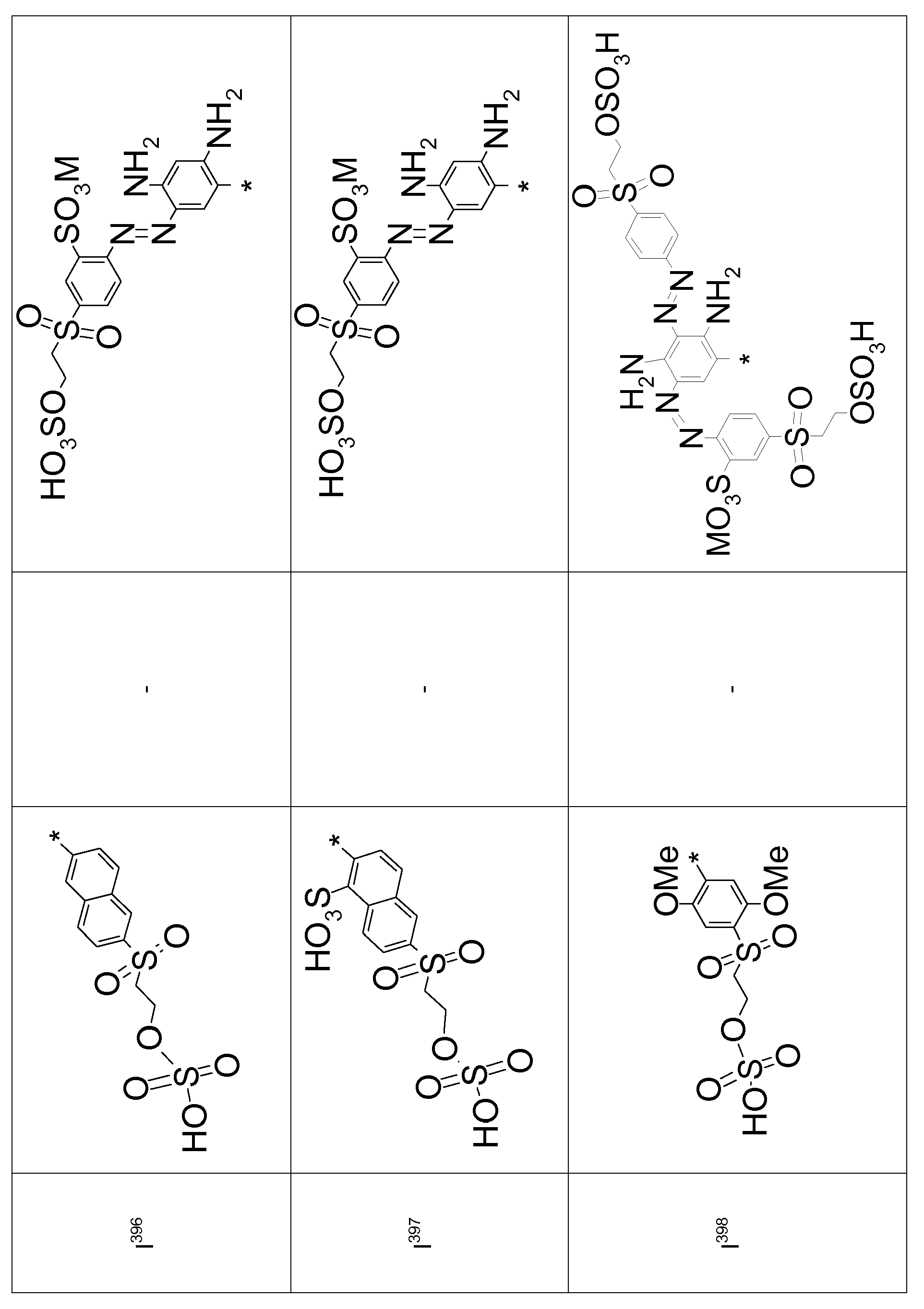

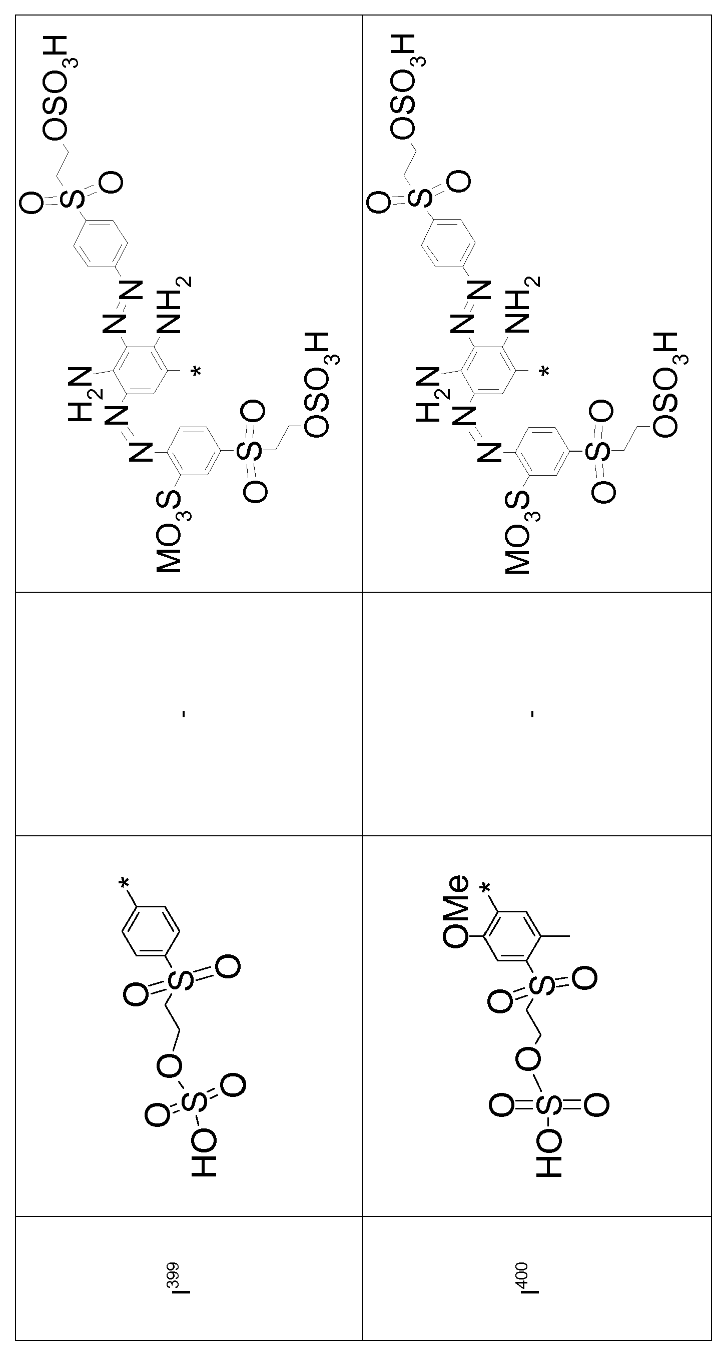

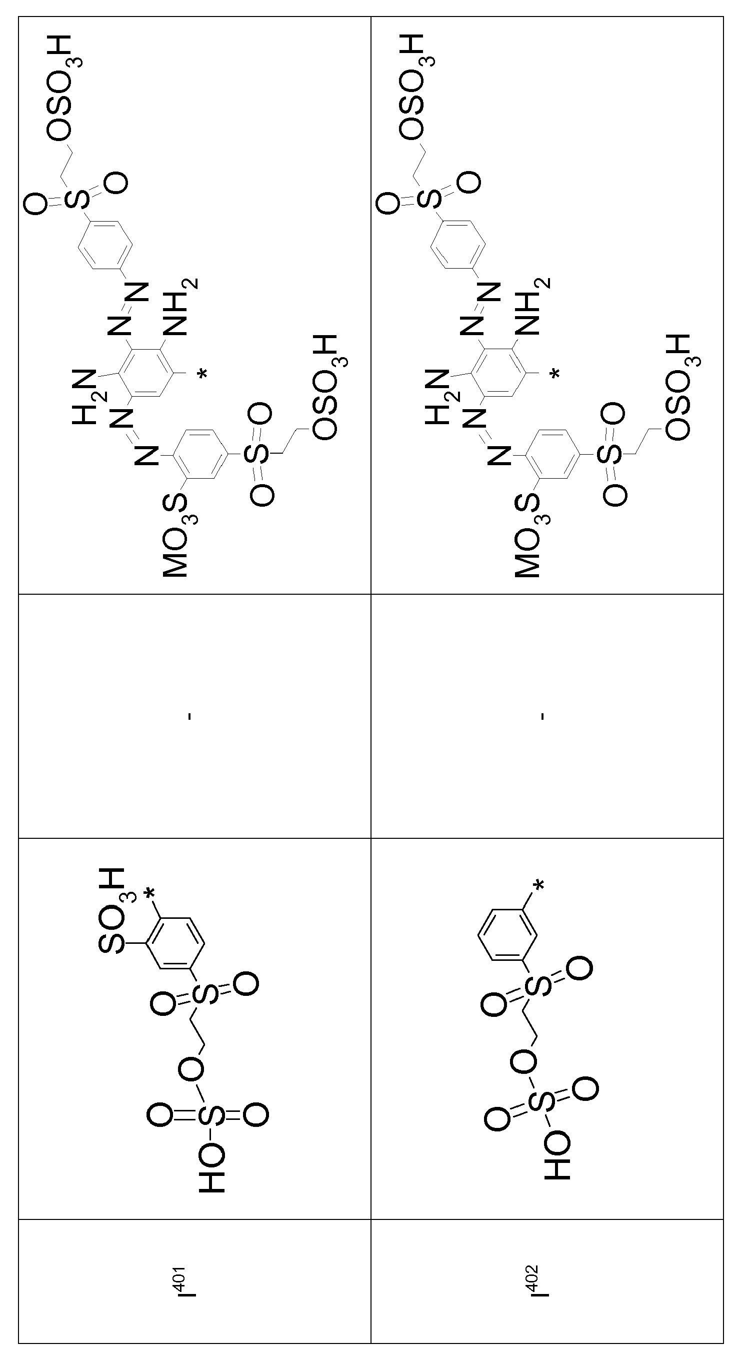

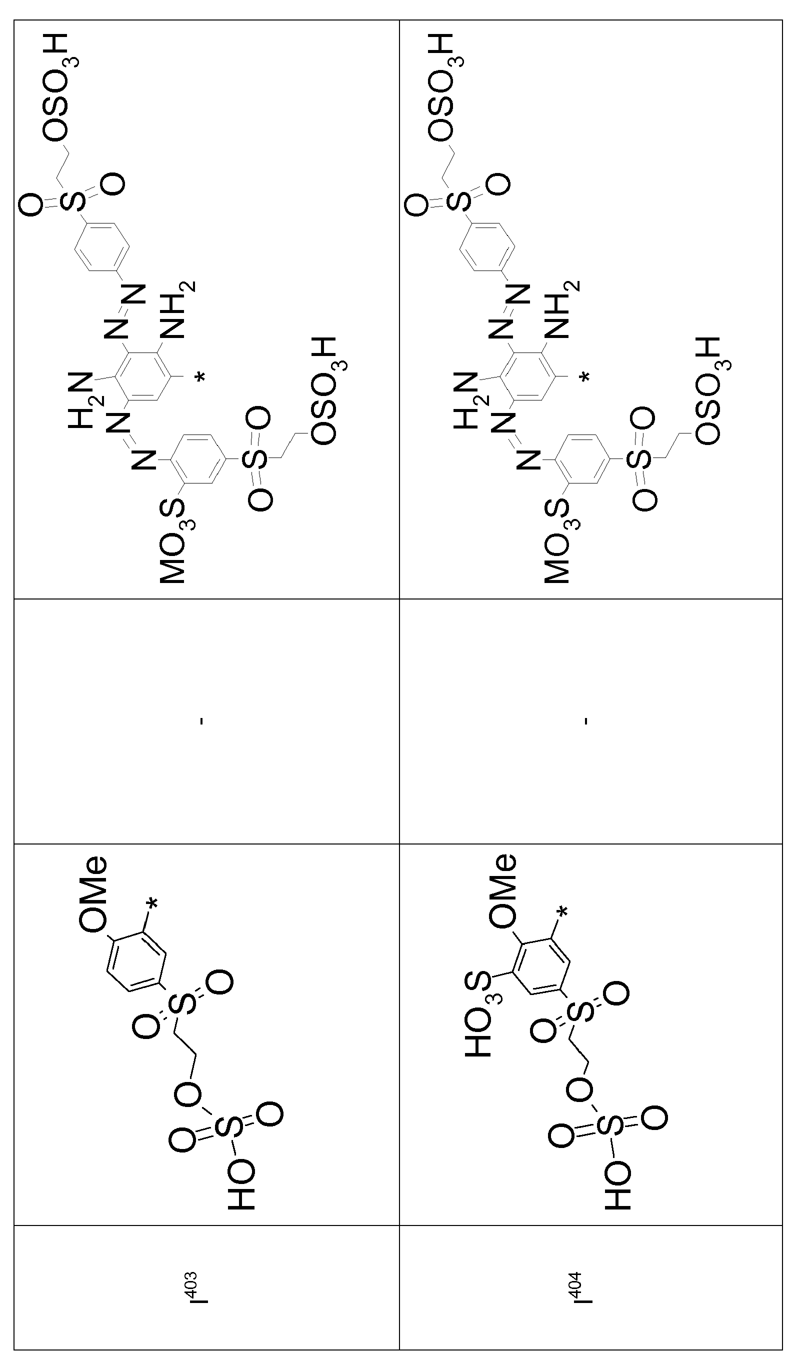

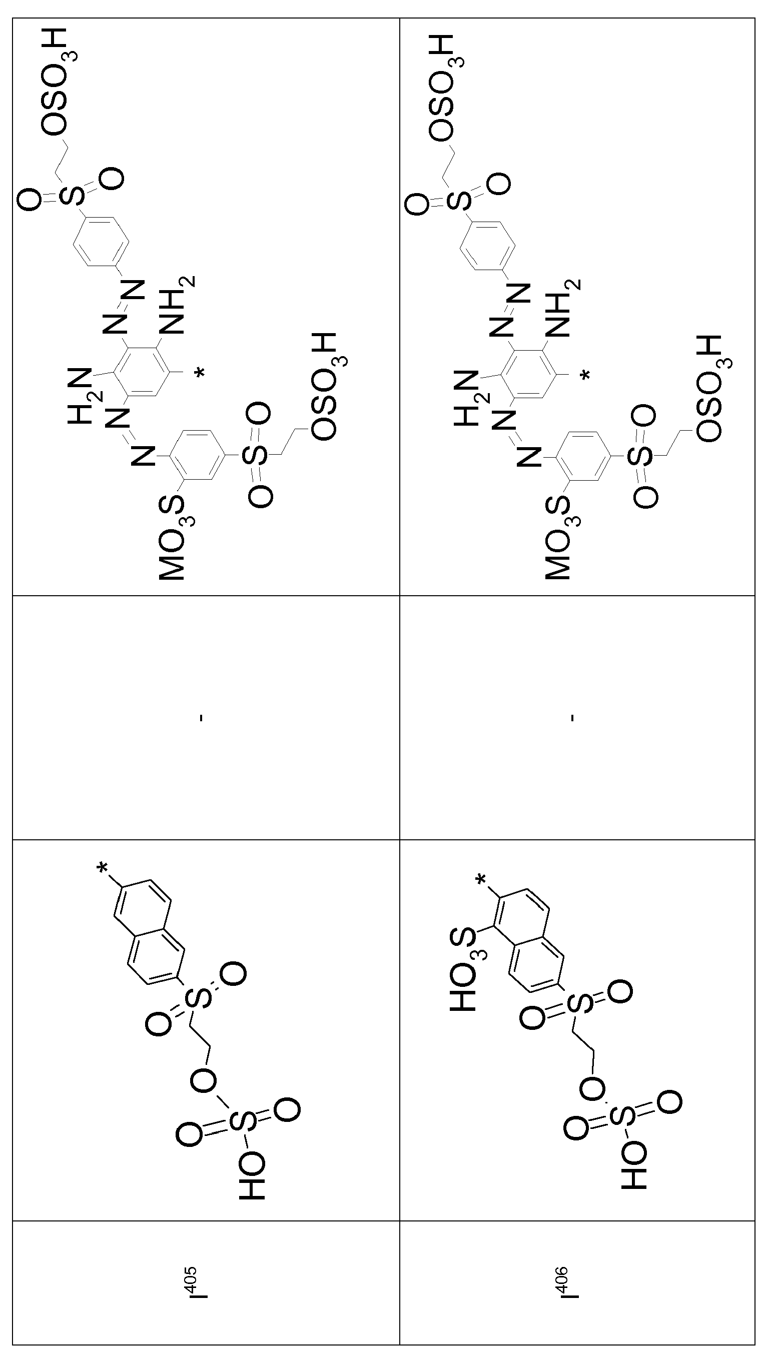

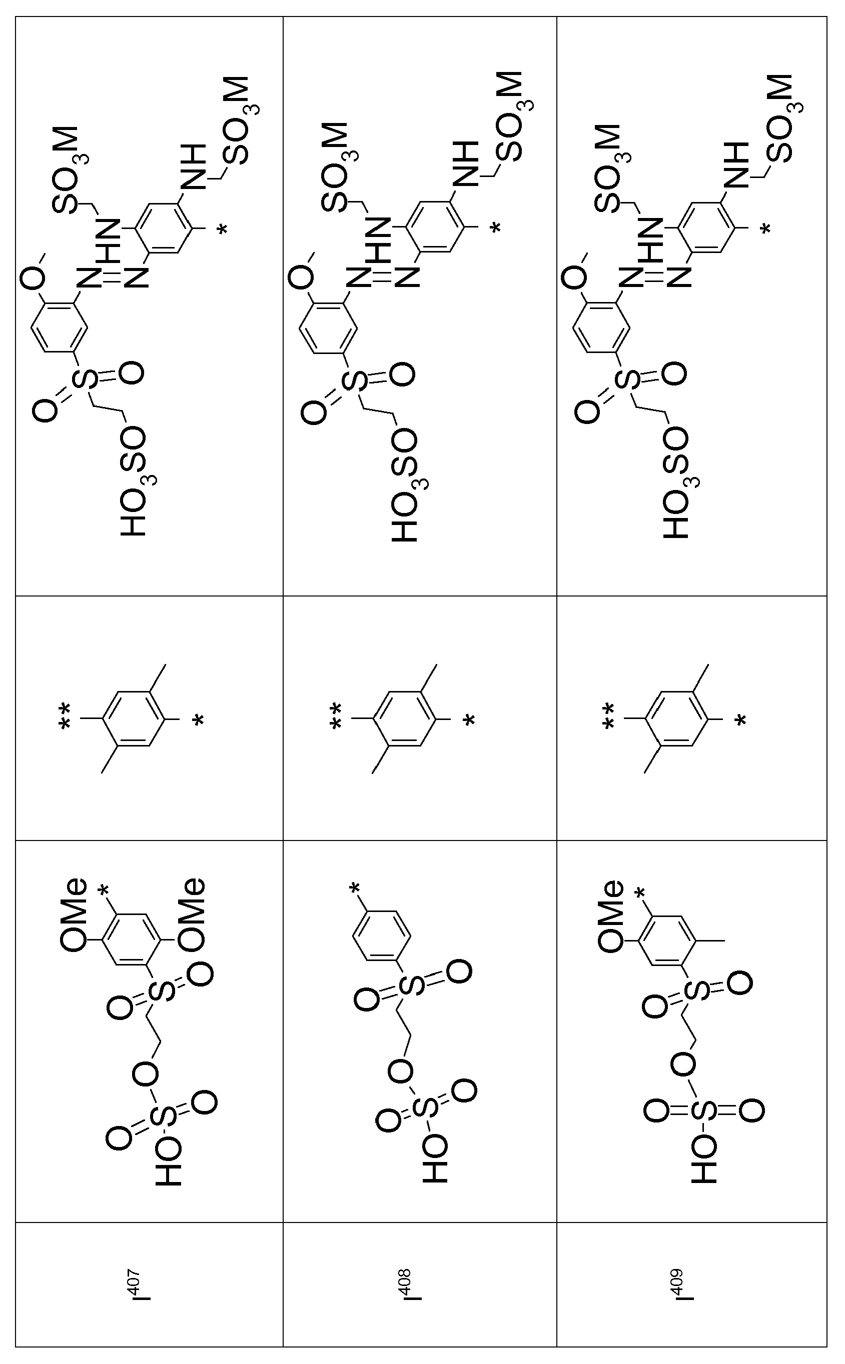

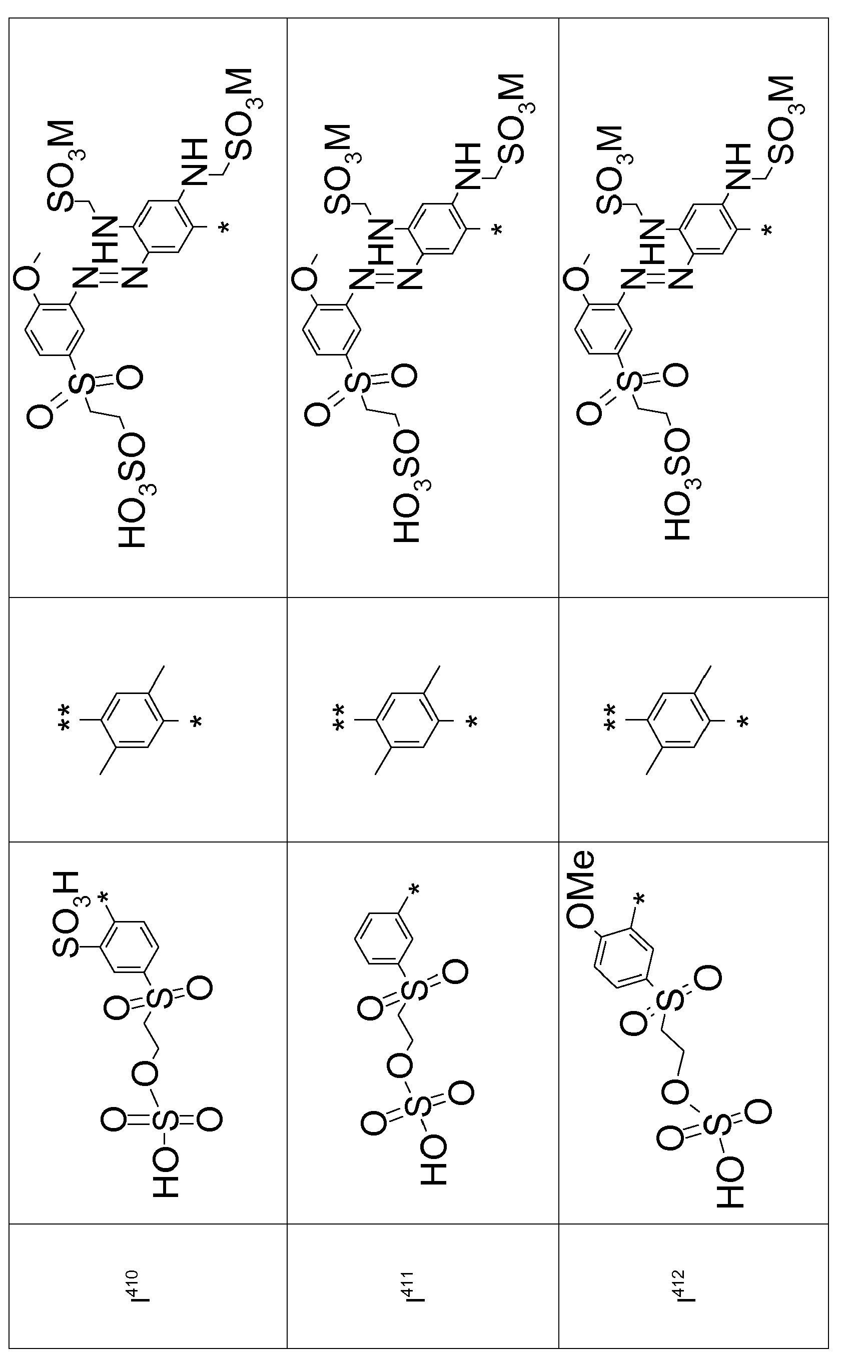

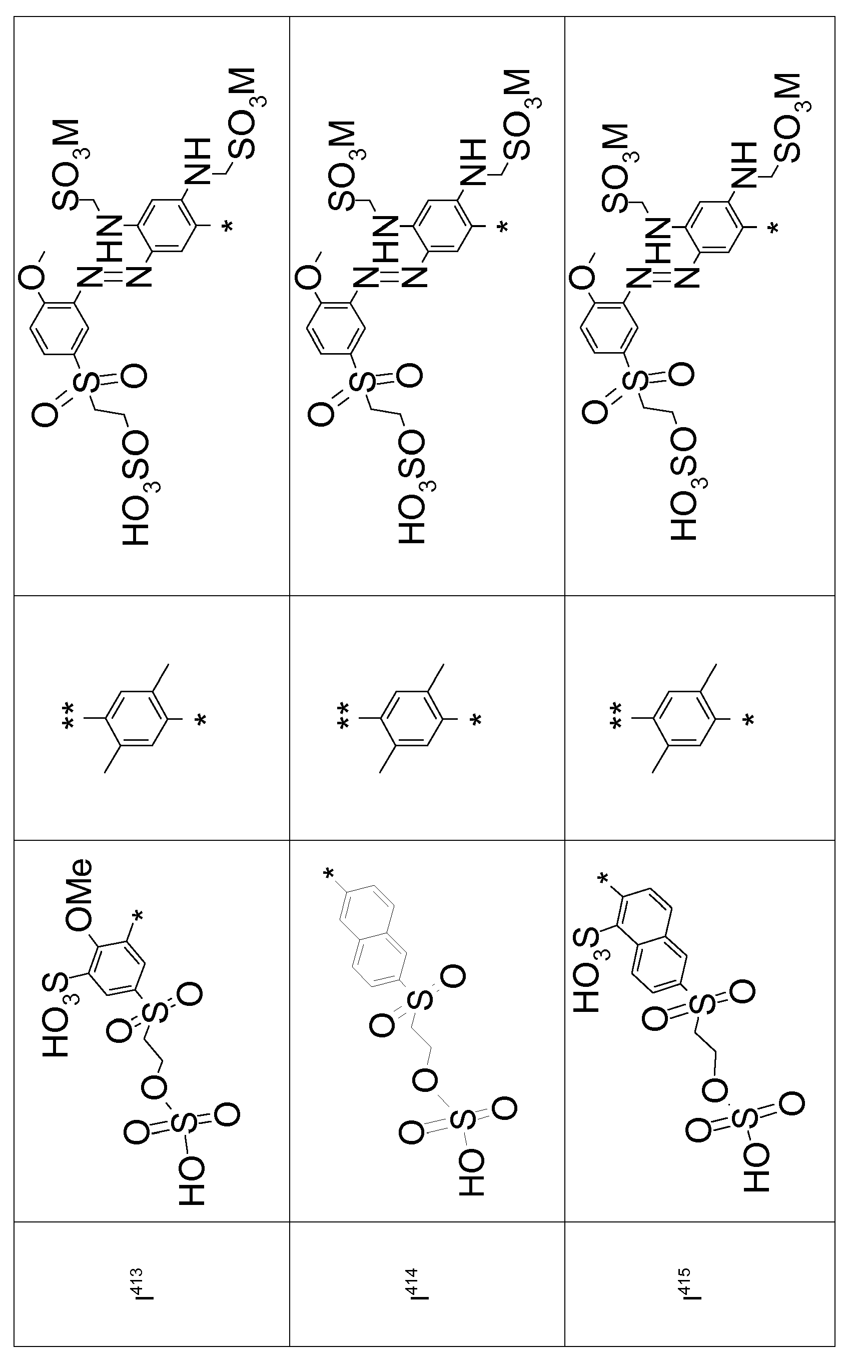

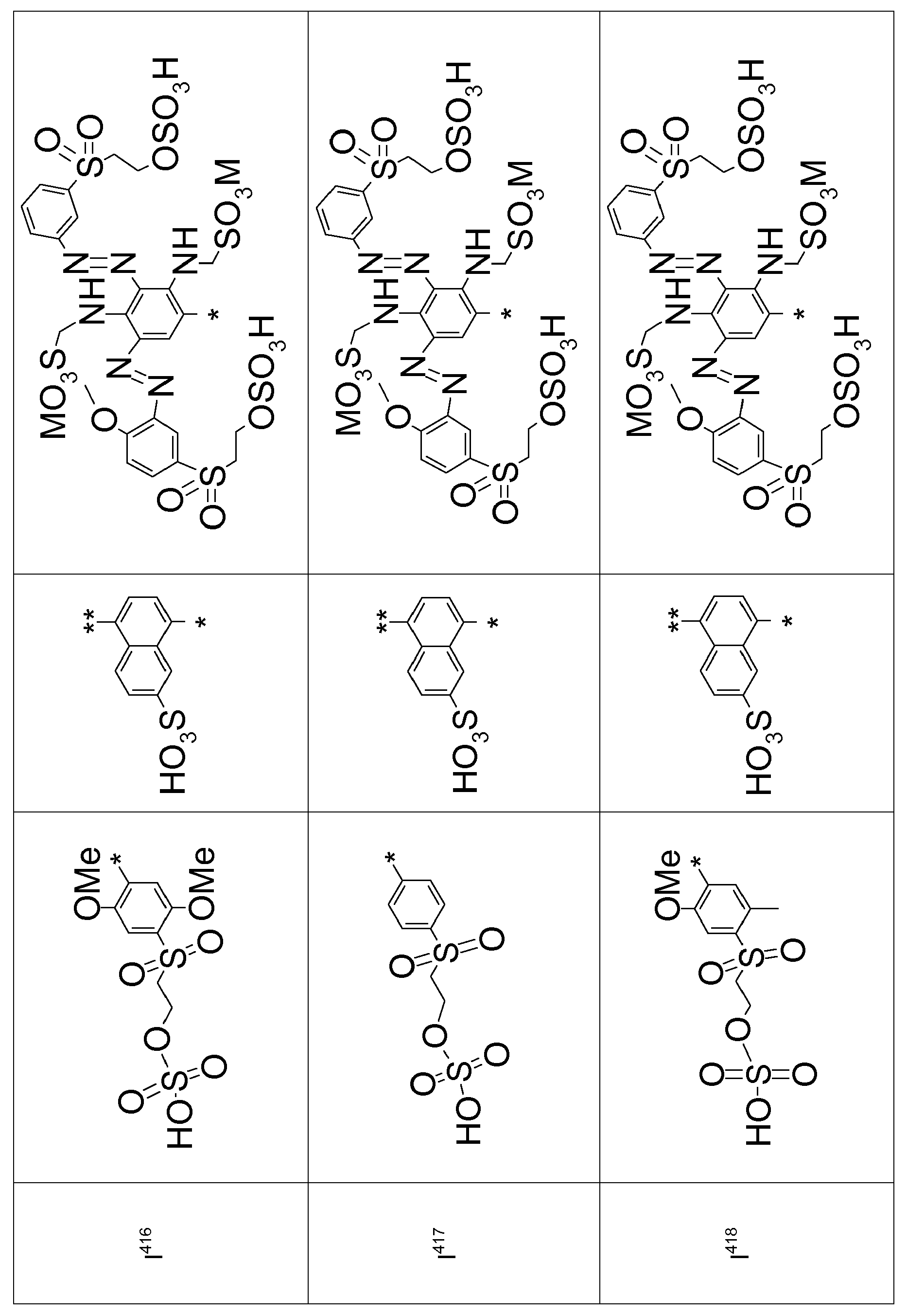

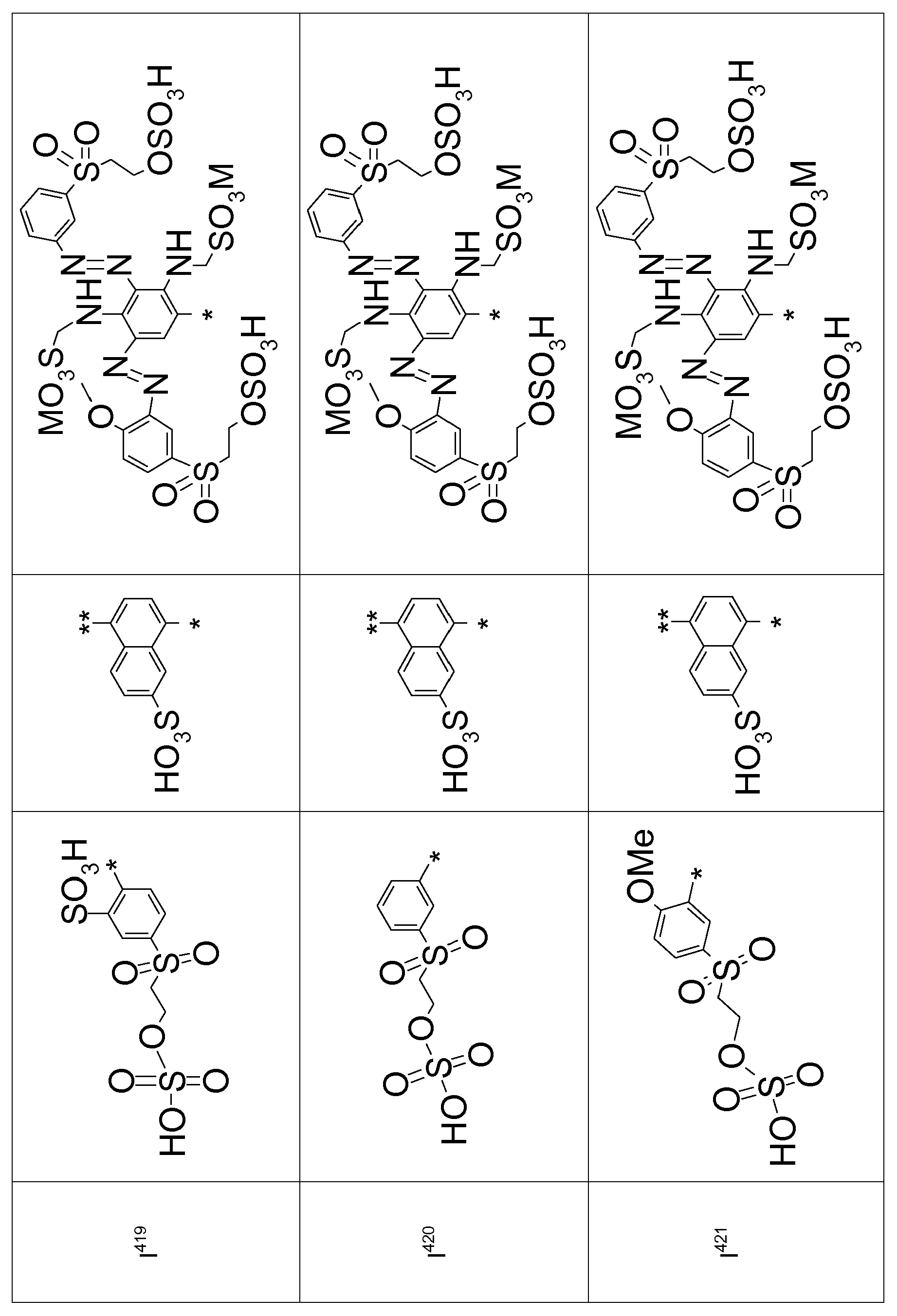

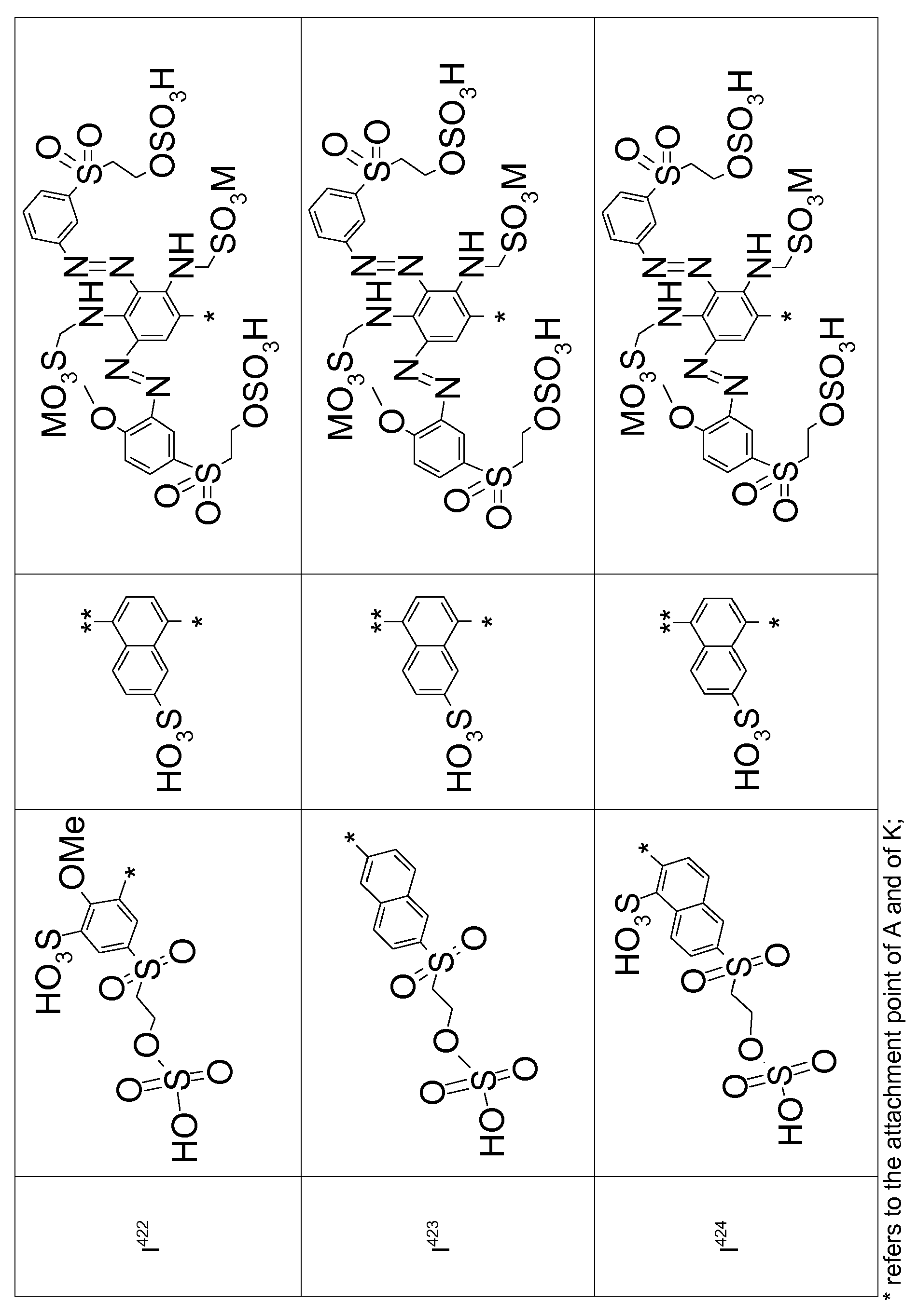

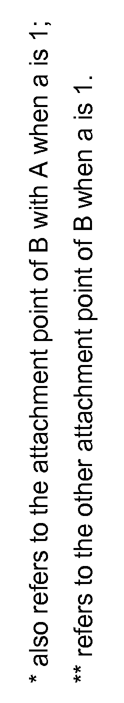

The present invention also provides a process for the preparation of the dyes of the formula (I). This process comprises diazotization of the compounds of the formula (II) and reacting the correspondingly obtained diazonium salts with a compound of the formula K to obtain the intermediate of general formula (III).

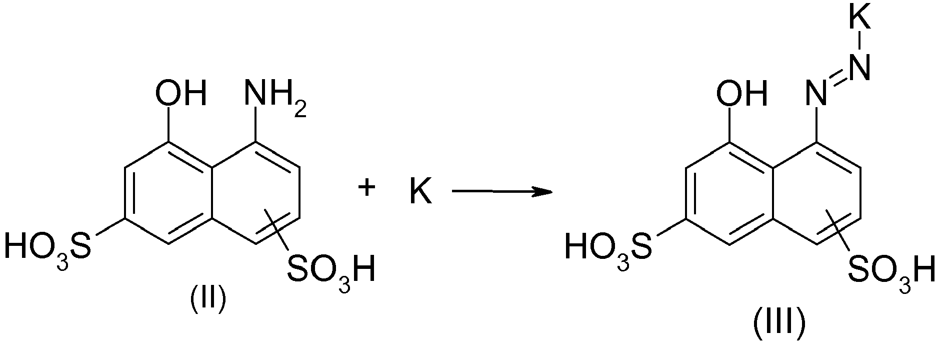

In a further step the diazo component (A-NH₂) is diazotised and coupled onto the intermediate III to obtain the bisazo dye product of general formula (IV).

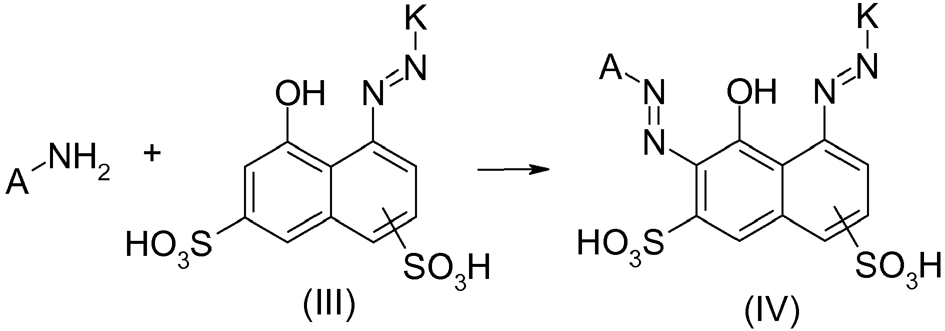

Alternatively, the diazo component (A-NH₂) can be diazotised and coupled onto the compound (B-NH₂) to obtain intermediate (V). Further, the intermediate (V) is diazotised and coupled onto compound (III) to obtain the trisazo dye product of general formula (VI).

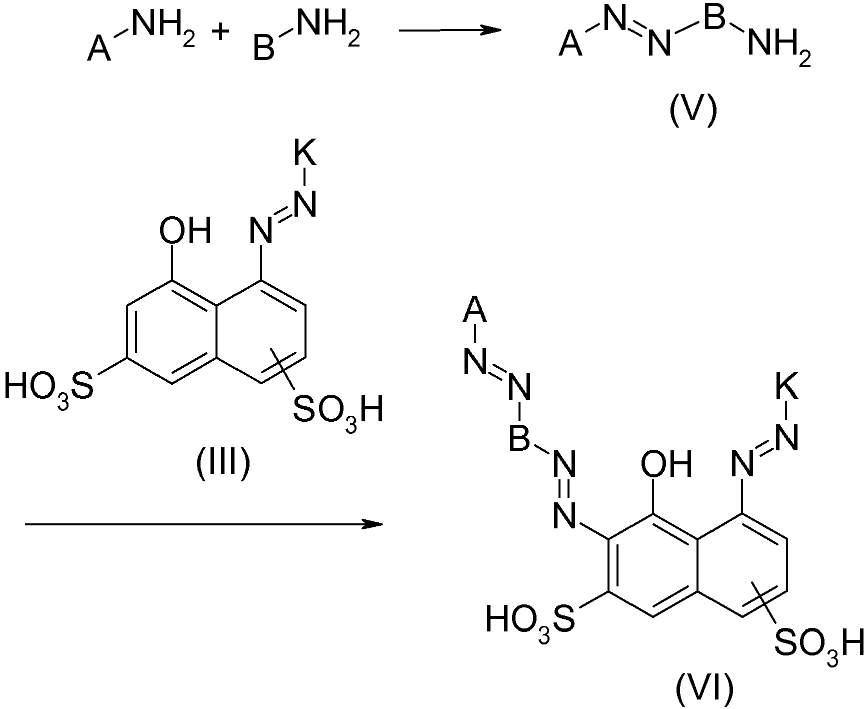

The diazotization reactions, in general, can be performed by means of diazotization methods that are known to a person skilled in the art, preferably by using sodium nitrite or nitrosylsulfuric acid in acidic medium using inorganic acids such as hydrochloric acid, sulfuric acid or phosphoric acid or mixtures thereof or organic acids such as acetic acid or propionic acid or mixtures thereof. Also mixtures of inorganic acid with organic acids can be advantageously used.

The coupling reactions in general can be performed by known methods.

The compounds of the formula A-NH₂, B-NH₂, K are known and commercially available or can be synthesised by means of common chemical reactions known to a person skilled in the art.

The end product can optionally also be subjected to a vinylization reaction. For example, a vinylizable reaction group such as the β-sulfatoethylsulfonyl is converted into its vinyl form. Such reactions are known to a person skilled in the art. They are generally performed in a neutral to alkaline medium at a temperature, for example, from 20 to 80°C, at a pH of, for example, from 7 to 14.

The dyes of formula (I) are fiber-reactive containing fiber-reactive functional rests. Fiber-reactive functional rests refer to rests capable of reacting with the hydroxyl groups of cellulosic materials, the amino, carboxyl, hydroxyl and thiol groups in the case of wool and silk, or with the amino and possibly carboxyl groups of synthetic polyamides to form covalent chemical bonds.

The dyes of the present invention are suitable for dyeing and printing of natural, manufactured regenerated, modified or synthetic hydroxyl-, amino-, and/or carboxamido-containing fiber materials and their blends by the application methods numerously described in the art for reactive dyes. Therefore, the present invention also provides for a process for dyeing and printing of the above-mentioned fiber materials and their blends in which a dye or a dye mixture according to the present invention is used.

Examples of natural fibre materials as described above are vegetable fibres such as seed fibres i.e. cotton, kapok, coir from coconut husk; bast fibers i.e. cotton, flax, hemp, jute, kenaf, ramie, rattan; leaf fibres i.e. sisal, henequen, banana; stalk fibres i.e. bamboo; and fibres from animals such as wool, silk, cashmere wool, alpaca fiber, mohair, Angora fibre as well as fur and leather materials.

Examples of manufactured and manufactured regenerated fibres are cellulosic fibres such as paper and cellulosic regenerated fibres such as viscose rayon fibres, acetate and triacetate fibers and Lyocell fibers.

Examples of synthetic fiber materials as described above are nylon materials, like nylon-6, nylon-6.6 and aramid fibres.

The above-mentioned substrates to be dyed can be present in various forms such as but not limited to yarn, woven fabric, loop-formingly knitted fabric or carpet.

The dyes of the present invention and their salts or mixtures can be used as a single dyeing product in dyeing or printing processes or it can be part of a di/tri or multicomponent combination product in dyeing or in printing compositions.

Dyes of this invention and their salts or mixtures are highly compatible with other known and/or commercially available dyes and they can be used together with such dyes to obtain specific hues of similarly good technical performance. Technical performance includes build-up, fastness properties and levelness.

Since the water solubility of the dyes according to the invention is very good, they can also be used with advantage in customary continuous dyeing processes.

The dyes of the present invention can also be used in digital printing processes, in particular in digital textile printing. Aqueous inks for digital printing which comprise a dye of the present invention likewise form part of the subject matter of the present invention.

The inks of the present invention comprise the dye of the present invention in amounts which preferably range from 0.1% by weight to 50% by weight, more preferably from 1% by weight to 30% by weight and most preferably from 1% by weight to 15% by weight, based on the total weight of the ink.

The inks, as well as the dyes of the present invention, may if desired contain further dyes used in digital printing.

For the inks of the present invention to be used in the continuous flow process, a conductivity of 0.5 to 25 mS/m can be set by adding an electrolyte. Useful electrolytes include for example lithium nitrate and potassium nitrate. The inks of the present invention may include organic solvents at a total level of 1-50% and preferably 5-30% by weight. Suitable organic solvents are for example alcohols, for example methanol, ethanol, 1-propanol, isopropanol, 1-butanol, tert-butanol, pentyl alcohol, polyhydric alcohols for example: 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, hexanediol, D,L-1,2-hexanediol, 1,6-hexanediol, 1,2,6-hexanetriol, 1,2-octanediol, polyalkylene glycols, for example: polyethylene glycol, polypropylene glycol, alkylene glycols having 1 to 8 alkylene groups, for example: monoethylene glycol, diethylene glycol, triethylene glycol, tetraethylene glycol, thioglycol, thiodiglycol, butyltriglycol, hexylene glycol, propylene glycol, dipropylene glycol, tripropylene glycol, low alkyl ethers of polyhydric alcohols, for example: ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether, tripropylene glycol isopropyl ether, polyalkylene glycol ethers, such as for example: polyethylene glycol monomethyl ether, polypropylene glycol glycerol ether, polyethylene glycol tridecyl ether, polyethylene glycol nonylphenyl ether, amines, such as for example: methylamine, ethylamine, triethylamine, diethylamine, dimethylamine, trimethylamine, dibutylamine, diethanolamine, triethanolamine, N-acetylethanolamine, N-formylethanolamine, ethylenediamine, urea derivatives, such as for example: urea, thiourea, N-methylurea, N,N'-epsilon dimethylurea, ethyleneurea, 1,1,3,3-tetramethylurea, amides, such as for example: dimethylformamide, dimethylacetamide, acetamide, ketones or keto alcohols, such as for example: acetone, diacetone alcohol, cyclic ethers, such as for example: tetrahydrofuran, trimethylolethane, trimethylolpropane, 2-butoxyethanol, benzyl alcohol, 2-butoxyethanol, gamma butyrolactone, epsilon-caprolactam, further sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylpropane, 1,2-dimethoxypropane, dioxane ethyl acetate, ethylenediaminetetraacetate ethyl pentyl ether, 1,2-dimethoxypropane and trimethylpropane.

The inks of the invention may further include customary additives, for example viscosity moderators to set viscosities in the range from 1.5 to 40.0 mPas in a temperature range from 20 to 50°C. Preferred inks have a viscosity of 1.5 to 20 mPas and particularly preferred inks have a viscosity of 1.5 to 15 mPas.

Useful viscosity moderators include rheological additives, for example: polyvinylcaprolactam, polyvinylpyrrolidone and their copolymers polyetherpolyol, associative thickeners, polyurea, polyurethane, sodium alginates, modified galactomannans, polyetherurea, polyurethane, nonionic cellulose ethers.

As further additives the inks of the invention may include surface-active substances to set surface tensions of 20 to 65 mN/m, which are adapted if necessary as a function of the process used (thermal or piezo technology). Useful surface-active substances include for example all surfactants, preferably nonionic surfactants, butyldiglycol and 1,2-hexanediol.

The inks of the present invention may further include customary additives, for example substances to inhibit fungal and bacterial growth in amounts from 0.01 to 1 % by weight based on the total weight of the ink.

The inks may be prepared in a conventional manner by mixing the components in water.

The inks of the present invention are particularly useful in inkjet printing processes for printing a wide variety of materials, in particular of wool and polyamide fibers.

The examples below serve to illustrate the invention. Parts and percentages are by weigh unless noted otherwise. The relationship between parts by weight and parts by volume is that of the kilogram to the liter.

### Example 1:

i) 10.3 parts of 3-(N,N-diethylamino)acetanilide was dissolved in 12.3 parts of 37% hydrochloric acid. The reaction was stirred at 85°C for 3 hours. After cooling the reaction to ambient temperature, the Ph was adjusted to 8.5∼9 using 30% NaOH solution. The reaction mixture was extracted with dichloromethane (30 ml X 4). The solvent of the combined organic layer was removed under vacuum to give 6.6 parts of 3-(N,N-diethylamino)aniline as a brown oil. 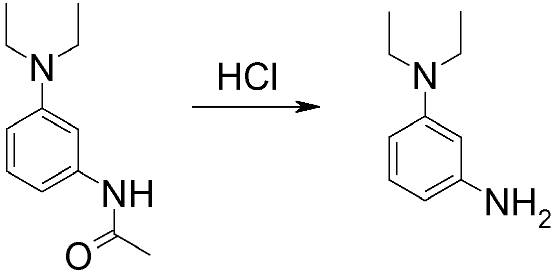
ii) 6.2 parts of sulfuric acid mono-[2-(2-phenylamino-ethanesulfonyl)-ethyl] ester was suspended in 70 parts of water. 14 parts of sodium bicarbonate was added. The reaction vessel was cooled to 0~5°C using ice. 3.8 parts of cyanuric chloride was added. The reaction was stirred at temperature of 0∼5 °C and pH of 4∼4.5 for 3 hours. Thereafter, 3.3 parts of 3-(N,N-diethylamino)aniline was added and the pH was adjusted to 6∼6.5 using 15% soda solution. The reaction was stirred at ambient temperature and pH of 6∼6.5 for 3 hours. The product (a) obtained was used in next step without isolation. 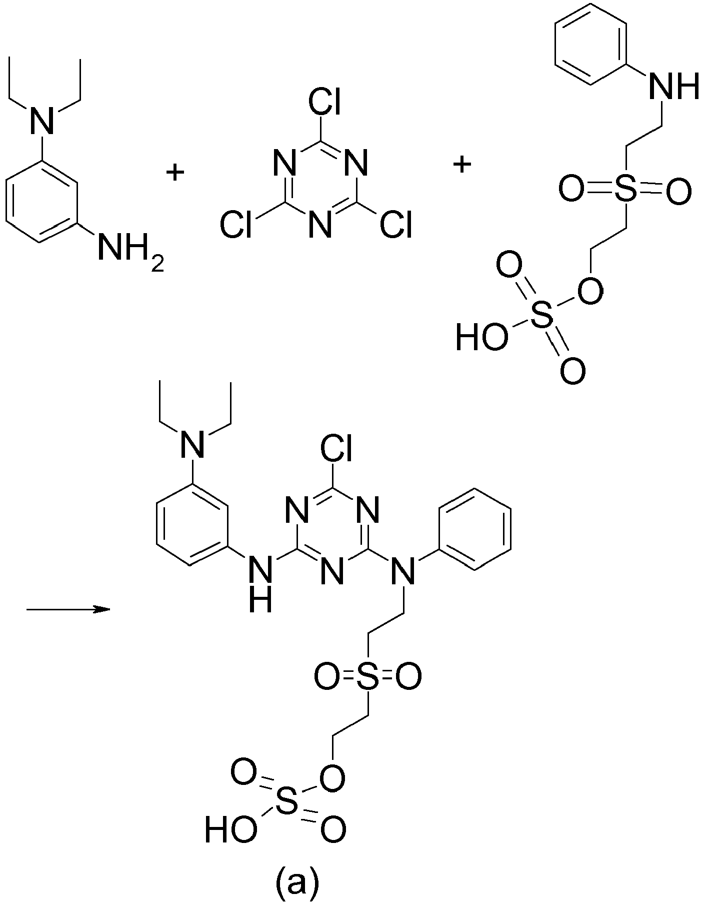
iii) 6.7 parts of 4-amino-5-hydroxynaphthalene-2,7-disulfonic acid was added into 70 parts of water. The pH was adjusted to 5∼6 using 15% soda solution. The reaction vessel was cooled to 0~5°C using ice. 4.3 milliliters of 5M sodium nitrite solution was added into the reaction mixture. After stirring for 10 min, 20.7 parts of 37% hydrochloric acid was added. The reaction was stirred at 0~5°C for 0.5 h and then 0.2 parts of sulfamic acid was added.
   The solution of product (a) obtained above was cooled down to 0~5°C using ice. The diazonium salt was added into this coupler solution slowly while maintaining the pH to 5∼6.5. The reaction was stirred until completion to yield the intermediate (b). 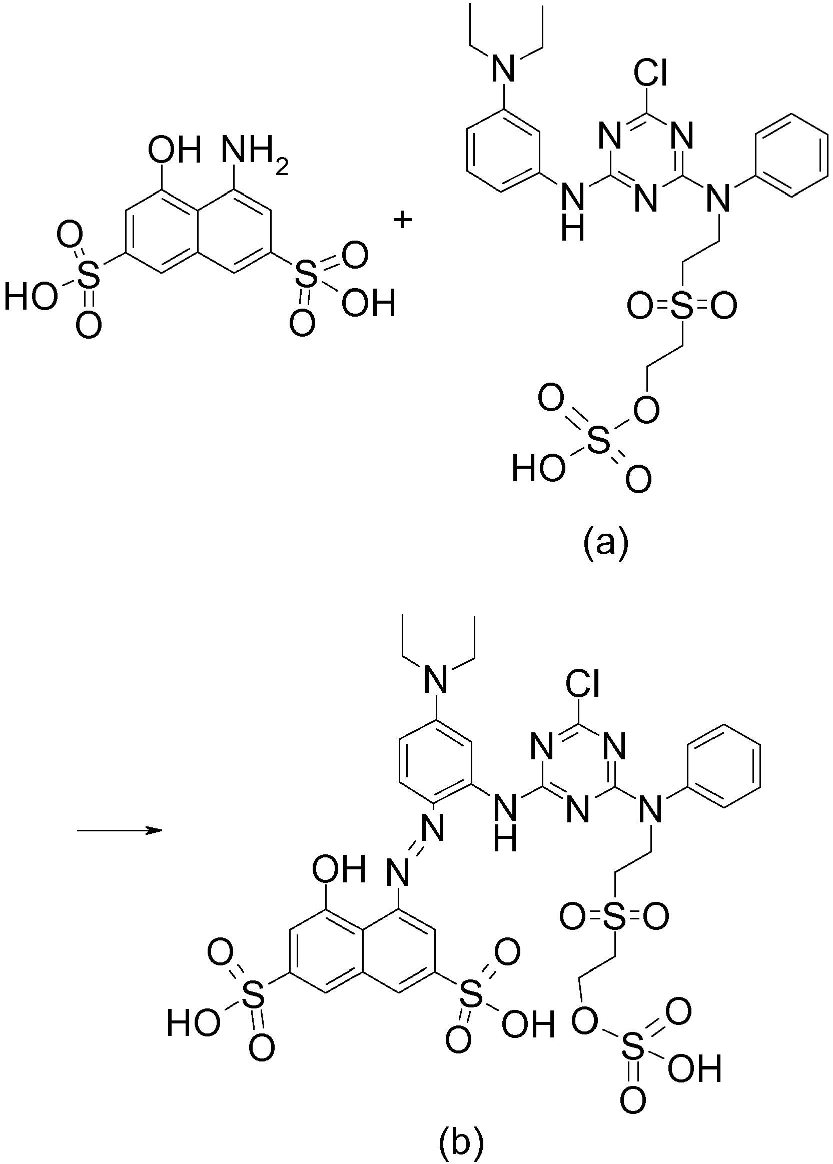
iv) 5.9 parts of {2-[(4-aminobenzene)sulfonyl]ethoxy}sulfonic acid was suspended in 50 parts of water. The reaction vessel was cooled to 0~5°C using ice. 6.2 parts of 37% hydrochloric acid was added into the reaction mixture. After stirring for 10 min, 4.3 milliliters of 5M sodium nitrite solution was added. The reaction was stirred at 0~5°C for 1 h and then 0.2 parts of sulfamic acid was added.

The diazonium salt was added slowly into (b) synthesized above while maintaining the pH to 5∼6.5. The reaction was stirred until completion. The product was precipitated out, collected by filtration and dried to give 20.5 parts of dye I² as black solid.

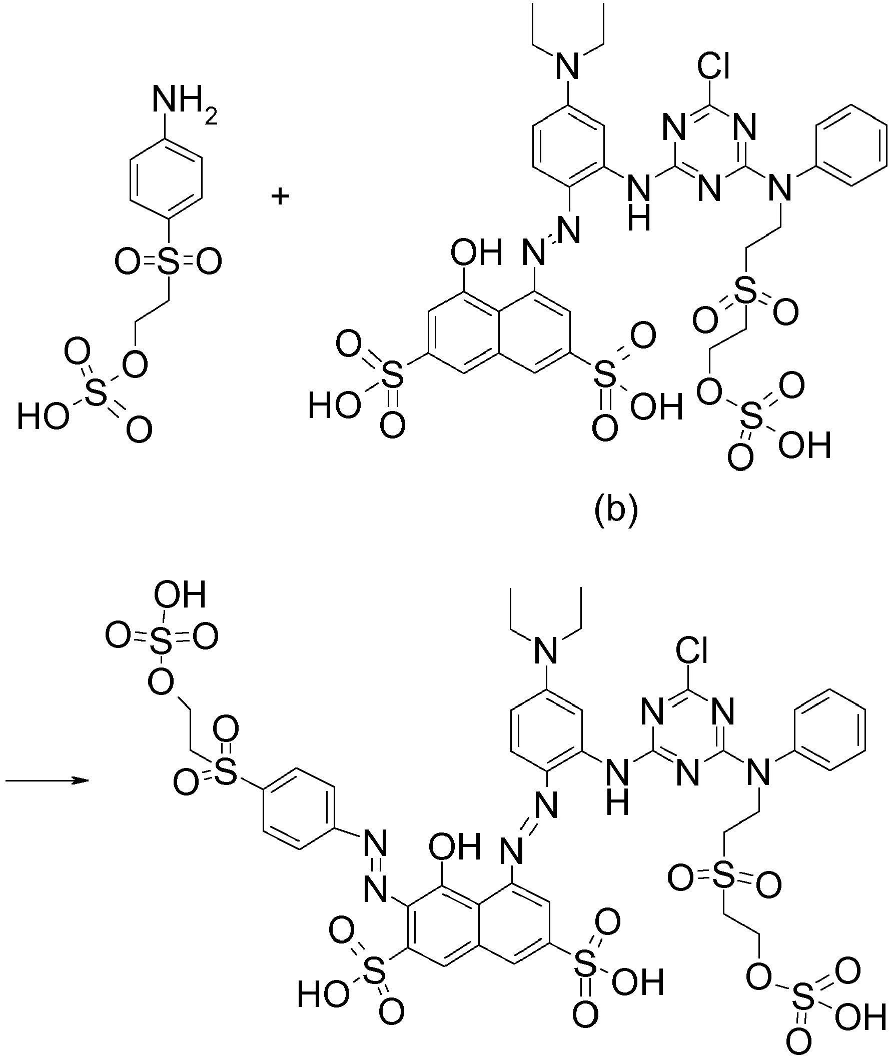

Through analogy, all the dyes of formulae (I¹-I⁴²⁴) can be synthesized according to the method described above in the example 1.

### Dyeing example 1

3 parts of the dye I² of this invention is dissolved in 2000 parts of water and 1 part of levelling assistant (based on condensation product of a higher aliphatic amine and ethylene oxide) is added. The pH is then adjusted to 3.8∼4.2 using acetic acid (60%). The dyebath is entered with 100 parts of a woven wool fabric. The temperature is raised to 40°C over the course of 30 minutes, maintained at this temperature for 15 minutes and then increased to 98°C over the course of 58 minutes and dyeing is carried out at this temperature for 90 minutes. This is followed by cooling to 90°C and removal of the dyed material. The wool fabric is washed with hot and cold water, alkaline-treated and then spun and dried. The brown dyeings obtained have very good light and wet fastness and also good levelness in the fibre.

### Dyeing example 2

2 parts of the dye I² of this invention and 60 parts of sodium chloride are dissolved in 1000 parts of water, and 12 parts of sodium carbonate and 0.5 part of a wetting agent are added. This dyebath is entered with 100 parts of bleached cotton knitted fabric. The temperature of the dye bath is raised to 30°C at a gradient of 0.5°C/minute and held at this temperature for 30 minutes, and then increased to 60°C over 30 minutes, this temperature being maintained for a further 60 minutes. Thereafter the dyed goods are initially rinsed with tapwater for 5 minutes. The dyed goods are neutralized at 50°C using 60% strength acetic acid for 30∼40 minutes. The goods are rinsed with tapwater at boil for 30∼40 minutes followed by a final rinse at 40∼50°C for 20 minutes and dried. The brown dyeing obtained has good overall fastness properties.

### Dyeing example 3

1 part of the dye I² of this invention is dissolved in 2000 parts of water and 1 part of levelling assistant (based on condensation product of a higher aliphatic amine and ethylene oxide) and 6 parts of sodium acetate are added. The pH is then adjusted to 4.5 using acetic acid (80%). The dyebath is heated to 50°C for 10 minutes and then entered with 100 parts of a woven polyamide fabric. The temperature is raised to 110°C over the course of 50 minutes and then dyeing is carried out at this temperature for 60 minutes. This is followed by cooling to 60°C and removal of the dyed material. The polyamide fabric is washed with hot and cold water, soaped and then spun and dried. The brown dyeings obtained have very good light and wet fastness and also good levelness in the fibre.

### Dyeing example 4

A textile fabric consisting of mercerized cotton is padded with liquor containing 35 g/l of calcium sodium carbonate, 100 g/l of urea and 150 g/l of a low-viscosity sodium alginate solution (6%), and then dried. The liquor pickup is 70%. The textile thus pretreated is printed with an aqueous ink containing 2% of the dye I² of this invention, 20% of sulfolane, 0.01% of Mergal K9N and 77.99% of water using a drop-on-demand (bubblejet) ink-jet printing head. The print is fully dried. It is fixed by means of saturated steam at 102°C for 8 minutes. The print is then rinsed warm, subject to a fastness wash with hot water at 95°C, rinsed warm and then dried. The obtained print has very good overall fastness properties.

## Claims

1. Chemical compound according to formula (I) and mixtures thereof 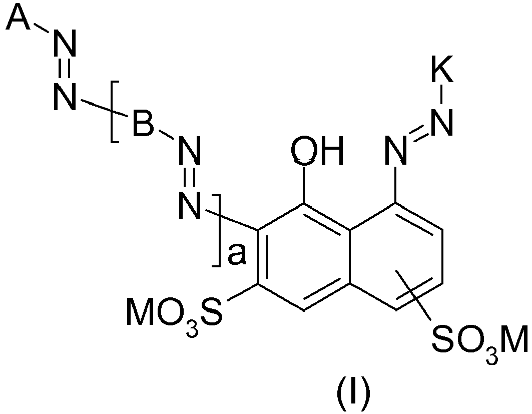 wherein,
A is a radical of diazo component as described below; and
B is a radical of middle component as described below; and
K is a radical of coupling component as described below; and
a = 0 or 1; and
with the general proviso that dyes of general formula (I) contain at least one reactive anchor, A is a radical of general formula (1 a) 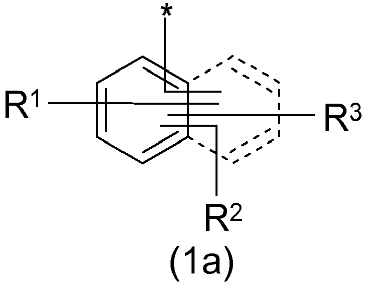
wherein,
each of R¹ to R³, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) 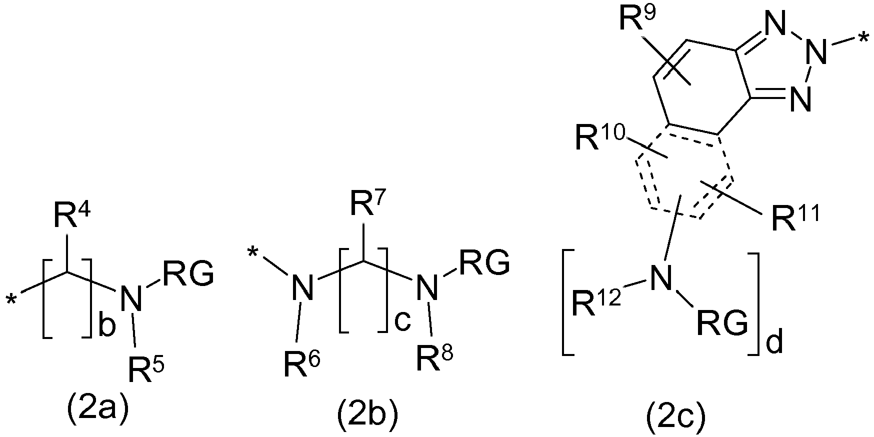
wherein,
each of R⁴ and R⁷, independent of each other is hydrogen, halogen, alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R⁵, R⁶, R⁸ and R¹², independent of each other is hydrogen, alkyl or aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R⁹, R¹⁰ and R¹¹, independent of each other is hydrogen, halogen, alkyl, alkoxy or SO₃M; and
b is an integer of 0 to 6; and
c is an integer of 1 to 6; and
when each of b and c, independent of each other is ≥ 2, R⁴ and R⁷ can have different meanings within the same rest as per meaning above defined; and
d is 0 or 1; and
RG is a reactive anchor of general formula (3a), (3b) or (3c); 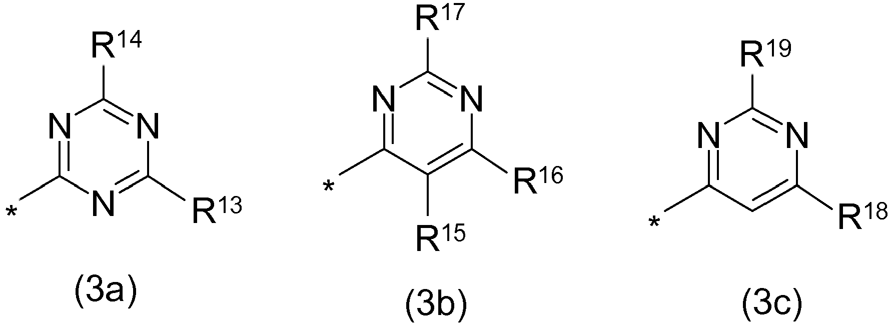
wherein,
each of R¹⁴ to R¹⁹, independent of each other is halogen; and
R¹⁴ can additionally be a rest of formula (8a) 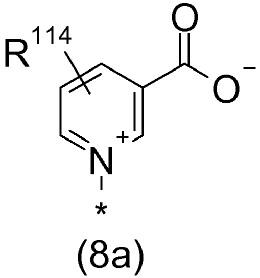
wherein,
R¹¹⁴ is hydrogen, halogen, alkyl, alkoxy, thioalkoxy, hydroxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R¹³ is one of the groups selected from general formula (4a) or (4b); 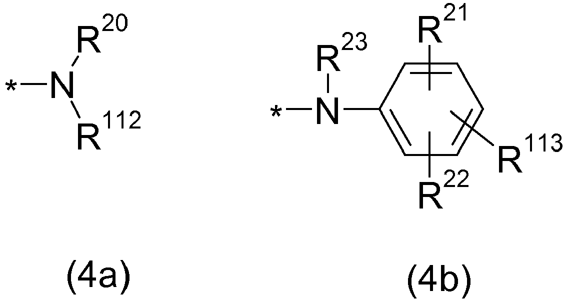
wherein,
each of R²⁰, R²³ and R¹¹², independent of each other is hydrogen, alkyl, cycloalkyl or aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
each of R²¹, R²² and R¹¹³, independent of each other is hydrogen, halogen, alkyl, N-acylamino, alkoxy, thioalkoxy, hydroxy, cyano, alkoxycarbonyl, alkoxythiocarbonyl, acyl, thioacyl, aryloyl, sulfamoyl, trifluoromethyl, acyloxy, aryloyloxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R¹¹² can additionally be -CH₂CH₂-SO₂-X, where X is vinyl or a radical - CH₂CH₂-Y where Y is a group removable under alkaline conditions such as OSO₃M, SSO₃M, OCOCH₃, OPO₃M or halogen; and
R¹¹³ can additionally be -SO₂-X where X is the same as defined above.
B is a radical of general formula (5a) 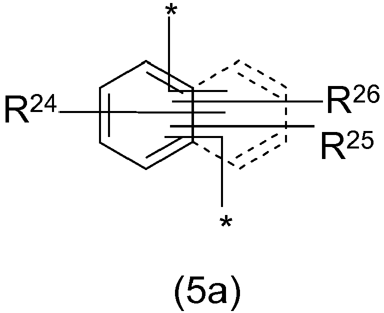
wherein,
each of R²⁴ to R²⁶, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) 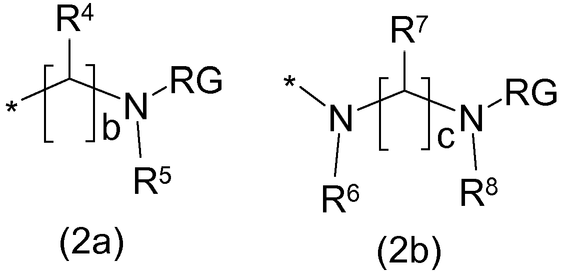
where R⁴ to R⁸, b, c and RG are the same as defined above.
K is a radical of general formula (6a), (6b) or (6c) 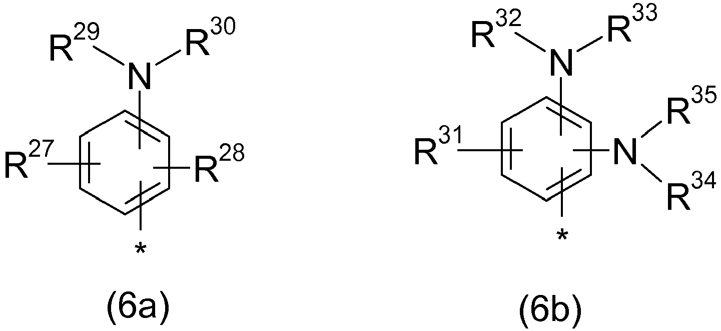 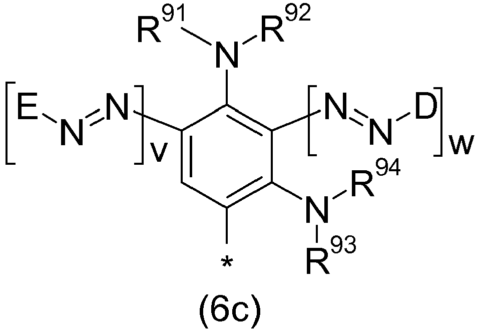
wherein,
each of R²⁷, R²⁸ and R³¹, independent of each other is hydrogen, halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; and
each of R²⁹, R³⁰, R³², R³³, R³⁴ and R³⁵, independent of each other is hydrogen, alkyl, alkenyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined above; or
is a rest of the general formula (7a) 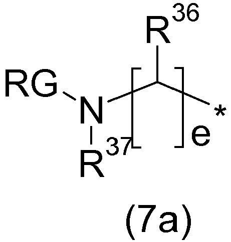
wherein,
RG is the same as defined above; and
R³⁶ is hydrogen, halogen, alkyl, N-acylamino, alkoxy, thioalkoxy, hydroxy, cyano, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
R³⁷ is hydrogen, alkyl or aryl; or
is alkyl substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N-acylamino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy or aryloyloxy; and
e is an integer of 1 to 6; and when e is ≥ 2, R³⁶ can have different meanings winthin the same rest as per meaning defined above,
each of R⁹¹ to R⁹⁴, independent of each other is hydrogen, alkyl, alkenyl, cycloalkyl or heterocycloalkyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a rest of the general formula (7a) as defined above; and
each of D and E, independent of each other is a diazo component of general formula (1 a) where (1 a) is the same as defined above; and
v is 0 or 1; and w is 0 or 1; and v+w is 1 or 2.

2. Chemical compound according to claim 1 having formula (Ia): 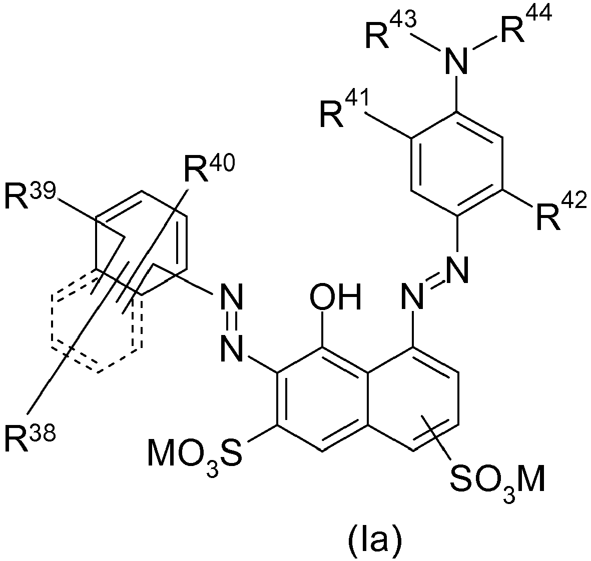 wherein,
each of R³⁸ to R⁴⁰, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined in claim 1; and
each of R⁴¹ and R⁴², independent of each other is hydrogen, halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; and
each of R⁴³ and R⁴⁴, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined in claim 1; or
is a rest of the general formula (7a) as defined in claim 1.

3. Chemical compound according to claim 1 having formula (Ib): 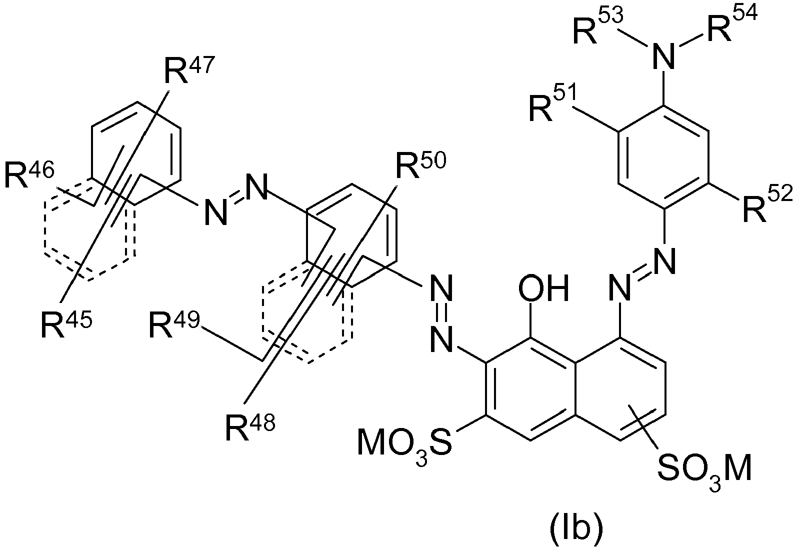 wherein,
each of R⁴⁵ to R⁵⁰, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined in claim 1 ;and
each of R⁴⁵ to R⁴⁷, independent of each other can additionally be a group of general formula (2c) as defined in claim 1; and
each of R⁵¹ and R⁵², independent of each other is hydrogen, halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; and
each of R⁵³ and R⁵⁴, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined in claim 1; or
is a rest of the general formula (7a) as defined in claim 1.

4. Chemical compound according to claim 1 having formula (Ic): 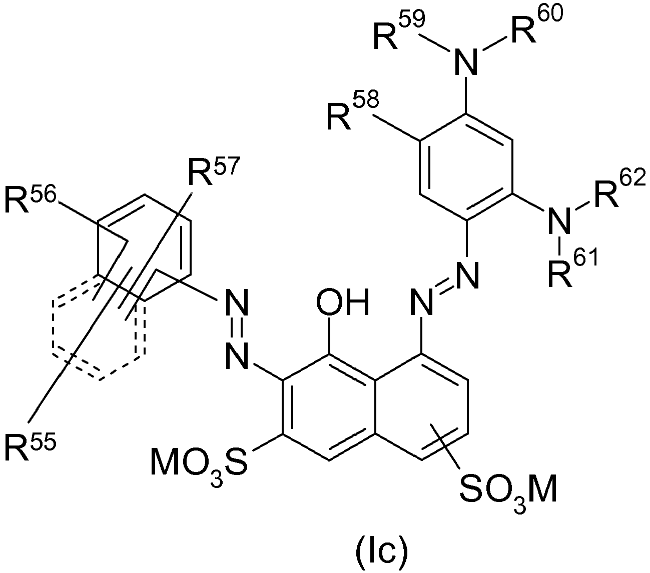 wherein,
each of R⁵⁵ to R⁵⁷, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined in claim 1; and
R⁵⁸ is halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; and
each of R⁵⁹ to R⁶², independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined in claim 1; or
is a rest of the general formula (7a) as defined in claim 1.

5. Chemical compound according to claim 1 formula (Id): 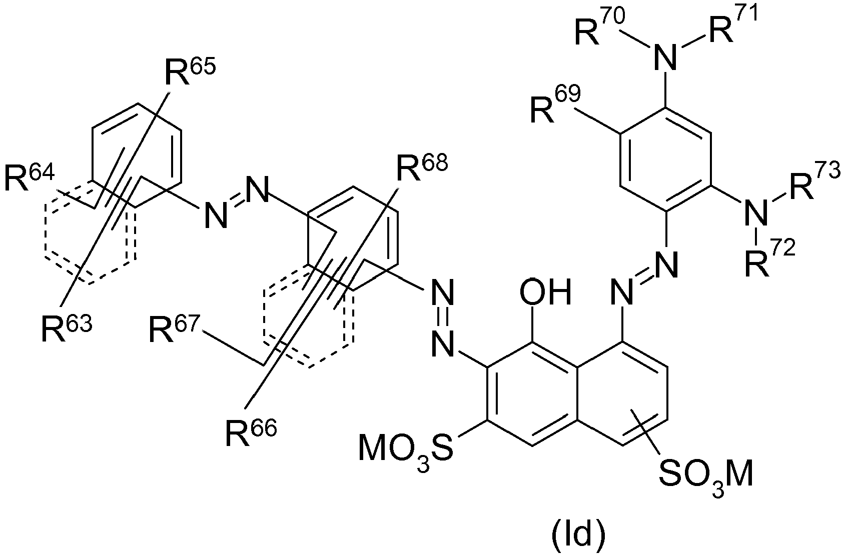 wherein,
each of R⁶³ to R⁶⁸, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined in claim 1; and
each of R⁶³ to R⁶⁵, independent of each other can additionally be a group of general formula (2c) as defined in claim 1; and
R⁶⁹ is halogen, alkyl, alkoxy, thioalkoxy, hydroxy, cyano, nitro, alkoxycarbonyl, alkoxythiocarbonyl, ureido, alkylureido, phenylureido, sulfamoyl, acyl, thioacyl, aryloyl, trifluoromethyl, acyloxy, aryloyloxy, carbamoyl, cycloalkyl, aryl, heteroaryl, heterocycloalkyl, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; and
each of R⁷⁰ to R⁷³, independent of each other is hydrogen, alkyl, acyl, thioacyl, aryloyl, cycloalkyl, aryl, heteroaryl, heterocycloalkyl or cinnamoylamino; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined in claim 1; or
is a rest of the general formula (7a) as defined in claim 1.

6. Chemical compound according to claim 1 having formula (Ie): 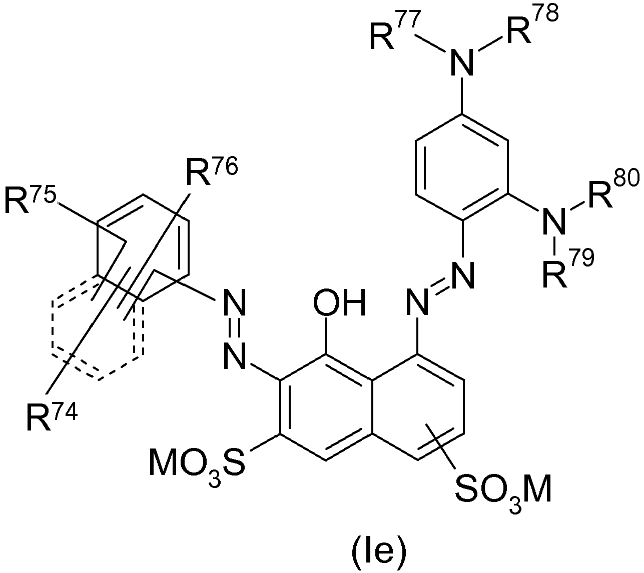 wherein,
each of R⁷⁴ to R⁷⁶, independent of each other is hydrogen, halogen, alkyl, N-acylamino, alkoxy, thioalkoxy, hydroxy, cyano, nitro, alkoxycarbonyl, alkoxythiocarbonyl, , acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined in claim 1; and
each of R⁷⁷ to R⁸⁰, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined in claim 1; or
is a rest of the general formula (7a) as defined in claim 1.

7. Chemical compound according to claim 1 having formula (If): 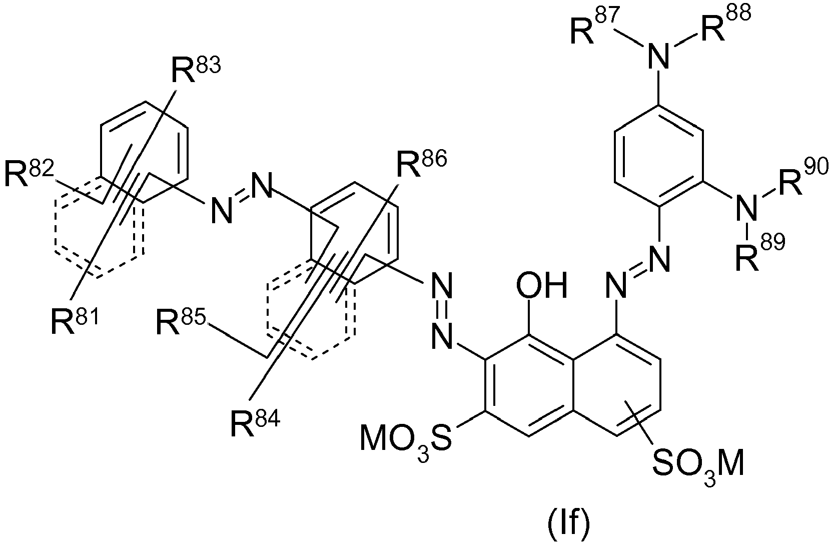 wherein,
each of R⁸¹ to R⁸⁶, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined in claim 1 ;and
each of R⁸¹ to R⁸³, independent of each other can additionally be a group of general formula (2c) as defined in claim 1; and
each of R⁸⁷ to R⁹⁰, independent of each other is hydrogen, alkyl, acyl, thioacyl, aryloyl, cycloalkyl, aryl, heteroaryl, heterocycloalkyl or cinnamoyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkyl-carbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a reactive anchor RG, where RG is the same as defined in claim 1; or
is a rest of the general formula (7a) as defined in claim 1.

8. Chemical compound according to claim 1 having formula (Ig): 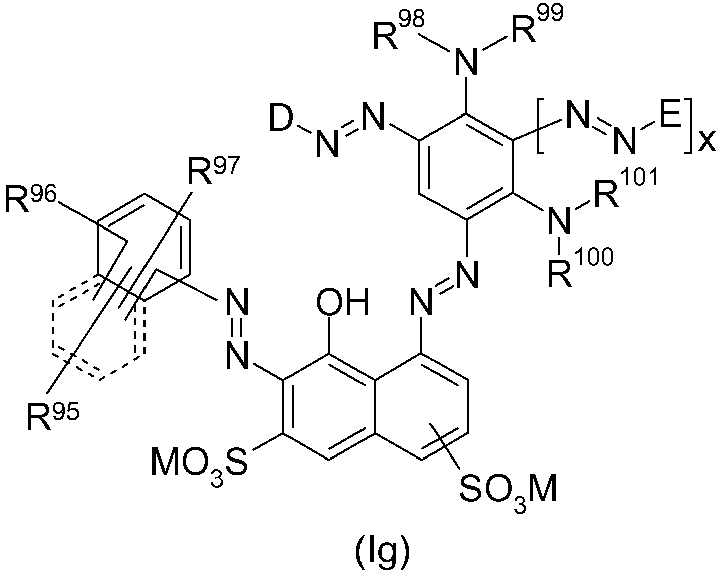 wherein,
each of R⁹⁵ to R⁹⁷, independent of each other is hydrogen, halogen, alkyl, N-acylamino, alkoxy, thioalkoxy, hydroxy, cyano, nitro, alkoxycarbonyl, alkoxythiocarbonyl, , acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a), (2b) or (2c) as defined in claim 1; and
each of R⁹⁸ to R¹⁰¹, independent of each other is hydrogen, alkyl, alkenyl, cycloalkyl or heterocycloalkyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a rest of the general formula (7a) as defined in claim 1; and
each of D and E, independent of each other is a diazo component of general formula (1 a) as defined in claim 1; and
x is 0 or 1.

9. Chemical compound according to claim 1 having formula (Ih): 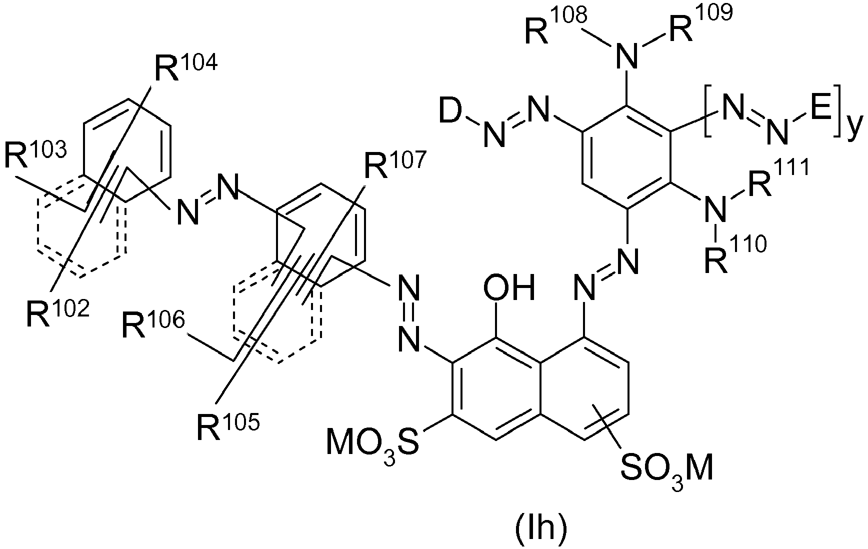 wherein,
each of R¹⁰² to R¹⁰⁷, independent of each other is hydrogen, halogen, alkyl, N-acylamino, alkoxy, thioalkoxy, hydroxy, cyano, nitro, alkoxycarbonyl, alkoxythiocarbonyl, acyl, thioacyl, aryloyl, trifluoromethyl, acyloxy, aryloyloxy, cycloalkyl, aryl, heteroaryl, heterocycloalkyl, N-cinnamoylamino, SO₃M or COOM; or
is alkyl substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is alkyl interrupted by one or more heteroatoms such as oxygen or sulphur and substituted by one or more substituents selected from the group consisting of hydroxy, aryl, cycloalkyl, alkoxy, thioalkoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy; or
is SO₂-X, where X is vinyl or a radical -CH₂CH₂-Y and Y is a group removable under alkaline conditions such as OSO₃M, SSO₃M, OCOCH₃, OPO₃M or halogen; or
is a group of general formula (2a) or (2b) as defined in claim 1 ;and
each of R¹⁰² to R¹⁰⁴, independent of each other can additionally be a group of general formula (2c) as defined in claim 1; and
each of R¹⁰⁸ to R¹¹¹, independent of each other is hydrogen, alkyl, alkenyl, cycloalkyl or heterocycloalkyl; or
is alkyl substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is alkyl interrupted by one or more heteroatoms such as oxygen or sulphur and substituted by one or more substituents selected from the group consisting of hydroxy, aryl, cycloalkyl, alkoxy, thioalkoxy, amino, N-monoalkyl-amino, N,N-dialkyl-amino, N-monoaryl-amino, N,N-diaryl-amino, N-alkyl-N-aryl-amino, N-monocycloalkyl-amino, N,N-dicycloalkyl-amino, N-monoalkyl-N-monocycloalkyl-amino, N-monoaryl-N-monocycloalkyl-amino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonyl-amino, ureido, alkylureido, phenylureido, halogen, cyano, SO₃M, COOM, nitro, acyl, thioacyl, alkylsulfonyl, aryloyl, trifluoromethyl, heteroaryl, heterocycloalkyl, alkoxycarbonyl, alkoxythiocarbonyl, acyloxy, aryloyloxy, carbamoyl, N-monocycloalkyl-carbamoyl, N-monoalkyl-carbamoyl, N,N-dicycloalkyl-carbamoyl, N,N-dialkylcarbamoyl, N-monoaryl-carbamoyl, N,N-diaryl-carbamoyl, N-monocycloalkyl-N-monoarylcarbamoyl, N-monoalkyl-N-monoaryl-carbamoyl, sulfamoyl, N-monocycloalkyl-sulfamoyl, N-monoalkyl-sulfamoyl, N,N-dicycloalkyl-sulfamoyl, N,N-dialkyl-sulfamoyl, N-monoaryl-sulfamoyl, N,N-diaryl-sulfamoyl, N-monocycloalkyl-N-monoarylsulfamoyl or N-monoalkyl-N-monoarylsulfamoyl; or
is a rest of the general formula (7a) as defined in claim 1; and
each of D and E, independent of each other is a diazo component of general formula (1 a) as defined in claim 1; and
y is 0 or 1.

10. Chemical composition consisting of two or more chemical compounds according to any one of claims 1 to 8.

11. Chemical composition comprising one or more chemical compounds according to any one of claims 1 to 8.

12. Aqueous solution for dying comprising one or more chemical compounds according to any one of claims 1 to 8.

13. Process for producing chemical compounds according to claim 1 comprising the steps:
a) diazotizing compounds of formula (II),
b) reacting the diazonium salts obtained in step a) with a compound of formula K to obtain an intermediate of formula (III) 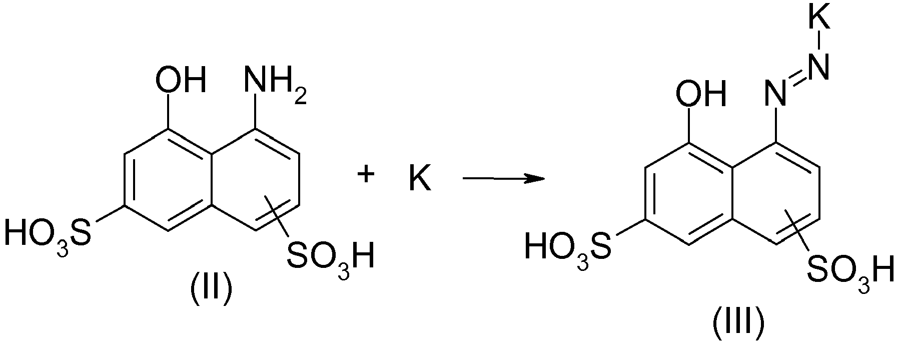
c) diazotizing component (A-NH₂),
cx1) optionally coupling the diazotized product of step c) onto the compound (B-NH₂) and
cx2) diazotizing the coupling product of step cx1)
d) coupling the diazotized product of step c) onto the intermediate III to obtain the bisazo-product of general formula (IV) in case of step c) 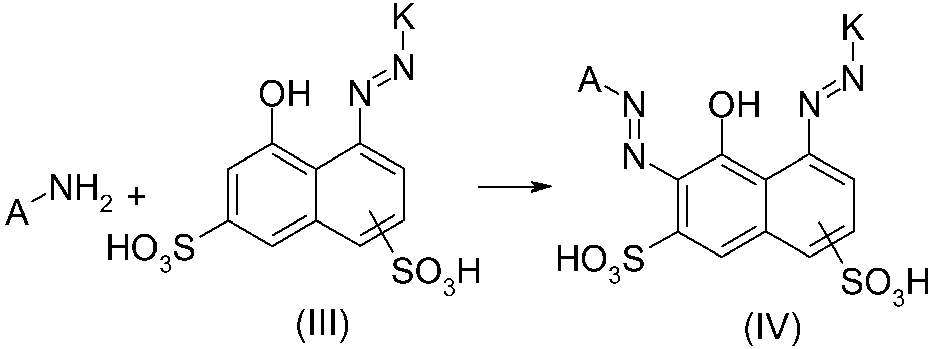 or coupling the diazotized coupling product of cx2) onto the intermediate III to obtain the trisazo-product of general formula (VI),

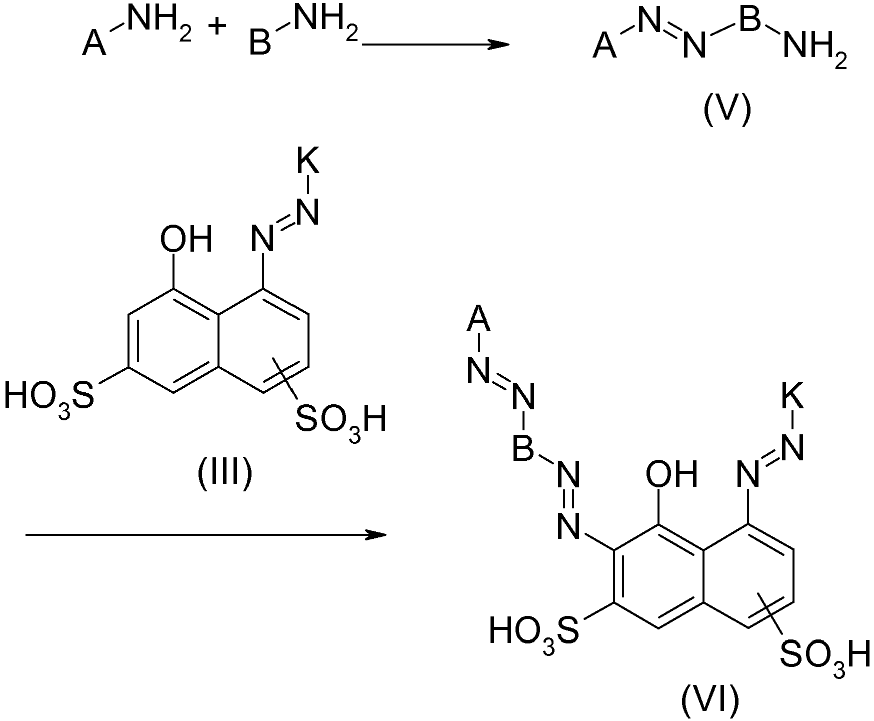

14. Use of a chemical compound according to any one of claims 1 to 8, a chemical composition according to claim 9 or 10 or of an aqueous solution according to claim 11 for dying fibers, as well as blends of such fibres selected from the group consisting of: vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers; and synthetic fiber materials, nylon materials, nylon-6, nylon-6.6 and aramid fibres.

15. Fiber and blends containing such fiber selected from the group consisting of: vegetable fibres, seed fibres, cotton, organic cotton, kapok, coir from coconut husk; bast fibers, flax, hemp, jute, kenaf, ramie, rattan; leaf fibres, sisal, henequen, banana; stalk fibres, bamboo; fibres from animals, wool, organic wool, silk, cashmere wool, alpaca fiber, mohair, Angora fibre as well as fur and leather materials; manufactured, regenerated and recycled fibres, cellulosic fibres; paper fibres, cellulosic regenerated fibres, viscose rayon fibres, acetate and triacetate fibers and Lyocell fibers; and synthetic fiber materials, nylon materials, nylon-6, nylon-6.6 and aramid fibres comprising one or more chemical compounds according to any one of claims 1 to 8 either in chemically and/or physically bound form.

## Patentansprüche

1. Chemische Verbindung gemäß Formel (I) und Mischungen davon 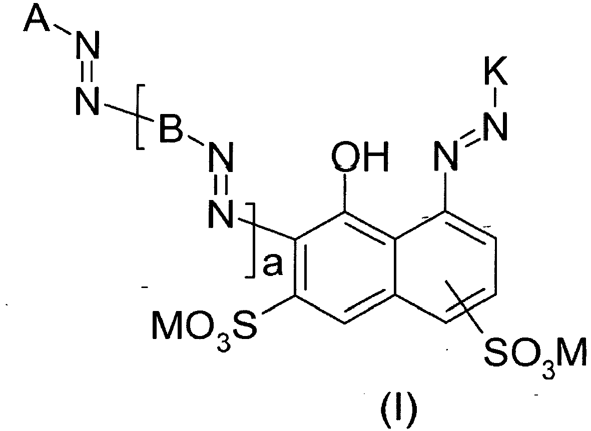 wobei
A für einen Diazokomponentenrest gemäß nachstehender Beschreibung steht; und
B für einen Mittelkomponentenrest gemäß nachstehender Beschreibung steht; und
K für einen Kupplungskomponentenrest gemäß nachstehender Beschreibung steht; und
a = 0 oder 1; und
mit der allgemeinen Maßgabe, dass Farbstoffe der allgemeinen Formel (I) mindestens einen reaktiven Anker enthalten,
A für einen Rest der allgemeinen Formel (1a) 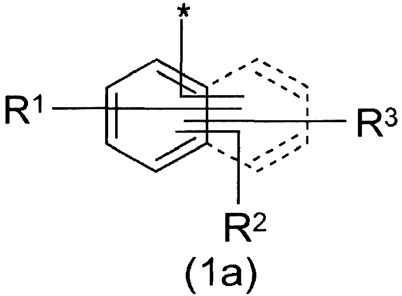
steht, wobei
R¹ bis R³ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,-N-Triarylammonium, N,N-Dialkyl-N-monoarylammonium, N,N-Diaryl-N-mono-alkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht; oder
für eine Gruppe der allgemeinen Formel (2a), (2b) oder (2c) 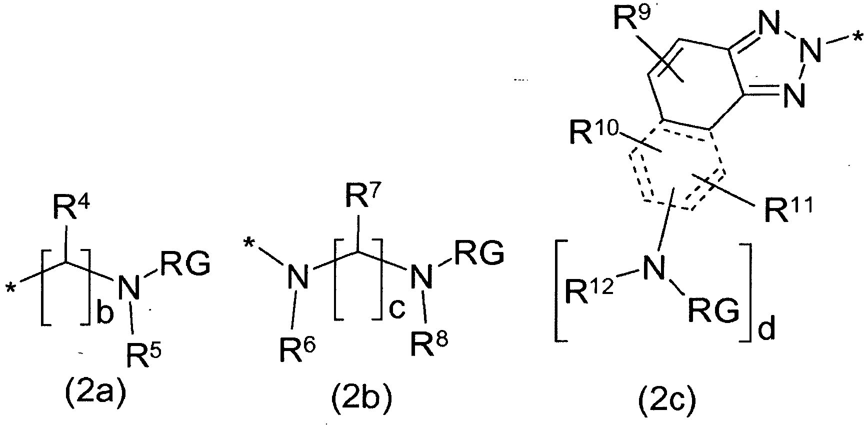
stehen, wobei
R⁴ und R⁷ jeweils unabhängig voneinander für Wasserstoff, Halogen, Alkyl, N-Acylamino, Alkoxy, Thioalkoxy, Hydroxy, Cyano, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen und
R⁵, R⁶, R⁸ und R¹² jeweils unabhängig voneinander für Wasserstoff, Alkyl oder Aryl stehen oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder_ mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen und
R⁹, R¹⁰ und R¹¹ jeweils unabhängig voneinander für Wasserstoff, Halogen, Alkyl, Alkoxy oder SO₃M stehen und
b für eine ganze Zahl von 0 bis 6 steht und
c für eine ganze Zahl von 1 bis 6 steht und
dann, wenn b und c jeweils unabhängig voneinander
≥ 2 sind, R⁴ und R⁷ verschiedene Bedeutungen innerhalb des gleichen Rests gemäß obiger Definition haben können und
d für 0 oder 1 steht; und
RG für einen reaktiven Anker der allgemeinen Formel (3a), (3b) oder (3c) 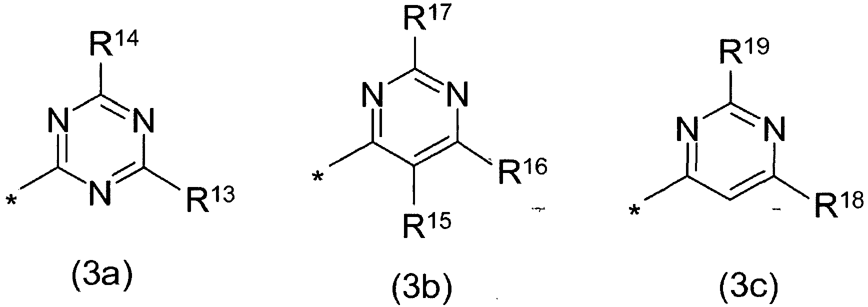
steht, wobei
R¹⁹ bis R¹⁹ jeweils unabhängig voneinander für Halogen stehen und
R¹⁴ auch für einen Rest der Formel (8a) 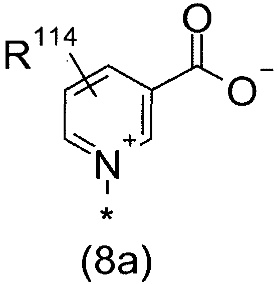
stehen kann, wobei
R¹¹⁴ für Wasserstoff, Halogen, Alkyl, Alkoxy, Thioalkoxy, Hydroxy, Cycloalkyl, Aryl, Heteroaryl, Heterocycloalkyl, SO₃M oder COOM steht oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, steht oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, steht und
R¹³ für eine der Gruppen, die aus der allgemeinen Formel (4a) oder (4b) 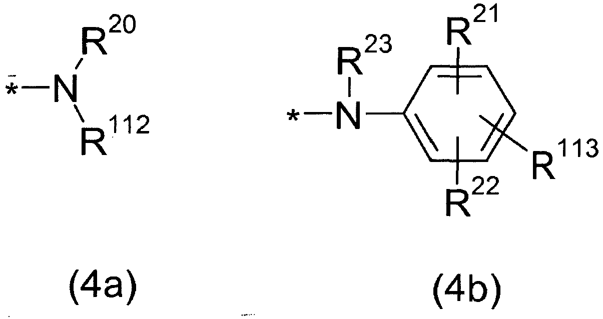
ausgewählt ist, steht, wobei
R²⁰, R²³ und R¹¹² jeweils unabhängig voneinander für Wasserstoff, Alkyl, Cycloalkyl oder Aryl stehen oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl,- Trifluormethyl, Heteroaryl, Heterocycloalkyl, Alkoxycarbonyl, Alkoxythiocarbonyl, Acyloxy und Aryloyloxy substituiert ist, stehen und
R²¹, R²² und R¹¹³ jeweils unabhängig voneinander für Wasserstoff, Halogen, Alkyl, N-Acylamino, Alkoxy, Thioalkoxy, Hydroxy, Cyano, Alkoxycarbonyl, Alkoxythiocarbonyl, Acyl, Thioacyl, Aryloyl, Sulfamoyl, Trifluormethyl, Acyloxy, Aryloyloxy, Cycloalkyl, Aryl, Heteroaryl, Heterocycloalkyl, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen und
R¹¹² auch für -CH₂CH₂-SO₂-X stehen kann, wobei X für Vinyl oder einen Rest -CH₂CH₂-Y steht, wobei Y für eine unter alkalischen Bedingungen abspaltbare Gruppe wie OSO₃M, SSO₃M, OCOCH₃, OPO₃M oder Halogen steht und
R¹¹³ auch für -SO₂-X, wobei X wie oben definiert ist, stehen kann,
B für einen Rest der allgemeinen Formel (5a) 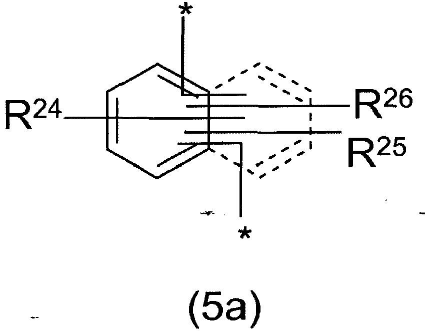
steht, wobei
R²⁴ bis R²⁶ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-mono-alkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht, oder
für eine Gruppe der allgemeinen Formel (2a) oder (2b) 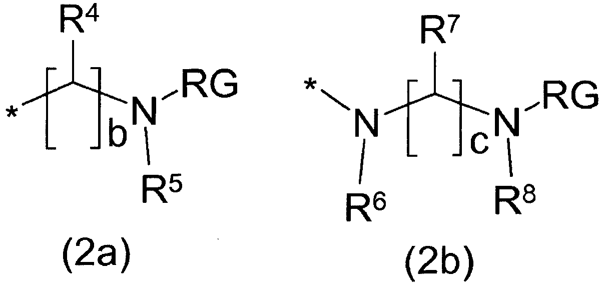
stehen, wobei R⁴ bis R⁸, b, c und RG wie oben definiert sind;
K für einen Rest der allgemeinen Formel (6a), (6b) oder (6c) 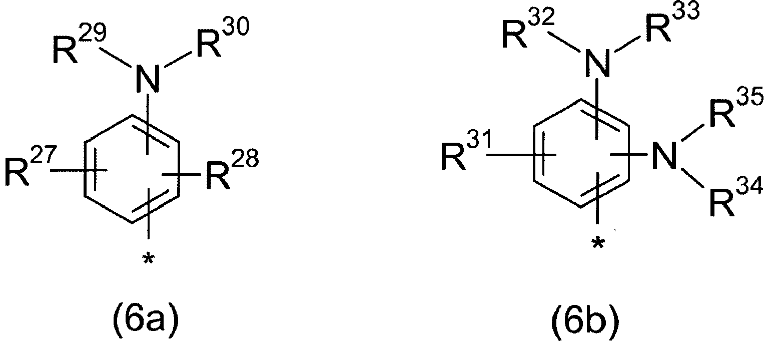 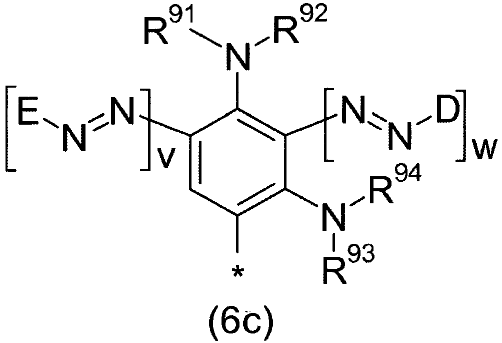
steht, wobei
R²⁷, R²⁸ und R³¹ jeweils unabhängig voneinander für Wasserstoff, Halogen, Alkyl, Alkoxy, Thioalkoxy, Hydroxy, Cyano, Nitro, Alkoxycarbonyl, Alkoxythiocarbonyl, Ureido, Alkylureido, Phenylureido, Sulfamyl, Acyl, Thioacyl, Aryloyl, Trifluormethyl, Acyloxy, Aryloyloxy, Carbamoyl, Cyclo-alkyl, Aryl, Heteroaryl, Heterocycloalkyl, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-mono-alkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen und
R²⁹, R³⁰, R³², R³³, R³⁴ und R³⁵ jeweils unabhängig voneinander für Wasserstoff, Alkyl, Alkenyl, Acyl, Thioacyl, Aryloyl, Cycloalkyl, Aryl, Heteroaryl, Heterocycloalkyl oder Cinnamoyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie oben definiert ist; oder
für einen Rest der allgemeinen Formel (7a) 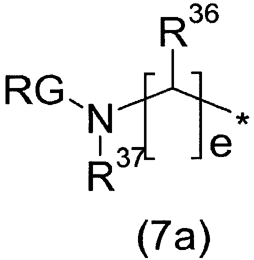
stehen, wobei
RG wie oben definiert ist und
R³⁶ für Wasserstoff, Halogen, Alkyl, N-Acylamino, Alkoxy, Thioalkoxy, Hydroxy, Cyano, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, SO₃M oder COOM steht oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, steht oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, steht und
R³⁷ für Wasserstoff, Alkyl oder Aryl steht oder
für Alkyl, das durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, steht oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N-Acylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, steht und
e für eine ganze Zahl von 1 bis 6 steht und dann, wenn e ≥ 2 ist, R³⁶ verschiedene Bedeutungen innerhalb des gleichen Rests gemäß obiger Definition haben kann,
R⁹¹ bis R⁹⁴ jeweils unabhängig voneinander für Wasserstoff, Alkyl, Alkenyl, Cycloalkyl oder Heterocycloalkyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen -oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, -N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen Rest der allgemeinen Formel (7a) gemäß obiger Definition stehen und
D und E jeweils unabhängig voneinander für eine Diazokomponente der allgemeinen Formel (1a) stehen, wobei (1a) wie oben definiert ist; und
v für 0 oder 1 steht und w für 0 oder 1 steht und v + w gleich 1 oder 2 ist.

2. Chemische Verbindung nach Anspruch 1 der Formel (Ia) : 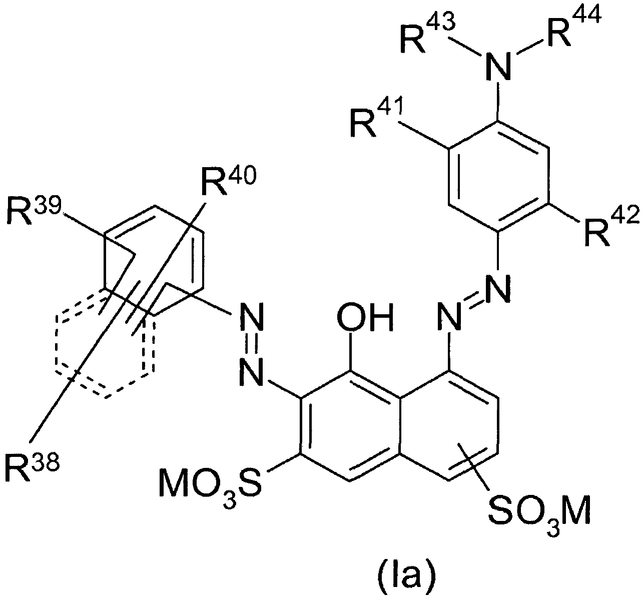 wobei
R³⁸ bis R⁴⁰ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht; oder
für eine Gruppe der allgemeinen Formel (2a), (2b) oder (2c) gemäß Anspruch 1 stehen und
R⁴¹ und R⁴² jeweils unabhängig voneinander für Wasserstoff, Halogen, Alkyl, Alkoxy, Thioalkoxy, Hydroxy, Cyano, Nitro, Alkoxycarbonyl, Alkoxythiocarbonyl, Ureido, Alkylureido, Phenylureido, Sulfamoyl, Acyl, Thioacyl, Aryloyl, Trifluormethyl, Acyloxy, Aryloyloxy, Carbamoyl, Cycloalkyl, Aryl, Heteroaryl, Heterocycloalkyl, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen und
R⁴³ und R⁴⁹ jeweils unabhängig voneinander für Wasserstoff, Alkyl, Acyl, Thioacyl, Aryloyl, Cycloalkyl, Aryl, Heteroaryl, Heterocycloalkyl oder Cinnamoyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie in Anspruch 1 definiert ist; oder
für einen Rest der allgemeinen Formel (7a) gemäß Anspruch 1 stehen.

3. Chemische Verbindung nach Anspruch 1 der Formel (Ib) : 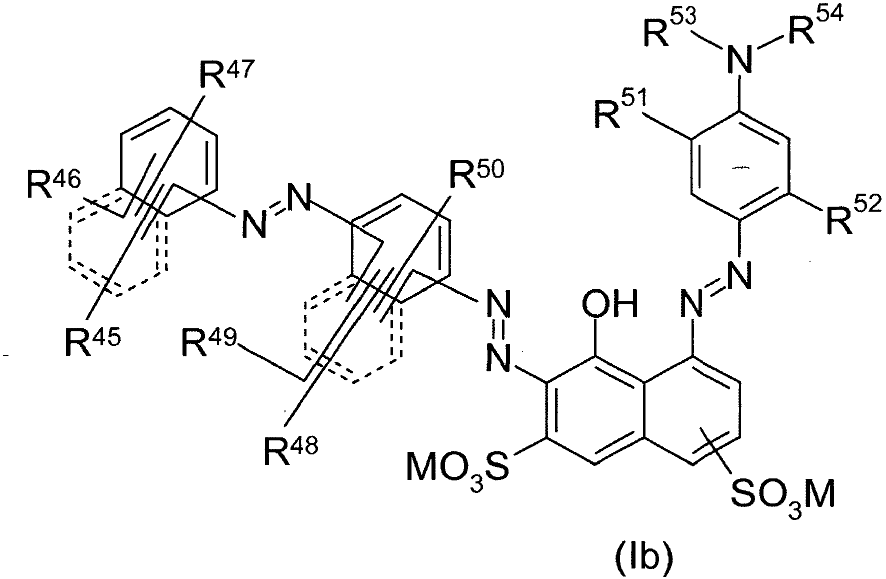 wobei
R⁴⁵ bis R⁵⁰ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht oder
für eine Gruppe der allgemeinen Formel (2a) oder (2b) gemäß Anspruch 1 stehen und
R⁴⁵ bis R⁴⁷ jeweils unabhängig voneinander zusätzlich für eine Gruppe der allgemeinen Formel (2c) gemäß Anspruch 1 stehen können und
R⁵¹ und R⁵² jeweils unabhängig voneinander für Wasserstoff, Halogen, Alkyl, Alkoxy, Thioalkoxy, Hydroxy, Cyano, Nitro, Alkoxycarbonyl, Alkoxythiocarbonyl, Ureido, Alkylureido, Phenylureido, Sulfamoyl, Acyl, Thioacyl, Aryloyl, Trifluormethyl, Acyloxy, Aryloyloxy, Carbamoyl, Cycloalkyl, Aryl, Heteroaryl, Heterocycloalkyl, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen und
R⁵³ und R⁵⁴ jeweils unabhängig voneinander für Wasserstoff, Alkyl, Acyl, Thioacyl, Aryloyl, Cycloalkyl, Aryl, Heteroaryl, Heterocycloalkyl oder Cinnamoyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie in Anspruch 1 definiert ist; oder
für einen Rest der allgemeinen Formel (7a) gemäß Anspruch 1 stehen.

4. Chemische Verbindung nach Anspruch 1 der Formel (Ic) : 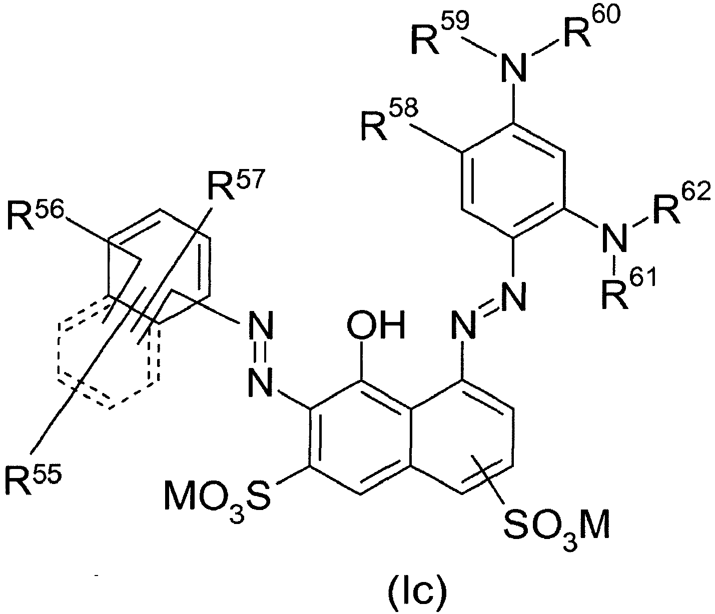 wobei
R⁵⁵ bis R⁵⁷ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht; oder
für eine Gruppe der allgemeinen Formel (2a), (2b) oder (2c) gemäß Anspruch 1 stehen und
R⁵⁸ für Halogen, Alkyl, Alkoxy, Thioalkoxy, Hydroxy, Cyano, Nitro, Alkoxycarbonyl, Alkoxythiocarbonyl, Ureido, Alkylureido, Phenylureido, Sulfamoyl, Acyl, Thioacyl, Aryloyl, Trifluormethyl, Acyloxy, Aryloyloxy, Carbamoyl, Cycloalkyl, Aryl, Heteroaryl, Heterocycloalkyl, SO₃M oder COOM steht oder
für Alkyl, das durch einen oder mehrere Substituenten aus der Gruppe bestehend aus Hydroxy, Aryl, Cycloalkyl, Alkoxy, Thioalkoxy, N,N,-N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, steht oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, steht und
R⁵⁹ bis R⁶² jeweils unabhängig voneinander für Wasserstoff, Alkyl, Acyl, Thioacyl, Aryloyl, Cycloalkyl, Aryl, Heteroaryl, Heterocycloalkyl oder Cinnamoyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie in Anspruch 1 definiert ist; oder
für einen Rest der allgemeinen Formel (7a) gemäß Anspruch 1 stehen.

5. Chemische Verbindung nach Anspruch 1 der Formel (Id) : 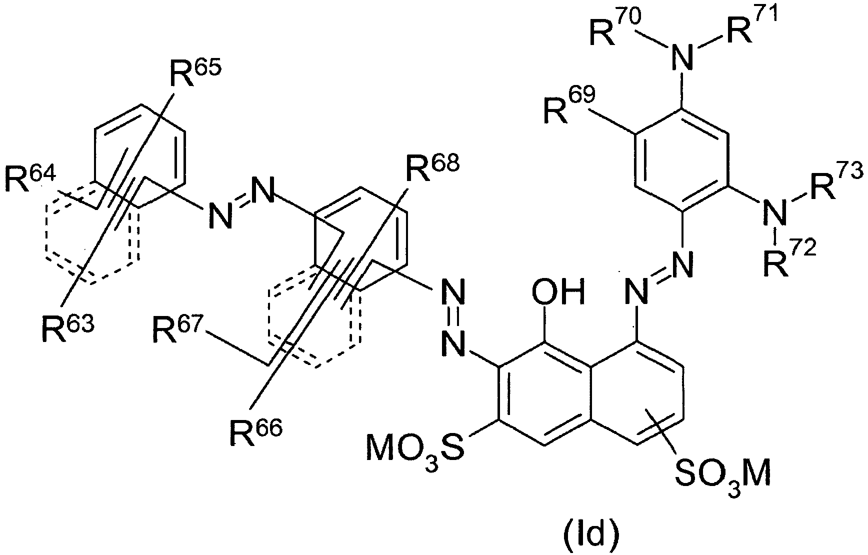 wobei
R⁶³ bis R⁶⁸ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht oder
für eine Gruppe der allgemeinen Formel (2a) oder (2b) gemäß Anspruch 1 stehen und
R⁶³ bis R⁶⁵ jeweils unabhängig voneinander zusätzlich für eine Gruppe der allgemeinen Formel (2c) gemäß Anspruch 1 stehen können und
R⁶⁹ für Halogen, Alkyl, Alkoxy, Thioalkoxy, Hydroxy, Cyano, Nitro, Alkoxycarbonyl, Alkoxythiocarbonyl, Ureido, Alkylureido, Phenylureido, Sulfamoyl, Acyl, Thioacyl, Aryloyl, Trifluormethyl, Acyloxy, Aryloyloxy, Carbamoyl, Cycloalkyl, Aryl, Heteroaryl, Heterocycloalkyl, SO₃M oder COOM steht oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, steht oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, steht und
R⁷⁰ bis R⁷³ jeweils unabhängig voneinander für Wasserstoff, Alkyl, Acyl, Thioacyl, Aryloyl, Cycloalkyl, Aryl, Heteroaryl, Heterocycloalkyl oder Cinnamoylamino stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie in Anspruch 1 definiert ist; oder
für einen Rest der allgemeinen Formel (7a) gemäß Anspruch 1 stehen.

6. Chemische Verbindung nach Anspruch 1 der Formel (Ie) : 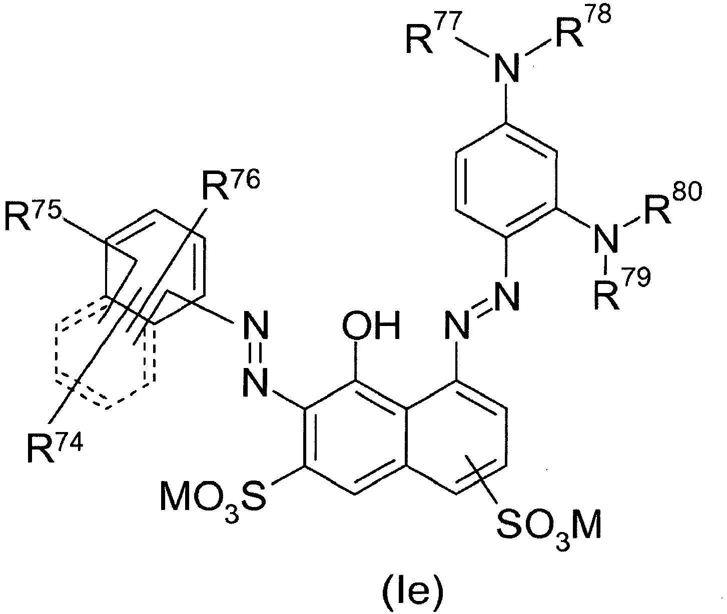 wobei
R⁷⁴ bis R⁷⁶ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht; oder
für eine Gruppe der allgemeinen Formel (2a), (2b) oder (2c) gemäß Anspruch 1 stehen und
R⁷⁷ bis R⁸⁰ jeweils unabhängig voneinander für Wasserstoff, Alkyl, Acyl, Thioacyl, Aryloyl, Cycloalkyl, Aryl, Heteroaryl, Heterocycloalkyl oder Cinnamoyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie in Anspruch 1 definiert ist; oder
für einen Rest der allgemeinen Formel (7a) gemäß Anspruch 1 stehen.

7. Chemische Verbindung nach Anspruch 1 der Formel (If): 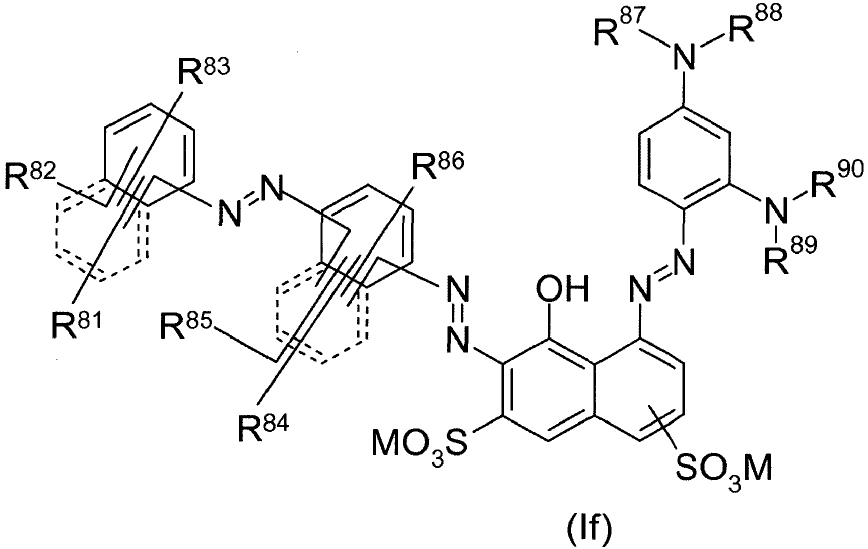 wobei
R⁸¹ bis R⁸⁶ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht oder
für eine Gruppe der allgemeinen Formel (2a) oder (2b) gemäß Anspruch 1 stehen und
R⁸¹ bis R⁸³ jeweils unabhängig voneinander zusätzlich für eine Gruppe der allgemeinen Formel (2c) gemäß Anspruch 1 stehen können und
R⁸⁷ bis R⁹⁰ jeweils unabhängig voneinander für Wasserstoff, Alkyl, Acyl, Thioacyl, Aryloyl, Cycloalkyl, Aryl, Heteroaryl, Heterocycloalkyl oder Cinnamoyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen reaktiven Anker RG stehen, wobei RG wie in Anspruch 1 definiert ist; oder
für einen Rest der allgemeinen Formel (7a) gemäß Anspruch 1 stehen.

8. Chemische Verbindung nach Anspruch 1 der Formel (Ig) : 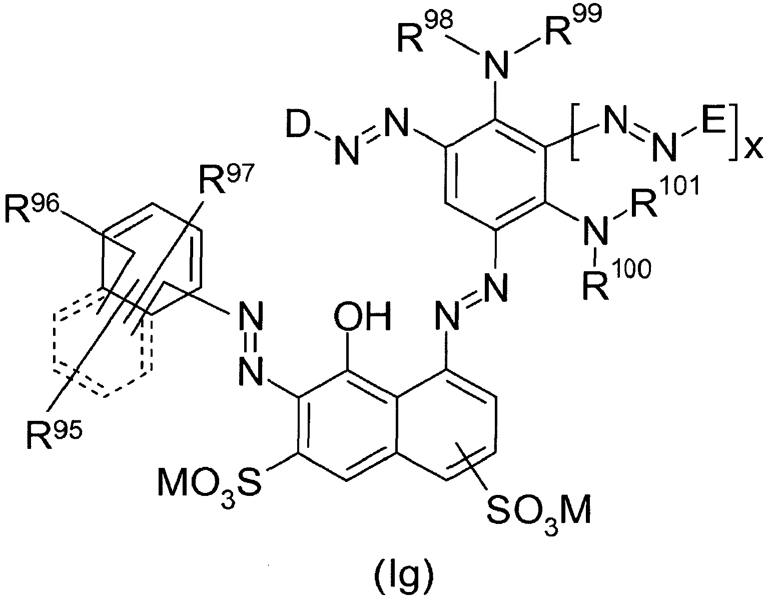 wobei
R⁹⁵ bis R⁹⁷ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht oder
für eine Gruppe der allgemeinen Formel (2a), (2b) oder (2c) gemäß Anspruch 1 stehen und
R⁹⁸ bis R¹⁰¹ jeweils unabhängig voneinander für Wasserstoff, Alkyl, Alkenyl Cycloalkyl oder Heterocycloalkyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen Rest der allgemeinen Formel (7a) gemäß Anspruch 1 stehen und
D und E jeweils unabhängig voneinander für eine Diazokomponente der allgemeinen Formel (1a) gemäß Anspruch 1 stehen und
x für 0 oder 1 steht.

9. Chemische Verbindung nach Anspruch 1 der Formel (Ih) : 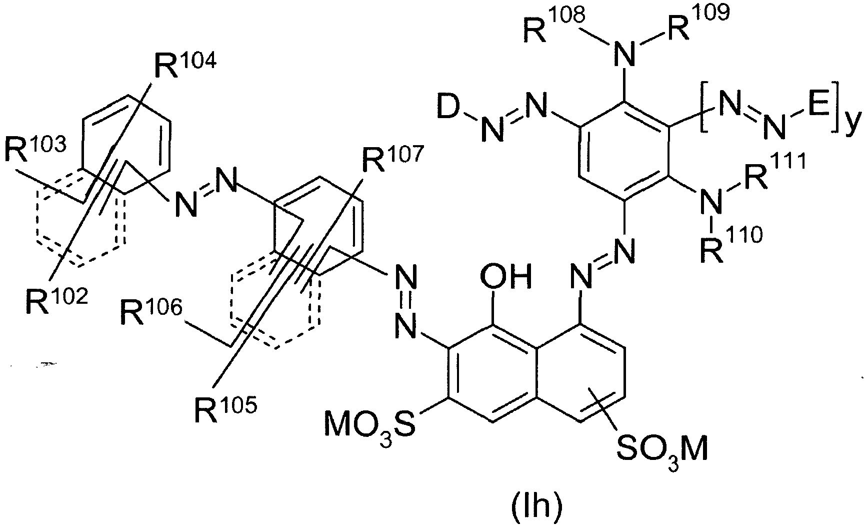 wobei
R¹⁰² bis R¹⁰⁷ jeweils unabhängig voneinander für Wasserstoff, Halogen, Alkyl, N-Acylamino, Alkoxy, Thioalkoxy, Hydroxy, Cyano, Nitro, Alkoxycarbonyl, Alkoxythiocarbonyl, Acyl, Thioacyl, Aryloyl, Trifluormethyl, Acyloxy, Aryloyloxy, Cycloalkyl, Aryl, Heteroaryl, Heterocycloalkyl, N-Cinnamoylamino, SO₃M oder COOM stehen oder
für Alkyl, das durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy und Aryloyloxy substituiert ist, stehen oder
für SO₂-X stehen, wobei X für Vinyl oder einen Rest -CH₂CH₂-Y steht und Y für eine unter alkalischen Bedingungen abspaltbare Gruppe wie OSO₃M, SSO₃M, OCOCH₃, OPO₃M oder Halogen steht; oder
für eine Gruppe der allgemeinen Formel (2a) oder (2b) gemäß Anspruch 1 stehen und
R¹⁰² bis R¹⁰⁴ jeweils unabhängig voneinander zusätzlich für eine Gruppe der allgemeinen Formel (2c) gemäß Anspruch 1 stehen können und
R¹⁰⁸ bis R¹¹¹ jeweils unabhängig voneinander für Wasserstoff, Alkyl, Alkenyl, Cycloalkyl oder Heterocycloalkyl stehen oder
für Alkyl, das durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für Alkyl, das durch ein oder mehrere Heteroatome wie Sauerstoff oder Schwefel unterbrochen und durch einen oder mehrere Substituenten aus der Gruppe bestehend aus Hydroxy, Aryl, Cycloalkyl, Alkoxy, Thioalkoxy, Amino, N-Monoalkylamino, N,N-Dialkylamino, N-Monoarylamino, N,N-Diarylamino, N-Alkyl-N-arylamino, N-Monocycloalkylamino, N,N-Dicycloalkylamino, N-Monoalkyl-N-monocycloalkylamino, N-Monoaryl-N-monocycloalkylamino, N,N,N-Trialkylammonium, N,N,N-Triarylammonium, N,N-Dialkyl-N-monoarylammonium, N,N-Diaryl-N-monoalkylammonium, N-Acylamino, N-Cinnamoylamino, N-Alkylsulfonylamino, Ureido, Alkylureido, Phenylureido, Halogen, Cyano, SO₃M, COOM, Nitro, Acyl, Thioacyl, Alkylsulfonyl, Aryloyl, Trifluormethyl, Heteroaryl, Heterocycloalkyl, Alkoxycarbonyl, Alkoxythiocarbonyl, Acyloxy, Aryloyloxy, Carbamoyl, N-Monocycloalkylcarbamoyl, N-Monoalkylcarbamoyl, N,N-Dicycloalkylcarbamoyl, N,N-Dialkylcarbamoyl, N-Monoarylcarbamoyl, N,N-Diarylcarbamoyl, N-Monocycloalkyl-N-monoarylcarbamoyl, N-Monoalkyl-N-monoarylcarbamoyl, Sulfamoyl, N-Monocycloalkylsulfamoyl, N-Monoalkylsulfamoyl, N,N-Dicycloalkylsulfamoyl, N,N-Dialkylsulfamoyl, N-Monoarylsulfamoyl, N,N-Diarylsulfamoyl, N-Monocycloalkyl-N-monoarylsulfamoyl oder N-Monoalkyl-N-monoarylsulfamoyl substituiert ist, stehen oder
für einen Rest der allgemeinen Formel (7a) gemäß Anspruch 1 stehen und
D und E jeweils unabhängig voneinander für eine Diazokomponente der allgemeinen Formel (1a) gemäß Anspruch 1 stehen und
y für 0 oder 1 steht.

10. Chemische Zusammensetzung, bestehend aus zwei oder mehr chemischen Verbindungen nach einem der Ansprüche 1 bis 8.

11. Chemische Zusammensetzung, umfassend eine oder mehrere chemische Verbindungen nach einem der Ansprüche 1 bis 8.

12. Wässrige Lösung zum Färben, umfassend eine oder mehrere chemische Verbindungen nach einem der Ansprüche 1 bis 8.

13. Verfahren zur Herstellung von chemischen Verbindungen nach Anspruch 1, das folgende Schritte umfasst:
a) Diazotieren von Verbindungen der Formel (II),
b) Umsetzen der in Schritt a) erhaltenen Diazoniumsalze mit einer Verbindung der Formel K zu einem Zwischenprodukt der Formel (III) 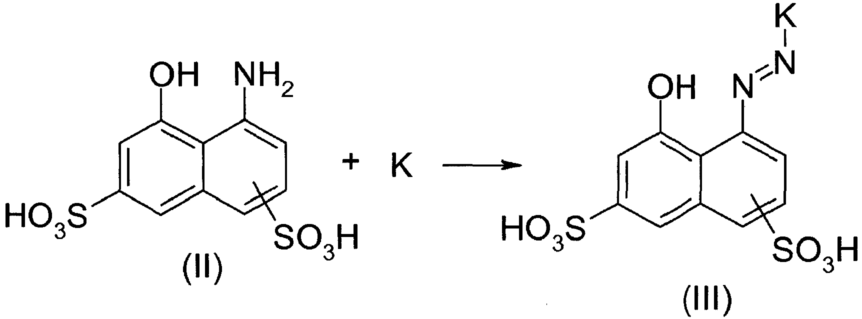
c) Diazotieren von Komponente (A-NH₂), cx1)
gegebenenfalls Kuppeln des diazotierten Produkts aus Schritt c) mit der Verbindung (B-NH₂) und
cx2) Diazotieren des Kupplungsprodukts aus Schritt cx1),
d) Kuppeln des diazotierten Produkts aus Schritt c) mit dem Zwischenprodukt III zu dem Bisazo-Produkt der allgemeinen Formel (IV) im Fall von Schritt c) 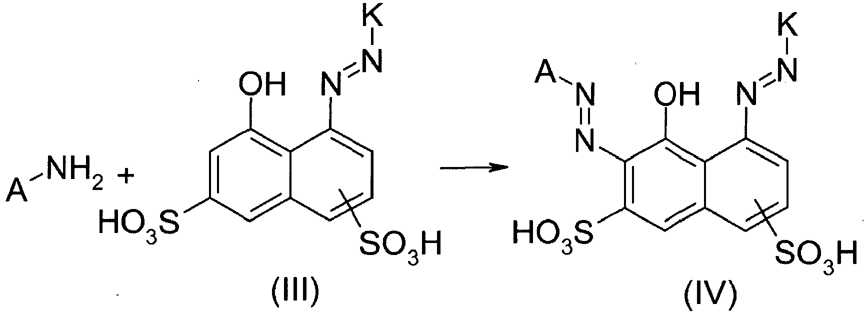 bzw. Kuppeln des diazotierten Kupplungsprodukts aus cx2) mit dem Zwischenprodukt III zu dem Trisazo-Produkt der allgemeinen Formel (VI),

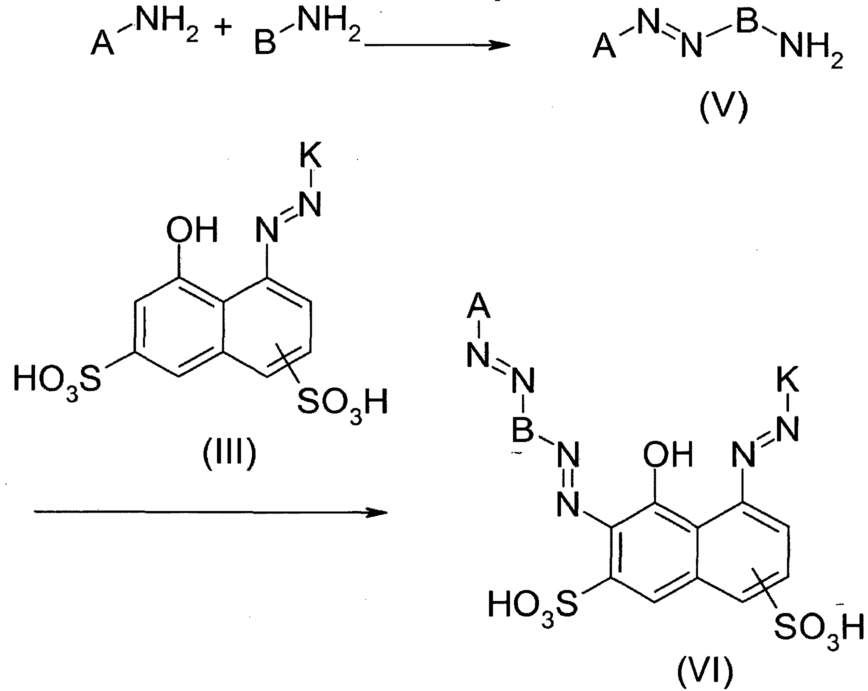

14. Verwendung einer chemischen Verbindung nach einem der Ansprüche 1 bis 8, einer chemischen Zusammensetzung nach Anspruch 9 oder 10 oder einer wässrigen Lösung nach Anspruch 11 zum Färben von Fasern sowie Mischungen derartiger Fasern, ausgewählt aus der Gruppe bestehend aus: Pflanzenfasern, Samenfasern, Baumwolle, organischer Baumwolle, Kapok, Kokosfasern aus Kokosnussschalen; Bastfasern, Flachs, Hanf, Jute, Kenaf, Ramie, Rattan; Blattfasern, Sisal, Henequen, Banane; Stängelfasern, Bambus; Fasern aus Tieren, Wolle, organischer Wolle, Seide, Kaschmirwolle, Alpakafaser, Mohair, Angorafaser sowie Pelz- und Ledermaterialien; Chemiefasern, Regeneratfasern, Rezyklatfasern, Cellulosefasern; Papierfasern, Celluloseregeneratfasern, Viskosereyonfasern, Acetat- und Triacetatfasern und Lyocellfasern und synthetischen Fasermaterialien, Polyamidmaterialien, Polyamid-6-, Polyamid-6.6- und Aramidfasern.

15. Faser und Mischungen, die eine derartige Faser enthalten, ausgewählt aus der Gruppe bestehend aus: Pflanzenfasern, Samenfasern, Baumwolle, organischer Baumwolle, Kapok, Kokosfasern aus Kokosnussschalen; Bastfasern, Flachs, Hanf, Jute, Kenaf, Ramie, Rattan; Blattfasern, Sisal, Henequen, Banane; Stängelfasern, Bambus; Fasern aus Tieren, Wolle, organischer Wolle, Seide, Kaschmirwolle, Alpakafaser, Mohair, Angorafaser sowie Pelz- und Ledermaterialien; Chemiefasern, Regeneratfasern, Rezyklatfasern, Cellulosefasern; Papierfasern, Celluloseregeneratfasern, Viskosereyonfasern, Acetat- und Triacetatfasern und Lyocellfasern und synthetischen Fasermaterialien, Polyamidmaterialien, Polyamid-6-, Polyamid-6.6- und Aramidfasern, umfassend eine oder mehrere chemische Verbindungen nach einem der Ansprüche 1 bis 8 in chemisch und/oder physikalisch gebundener Form.p

## Revendications

1. Composé chimique selon la formule (I) et des mélanges de celui-ci 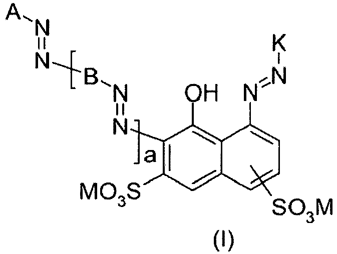 où
A est un radical de composant diazo tel que décrit ci-après ; et
B est un radical de composant du milieu tel que décrit ci-après ; et
K est un radical de composant de couplage tel que décrit ci-après ; et
a = 0 ou 1 ; et
avec la condition générale que les colorants de formule générale (I) contiennent au moins une ancre réactive ;
A est un radical de formule générale (1a) 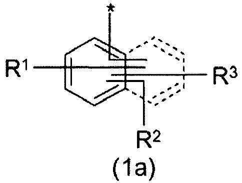
où
chacun parmi R¹ à R³, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a), (2b) ou (2c) 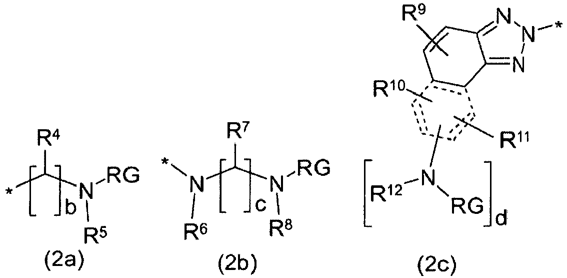
où
chacun parmi R⁴ et R⁷, indépendamment les uns des autres, est hydrogène, halogène, alkyle, N-acylamino, alcoxy, thioalcoxy, hydroxy, cyano, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
chacun parmi R⁵, R⁶, R⁸ et R¹², indépendamment les uns des autres, est hydrogène, alkyle ou aryle ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
chacun parmi R⁹, R¹⁰ et R¹¹, indépendamment les uns des autres, est hydrogène, halogène, alkyle, alcoxy ou SO₃M ; et
b est un nombre entier allant de 0 à 6 ; et
c est un nombre entier allant de 1 à 6 ; et
lorsque chacun parmi b et c, indépendamment l'un de l'autre, est ≥ 2, R⁴ et R⁷ peuvent revêtir des significations différentes au sein du même reste conformément à la signification définie ci-dessus ; et
d vaut 0 ou 1 ; et
RG est une ancre réactive de formule générale (3a), (3b) ou (3c) ; 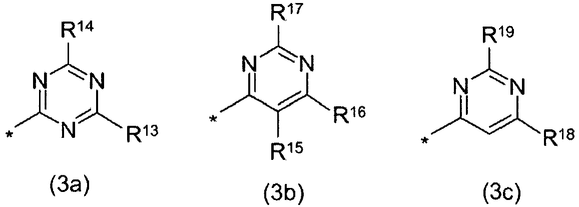
où
chacun parmi R¹⁴ à R¹⁹, indépendamment les uns des autres, est halogène et
R¹⁴ peut être en outre un reste de formule (8a) 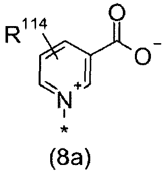
où
R¹¹⁴ est hydrogène, halogène, alkyle, alcoxy, thioalcoxy, hydroxy, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
R¹³ est l'un des groupements choisis parmi la formule générale (4a) ou (4b) ; 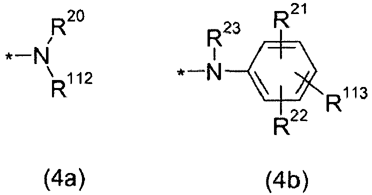
où
chacun parmi R²⁰, R²³ et R¹¹², indépendamment les uns des autres, est hydrogène, alkyle, cycloalkyle ou aryle ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
chacun parmi R²¹, R²² et R¹¹³, indépendamment les uns des autres, est hydrogène, halogène, alkyle, N-acylamino, alcoxy, thioalcoxy, hydroxy, cyano, alcoxycarbonyle, alcoxythiocarbonyle, acyle, thioacyle, aryloyle, sulfamoyle, trifluorométhyle, acyloxy, aryloyloxy, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
R¹¹² peut être en outre -CH₂CH₂-SO₂-X, où X est vinyle ou un radical - CH₂CH₂-Y où Y est un groupement pouvant être éliminé dans des conditions alcalines telles que OSO₃M, SSO₃M, OCOCH₃, OPO₃M ou halogène ; et
R¹¹³ peut être en outre -SO₂-X où X est identique à ce qui a été défini ci-dessus ;
B est un radical de formule générale (5a) 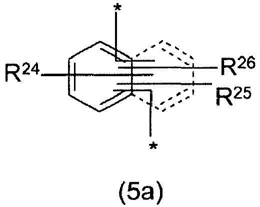
où
chacun parmi R²⁴ à R²⁶, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a) ou (2b) 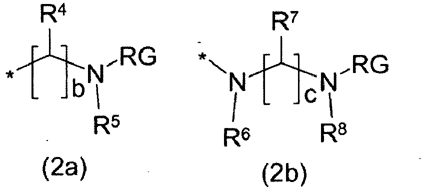
où R⁴ à R⁸, b, c et RG sont identiques à ce qui a été défini ci-dessus ;
K est un radical de formule générale (6a), (6b) ou (6c) 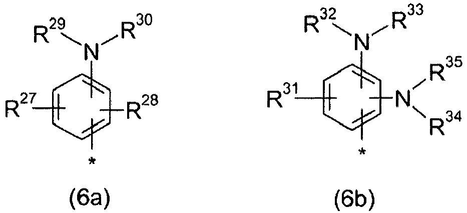 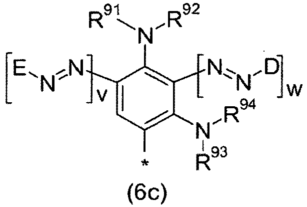
où
chacun parmi R²⁷, R²⁸ et R³¹, indépendamment les uns des autres, est hydrogène, halogène, alkyle, alcoxy, thioalcoxy, hydroxy, cyano, nitro, alcoxycarbonyle, alcoxythiocarbonyle, uréido, alkyluréido, phényluréido, sulfamoyle, acyle, thioacyle, aryloyle, trifluorométhyle, acyloxy, aryloyloxy, carbamoyle, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; et
chacun parmi R²⁹, R³⁰, R³², R³³, R³⁴ et R³⁵, indépendamment les uns des autres, est hydrogène, alkyle, alcényle, acyle, thioacyle, aryloyle, cycloalkyle, aryle, hétéroaryle, hétérocycloalkyle ou cinnamoyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini ci-dessus ; ou
est un reste de formule générale (7a) 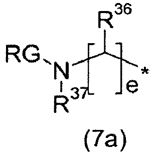
où
RG est identique à ce qui a été défini ci-dessus ; et
R³⁶ est hydrogène, halogène, alkyle, N-acylamino, alcoxy, thioalcoxy, hydroxy, cyano, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
R³⁷ est hydrogène, alkyle ou aryle ; ou
est alkyle substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N-acylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy ou aryloyloxy ; et
e est un nombre entier allant de 1 à 6 ; et lorsque e est ≥ 2, R³⁶ peut revêtir des significations différentes au sein du même reste par rapport à la signification définie ci-dessus,
chacun parmi R⁹¹ à R⁹⁴, indépendamment les uns des autres, est hydrogène, alkyle, alcényle, cycloalkyle ou hétérocycloalkyle ; ou
est alkyle substitué par un ou plusieurs substituants choisis dans le groupe constitué par hydroxy, aryle, cycloalkyle, alcoxy, thioalcoxy, amino, N-monoalkylamino, -N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicyclo-alkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est un reste de formule générale (7a) tel que défini ci-dessus ; et
chacun parmi D et E, indépendamment l'un de l'autre, est un composant diazo de formule générale (1a) où (1a) est identique à ce qui a été défini ci-dessus ; et
v vaut 0 ou 1 ; et w vaut 0 ou 1 ; et v+w vaut 1 ou 2.

2. Composé chimique selon la revendication 1, répondant à la formule (Ia) : 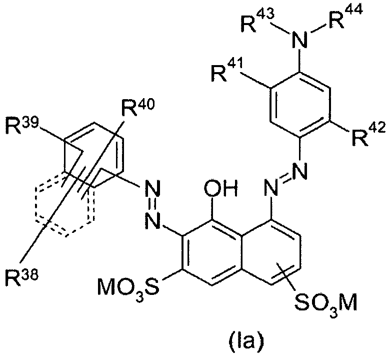 où
chacun parmi R³⁸ à R⁴⁰, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a), (2b) ou (2c) tel que défini selon la revendication 1 ; et
chacun parmi R⁴¹ et R⁴², indépendamment l'un de l'autre, est hydrogène, halogène, alkyle, alcoxy, thioalcoxy, hydroxy, cyano, nitro, alcoxycarbonyle, alcoxythiocarbonyle, uréido, alkyluréido, phényluréido, sulfamoyle, acyle, thioacyle, aryloyle, trifluorométhyle, acyloxy, aryloyloxy, carbamoyle, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; et
chacun parmi R⁴³ et R⁴⁴, indépendamment les uns des autres, est hydrogène, alkyle, acyle, thioacyle, aryloyle, cycloalkyle, aryle, hétéroaryle, hétérocycloalkyle ou cinnamoyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, - N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini selon la revendication 1 ; ou
est un reste de formule générale (7a) tel que défini selon la revendication 1.

3. Composé chimique selon la revendication 1, répondant à la formule (Ib) : 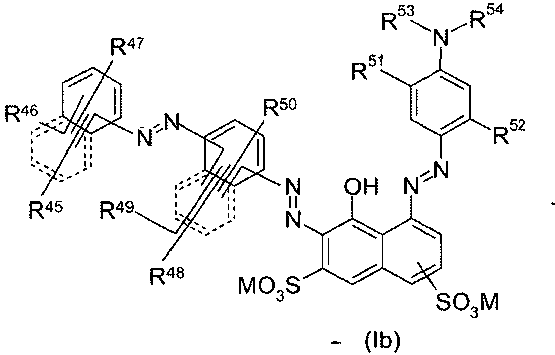 où
chacun parmi R⁴⁵ à R⁵⁰, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a) ou (2b) tel que défini selon la revendication 1 ; et
chacun parmi R⁴⁵ à R⁴⁷, indépendamment les uns des autres, peut être en outre un groupement de formule générale (2c) tel que défini selon la revendication 1 ; et
chacun parmi R⁵¹ et R⁵², indépendamment les uns des autres, est hydrogène, halogène, alkyle, alcoxy, thioalcoxy, hydroxy, cyano, nitro, alcoxycarbonyle, alcoxythiocarbonyle, uréido, alkyluréido, phényluréido, sulfamoyle, acyle, thioacyle, aryloyle, trifluorométhyle, acyloxy, aryloyloxy, carbamoyle, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, - N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; et
chacun parmi R⁵³ et R⁵⁴, indépendamment les uns des autres, est hydrogène, alkyle, acyle, thioacyle, aryloyle, cycloalkyle, aryle, hétéroaryle, hétérocycloalkyle ou cinnamoyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini selon la revendication 1 ; ou
est un reste de formule générale (7a) tel que défini selon la revendication 1.

4. Composé chimique selon la revendication 1 répondant à la formule (Ic) : 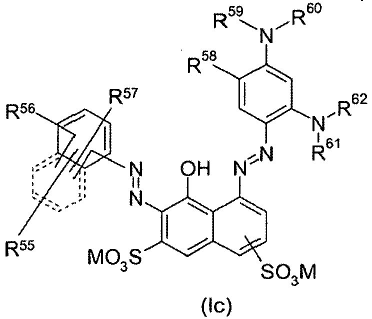 où
chacun parmi R⁵⁵ à R⁵⁷, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a), (2b) ou (2c) tel que défini selon la revendication 1 ; et
R⁵⁸ est halogène, alkyle, alcoxy, thioalcoxy, hydroxy, cyano, nitro, alcoxycarbonyle, alcoxythiocarbonyle, uréido, alkyluréido, phényluréido, sulfamoyle, acyle, thioacyle, aryloyle, trifluorométhyle, acyloxy, aryloyloxy, carbamoyle, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; et
chacun parmi R⁵⁹ à R⁶², indépendamment les uns des autres, est hydrogène, alkyle, acyle, thioacyle, aryloyle, cycloalkyle, aryle, hétéroaryle, hétérocycloalkyle ou cinnamoyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini selon la revendication 1 ; ou
est un reste de formule générale (7a) tel que défini selon la revendication 1.

5. Composé chimique selon la revendication 1, de formule (Id) : 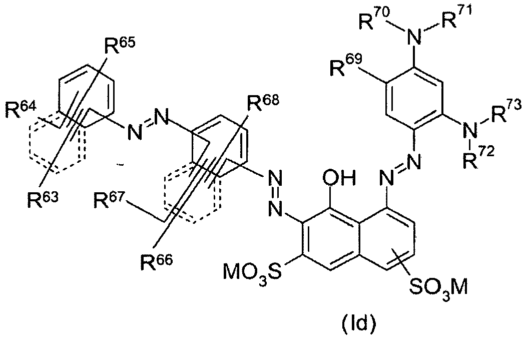 où
chacun parmi R⁶³ à R⁶⁸, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; -ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a) ou (2b) tel que défini selon la revendication 1 ; et
chacun parmi R⁶³ à R⁶⁵, indépendamment les uns des autres, peut être en outre un groupement de formule générale (2c) tel que défini selon la revendication 1 ; et
R⁶⁹ est halogène, alkyle, alcoxy, thioalcoxy, hydroxy, cyano, nitro, alcoxycarbonyle, alcoxythiocarbonyle, uréido, alkyluréido, phényluréido, sulfamoyle, acyle, thioacyle, aryloyle, trifluorométhyle, acyloxy, aryloyloxy, carbamoyle, cycloalkyle, aryle, hétéroaryle, hétérocycloalkyle, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; et
chacun parmi R⁷⁰ à R⁷³, indépendamment les uns des autres, est hydrogène, alkyle, acyle, thioacyle, aryloyle, cycloalkyle, aryle, hétéroaryle, hétérocycloalkyle ou cinnamoylamino ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini selon la revendication 1 ; ou
est un reste de formule générale (7a) tel que défini selon la revendication 1.

6. Composé chimique selon la revendication 1 répondant à la formule (Ie) : 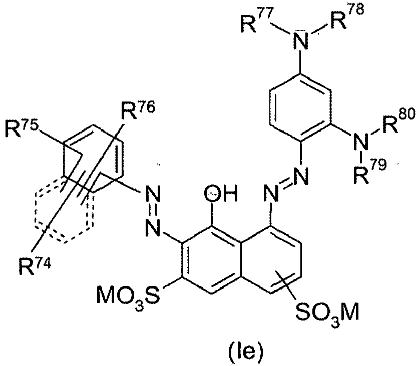 où
chacun parmi R⁷⁴ à R⁷⁶, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a), (2b) ou (2c) tel que défini selon la revendication 1 ; et
chacun parmi R⁷⁷ à R⁸⁰, indépendamment les uns des autres, est hydrogène, alkyle, acyle, thioacyle, aryloyle, cycloalkyle, aryle, hétéroaryle, hétérocycloalkyle ou cinnamoyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini selon la revendication 1 ; ou
est un reste de formule générale (7a) tel que défini selon la revendication 1.

7. Composé chimique selon la revendication 1 répondant à la formule (If) : 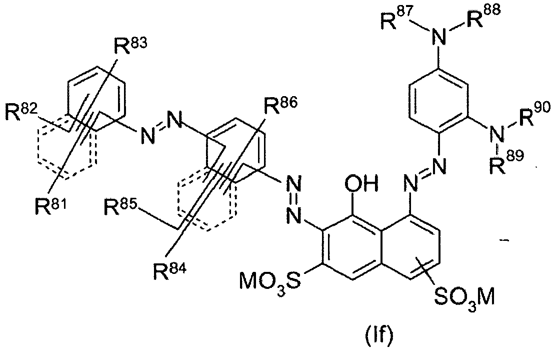 où
chacun parmi R⁸¹ à R⁸⁶, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a) ou (2b) tel que défini selon la revendication 1 ; et
chacun parmi R⁸¹ à R⁸³, indépendamment les uns des autres, peut être en outre un groupement de formule générale (2c) tel que défini selon la revendication 1 ; et
chacun parmi R⁸⁷ à R⁹⁰, indépendamment les uns des autres, est hydrogène, alkyle, acyle, thioacyle, aryloyle, cycloalkyle, aryle, hétéroaryle, hétérocycloalkyle ou cinnamoyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, -. N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est une ancre réactive RG, où RG est identique à ce qui a été défini selon la revendication 1 ; ou
est un reste de formule générale (7a) tel que défini selon la revendication 1.

8. Composé chimique selon la revendication 1 répondant à la formule (Ig) 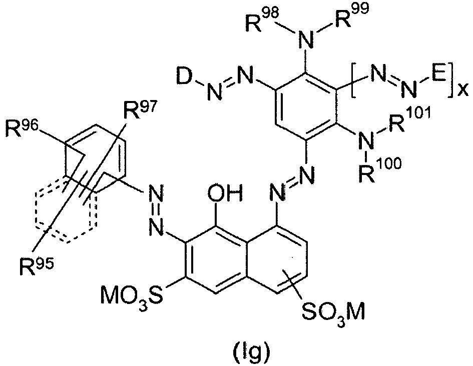 où
chacun parmi R⁹⁵ à R⁹⁷, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a), (2b) ou (2c) tel que défini selon la revendication 1 ; et
chacun parmi R⁹⁸ à R¹⁰¹, indépendamment les uns des autres, est hydrogène, alkyle, alcényle, cycloalkyle ou hétérocycloalkyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est un reste de formule générale (7a) tel que défini selon la revendication 1 ; et
chacun parmi D et E, indépendamment l'un de l'autre, est un composant diazo de formule générale (1a) tel que défini selon la revendication 1 ; et
x vaut 0 ou 1.

9. Composé chimique selon la revendication 1 répondant à la formule (Ih) : 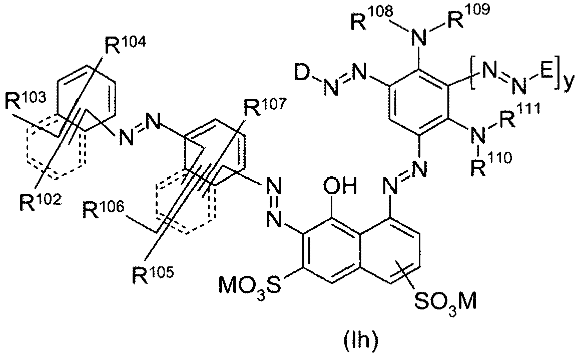 où
chacun parmi R¹⁰² à R¹⁰⁷, indépendamment les uns des autres, est hydrogène, halogène, alkyle, N-acylamino, alcoxy, thioalcoxy, hydroxy, cyano, nitro, alcoxycarbonyle, alcoxythiocarbonyle, acyle, thioacyle, aryloyle, trifluorométhyle, acyloxy, aryloyloxy, cycloalkyle, aryle, hétéroaryle, hétérocycloalkyle, N-cinnamoylamino, SO₃M ou COOM ; ou
est alkyle substitué par un ou plusieurs substituants choisis dans le groupe constitué par hydroxy, aryle, cycloalkyle, alcoxy, thioalcoxy,-N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy ; ou
est SO₂-X, où X est vinyle ou un radical -CH₂CH₂-Y et Y est un groupement pouvant être éliminé dans des conditions alcalines telles que OSO₃M, SSO₃M, OCOCH₃, OPO₃M ou halogène ; ou
est un groupement de formule générale (2a) ou (2b) tel que défini selon la revendication 1 ; et
chacun parmi R¹⁰² à R¹⁰⁴, indépendamment les uns des autres, peut être en outre un groupement de formule générale (2c) tel que défini selon la revendication 1 ; et
chacun parmi R¹⁰⁸ à R¹¹¹, indépendamment les uns des autres, est hydrogène, alkyle, alcényle, cycloalkyle ou hétérocycloalkyle ; ou
est alkyle substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est alkyle interrompu par un ou plusieurs hétéroatomes tels qu'oxygène ou soufre et substitué par un ou plusieurs substituants choisis dans le groupe constitué par hydroxy, aryle, cycloalkyle, alcoxy, thioalcoxy, amino, N-monoalkylamino, N,N-dialkylamino, N-monoarylamino, N,N-diarylamino, N-alkyl-N-arylamino, N-monocycloalkylamino, N,N-dicycloalkylamino, N-monoalkyl-N-monocycloalkylamino, N-monoaryl-N-monocycloalkylamino, N,N,N-trialkylammonium, N,N,N-triarylammonium, N,N-dialkyl-N-monoarylammonium, N,N-diaryl-N-monoalkylammonium, N-acylamino, N-cinnamoylamino, N-alkylsulfonylamino, uréido, alkyluréido, phényluréido, halogène, cyano, SO₃M, COOM, nitro, acyle, thioacyle, alkylsulfonyle, aryloyle, trifluorométhyle, hétéroaryle, hétérocycloalkyle, alcoxycarbonyle, alcoxythiocarbonyle, acyloxy, aryloyloxy, carbamoyle, N-monocycloalkylcarbamoyle, N-monoalkylcarbamoyle, N,N-dicycloalkylcarbamoyle, N,N-dialkylcarbamoyle, N-monoarylcarbamoyle, N,N-diarylcarbamoyle, N-monocycloalkyl-N-monoarylcarbamoyle, N-monoalkyl-N-monoarylcarbamoyle, sulfamoyle, N-monocycloalkylsulfamoyle, N-monoalkylsulfamoyle, N,N-dicycloalkylsulfamoyle, N,N-dialkylsulfamoyle, N-monoarylsulfamoyle, N,N-diarylsulfamoyle, N-monocycloalkyl-N-monoarylsulfamoyle ou N-monoalkyl-N-monoarylsulfamoyle ; ou
est un reste de formule générale (7a) tel que défini selon la revendication 1 ; et
chacun parmi D et E, indépendamment l'un de l'autre, est un composant diazo de formule générale (1a) tel que défini selon la revendication 1 ; et
y vaut 0 ou 1.

10. Composition chimique constituée de deux, ou plus, composés chimiques selon l'une quelconque des revendications 1 à 8.

11. Composition chimique comprenant un ou plusieurs composés chimiques selon l'une quelconque des revendications 1 à 8.

12. Solution aqueuse pour teinture, comprenant un ou plusieurs composés chimiques selon l'une quelconque des revendications 1 à 8.

13. Procédé de production de composés chimiques selon la revendication 1, comprenant les étapes :
a) de diazotisation des composés de formule (II),
b) de réaction des sels de diazonium obtenus dans l'étape a) avec un composé de formule K afin d'obtenir un intermédiaire de formule (III) 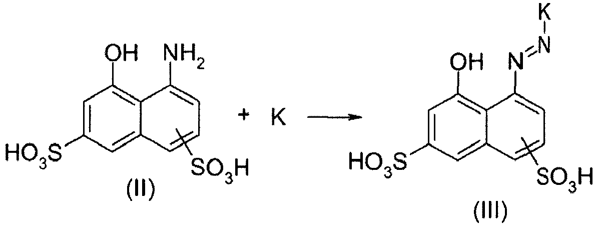
c) de diazotisation du composant (A-NH₂),
cx1) éventuellement de couplage du produit diazotisé de l'étape c) sur le composé (B-NH₂) et
cx2) de diazotisation du produit de couplage de l'étape cx1)
d) de couplage du produit diazotisé de l'étape c) sur l'intermédiaire III afin d'obtenir le produit de bis-azo de formule générale (IV) dans le cas de l'étape c) 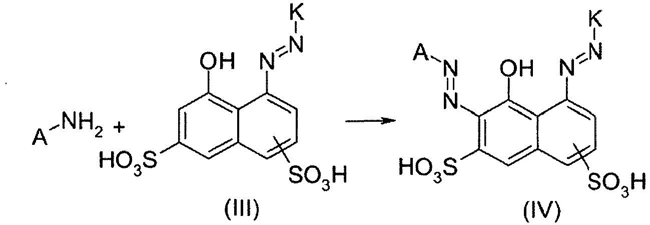 ou de couplage du produit de couplage diazotisé de cx2) sur l'intermédiaire III afin d'obtenir le produit de tris-azo de formule générale (VI),

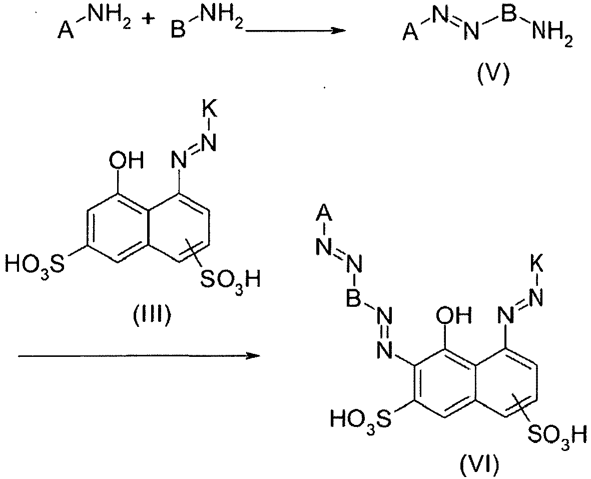

14. Utilisation d'un composé chimique selon l'une quelconque des revendications 1 à 8, d'une composition chimique selon la revendication 9 ou 10 ou d'une solution aqueuse selon la revendication 11 pour la coloration de fibres, ainsi que de mélanges de telles fibres choisies dans le groupe constitué par : les fibres végétales, les fibres de graines, le coton, le coton organique, le kapok, le coir issu d'écorce de noix de coco ; les fibres libériennes, le lin, le chanvre, le jute, le kénaf, la ramie, le rotin ; les fibres de feuilles, le sisal, le henequen, la banane ; les fibres de tiges, le bambou ; les fibres issues d'animaux, la laine, la laine organique, la soie, la laine cachemire, la laine d'alpaga, le mohair, les fibres d'angora ainsi que les matériaux à base de fourrure et de cuir ; les fibres manufacturées, régénérées et recyclées, les fibres cellulosiques ; les fibres de papier, les fibres cellulosiques régénérées, les fibres de viscose-rayonne, les fibres d'acétate et de triacétate et les fibres de lyocell ; et les matériaux fibreux synthétiques, les matériaux à base de nylon, le nylon-6, le nylon-6.6 et les fibres d'aramide.

15. Fibres et mélanges contenant de telles fibres, choisies dans le groupe constitué par : les fibres végétales, les fibres de graines, le coton, le coton organique, le kapok, le coir issu d'écorce de noix de coco ; les fibres libériennes, le lin, le chanvre, le jute, le kénaf, la ramie, le rotin ; les fibres de feuilles, le sisal, le henequen, la banane ; les fibres de tiges, le bambou ; les fibres issues d'animaux, la laine, la laine organique, la soie, la laine cachemire, la laine d'alpaga, le mohair, les fibres d'angora ainsi que les matériaux à base de fourrure et de cuir ; les fibres manufacturées, régénérées et recyclées, les fibres cellulosiques ; les fibres de papier, les fibres cellulosiques régénérées, les fibres de viscose-rayonne, les fibres d'acétate et de triacétate et les fibres de lyocell ; et les matériaux fibreux synthétiques, les matériaux à base de nylon, le nylon-6, le nylon-6.6 et les fibres d'aramide, comprenant un ou plusieurs composés chimiques selon l'une quelconque des revendications 1 à 8 sous forme liée par voie chimique et/ou bien physique.
